(19) Europäisches Patentamt
European Patent Office
Office européen des brevets

(11) EP 4 270 848 A1

(12) EUROPEAN PATENT APPLICATION

(43) Date of publication:
**01.11.2023 Bulletin 2023/44**

(21) Application number: **23170164.0**

(22) Date of filing: **26.04.2023**

(51) International Patent Classification (IPC):
***H04L 5/00*** *(2006.01)* ***H04W 52/02*** *(2009.01)*

(52) Cooperative Patent Classification (CPC):
**H04L 5/001; H04L 5/0048; H04L 5/0094; H04L 5/0096; H04W 52/0206;** H04L 5/0078

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.04.2022 US 202263334926 P**

(71) Applicant: **Comcast Cable Communications LLC**
**Philadelphia, Pennsylvania 19103 (US)**

(72) Inventors:
- **ZHOU, Hua**
  **Philadelphia, 19103 (US)**
- **CIRIK, Ali Cagatay**
  **Philadelphia, 19103 (US)**
- **DINAN, Esmael Hejazi**
  **Philadelphia, 19103 (US)**
- **JEON, Hyoungsuk**
  **Philadelphia, 19103 (US)**
- **XU, Kai**
  **Philadelphia, 19103 (US)**
- **DASHTAKI, Mohammad Ghadir Khoshkholgh**
  **Philadelphia, 19103 (US)**

(74) Representative: **V.O.**
**P.O. Box 87930**
**2508 DH Den Haag (NL)**

# (54) PERIODIC REFERENCE SIGNAL TRANSMISSIONS FOR ENERGY SAVING

(57) A bandwidth for transmission of wireless communications may be reduced, such as for energy saving. Downlink control information (DCI) may be used to indicate the bandwidth reduction, such as dynamic bandwidth part reduction. A base station may adjust transmission of periodic reference signals (RSs) using the reduced bandwidth after the DCI is sent, which may provide advantages such as improved accuracy and/or reliability of operations, such as channel state information (CSI) and/or beam measurement.

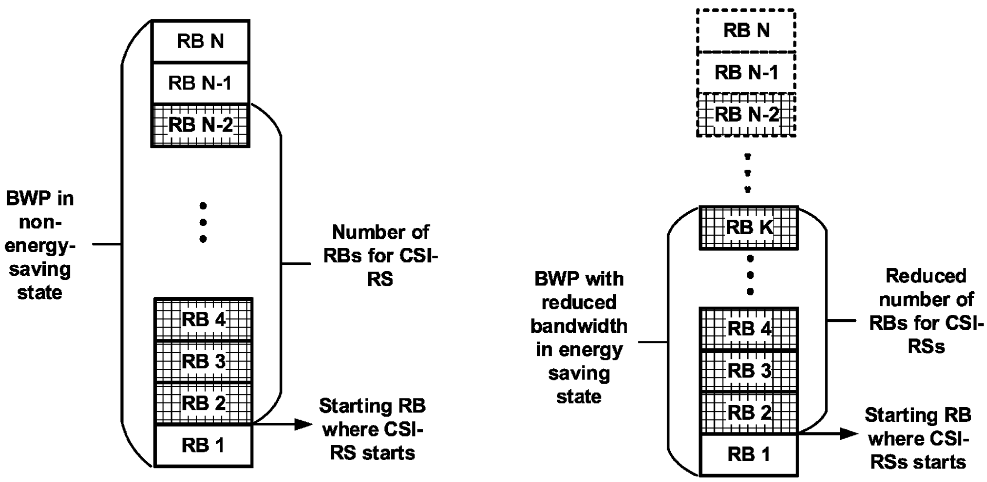


FIG. 43

EP 4 270 848 A1

## Description

CROSS-REFERENCE TO RELATED APPLICATIONS

This application claims the benefit of U.S. Provisional Application No. 63/334,926 filed on April 26, 2022. The above referenced application is hereby incorporated by reference in its entirety.

BACKGROUND

In wireless communication systems, a base station sends downlink signals that are monitored and measured by a wireless device. The wireless device performs signal reception and transmission based on the measurements.

SUMMARY

The following summary presents a simplified summary of certain features. The summary is not an extensive overview and is not intended to identify key or critical elements.

Wireless communications between a base station and a wireless device may include reference signals (RSs). RSs may be sent periodically using one or more resources, such as a bandwidth part (BWP) that may be configured by a Radio Resource Control (RRC) message using a specific number of resource blocks (RBs). A base station may dynamically and/or semi-statically reduce a transmission bandwidth of resources used for RSs (e.g., reduce transmission bandwidth of the BWP), for example, to reduce/conserve power. A reduction in the transmission bandwidth for the RSs may cause a wireless device to incorrectly determine radio resources of the periodic RSs, such as for Channel State Information (CSI) and/or beam measurement. To improve CSI/beam measurement (such as in an energy-saving mode), the base station may send downlink control information (DCI) to indicate a dynamic bandwidth reduction (e.g., of an active BWP). However, periodic RSs, such as synchronization signal blocks (SSBs), channel state information reference signals (CSI-RSs), and/or tracking reference signals (TRSs), may be semi-statically configured (e.g., by an RRC message) and/or may be located on the RBs of the active BWP. As a result, the base station and/or the wireless device may not align with respect to where the periodic RSs are configured within a dynamically reduced transmission bandwidth (e.g., within a dynamically reduced BWP). The base station may communicate at least a portion of the periodic RSs (e.g., partial sequence(s) of the periodic RSs) using the reduced bandwidth after DCI is sent to the wireless device indicating the dynamic bandwidth reduction. Operating in the manner described may help to ensure that CSI/beam measurement is accurate, and/or may provide advantages such as improved reliability and/or quality of channel measurements, reduced signal interference, and/or more efficient use of communication resources.

These and other features and advantages are described in greater detail below.

BRIEF DESCRIPTION OF THE DRAWINGS

Some features are shown by way of example, and not by limitation, in the accompanying drawings. In the drawings, like numerals reference similar elements.

FIG. 1A and FIG. 1B show example communication networks.

FIG. 2A shows an example user plane.

FIG. 2B shows an example control plane configuration.

FIG. 3 shows example of protocol layers.

FIG. 4A shows an example downlink data flow for a user plane configuration.

FIG. 4B shows an example format of a Medium Access Control (MAC) subheader in a MAC Protocol Data Unit (PDU).

FIG. 5A shows an example mapping for downlink channels.

FIG. 5B shows an example mapping for uplink channels.

FIG. 6 shows example radio resource control (RRC) states and RRC state transitions.

FIG. 7 shows an example configuration of a frame.

FIG. 8 shows an example resource configuration of one or more carriers.

FIG. 9 shows an example configuration of bandwidth parts (BWPs).

FIG. 10A shows example carrier aggregation configurations based on component carriers.

FIG. 10B shows example group of cells.

FIG. 11A shows an example mapping of one or more synchronization signal/physical broadcast channel (SS/PBCH) blocks.

FIG. 11B shows an example mapping of one or more channel state information reference signals (CSI-RSs).

FIG. 12A shows examples of downlink beam management procedures.

FIG. 12B shows examples of uplink beam management procedures.

FIG. 13A shows an example four-step random access procedure.

FIG. 13B shows an example two-step random access procedure.

FIG. 13C shows an example two-step random access procedure.

FIG. 14A shows an example of control resource set (CORESET) configurations.

FIG. 14B shows an example of a control channel element to resource element group (CCE-to-REG) mapping.

FIG. 15A shows an example of communications between a wireless device and a base station.

FIG. 15B shows example elements of a computing device that may be used to implement any of the various devices described herein

FIG. 16A, FIG. 16B, FIG. 16C, and FIG. 16D show examples of uplink and downlink signal transmission.

FIG. 17A, FIG. 17B, and FIG. 17C show example MAC subheaders.

FIG. 18A and FIG. 18B show example MAC PDUs.

FIG. 19 shows example logical channel identifier (LCID) values.

FIG. 20 shows example LCID values.

FIG. 21A and FIG. 21B show example secondary cell (SCell) Activation/Deactivation MAC control elements (CEs).

FIG. 22 shows an example of BWP activation/deactivation.

FIG. 23 shows examples of various downlink control information (DCI) formats.

FIG. 24A shows an example master information block (MIB) message.

FIG. 24B shows an example configuration of a CORESET.

FIG. 24C shows an example of configuration of a search space.

FIG. 25 shows an example of a system information block (SIB).

FIG. 26 shows example RRC configuration parameters.

FIG. 27 shows an example configuration of a search space.

FIG. 28 shows example dormancy management.

FIG. 29A and FIG. 29B show example power saving operations.

FIG. 30A shows an example DCI format.

FIG. 30B shows example search space set (SSS) group switching.

FIG. 31 shows an example PDCCH skipping-based power saving operation.

FIG. 32 shows example SSB configurations.

FIG. 33 shows example SSB transmissions.

FIG. 34 shows an example indication of SSB location in an SSB burst.

FIG. 35 shows an example CSI-RS configuration.

FIG. 36 shows example RRC configuration .

FIG. 37A and FIG. 37B show example CSI-RS resources.

FIG. 38 shows example CSI-RS resource sets.

FIG. 39 shows an example of frequency resource allocation.

FIG. 40 shows an example of CSI reporting configuration.

FIG. 41 shows an example of CSI reporting configuration in a cell.

FIG. 42 shows an example CSI-RS configuration for energy saving.

FIG. 43 shows an example BWP for energy saving.

FIG. 44 shows an example method of CSI reporting for energy saving.

FIG. 45 shows an example BWP for energy saving.

FIG. 46A and FIG. 46B illustrate examples of CSI reporting based on time restriction.

FIG. 47 shows an example of CSI reporting for energy saving.

FIG. 48 shows an example of CSI reporting for energy saving.

FIG. 49 shows an example of CSI-RS transmission for energy saving.

DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems, which may be used in the technical field of multicarrier communication systems. More particularly, the technology disclosed herein may relate to signaling for resource conservation.

FIG. 1A shows an example communication network 100. The communication network 100 may comprise a mobile communication network. The communication network 100 may comprise, for example, a public land mobile network (PLMN) operated/managed/run by a network operator. The communication network 100 may comprise one or more of a core network (CN) 102, a radio access network (RAN) 104, and/or a wireless device 106. The communication network 100 may comprise, and/or a device within the communication network 100 may communicate with (e.g., via CN 102), one or more data networks (DN(s)) 108. The wireless device 106 may communicate with the one or more DNs 108, such as public DNs (e.g., the Internet), private DNs, and/or intra-operator DNs. The wireless device 106 may communicate with the one or more DNs 108 via the RAN 104 and/or via the CN 102. The CN 102 may provide/configure the wireless device 106 with one or more interfaces to the one or more DNs 108. As part of the interface functionality, the CN 102 may set up end-to-end connections between the wireless device 106 and the one or more DNs 108, authenticate the wireless device 106, provide/configure charging functionality, etc.

The wireless device 106 may communicate with the RAN 104 via radio communications over/via an air interface. The RAN 104 may communicate with the CN 102 via various communications (e.g., wired communications and/or wireless communications). The wireless device 106 may establish a connection with the CN 102 via the RAN 104. The RAN 104 may provide/configure scheduling, radio resource management, and/or retransmission protocols, for example, as part of the radio communications. The communication direction from the RAN 104 to the wireless device 106 over/via the air interface may be referred to as the downlink and/or downlink communication direction. The communication direction from the wireless device 106 to the RAN 104 over/via the air interface may be referred to as the uplink and/or uplink communication direction. Downlink transmissions may be separated and/or distinguished from uplink transmissions, for example, based on at least one of: frequency division duplexing (FDD), time-division duplexing (TDD), any other duplexing schemes, and/or one or more combinations thereof.

As used throughout, the term "wireless device" may comprise one or more of: a mobile device, a fixed (e.g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle road side unit (RSU), a relay node, an automobile, a wireless user device (e.g., user equipment (UE), a user terminal (UT), etc.), an access terminal (AT), a mobile station, a handset, a wireless transmit and receive unit (WTRU), a wireless communication device, and/or any combination thereof.

The RAN 104 may comprise one or more base stations (not shown). As used throughout, the term "base station" may comprise one or more of: a base station, a node, a Node B (NB), an evolved NodeB (eNB), a Generation Node B (gNB), an Next Generation Evolved Node B (ng-eNB), a relay node (e.g., an integrated access and backhaul (IAB) node), a donor node (e.g., a donor eNB, a donor gNB, etc.), an access point (AP) (e.g., a Wi-Fi access point), a transmission and reception point (TRP), a computing device, a device capable of wirelessly communicating, or any other device capable of sending and/or receiving signals. A base station may comprise one or more of the elements listed above. For example, a base station may comprise one or more TRPs. As other non-limiting examples, a base station may comprise for example, one or more of: a Node B (e.g., associated with Universal Mobile Telecommunications System (UMTS) and/or third-generation (3G) standards), an eNB (e.g., associated with Evolved-Universal Terrestrial Radio Access (E-UTRA) and/or fourth-generation (4G) standards), a remote radio head (RRH), a baseband processing unit coupled to one or more RRHs, a repeater node or relay node used to extend the coverage area of a donor node, a ng-eNB, a gNB (e.g., associated with New Radio (NR) and/or fifth-generation (5G) standards), an AP (e.g., associated with, for example, Wi-Fi or any other suitable wireless communication standard), any other generation base station, and/or any combination thereof. A base station may comprise one or more devices, such as at least one base station central device (e.g., a gNB Central Unit (gNB-CU)) and at least one base station distributed device (e.g., a gNB Distributed Unit (gNB-DU)).

A base station (e.g., in the RAN 104) may comprise one or more sets of antennas for communicating with the wireless device 106 wirelessly (e.g., via an over the air interface). One or more base stations may comprise sets (e.g., three sets or any other quantity of sets) of antennas to respectively control multiple cells or sectors (e.g., three cells, three sectors, any other quantity of cells, or any other quantity of sectors). The size of a cell may be determined by a range at which a receiver (e.g., a base station receiver) may successfully receive transmissions from a transmitter (e.g., a wireless device transmitter) operating in the cell. One or more cells of base stations (e.g., by alone or in combination with other cells) may provide/configure a radio coverage to the wireless device 106 over a wide geographic area to support wireless device mobility. A base station comprising three sectors (e.g., or n-sector, where n refers to any quantity n) may be referred to as a three-sector site (e.g., or an n-sector site) or a three-sector base station (e.g., an n-sector base station).

One or more base stations (e.g., in the RAN 104) may be implemented as a sectored site with more or less than three sectors. One or more base stations of the RAN 104 may be implemented as an AP, as a baseband processing device/unit coupled to several RRHs, and/or as a repeater or relay node used to extend the coverage area of a node (e.g., a donor node). A baseband processing device/unit coupled to RRHs may be part of a centralized or cloud RAN architecture, for example, where the baseband processing device/unit may be centralized in a pool of baseband processing devices/units or virtualized. A repeater node may amplify and send (e.g., transmit, retransmit, rebroadcast, etc.) a radio signal received from a donor node. A relay node may perform substantially the same/similar functions as a repeater node. The relay node may decode the radio signal received from the donor node, for example, to remove noise before amplifying and sending the radio signal.

The RAN 104 may be deployed as a homogenous network of base stations (e.g., macrocell base stations) that have similar antenna patterns and/or similar high-level transmit powers. The RAN 104 may be deployed as a heterogeneous network of base stations (e.g., different base stations that have different antenna patterns). In heterogeneous networks, small cell base stations may be used to provide/configure small coverage areas, for example, coverage areas that overlap with comparatively larger coverage areas provided/configured by other base stations (e.g., macrocell base stations). The small coverage areas may be provided/configured in areas with high data traffic (or so-called "hotspots") or in areas with a weak macrocell coverage. Examples of small cell base stations may comprise, in order of decreasing coverage area, microcell base stations, picocell base stations, and femtocell base stations or home base stations.

Examples described herein may be used in a variety of types of communications. For example, communications may be in accordance with the Third-Generation Partnership Project (3GPP) (e.g., one or more network elements similar to those of the communication network 100), communications in accordance with Institute of Electrical and Electronics Engineers (IEEE), communications in accordance with International Telecommunication Union (ITU), communications in accordance with International Organization for Standardization (ISO), etc. The 3GPP has produced specifications for multiple generations of mobile networks: a 3G network known as UMTS, a 4G network known as Long-Term Evolution (LTE) and LTE Advanced (LTE-A), and a 5G network known as 5G System (5GS) and NR system. 3GPP may produce specifications for additional generations of communication networks (e.g., 6G and/or any other generation of communication network). Examples may be described with reference to one or more elements (e.g., the RAN) of a 3GPP 5G network, referred to as a next-generation RAN (NG-RAN), or any other communication network, such as a 3GPP network and/or a non-3GPP network. Examples described herein may be applicable to other communication networks, such as 3G and/or 4G networks, and communication networks that may not yet be finalized/specified (e.g., a 3GPP 6G network), satellite communication networks, and/or any other communication network. NG-RAN implements and updates 5G radio access technology referred to as NR and may be provisioned to implement 4G radio access technology and/or other radio access technologies, such as other 3GPP and/or non-3GPP radio access technologies.

FIG. 1B shows an example communication network 150. The communication network may comprise a mobile communication network. The communication network 150 may comprise, for example, a PLMN operated/managed/run by a network operator. The communication network 150 may comprise one or more of: a CN 152 (e.g., a 5G core network (5G-CN)), a RAN 154 (e.g., an NG-RAN), and/or wireless devices 156A and 156B (collectively wireless device(s) 156). The communication network 150 may comprise, and/or a device within the communication network 150 may communicate with (e.g., via CN 152), one or more data networks (DN(s)) 170. These components may be implemented and operate in substantially the same or similar manner as corresponding components described with respect to FIG. 1A.

The CN 152 (e.g., 5G-CN) may provide/configure the wireless device(s) 156 with one or more interfaces to the one or more DNs 170. The wireless device(s) 156 may communicate with the one or more DNs 170, such as public DNs (e.g., the Internet), private DNs, and/or intra-operator DNs. As part of the interface functionality, the CN 152 (e.g., 5G-CN) may set up end-to-end connections between the wireless device(s) 156 and the one or more DNs 170, authenticate the wireless device(s) 156, and/or provide/configure charging functionality. The CN 152 (e.g., the 5G-CN) may be a service-based architecture, which may differ from other CNs (e.g., such as a 3GPP 4G CN). The architecture of nodes of the CN 152 (e.g., 5G-CN) may be defined as network functions that offer services via interfaces to other network functions. The network functions of the CN 152 (e.g., 5G-CN) may be implemented in several ways, for example, as network elements on dedicated or shared hardware, as software instances running on dedicated or shared hardware, and/or as virtualized functions instantiated on a platform (e.g., a cloud-based platform).

The CN 152 (e.g., 5G-CN) may comprise an Access and Mobility Management Function (AMF) device 158A and/or a User Plane Function (UPF) device 158B, which may be separate components or one component AMF/UPF device 158. The UPF device 158B may serve as a gateway between the RAN 154 (e.g., NG-RAN) and the one or more DNs 170. The UPF device 158B may perform functions, such as: packet routing and forwarding, packet inspection and user plane policy rule enforcement, traffic usage reporting, uplink classification to support routing of traffic flows to the one or more DNs 170, quality of service (QoS) handling for the user plane (e.g., packet filtering, gating, uplink/downlink rate enforcement, and uplink traffic verification), downlink packet buffering, and/or downlink data notification triggering. The UPF device 158B may serve as an anchor point for intra-/inter-Radio Access Technology (RAT) mobility, an external protocol (or packet) data unit (PDU) session point of interconnect to the one or more DNs 170, and/or a branching point to support a multi-homed PDU session. The wireless device(s) 156 may be configured to receive services via a PDU session, which may be a logical connection between a wireless device and a DN.

The AMF device 158A may perform functions, such as: Non-Access Stratum (NAS) signaling termination, NAS signaling security, Access Stratum (AS) security control, inter-CN node signaling for mobility between access networks (e.g., 3GPP access networks and/or non-3GPP networks), idle mode wireless device reachability (e.g., idle mode UE reachability for control and execution of paging retransmission), registration area management, intra-system and inter-system mobility support, access authentication, access authorization including checking of roaming rights, mobility management control (e.g., subscription and policies), network slicing support, and/or session management function (SMF) selection. NAS may refer to the functionality operating between a CN and a wireless device, and AS may refer to the functionality operating between a wireless device and a RAN.

The CN 152 (e.g., 5G-CN) may comprise one or more additional network functions that may not be shown in FIG. 1B. The CN 152 (e.g., 5G-CN) may comprise one or more devices implementing at least one of: a Session Management Function (SMF), an NR Repository Function (NRF), a Policy Control Function (PCF), a Network Exposure Function (NEF), a Unified Data Management (UDM), an Application Function (AF), an Authentication Server Function (AUSF), and/or any other function.

The RAN 154 (e.g., NG-RAN) may communicate with the wireless device(s) 156 via radio communications (e.g., an over the air interface). The wireless device(s) 156 may communicate with the CN 152 via the RAN 154. The RAN 154 (e.g., NG-RAN) may comprise one or more first-type base stations (e.g., gNBs comprising a gNB 160A and a gNB 160B (collectively gNBs 160)) and/or one or more second-type base stations (e.g., ng-eNBs comprising an ng-eNB 162A and an ng-eNB 162B (collectively ng-eNBs 162)). The RAN 154 may comprise one or more of any quantity of types of base station. The gNBs 160 and/or ng-eNBs 162 may be referred to as base stations. The base stations (e.g., the gNBs 160 and/or ng-eNBs 162) may comprise one or more sets of antennas for communicating with the wireless device(s) 156 wirelessly (e.g., an over an air interface). One or more base stations (e.g., the gNBs 160 and/or the ng-eNBs 162) may comprise multiple sets of antennas to respectively control multiple cells (or sectors). The cells of the base stations (e.g., the gNBs 160 and/or the ng-eNBs 162) may provide a radio coverage to the wireless device(s) 156 over a wide geographic area to support wireless device mobility.

The base stations (e.g., the gNBs 160 and/or the ng-eNBs 162) may be connected to the CN 152 (e.g., 5G-CN) via a first interface (e.g., an NG interface) and to other base stations via a second interface (e.g., an Xn interface). The NG and Xn interfaces may be established using direct physical connections and/or indirect connections over an underlying transport network, such as an internet protocol (IP) transport network. The base stations (e.g., the gNBs 160 and/or the ng-eNBs 162) may communicate with the wireless device(s) 156 via a third interface (e.g., a Uu interface). A base station (e.g., the gNB 160A) may communicate with the wireless device 156A via a Uu interface. The NG, Xn, and Uu interfaces may be associated with a protocol stack. The protocol stacks associated with the interfaces may be used by the network elements shown in FIG. 1B to exchange data and signaling messages. The protocol stacks may comprise two planes: a user plane and a control plane. Any other quantity of planes may be used (e.g., in a protocol stack). The user plane may handle data of interest to a user. The control plane may handle signaling messages of interest to the network elements.

One or more base stations (e.g., the gNBs 160 and/or the ng-eNBs 162) may communicate with one or more AMF/UPF devices, such as the AMF/UPF 158, via one or more interfaces (e.g., NG interfaces). A base station (e.g., the gNB 160A) may be in communication with, and/or connected to, the UPF 158B of the AMF/UPF 158 via an NG-User plane (NG-U) interface. The NG-U interface may provide/perform delivery (e.g., non-guaranteed delivery) of user plane PDUs between a base station (e.g., the gNB 160A) and a UPF device (e.g., the UPF 158B). The base station (e.g., the gNB 160A) may be in communication with, and/or connected to, an AMF device (e.g., the AMF 158A) via an NG-Control plane (NG-C) interface. The NG-C interface may provide/perform, for example, NG interface management, wireless device context management (e.g., UE context management), wireless device mobility management (e.g., UE mobility management), transport of NAS messages, paging, PDU session management, configuration transfer, and/or warning message transmission.

A wireless device may access the base station, via an interface (e.g., Uu interface), for the user plane configuration and the control plane configuration. The base stations (e.g., gNBs 160) may provide user plane and control plane protocol terminations towards the wireless device(s) 156 via the Uu interface. A base station (e.g., the gNB 160A) may provide user plane and control plane protocol terminations toward the wireless device 156A over a Uu interface associated with a first protocol stack. A base station (e.g., the ng-eNBs 162) may provide E-UTRA user plane and control plane protocol terminations towards the wireless device(s) 156 via a Uu interface (e.g., where E-UTRA may refer to the 3GPP 4G radio-access technology). A base station (e.g., the ng-eNB 162B) may provide E-UTRA user plane and control plane protocol terminations towards the wireless device 156B via a Uu interface associated with a second protocol stack. The user plane and control plane protocol terminations may comprise, for example, NR user plane and control plane protocol terminations, 4G user plane and control plane protocol terminations, etc.

The CN 152 (e.g., 5G-CN) may be configured to handle one or more radio accesses (e.g., NR, 4G, and/or any other radio accesses). It may also be possible for an NR network/device (or any first network/device) to connect to a 4G core network/device (or any second network/device) in a non-standalone mode (e.g., non-standalone operation). In a non-standalone mode/operation, a 4G core network may be used to provide (or at least support) control-plane functionality (e.g., initial access, mobility, and/or paging). Although only one AMF/LJPF 158 is shown in FIG. 1B, one or more base stations (e.g., one or more gNBs and/or one or more ng-eNBs) may be connected to multiple AMF/UPF nodes, for example, to provide redundancy and/or to load share across the multiple AMF/UPF nodes.

An interface (e.g., Uu, Xn, and/or NG interfaces) between network elements (e.g., the network elements shown in FIG. 1B) may be associated with a protocol stack that the network elements may use to exchange data and signaling messages. A protocol stack may comprise two planes: a user plane and a control plane. Any other quantity of planes may be used (e.g., in a protocol stack). The user plane may handle data associated with a user (e.g., data of interest to a user). The control plane may handle data associated with one or more network elements (e.g., signaling messages of interest to the network elements).

The communication network 100 in FIG. 1A and/or the communication network 150 in FIG. 1B may comprise any quantity/number and/or type of devices, such as, for example, computing devices, wireless devices, mobile devices, handsets, tablets, laptops, IoT devices, hotspots, cellular repeaters, computing devices, and/or, more generally, UE. Although one or more of the above types of devices may be referenced herein (e.g., UE, wireless device, computing device, etc.), it should be understood that any device herein may comprise any one or more of the above types of devices or similar devices. The communication network, and any other network referenced herein, may comprise an LTE network, a 5G network, a satellite network, and/or any other network for wireless communications (e.g., any 3GPP network and/or any non-3GPP network). Apparatuses, systems, and/or methods described herein may generally be described as implemented on one or more devices (e.g., wireless device, base station, eNB, gNB, computing device, etc.), in one or more networks, but it will be understood that one or more features and steps may be implemented on any device and/or in any network.

FIG. 2A shows an example user plane configuration. The user plane configuration may comprise, for example, an NR user plane protocol stack. FIG. 2B shows an example control plane configuration. The control plane configuration may comprise, for example, an NR control plane protocol stack. One or more of the user plane configurations and/or the control plane configurations may use a Uu interface that may be between a wireless device 210 and a base station 220. The protocol stacks shown in FIG. 2A and FIG. 2B may be substantially the same or similar to those used for the Uu interface between, for example, the wireless device 156A and the base station 160A shown in FIG. 1B.

A user plane configuration (e.g., an NR user plane protocol stack) may comprise multiple layers (e.g., five layers or any other quantity of layers) implemented in the wireless device 210 and the base station 220 (e.g., as shown in FIG. 2A). At the bottom of the protocol stack, physical layers (PHYs) 211 and 221 may provide transport services to the higher layers of the protocol stack and may correspond to layer 1 of the Open Systems Interconnection (OSI) model. The protocol layers above PHY 211 may comprise a medium access control layer (MAC) 212, a radio link control layer (RLC) 213, a packet data convergence protocol layer (PDCP) 214, and/or a service data application protocol layer (SDAP) 215. The protocol layers above PHY 221 may comprise a medium access control layer (MAC) 222, a radio link control layer (RLC) 223, a packet data convergence protocol layer (PDCP) 224, and/or a service data application protocol layer (SDAP) 225. One or more of the four protocol layers above PHY 211 may correspond to layer 2, or the data link layer, of the OSI model. One or more of the four protocol layers above PHY 221 may correspond to layer 2, or the data link layer, of the OSI model.

FIG. 3 shows an example of protocol layers. The protocol layers may comprise, for example, protocol layers of the NR user plane protocol stack. One or more services may be provided between protocol layers. SDAPs (e.g., SDAPS 215 and 225 shown in FIG. 2A and FIG. 3) may perform QoS flow handling. A wireless device (e.g., the wireless devices 106, 156A, 156B, and 210) may receive services through/via a PDU session, which may be a logical connection between the wireless device and a DN. The PDU session may have one or more QoS flows 310. A UPF (e.g., the UPF 158B) of a CN may map IP packets to the one or more QoS flows 310 of the PDU session, for example, based on one or more QoS requirements (e.g., in terms of delay, data rate, error rate, and/or any other quality/service requirement). The SDAPs 215 and 225 may perform mapping/de-mapping between the one or more QoS flows 310 and one or more radio bearers 320 (e.g., data radio bearers). The mapping/de-mapping between the one or more QoS flows 310 and the radio bearers 320 may be determined by the SDAP 225 of the base station 220. The SDAP 215 of the wireless device 210 may be informed of the mapping between the QoS flows 310 and the radio bearers 320 via reflective mapping and/or control signaling received from the base station 220. For reflective mapping, the SDAP 225 of the base station 220 may mark the downlink packets with a QoS flow indicator (QFI), which may be monitored/detected/identified/indicated/observed by the SDAP 215 of the wireless device 210 to determine the mapping/demapping between the one or more QoS flows 310 and the radio bearers 320.

PDCPs (e.g., the PDCPs 214 and 224 shown in FIG. 2A and FIG. 3) may perform header compression/decompression, for example, to reduce the amount of data that may need to be transmitted (e.g., sent) over the air interface, ciphering/deciphering to prevent unauthorized decoding of data transmitted (e.g., sent) over the air interface, and/or integrity protection (e.g., to ensure control messages originate from intended sources). The PDCPs 214 and 224 may perform retransmissions of undelivered packets, in-sequence delivery and reordering of packets, and/or removal of packets received in duplicate due to, for example, a handover (e.g., an intra-gNB handover). The PDCPs 214 and 224 may perform packet duplication, for example, to improve the likelihood of the packet being received. A receiver may receive the packet in duplicate and may remove any duplicate packets. Packet duplication may be useful for certain services, such as services that require high reliability.

The PDCP layers (e.g., PDCPs 214 and 224) may perform mapping/de-mapping between a split radio bearer and RLC channels (e.g., RLC channels 330) (e.g., in a dual connectivity scenario/configuration). Dual connectivity may refer to a technique that allows a wireless device to communicate with multiple cells (e.g., two cells) or, more generally, multiple cell groups comprising: a master cell group (MCG) and a secondary cell group (SCG). A split bearer may be configured and/or used, for example, if a single radio bearer (e.g., such as one of the radio bearers provided/configured by the PDCPs 214 and 224 as a service to the SDAPs 215 and 225) is handled by cell groups in dual connectivity. The PDCPs 214 and 224 may map/de-map between the split radio bearer and RLC channels 330 belonging to the cell groups.

RLC layers (e.g., RLCs 213 and 223) may perform segmentation, retransmission via Automatic Repeat Request (ARQ), and/or removal of duplicate data units received from MAC layers (e.g., MACs 212 and 222, respectively). The RLC layers (e.g., RLCs 213 and 223) may support multiple transmission modes (e.g., three transmission modes: transparent mode (TM); unacknowledged mode (UM); and acknowledged mode (AM)). The RLC layers (e.g., RLCs 213 and 223) may perform one or more of the noted functions, for example, based on the transmission mode the RLC layer (e.g., RLCs 213 and 223) is operating. The RLC configuration may be per logical channel. The RLC configuration may not depend on numerologies and/or Transmission Time Interval (TTI) durations (or other durations). The RLC layers (e.g., RLCs 213 and 223) may provide/configure RLC channels 330 as a service to the PDCP layers (e.g., PDCPs 214 and 224, respectively), such as shown in FIG. 3.

The MAC layers (e.g., MACs 212 and 222) may perform multiplexing/demultiplexing of logical channels 340 and/or mapping between logical channels 340 and transport channels 350. The multiplexing/demultiplexing may comprise multiplexing/demultiplexing of data units/data portions, belonging to the one or more logical channels 340, into/from Transport Blocks (TBs) delivered to/from PHY layers (e.g., PHYs 211 and 221, respectively). The MAC layer of a base station (e.g., MAC 222) may be configured to perform scheduling, scheduling information reporting, and/or priority handling between wireless devices via dynamic scheduling. Scheduling may be performed by a base station (e.g., the base station 220 at the MAC 222) for downlink/or and uplink. The MAC layers (e.g., MACs 212 and 222) may be configured to perform error correction(s) via Hybrid Automatic Repeat Request (HARQ) (e.g., one HARQ entity per carrier in case of Carrier Aggregation (CA)), priority handling between logical channels 340 of the wireless device 210 via logical channel prioritization and/or padding. The MAC layers (e.g., MACs 212 and 222) may support one or more numerologies and/or transmission timings. Mapping restrictions in a logical channel prioritization may control which numerology and/or transmission timing a logical channel may use. The MAC layers (e.g., the MACs 212 and 222) may provide/configure logical channels 340 as a service to the RLC layers (e.g., the RLCs 213 and 223).

The PHY layers (e.g., PHYs 211 and 221) may perform mapping of transport channels 350 to physical channels and/or digital and analog signal processing functions, for example, for sending and/or receiving information (e.g., via an over the air interface). The digital and/or analog signal processing functions may comprise, for example, coding/decoding and/or modulation/demodulation. The PHY layers (e.g., PHYs 211 and 221) may perform multi-antenna mapping. The PHY layers (e.g., the PHYs 211 and 221) may provide/configure one or more transport channels (e.g., transport channels 350) as a service to the MAC layers (e.g., the MACs 212 and 222, respectively).

FIG. 4A shows an example downlink data flow for a user plane configuration. The user plane configuration may comprise, for example, the NR user plane protocol stack shown in FIG. 2A. One or more TBs may be generated, for example, based on a data flow via a user plane protocol stack. As shown in FIG. 4A, a downlink data flow of three IP packets (n, n+1, and m) via the NR user plane protocol stack may generate two TBs (e.g., at the base station 220). An uplink data flow via the NR user plane protocol stack may be similar to the downlink data flow shown in FIG. 4A. The three IP packets (n, n+1, and m) may be determined from the two TBs, for example, based on the uplink data flow via an NR user plane protocol stack. A first quantity of packets (e.g., three or any other quantity) may be determined from a second quantity of TBs (e.g., two or another quantity).

The downlink data flow may begin, for example, if the SDAP 225 receives the three IP packets (or other quantity of IP packets) from one or more QoS flows and maps the three packets (or other quantity of packets) to radio bearers (e.g., radio bearers 402 and 404). The SDAP 225 may map the IP packets n and n+1 to a first radio bearer 402 and map the IP packet m to a second radio bearer 404. An SDAP header (labeled with "H" preceding each SDAP SDU shown in FIG. 4A) may be added to an IP packet to generate an SDAP PDU, which may be referred to as a PDCP SDU. The data unit transferred from/to a higher protocol layer may be referred to as a service data unit (SDU) of the lower protocol layer, and the data unit transferred to/from a lower protocol layer may be referred to as a protocol data unit (PDU) of the higher protocol layer. As shown in FIG. 4A, the data unit from the SDAP 225 may be an SDU of lower protocol layer PDCP 224 (e.g., PDCP SDU) and may be a PDU of the SDAP 225 (e.g., SDAP PDU).

Each protocol layer (e.g., protocol layers shown in FIG. 4A) or at least some protocol layers may: perform its own function(s) (e.g., one or more functions of each protocol layer described with respect to FIG. 3), add a corresponding header, and/or forward a respective output to the next lower layer (e.g., its respective lower layer). The PDCP 224 may perform an IP-header compression and/or ciphering. The PDCP 224 may forward its output (e.g., a PDCP PDU, which is an RLC SDU) to the RLC 223. The RLC 223 may optionally perform segmentation (e.g., as shown for IP packet m in FIG. 4A). The RLC 223 may forward its outputs (e.g., two RLC PDUs, which are two MAC SDUs, generated by adding respective subheaders to two SDU segments (SDU Segs)) to the MAC 222. The MAC 222 may multiplex a number of RLC PDUs (MAC SDUs). The MAC 222 may attach a MAC subheader to an RLC PDU (MAC SDU) to form a TB. The MAC subheaders may be distributed across the MAC PDU (e.g., in an NR configuration as shown in FIG. 4A). The MAC subheaders may be entirely located at the beginning of a MAC PDU (e.g., in an LTE configuration). The NR MAC PDU structure may reduce a processing time and/or associated latency, for example, if the MAC PDU subheaders are computed before assembling the full MAC PDU.

FIG. 4B shows an example format of a MAC subheader in a MAC PDU. A MAC PDU may comprise a MAC subheader (H) and a MAC SDU. Each of one or more MAC subheaders may comprise an SDU length field for indicating the length (e.g., in bytes) of the MAC SDU to which the MAC subheader corresponds; a logical channel identifier (LCID) field for identifying/indicating the logical channel from which the MAC SDU originated to aid in the demultiplexing process; a flag (F) for indicating the size of the SDU length field; and a reserved bit (R) field for future use.

One or more MAC control elements (CEs) may be added to, or inserted into, the MAC PDU by a MAC layer, such as MAC 212 or MAC 222. As shown in FIG. 4B, two MAC CEs may be inserted into/added to the MAC PDU. The MAC CEs may be inserted/added at the beginning of a MAC PDU for downlink transmissions (as shown in FIG. 4B). One or more MAC CEs may be inserted/added at the end of a MAC PDU for uplink transmissions. MAC CEs may be used for in band control signaling. Example MAC CEs may comprise scheduling-related MAC CEs, such as buffer status reports and power headroom reports; activation/deactivation MAC CEs (e.g., MAC CEs for activation/deactivation of PDCP duplication detection, channel state information (CSI) reporting, sounding reference signal (SRS) transmission, and prior configured components); discontinuous reception (DRX)-related MAC CEs; timing advance MAC CEs; and random access-related MAC CEs. A MAC CE may be preceded by a MAC subheader with a similar format as described for the MAC subheader for MAC SDUs and may be identified with a reserved value in the LCID field that indicates the type of control information included in the corresponding MAC CE.

FIG. 5A shows an example mapping for downlink channels. The mapping for downlink channels may comprise mapping between channels (e.g., logical channels, transport channels, and physical channels) for downlink. FIG. 5B shows an example mapping for uplink channels. The mapping for uplink channels may comprise mapping between channels (e.g., logical channels, transport channels, and physical channels) for uplink. Information may be passed through/via channels between the RLC, the MAC, and the PHY layers of a protocol stack (e.g., the NR protocol stack). A logical channel may be used between the RLC and the MAC layers. The logical channel may be classified/indicated as a control channel that may carry control and/or configuration information (e.g., in the NR control plane), or as a traffic channel that may carry data (e.g., in the NR user plane). A logical channel may be classified/indicated as a dedicated logical channel that may be dedicated to a specific wireless device, and/or as a common logical channel that may be used by more than one wireless device (e.g., a group of wireless devices).

A logical channel may be defined by the type of information it carries. The set of logical channels (e.g., in an NR configuration) may comprise one or more channels described below. A paging control channel (PCCH) may comprise/carry one or more paging messages used to page a wireless device whose location is not known to the network on a cell level. A broadcast control channel (BCCH) may comprise/carry system information messages in the form of a master information block (MIB) and several system information blocks (SIBs). The system information messages may be used by wireless devices to obtain information about how a cell is configured and how to operate within the cell. A common control channel (CCCH) may comprise/carry control messages together with random access. A dedicated control channel (DCCH) may comprise/carry control messages to/from a specific wireless device to configure the wireless device with configuration information. A dedicated traffic channel (DTCH) may comprise/carry user data to/from a specific wireless device.

Transport channels may be used between the MAC and PHY layers. Transport channels may be defined by how the information they carry is sent/transmitted (e.g., via an over the air interface). The set of transport channels (e.g., that may be defined by an NR configuration or any other configuration) may comprise one or more of the following channels. A paging channel (PCH) may comprise/carry paging messages that originated from the PCCH. A broadcast channel (BCH) may comprise/carry the MIB from the BCCH. A downlink shared channel (DL-SCH) may comprise/carry downlink data and signaling messages, including the SIBs from the BCCH. An uplink shared channel (UL-SCH) may comprise/carry uplink data and signaling messages. A random access channel (RACH) may provide a wireless device with an access to the network without any prior scheduling.

The PHY layer may use physical channels to pass/transfer information between processing levels of the PHY layer. A physical channel may comprise an associated set of time-frequency resources for carrying the information of one or more transport channels. The PHY layer may generate control information to support the low-level operation of the PHY layer. The PHY layer may provide/transfer the control information to the lower levels of the PHY layer via physical control channels (e.g., referred to as L1/L2 control channels). The set of physical channels and physical control channels (e.g., that may be defined by an NR configuration or any other configuration) may comprise one or more of the following channels. A physical broadcast channel (PBCH) may comprise/carry the MIB from the BCH. A physical downlink shared channel (PDSCH) may comprise/carry downlink data and signaling messages from the DL-SCH, as well as paging messages from the PCH. A physical downlink control channel (PDCCH) may comprise/carry downlink control information (DCI), which may comprise downlink scheduling commands, uplink scheduling grants, and uplink power control commands. A physical uplink shared channel (PUSCH) may comprise/carry uplink data and signaling messages from the UL-SCH and in some instances uplink control information (UCI) as described below. A physical uplink control channel (PUCCH) may comprise/carry UCI, which may comprise HARQ acknowledgments, channel quality indicators (CQI), pre-coding matrix indicators (PMI), rank indicators (RI), and scheduling requests (SR). A physical random access channel (PRACH) may be used for random access.

The PHY layer may generate physical signals to support the low-level operation of the PHY layer, which may be similar to the physical control channels. As shown in FIG. 5A and FIG. 5B, the physical layer signals (e.g., that may be defined by an NR configuration or any other configuration) may comprise primary synchronization signals (PSS), secondary synchronization signals (SSS), channel state information reference signals (CSI-RS), demodulation reference signals (DM-RS), SRS, phase-tracking reference signals (PT RS), and/or any other signals.

One or more of the channels (e.g., logical channels, transport channels, physical channels, etc.) may be used to carry out functions associated with the control plane protocol stack (e.g., NR control plane protocol stack). FIG. 2B shows an example control plane configuration (e.g., an NR control plane protocol stack). As shown in FIG. 2B, the control plane configuration (e.g., the NR control plane protocol stack) may use substantially the same/similar one or more protocol layers (e.g., PHYs 211 and 221, MACs 212 and 222, RLCs 213 and 223, and PDCPs 214 and 224) as the example user plane configuration (e.g., the NR user plane protocol stack). Similar four protocol layers may comprise the PHYs 211 and 221, the MACs 212 and 222, the RLCs 213 and 223, and the PDCPs 214 and 224. The control plane configuration (e.g., the NR control plane protocol stack) may have radio resource controls (RRCs) 216 and 226 and NAS protocols 217 and 237 at the top of the control plane configuration (e.g., the NR control plane protocol stack), for example, instead of having the SDAPs 215 and 225. The control plane configuration may comprise an AMF 230 comprising the NAS protocol 237.

The NAS protocols 217 and 237 may provide control plane functionality between the wireless device 210 and the AMF 230 (e.g., the AMF 158A or any other AMF) and/or, more generally, between the wireless device 210 and a CN (e.g., the CN 152 or any other CN). The NAS protocols 217 and 237 may provide control plane functionality between the wireless device 210 and the AMF 230 via signaling messages, referred to as NAS messages. There may be no direct path between the wireless device 210 and the AMF 230 via which the NAS messages may be transported. The NAS messages may be transported using the AS of the Uu and NG interfaces. The NAS protocols 217 and 237 may provide control plane functionality, such as authentication, security, a connection setup, mobility management, session management, and/or any other functionality.

The RRCs 216 and 226 may provide/configure control plane functionality between the wireless device 210 and the base station 220 and/or, more generally, between the wireless device 210 and the RAN (e.g., the base station 220). The RRC layers 216 and 226 may provide/configure control plane functionality between the wireless device 210 and the base station 220 via signaling messages, which may be referred to as RRC messages. The RRC messages may be sent/transmitted between the wireless device 210 and the RAN (e.g., the base station 220) using signaling radio bearers and substantially the same/similar PDCP, RLC, MAC, and PHY protocol layers. The MAC layer may multiplex control-plane and user-plane data into the same TB. The RRC layers 216 and 226 may provide/configure control plane functionality, such as one or more of the following functionalities: broadcast of system information related to AS and NAS; paging initiated by the CN or the RAN; establishment, maintenance and release of an RRC connection between the wireless device 210 and the RAN (e.g., the base station 220); security functions including key management; establishment, configuration, maintenance and release of signaling radio bearers and data radio bearers; mobility functions; QoS management functions; wireless device measurement reporting and control of the reporting; detection of and recovery from radio link failure (RLF); and/or NAS message transfer. As part of establishing an RRC connection, the RRC layers 216 and 226 may establish an RRC context, which may involve configuring parameters for communication between the wireless device 210 and the RAN (e.g., the base station 220).

FIG. 6 shows example RRC states and RRC state transitions. An RRC state of a wireless device may be changed to another RRC state (e.g., RRC state transitions of a wireless device). The wireless device may be substantially the same or similar to the wireless device 106, 210, or any other wireless device. A wireless device may be in at least one of a plurality of states, such as three RRC states comprising RRC connected 602 (e.g., RRC_CONNECTED), RRC idle 606 (e.g., RRC_IDLE), and RRC inactive 604 (e.g., RRC_INACTIVE). The RRC inactive 604 may be RRC connected but inactive.

An RRC connection may be established for the wireless device. For example, this may be during an RRC connected state. During the RRC connected state (e.g., during the RRC connected 602), the wireless device may have an established RRC context and may have at least one RRC connection with a base station. The base station may be similar to one of the one or more base stations (e.g., one or more base stations of the RAN 104 shown in FIG. 1A, one of the gNBs 160 or ng-eNBs 162 shown in FIG. 1B, the base station 220 shown in FIG. 2A and FIG. 2B, or any other base stations). The base station with which the wireless device is connected (e.g., has established an RRC connection) may have the RRC context for the wireless device. The RRC context, which may be referred to as a wireless device context (e.g., the UE context), may comprise parameters for communication between the wireless device and the base station. These parameters may comprise, for example, one or more of: AS contexts; radio link configuration parameters; bearer configuration information (e.g., relating to a data radio bearer, a signaling radio bearer, a logical channel, a QoS flow, and/or a PDU session); security information; and/or layer configuration information (e.g., PHY, MAC, RLC, PDCP, and/or SDAP layer configuration information). During the RRC connected state (e.g., the RRC connected 602), mobility of the wireless device may be managed/controlled by an RAN (e.g., the RAN 104, the RAN 154, or any other RAN). The wireless device may measure received signal levels (e.g., reference signal levels, reference signal received power, reference signal received quality, received signal strength indicator, etc.) based on one or more signals sent from a serving cell and neighboring cells. The wireless device may report these measurements to a serving base station (e.g., the base station currently serving the wireless device). The serving base station of the wireless device may request a handover to a cell of one of the neighboring base stations, for example, based on the reported measurements. The RRC state may transition from the RRC connected state (e.g., the RRC connected 602) to an RRC idle state (e.g., the RRC idle 606) via a connection release procedure 608. The RRC state may transition from the RRC connected state (e.g., the RRC connected 602) to the RRC inactive state (e.g., the RRC inactive 604) via a connection inactivation procedure 610.

An RRC context may not be established for the wireless device. For example, this may be during the RRC idle state. During the RRC idle state (e.g., the RRC idle 606), an RRC context may not be established for the wireless device. During the RRC idle state (e.g., the RRC idle 606), the wireless device may not have an RRC connection with the base station. During the RRC idle state (e.g., the RRC idle 606), the wireless device may be in a sleep state for the majority of the time (e.g., to conserve battery power). The wireless device may wake up periodically (e.g., once in every DRX cycle) to monitor for paging messages (e.g., paging messages set from the RAN). Mobility of the wireless device may be managed by the wireless device via a procedure of a cell reselection. The RRC state may transition from the RRC idle state (e.g., the RRC idle 606) to the RRC connected state (e.g., the RRC connected 602) via a connection establishment procedure 612, which may involve a random access procedure.

A previously established RRC context may be maintained for the wireless device. For example, this may be during the RRC inactive state. During the RRC inactive state (e.g., the RRC inactive 604), the RRC context previously established may be maintained in the wireless device and the base station. The maintenance of the RRC context may enable/allow a fast transition to the RRC connected state (e.g., the RRC connected 602) with reduced signaling overhead as compared to the transition from the RRC idle state (e.g., the RRC idle 606) to the RRC connected state (e.g., the RRC connected 602). During the RRC inactive state (e.g., the RRC inactive 604), the wireless device may be in a sleep state and mobility of the wireless device may be managed/controlled by the wireless device via a cell reselection. The RRC state may transition from the RRC inactive state (e.g., the RRC inactive 604) to the RRC connected state (e.g., the RRC connected 602) via a connection resume procedure 614. The RRC state may transition from the RRC inactive state (e.g., the RRC inactive 604) to the RRC idle state (e.g., the RRC idle 606) via a connection release procedure 616 that may be substantially the same as or similar to connection release procedure 608.

An RRC state may be associated with a mobility management mechanism. During the RRC idle state (e.g., the RRC idle 606) and the RRC inactive state (e.g., the RRC inactive 604), mobility may be managed/controlled by the wireless device via a cell reselection. The purpose of mobility management during the RRC idle state (e.g., the RRC idle 606) or during the RRC inactive state (e.g., the RRC inactive 604) may be to enable/allow the network to be able to notify the wireless device of an event via a paging message without having to broadcast the paging message over the entire mobile communications network. The mobility management mechanism used during the RRC idle state (e.g., the RRC idle 606) or during the RRC inactive state (e.g., the RRC inactive 604) may enable/allow the network to track the wireless device on a cell-group level, for example, so that the paging message may be broadcast over the cells of the cell group that the wireless device currently resides within (e.g. instead of sending the paging message over the entire mobile communication network). The mobility management mechanisms for the RRC idle state (e.g., the RRC idle 606) and the RRC inactive state (e.g., the RRC inactive 604) may track the wireless device on a cell-group level. The mobility management mechanisms may do the tracking, for example, using different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN (e.g., the CN 102, the CN 152, or any other CN) may send to the wireless device a list of TAIs associated with a wireless device registration area (e.g., a UE registration area). A wireless device may perform a registration update with the CN to allow the CN to update the location of the wireless device and provide the wireless device with a new the wireless device registration area, for example, if the wireless device moves (e.g., via a cell reselection) to a cell associated with a TAI that may not be included in the list of TAIs associated with the wireless device registration area.

RAN areas may be used to track the wireless device (e.g., the location of the wireless device at the RAN level). For a wireless device in an RRC inactive state (e.g., the RRC inactive 604), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing an RRC context for a wireless device or a last serving base station of the wireless device may be referred to as an anchor base station. An anchor base station may maintain an RRC context for the wireless device at least during a period of time that the wireless device stays in a RAN notification area of the anchor base station and/or during a period of time that the wireless device stays in an RRC inactive state (e.g., the RRC inactive 604).

A base station (e.g., the gNBs 160 in FIG. 1B or any other base station) may be split in two parts: a central unit (e.g., a base station central unit, such as a gNB-CU) and one or more distributed units (e.g., a base station distributed unit, such as a gNB-DU). A base station central unit (CU) may be coupled to one or more base station distributed units (DUs) using an F1 interface (e.g., an F1 interface defined in an NR configuration). The base station CU may comprise the RRC, the PDCP, and the SDAP layers. A base station distributed unit (DU) may comprise the RLC, the MAC, and the PHY layers.

The physical signals and physical channels (e.g., described with respect to FIG. 5A and FIG. 5B) may be mapped onto one or more symbols (e.g., orthogonal frequency divisional multiplexing (OFDM) symbols in an NR configuration or any other symbols). OFDM may be a multicarrier communication scheme that sends/transmits data over F orthogonal subcarriers (or tones). The data may be mapped to a series of complex symbols (e.g., M-quadrature amplitude modulation (M-QAM) symbols or M-phase shift keying (M PSK) symbols or any other modulated symbols), referred to as source symbols, and divided into F parallel symbol streams, for example, before transmission of the data. The F parallel symbol streams may be treated as if they are in the frequency domain. The F parallel symbol streams may be used as inputs to an Inverse Fast Fourier Transform (IFFT) block that transforms them into the time domain. The IFFT block may take in F source symbols at a time, one from each of the F parallel symbol streams. The IFFT block may use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. An OFDM symbol provided/output by the IFFT block may be sent/transmitted over the air interface on a carrier frequency, for example, after one or more processes (e.g., addition of a cyclic prefix) and up-conversion. The F parallel symbol streams may be mixed, for example, using a Fast Fourier Transform (FFT) block before being processed by the IFFT block. This operation may produce Discrete Fourier Transform (DFT)-precoded OFDM symbols and may be used by one or more wireless devices in the uplink to reduce the peak to average power ratio (PAPR). Inverse processing may be performed on the OFDM symbol at a receiver using an FFT block to recover the data mapped to the source symbols.

FIG. 7 shows an example configuration of a frame. The frame may comprise, for example, an NR radio frame into which OFDM symbols may be grouped. A frame (e.g., an NR radio frame) may be identified/indicated by a system frame number (SFN) or any other value. The SFN may repeat with a period of 1024 frames. One NR radio frame may be 10 milliseconds (ms) in duration and may comprise 10 subframes that are 1 ms in duration. A subframe may be divided into one or more slots (e.g., depending on numerologies and/or different subcarrier spacings). Each of the one or more slots may comprise, for example, 14 OFDM symbols per slot. Any quantity of symbols, slots, or duration may be used for any time interval.

The duration of a slot may depend on the numerology used for the OFDM symbols of the slot. A flexible numerology may be supported, for example, to accommodate different deployments (e.g., cells with carrier frequencies below 1 GHz up to cells with carrier frequencies in the mm-wave range). A flexible numerology may be supported, for example, in an NR configuration or any other radio configurations. A numerology may be defined in terms of subcarrier spacing and/or cyclic prefix duration. Subcarrier spacings may be scaled up by powers of two from a baseline subcarrier spacing of 15 kHz. Cyclic prefix durations may be scaled down by powers of two from a baseline cyclic prefix duration of 4.7 $\mu$s, for example, for a numerology in an NR configuration or any other radio configurations. Numerologies may be defined with the following subcarrier spacing/cyclic prefix duration combinations: 15 kHz/4.7 $\mu$s; 30 kHz/2.3 $\mu$s; 60 kHz/1.2 $\mu$s; 120 kHz/0.59 $\mu$s; 240 kHz/0.29 $\mu$s, and/or any other subcarrier spacing/cyclic prefix duration combinations.

A slot may have a fixed number/quantity of OFDM symbols (e.g., 14 OFDM symbols). A numerology with a higher subcarrier spacing may have a shorter slot duration and more slots per subframe. Examples of numerology-dependent slot duration and slots-per-subframe transmission structure are shown in FIG. 7 (the numerology with a subcarrier spacing of 240 kHz is not shown in FIG. 7). A subframe (e.g., in an NR configuration) may be used as a numerology-independent time reference. A slot may be used as the unit upon which uplink and downlink transmissions are scheduled. Scheduling (e.g., in an NR configuration) may be decoupled from the slot duration. Scheduling may start at any OFDM symbol. Scheduling may last for as many symbols as needed for a transmission, for example, to support low latency. These partial slot transmissions may be referred to as mini-slot or sub-slot transmissions.

FIG. 8 shows an example resource configuration of one or more carriers. The resource configuration may comprise a slot in the time and frequency domain for an NR carrier or any other carrier. The slot may comprise resource elements (REs) and resource blocks (RBs). A resource element (RE) may be the smallest physical resource (e.g., in an NR configuration). An RE may span one OFDM symbol in the time domain by one subcarrier in the frequency domain, such as shown in FIG. 8. An RB may span twelve consecutive REs in the frequency domain, such as shown in FIG. 8. A carrier (e.g., an NR carrier) may be limited to a width of a certain quantity of RBs and/or subcarriers (e.g., 275 RBs or $275\times12$ = 3300 subcarriers). Such limitation(s), if used, may limit the carrier (e.g., NR carrier) frequency based on subcarrier spacing (e.g., carrier frequency of 50, 100, 200, and 400 MHz for subcarrier spacings of 15, 30, 60, and 120 kHz, respectively). A 400 MHz bandwidth may be set based on a 400 MHz per carrier bandwidth limit. Any other bandwidth may be set based on a per carrier bandwidth limit.

A single numerology may be used across the entire bandwidth of a carrier (e.g., an NR carrier such as shown in FIG. 8). In other example configurations, multiple numerologies may be supported on the same carrier. NR and/or other access technologies may support wide carrier bandwidths (e.g., up to 400 MHz for a subcarrier spacing of 120 kHz). Not all wireless devices may be able to receive the full carrier bandwidth (e.g., due to hardware limitations and/or different wireless device capabilities). Receiving and/or utilizing the full carrier bandwidth may be prohibitive, for example, in terms of wireless device power consumption. A wireless device may adapt the size of the receive bandwidth of the wireless device, for example, based on the amount of traffic the wireless device is scheduled to receive (e.g., to reduce power consumption and/or for other purposes). Such an adaptation may be referred to as bandwidth adaptation.

Configuration of one or more bandwidth parts (BWPs) may support one or more wireless devices not capable of receiving the full carrier bandwidth. BWPs may support bandwidth adaptation, for example, for such wireless devices not capable of receiving the full carrier bandwidth. A BWP (e.g., a BWP of an NR configuration) may be defined by a subset of contiguous RBs on a carrier. A wireless device may be configured (e.g., via an RRC layer) with one or more downlink BWPs per serving cell and one or more uplink BWPs per serving cell (e.g., up to four downlink BWPs per serving cell and up to four uplink BWPs per serving cell). One or more of the configured BWPs for a serving cell may be active, for example, at a given time. The one or more BWPs may be referred to as active BWPs of the serving cell. A serving cell may have one or more first active BWPs in the uplink carrier and one or more second active BWPs in the secondary uplink carrier, for example, if the serving cell is configured with a secondary uplink carrier.

A downlink BWP from a set of configured downlink BWPs may be linked with an uplink BWP from a set of configured uplink BWPs (e.g., for unpaired spectra). A downlink BWP and an uplink BWP may be linked, for example, if a downlink BWP index of the downlink BWP and an uplink BWP index of the uplink BWP are the same. A wireless device may expect that the center frequency for a downlink BWP is the same as the center frequency for an uplink BWP (e.g., for unpaired spectra).

A base station may configure a wireless device with one or more control resource sets (CORESETs) for at least one search space. The base station may configure the wireless device with one or more CORESETS, for example, for a downlink BWP in a set of configured downlink BWPs on a primary cell (PCell) or on a secondary cell (SCell). A search space may comprise a set of locations in the time and frequency domains where the wireless device may monitor/find/detect/identify control information. The search space may be a wireless device-specific search space (e.g., a UE-specific search space) or a common search space (e.g., potentially usable by a plurality of wireless devices or a group of wireless user devices). A base station may configure a group of wireless devices with a common search space, on a PCell or on a primary secondary cell (PSCell), in an active downlink BWP.

A base station may configure a wireless device with one or more resource sets for one or more PUCCH transmissions, for example, for an uplink BWP in a set of configured uplink BWPs. A wireless device may receive downlink receptions (e.g., PDCCH or PDSCH) in a downlink BWP, for example, according to a configured numerology (e.g., a configured subcarrier spacing and/or a configured cyclic prefix duration) for the downlink BWP. The wireless device may send/transmit uplink transmissions (e.g., PUCCH or PUSCH) in an uplink BWP, for example, according to a configured numerology (e.g., a configured subcarrier spacing and/or a configured cyclic prefix length for the uplink BWP).

One or more BWP indicator fields may be provided/comprised in DCI. A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a wireless device with a default downlink BWP within a set of configured downlink BWPs associated with a PCell. A default downlink BWP may be an initial active downlink BWP, for example, if the base station does not provide/configure a default downlink BWP to/for the wireless device. The wireless device may determine which BWP is the initial active downlink BWP, for example, based on a CORESET configuration obtained using the PBCH.

A base station may configure a wireless device with a BWP inactivity timer value for a PCell. The wireless device may start or restart a BWP inactivity timer at any appropriate time. The wireless device may start or restart the BWP inactivity timer, for example, if one or more conditions are satisfied. The one or more conditions may comprise at least one of: the wireless device detects DCI indicating an active downlink BWP other than a default downlink BWP for a paired spectra operation; the wireless device detects DCI indicating an active downlink BWP other than a default downlink BWP for an unpaired spectra operation; and/or the wireless device detects DCI indicating an active uplink BWP other than a default uplink BWP for an unpaired spectra operation. The wireless device may start/run the BWP inactivity timer toward expiration (e.g., increment from zero to the BWP inactivity timer value, or decrement from the BWP inactivity timer value to zero), for example, if the wireless device does not detect DCI during a time interval (e.g., 1 ms or 0.5 ms). The wireless device may switch from the active downlink BWP to the default downlink BWP, for example, if the BWP inactivity timer expires.

A base station may semi-statically configure a wireless device with one or more BWPs. A wireless device may switch an active BWP from a first BWP to a second BWP, for example, based on (e.g., after or in response to) receiving DCI indicating the second BWP as an active BWP. A wireless device may switch an active BWP from a first BWP to a second BWP, for example, based on (e.g., after or in response to) an expiry of the BWP inactivity timer (e.g., if the second BWP is the default BWP).

A downlink BWP switching may refer to switching an active downlink BWP from a first downlink BWP to a second downlink BWP (e.g., the second downlink BWP is activated and the first downlink BWP is deactivated). An uplink BWP switching may refer to switching an active uplink BWP from a first uplink BWP to a second uplink BWP (e.g., the second uplink BWP is activated and the first uplink BWP is deactivated). Downlink and uplink BWP switching may be performed independently (e.g., in paired spectrum/spectra). Downlink and uplink BWP switching may be performed simultaneously (e.g., in unpaired spectrum/spectra). Switching between configured BWPs may occur, for example, based on RRC signaling, DCI signaling, expiration of a BWP inactivity timer, and/or an initiation of random access.

FIG. 9 shows an example of configured BWPs. Bandwidth adaptation using multiple BWPs (e.g., three configured BWPs for an NR carrier) may be available. A wireless device configured with multiple BWPs (e.g., the three BWPs) may switch from one BWP to another BWP at a switching point. The BWPs may comprise: a BWP 902 having a bandwidth of 40 MHz and a subcarrier spacing of 15 kHz; a BWP 904 having a bandwidth of 10 MHz and a subcarrier spacing of 15 kHz; and a BWP 906 having a bandwidth of 20 MHz and a subcarrier spacing of 60 kHz. The BWP 902 may be an initial active BWP, and the BWP 904 may be a default BWP. The wireless device may switch between BWPs at switching points. The wireless device may switch from the BWP 902 to the BWP 904 at a switching point 908. The switching at the switching point 908 may occur for any suitable reasons. The switching at the switching point 908 may occur, for example, based on (e.g., after or in response to) an expiry of a BWP inactivity timer (e.g., indicating switching to the default BWP). The switching at the switching point 908 may occur, for example, based on (e.g., after or in response to) receiving DCI indicating the BWP 904 as the active BWP. The wireless device may switch at a switching point 910 from the active BWP (e.g., the BWP 904) to the BWP 906, for example, after or in response receiving DCI indicating the BWP 906 as a new active BWP. The wireless device may switch at a switching point 912 from the active BWP (e.g., the BWP 906) to the BWP 904, for example, a based on (e.g., after or in response to) an expiry of a BWP inactivity timer. The wireless device may switch at the switching point 912 from the active BWP (e.g., the BWP 906) to the BWP 904, for example, after or in response to receiving DCI indicating the BWP 904 as a new active BWP. The wireless device may switch at a switching point 914 from the active BWP (e.g., the BWP 904) to the BWP 902, for example, after or in response receiving DCI indicating the BWP 902 as a new active BWP.

Wireless device procedures for switching BWPs on a secondary cell may be substantially the same/similar as those on a primary cell, for example, if the wireless device is configured for a secondary cell with a default downlink BWP in a set of configured downlink BWPs and a timer value. The wireless device may use the timer value and the default downlink BWP for the secondary cell in substantially the same/similar manner as the wireless device uses the timer value and/or default downlink BWPs for a primary cell. The timer value (e.g., the BWP inactivity timer) may be configured per cell (e.g., for one or more BWPs), for example, via RRC signaling or any other signaling. One or more active BWPs may switch to another BWP, for example, based on an expiration of the BWP inactivity timer.

Two or more carriers may be aggregated and data may be simultaneously sent/transmitted to/from the same wireless device using carrier aggregation (CA) (e.g., to increase data rates). The aggregated carriers in CA may be referred to as component carriers (CCs). There may be a number/quantity of serving cells for the wireless device (e.g., one serving cell for a CC), for example, if CA is configured/used. The CCs may have multiple configurations in the frequency domain.

FIG. 10A shows example CA configurations based on CCs. As shown in FIG. 10A, three types of CA configurations may comprise an intraband (contiguous) configuration 1002, an intraband (non-contiguous) configuration 1004, and/or an interband configuration 1006. In the intraband (contiguous) configuration 1002, two CCs may be aggregated in the same frequency band (frequency band A) and may be located directly adjacent to each other within the frequency band. In the intraband (non-contiguous) configuration 1004, two CCs may be aggregated in the same frequency band (frequency band A) but may be separated from each other in the frequency band by a gap. In the interband configuration 1006, two CCs may be located in different frequency bands (e.g., frequency band A and frequency band B, respectively).

A network may set the maximum quantity of CCs that can be aggregated (e.g., up to 32 CCs may be aggregated in NR, or any other quantity may be aggregated in other systems). The aggregated CCs may have the same or different bandwidths, subcarrier spacing, and/or duplexing schemes (TDD, FDD, or any other duplexing schemes). A serving cell for a wireless device using CA may have a downlink CC. One or more uplink CCs may be optionally configured for a serving cell (e.g., for FDD). The ability to aggregate more downlink carriers than uplink carriers may be useful, for example, if the wireless device has more data traffic in the downlink than in the uplink.

One of the aggregated cells for a wireless device may be referred to as a primary cell (PCell), for example, if a CA is configured. The PCell may be the serving cell that the wireless initially connects to or access to, for example, during or at an RRC connection establishment, an RRC connection reestablishment, and/or a handover. The PCell may provide/configure the wireless device with NAS mobility information and the security input. Wireless devices may have different PCells. For the downlink, the carrier corresponding to the PCell may be referred to as the downlink primary CC (DL PCC). For the uplink, the carrier corresponding to the PCell may be referred to as the uplink primary CC (UL PCC). The other aggregated cells (e.g., associated with CCs other than the DL PCC and UL PCC) for the wireless device may be referred to as secondary cells (SCells). The SCells may be configured, for example, after the PCell is configured for the wireless device. An SCell may be configured via an RRC connection reconfiguration procedure. For the downlink, the carrier corresponding to an SCell may be referred to as a downlink secondary CC (DL SCC). For the uplink, the carrier corresponding to the SCell may be referred to as the uplink secondary CC (UL SCC).

Configured SCells for a wireless device may be activated or deactivated, for example, based on traffic and channel conditions. Deactivation of an SCell may cause the wireless device to stop PDCCH and PDSCH reception on the SCell and PUSCH, SRS, and CQI transmissions on the SCell. Configured SCells may be activated or deactivated, for example, using a MAC CE (e.g., the MAC CE described with respect to FIG. 4B). A MAC CE may use a bitmap (e.g., one bit per SCell) to indicate which SCells (e.g., in a subset of configured SCells) for the wireless device are activated or deactivated. Configured SCells may be deactivated, for example, based on (e.g., after or in response to) an expiration of an SCell deactivation timer (e.g., one SCell deactivation timer per SCell may be configured).

DCI may comprise control information for the downlink, such as scheduling assignments and scheduling grants, for a cell. DCI may be sent/transmitted via the cell corresponding to the scheduling assignments and/or scheduling grants, which may be referred to as a self-scheduling. DCI comprising control information for a cell may be sent/transmitted via another cell, which may be referred to as a cross-carrier scheduling. UCI may comprise control information for the uplink, such as HARQ acknowledgments and channel state feedback (e.g., CQI, PMI, and/or RI) for aggregated cells. UCI may be sent/transmitted via an uplink control channel (e.g., a PUCCH) of the PCell or a certain SCell (e.g., an SCell configured with PUCCH). For a larger number of aggregated downlink CCs, the PUCCH of the PCell may become overloaded. Cells may be divided into multiple PUCCH groups.

FIG. 10B shows example group of cells. Aggregated cells may be configured into one or more PUCCH groups (e.g., as shown in FIG. 10B). One or more cell groups or one or more uplink control channel groups (e.g., a PUCCH group 1010 and a PUCCH group 1050) may comprise one or more downlink CCs, respectively. The PUCCH group 1010 may comprise one or more downlink CCs, for example, three downlink CCs: a PCell 1011 (e.g., a DL PCC), an SCell 1012 (e.g., a DL SCC), and an SCell 1013 (e.g., a DL SCC). The PUCCH group 1050 may comprise one or more downlink CCs, for example, three downlink CCs: a PUCCH SCell (or PSCell) 1051 (e.g., a DL SCC), an SCell 1052 (e.g., a DL SCC), and an SCell 1053 (e.g., a DL SCC). One or more uplink CCs of the PUCCH group 1010 may be configured as a PCell 1021 (e.g., a UL PCC), an SCell 1022 (e.g., a UL SCC), and an SCell 1023 (e.g., a UL SCC). One or more uplink CCs of the PUCCH group 1050 may be configured as a PUCCH SCell (or PSCell) 1061 (e.g., a UL SCC), an SCell 1062 (e.g., a UL SCC), and an SCell 1063 (e.g., a UL SCC). UCI related to the downlink CCs of the PUCCH group 1010, shown as UCI 1031, UCI 1032, and UCI 1033, may be sent/transmitted via the uplink of the PCell 1021 (e.g., via the PUCCH of the PCell 1021). UCI related to the downlink CCs of the PUCCH group 1050, shown as UCI 1071, UCI 1072, and UCI 1073, may be sent/transmitted via the uplink of the PUCCH SCell (or PSCell) 1061 (e.g., via the PUCCH of the PUCCH SCell 1061). A single uplink PCell may be configured to send/transmit UCI relating to the six downlink CCs, for example, if the aggregated cells shown in FIG. 10B are not divided into the PUCCH group 1010 and the PUCCH group 1050. The PCell 1021 may become overloaded, for example, if the UCIs 1031, 1032, 1033, 1071, 1072, and 1073 are sent/transmitted via the PCell 1021. By dividing transmissions of UCI between the PCell 1021 and the PUCCH SCell (or PSCell) 1061, overloading may be prevented and/or reduced.

A PCell may comprise a downlink carrier (e.g., the PCell 1011) and an uplink carrier (e.g., the PCell 1021). An SCell may comprise only a downlink carrier. A cell, comprising a downlink carrier and optionally an uplink carrier, may be assigned with a physical cell ID and a cell index. The physical cell ID or the cell index may indicate/identify a downlink carrier and/or an uplink carrier of the cell, for example, depending on the context in which the physical cell ID is used. A physical cell ID may be determined, for example, using a synchronization signal (e.g., PSS and/or SSS) sent/transmitted via a downlink component carrier. A cell index may be determined, for example, using one or more RRC messages. A physical cell ID may be referred to as a carrier ID, and a cell index may be referred to as a carrier index. A first physical cell ID for a first downlink carrier may refer to the first physical cell ID for a cell comprising the first downlink carrier. Substantially the same/similar concept may use/apply to, for example, a carrier activation. Activation of a first carrier may refer to activation of a cell comprising the first carrier.

A multi-carrier nature of a PHY layer may be exposed/indicated to a MAC layer (e.g., in a CA configuration). A HARQ entity may operate on a serving cell. A transport block may be generated per assignment/grant per serving cell. A transport block and potential HARQ retransmissions of the transport block may be mapped to a serving cell.

For the downlink, a base station may send/transmit (e.g., unicast, multicast, and/or broadcast), to one or more wireless devices, one or more reference signals (RSs) (e.g., PSS, SSS, CSI-RS, DM-RS, and/or PT-RS). For the uplink, the one or more wireless devices may send/transmit one or more RSs to the base station (e.g., DM-RS, PT-RS, and/or SRS). The PSS and the SSS may be sent/transmitted by the base station and used by the one or more wireless devices to synchronize the one or more wireless devices with the base station. A synchronization signal (SS) / physical broadcast channel (PBCH) block may comprise the PSS, the SSS, and the PBCH. The base station may periodically send/transmit a burst of SS/PBCH blocks, which may be referred to as SSBs.

FIG. 11A shows an example mapping of one or more SS/PBCH blocks. A burst of SS/PBCH blocks may comprise one or more SS/PBCH blocks (e.g., 4 SS/PBCH blocks, as shown in FIG. 11A). Bursts may be sent/transmitted periodically (e.g., every 2 frames, 20 ms, or any other durations). A burst may be restricted to a half-frame (e.g., a first half-frame having a duration of 5 ms). Such parameters (e.g., the number of SS/PBCH blocks per burst, periodicity of bursts, position of the burst within the frame) may be configured, for example, based on at least one of: a carrier frequency of a cell in which the SS/PBCH block is sent/transmitted; a numerology or subcarrier spacing of the cell; a configuration by the network (e.g., using RRC signaling); and/or any other suitable factor(s). A wireless device may assume a subcarrier spacing for the SS/PBCH block based on the carrier frequency being monitored, for example, unless the radio network configured the wireless device to assume a different subcarrier spacing.

The SS/PBCH block may span one or more OFDM symbols in the time domain (e.g., 4 OFDM symbols, as shown in FIG. 11A or any other quantity/number of symbols) and may span one or more subcarriers in the frequency domain (e.g., 240 contiguous subcarriers or any other quantity/number of subcarriers). The PSS, the SSS, and the PBCH may have a common center frequency. The PSS may be sent/transmitted first and may span, for example, 1 OFDM symbol and 127 subcarriers. The SSS may be sent/transmitted after the PSS (e.g., two symbols later) and may span 1 OFDM symbol and 127 subcarriers. The PBCH may be sent/transmitted after the PSS (e.g., across the next 3 OFDM symbols) and may span 240 subcarriers (e.g., in the second and fourth OFDM symbols as shown in FIG. 11A) and/or may span fewer than 240 subcarriers (e.g., in the third OFDM symbols as shown in FIG. 11A).

The location of the SS/PBCH block in the time and frequency domains may not be known to the wireless device (e.g., if the wireless device is searching for the cell). The wireless device may monitor a carrier for the PSS, for example, to find and select the cell. The wireless device may monitor a frequency location within the carrier. The wireless device may search for the PSS at a different frequency location within the carrier, for example, if the PSS is not found after a certain duration (e.g., 20 ms). The wireless device may search for the PSS at a different frequency location within the carrier, for example, as indicated by a synchronization raster. The wireless device may determine the locations of the SSS and the PBCH, respectively, for example, based on a known structure of the SS/PBCH block if the PSS is found at a location in the time and frequency domains. The SS/PBCH block may be a cell-defining SS block (CD-SSB). A primary cell may be associated with a CD-SSB. The CD-SSB may be located on a synchronization raster. A cell selection/search and/or reselection may be based on the CD-SSB.

The SS/PBCH block may be used by the wireless device to determine one or more parameters of the cell. The wireless device may determine a physical cell identifier (PCI) of the cell, for example, based on the sequences of the PSS and the SSS, respectively. The wireless device may determine a location of a frame boundary of the cell, for example, based on the location of the SS/PBCH block. The SS/PBCH block may indicate that it has been sent/transmitted in accordance with a transmission pattern. An SS/PBCH block in the transmission pattern may be a known distance from the frame boundary (e.g., a predefined distance for a RAN configuration among one or more networks, one or more base stations, and one or more wireless devices).

The PBCH may use a QPSK modulation and/or forward error correction (FEC). The FEC may use polar coding. One or more symbols spanned by the PBCH may comprise/carry one or more DM-RSs for demodulation of the PBCH. The PBCH may comprise an indication of a current system frame number (SFN) of the cell and/or a SS/PBCH block timing index. These parameters may facilitate time synchronization of the wireless device to the base station. The PBCH may comprise a MIB used to send/transmit to the wireless device one or more parameters. The MIB may be used by the wireless device to locate remaining minimum system information (RMSI) associated with the cell. The RMSI may comprise a System Information Block Type 1 (SIB1). The SIB1 may comprise information for the wireless device to access the cell. The wireless device may use one or more parameters of the MIB to monitor a PDCCH, which may be used to schedule a PDSCH. The PDSCH may comprise the SIB1. The SIB1 may be decoded using parameters provided/comprised in the MIB. The PBCH may indicate an absence of SIB 1. The wireless device may be pointed to a frequency, for example, based on the PBCH indicating the absence of SIB1. The wireless device may search for an SS/PBCH block at the frequency to which the wireless device is pointed.

The wireless device may assume that one or more SS/PBCH blocks sent/transmitted with a same SS/PBCH block index are quasi co-located (QCLed) (e.g., having substantially the same/similar Doppler spread, Doppler shift, average gain, average delay, and/or spatial receiving (Rx) parameters). The wireless device may not assume QCL for SS/PBCH block transmissions having different SS/PBCH block indices. SS/PBCH blocks (e.g., those within a half-frame) may be sent/transmitted in spatial directions (e.g., using different beams that span a coverage area of the cell). A first SS/PBCH block may be sent/transmitted in a first spatial direction using a first beam, a second SS/PBCH block may be sent/transmitted in a second spatial direction using a second beam, a third SS/PBCH block may be sent/transmitted in a third spatial direction using a third beam, a fourth SS/PBCH block may be sent/transmitted in a fourth spatial direction using a fourth beam, etc.

A base station may send/transmit a plurality of SS/PBCH blocks, for example, within a frequency span of a carrier. A first PCI of a first SS/PBCH block of the plurality of SS/PBCH blocks may be different from a second PCI of a second SS/PBCH block of the plurality of SS/PBCH blocks. The PCIs of SS/PBCH blocks sent/transmitted in different frequency locations may be different or substantially the same.

The CSI-RS may be sent/transmitted by the base station and used by the wireless device to acquire/obtain/determine CSI. The base station may configure the wireless device with one or more CSI-RSs for channel estimation or any other suitable purpose. The base station may configure a wireless device with one or more of substantially the same/similar CSI-RSs. The wireless device may measure the one or more CSI-RSs. The wireless device may estimate a downlink channel state and/or generate a CSI report, for example, based on the measuring of the one or more downlink CSI-RSs. The wireless device may send/transmit the CSI report to the base station (e.g., based on periodic CSI reporting, semi-persistent CSI reporting, and/or aperiodic CSI reporting). The base station may use feedback provided by the wireless device (e.g., the estimated downlink channel state) to perform a link adaptation.

The base station may semi-statically configure the wireless device with one or more CSI-RS resource sets. A CSI-RS resource may be associated with a location in the time and frequency domains and a periodicity. The base station may selectively activate and/or deactivate a CSI-RS resource. The base station may indicate to the wireless device that a CSI-RS resource in the CSI-RS resource set is activated and/or deactivated.

The base station may configure the wireless device to report CSI measurements. The base station may configure the wireless device to provide CSI reports periodically, aperiodically, or semi-persistently. For periodic CSI reporting, the wireless device may be configured with a timing and/or periodicity of a plurality of CSI reports. For aperiodic CSI reporting, the base station may request a CSI report. The base station may command the wireless device to measure a configured CSI-RS resource and provide a CSI report relating to the measurement(s). For semi-persistent CSI reporting, the base station may configure the wireless device to send/transmit periodically, and selectively activate or deactivate the periodic reporting (e.g., via one or more activation/deactivation MAC CEs and/or one or more DCIs). The base station may configure the wireless device with a CSI-RS resource set and CSI reports, for example, using RRC signaling.

The CSI-RS configuration may comprise one or more parameters indicating, for example, up to 32 antenna ports (or any other quantity of antenna ports). The wireless device may be configured to use/employ the same OFDM symbols for a downlink CSI-RS and a CORESET, for example, if the downlink CSI-RS and CORESET are spatially QCLed and resource elements associated with the downlink CSI-RS are outside of the physical resource blocks (PRBs) configured for the CORESET. The wireless device may be configured to use/employ the same OFDM symbols for a downlink CSI-RS and SS/PBCH blocks, for example, if the downlink CSI-RS and SS/PBCH blocks are spatially QCLed and resource elements associated with the downlink CSI-RS are outside of PRBs configured for the SS/PBCH blocks.

Downlink DM-RSs may be sent/transmitted by a base station and received/used by a wireless device for a channel estimation. The downlink DM-RSs may be used for coherent demodulation of one or more downlink physical channels (e.g., PDSCH). A network (e.g., an NR network) may support one or more variable and/or configurable DM-RS patterns for data demodulation. At least one downlink DM-RS configuration may support a front-loaded DM-RS pattern. A front-loaded DM-RS may be mapped over one or more OFDM symbols (e.g., one or two adjacent OFDM symbols). A base station may semi-statically configure the wireless device with a number/quantity (e.g. a maximum number/quantity) of front-loaded DM-RS symbols for a PDSCH. A DM-RS configuration may support one or more DM-RS ports. A DM-RS configuration may support up to eight orthogonal downlink DM-RS ports (or any other quantity of orthogonal downlink DM-RS ports) per wireless device (e.g., for single user-MIMO). A DM-RS configuration may support up to 4 orthogonal downlink DM-RS ports (or any other quantity of orthogonal downlink DM-RS ports) per wireless device (e.g., for multiuser-MIMO). A radio network may support (e.g., at least for CP-OFDM) a common DM-RS structure for downlink and uplink. A DM-RS location, a DM-RS pattern, and/or a scrambling sequence may be substantially the same or different. The base station may send/transmit a downlink DM-RS and a corresponding PDSCH, for example, using the same precoding matrix. The wireless device may use the one or more downlink DM-RSs for coherent demodulation/channel estimation of the PDSCH.

A transmitter (e.g., a transmitter of a base station) may use a precoder matrices for a part of a transmission bandwidth. The transmitter may use a first precoder matrix for a first bandwidth and a second precoder matrix for a second bandwidth. The first precoder matrix and the second precoder matrix may be different, for example, based on the first bandwidth being different from the second bandwidth. The wireless device may assume that a same precoding matrix is used across a set of PRBs. The set of PRBs may be determined/indicated/identified/denoted as a precoding resource block group (PRG).

A PDSCH may comprise one or more layers. The wireless device may assume that at least one symbol with DM-RS is present on a layer of the one or more layers of the PDSCH. A higher layer may configure one or more DM-RSs for a PDSCH (e.g., up to 3 DMRSs for the PDSCH). Downlink PT-RS may be sent/transmitted by a base station and used by a wireless device, for example, for a phase-noise compensation. Whether a downlink PT-RS is present or not may depend on an RRC configuration. The presence and/or the pattern of the downlink PT-RS may be configured on a wireless device-specific basis, for example, using a combination of RRC signaling and/or an association with one or more parameters used/employed for other purposes (e.g., modulation and coding scheme (MCS)), which may be indicated by DCI.A dynamic presence of a downlink PT-RS, if configured, may be associated with one or more DCI parameters comprising at least MCS. A network (e.g., an NR network) may support a plurality of PT-RS densities defined in the time and/or frequency domains. A frequency domain density (if configured/present) may be associated with at least one configuration of a scheduled bandwidth. The wireless device may assume a same precoding for a DM-RS port and a PT-RS port. The quantity/number of PT-RS ports may be fewer than the quantity/number of DM-RS ports in a scheduled resource. Downlink PT-RS may be configured/allocated/confined in the scheduled time/frequency duration for the wireless device. Downlink PT-RS may be sent/transmitted via symbols, for example, to facilitate a phase tracking at the receiver.

The wireless device may send/transmit an uplink DM-RS to a base station, for example, for a channel estimation. The base station may use the uplink DM-RS for coherent demodulation of one or more uplink physical channels. The wireless device may send/transmit an uplink DM-RS with a PUSCH and/or a PUCCH. The uplink DM-RS may span a range of frequencies that is similar to a range of frequencies associated with the corresponding physical channel. The base station may configure the wireless device with one or more uplink DM-RS configurations. At least one DM-RS configuration may support a front-loaded DM-RS pattern. The front-loaded DM-RS may be mapped over one or more OFDM symbols (e.g., one or two adjacent OFDM symbols). One or more uplink DM-RSs may be configured to send/transmit at one or more symbols of a PUSCH and/or a PUCCH. The base station may semi-statically configure the wireless device with a number/quantity (e.g. the maximum number/quantity) of front-loaded DM-RS symbols for the PUSCH and/or the PUCCH, which the wireless device may use to schedule a single-symbol DM-RS and/or a double-symbol DM-RS. A network (e.g., an NR network) may support (e.g., for cyclic prefix orthogonal frequency division multiplexing (CP-OFDM)) a common DM-RS structure for downlink and uplink. A DM-RS location, a DM-RS pattern, and/or a scrambling sequence for the DM-RS may be substantially the same or different.

A PUSCH may comprise one or more layers. A wireless device may send/transmit at least one symbol with DM-RS present on a layer of the one or more layers of the PUSCH. A higher layer may configure one or more DM-RSs (e.g., up to three DMRSs) for the PUSCH. Uplink PT-RS (which may be used by a base station for a phase tracking and/or a phase-noise compensation) may or may not be present, for example, depending on an RRC configuration of the wireless device. The presence and/or the pattern of an uplink PT-RS may be configured on a wireless device-specific basis (e.g., a UE-specific basis), for example, by a combination of RRC signaling and/or one or more parameters configured/employed for other purposes (e.g., MCS), which may be indicated by DCI. A dynamic presence of an uplink PT-RS, if configured, may be associated with one or more DCI parameters comprising at least MCS. A radio network may support a plurality of uplink PT-RS densities defined in time/frequency domain. A frequency domain density (if configured/present) may be associated with at least one configuration of a scheduled bandwidth. The wireless device may assume a same precoding for a DM-RS port and a PT-RS port. A quantity/number of PT-RS ports may be less than a quantity/number of DM-RS ports in a scheduled resource. An uplink PT-RS may be configured/allocated/confined in the scheduled time/frequency duration for the wireless device.

One or more SRSs may be sent/transmitted by a wireless device to a base station, for example, for a channel state estimation to support uplink channel dependent scheduling and/or a link adaptation. SRS sent/transmitted by the wireless device may enable/allow a base station to estimate an uplink channel state at one or more frequencies. A scheduler at the base station may use/employ the estimated uplink channel state to assign one or more resource blocks for an uplink PUSCH transmission for the wireless device. The base station may semi-statically configure the wireless device with one or more SRS resource sets. For an SRS resource set, the base station may configure the wireless device with one or more SRS resources. An SRS resource set applicability may be configured, for example, by a higher layer (e.g., RRC) parameter. An SRS resource in a SRS resource set of the one or more SRS resource sets (e.g., with substantially the same/similar time domain behavior, periodic, aperiodic, and/or the like) may be sent/transmitted at a time instant (e.g., simultaneously), for example, if a higher layer parameter indicates beam management. The wireless device may send/transmit one or more SRS resources in SRS resource sets. A network (e.g., an NR network) may support aperiodic, periodic, and/or semi-persistent SRS transmissions. The wireless device may send/transmit SRS resources, for example, based on one or more trigger types. The one or more trigger types may comprise higher layer signaling (e.g., RRC) and/or one or more DCI formats. At least one DCI format may be used/employed for the wireless device to select at least one of one or more configured SRS resource sets. An SRS trigger type 0 may refer to an SRS triggered based on higher layer signaling. An SRS trigger type 1 may refer to an SRS triggered based on one or more DCI formats. The wireless device may be configured to send/transmit an SRS, for example, after a transmission of a PUSCH and a corresponding uplink DM-RS if a PUSCH and an SRS are sent/transmitted in a same slot. A base station may semi-statically configure a wireless device with one or more SRS configuration parameters indicating at least one of following: a SRS resource configuration identifier; a number of SRS ports; time domain behavior of an SRS resource configuration (e.g., an indication of periodic, semi-persistent, or aperiodic SRS); slot, mini-slot, and/or subframe level periodicity; an offset for a periodic and/or an aperiodic SRS resource; a number of OFDM symbols in an SRS resource; a starting OFDM symbol of an SRS resource; an SRS bandwidth; a frequency hopping bandwidth; a cyclic shift; and/or an SRS sequence ID.

An antenna port may be determined/defined such that the channel over which a symbol on the antenna port is conveyed can be inferred from the channel over which another symbol on the same antenna port is conveyed. The receiver may infer/determine the channel (e.g., fading gain, multipath delay, and/or the like) for conveying a second symbol on an antenna port, from the channel for conveying a first symbol on the antenna port, for example, if the first symbol and the second symbol are sent/transmitted on the same antenna port. A first antenna port and a second antenna port may be referred to as QCLed, for example, if one or more large-scale properties of the channel over which a first symbol on the first antenna port is conveyed may be inferred/determined from the channel over which a second symbol on a second antenna port is conveyed. The one or more large-scale properties may comprise at least one of: a delay spread; a Doppler spread; a Doppler shift; an average gain; an average delay; and/or spatial Rx parameters.

Channels that use beamforming may require beam management. Beam management may comprise a beam measurement, a beam selection, and/or a beam indication. A beam may be associated with one or more reference signals. A beam may be identified by one or more beamformed reference signals. The wireless device may perform a downlink beam measurement, for example, based on one or more downlink reference signals (e.g., a CSI-RS) and generate a beam measurement report. The wireless device may perform the downlink beam measurement procedure, for example, after an RRC connection is set up with a base station.

FIG. 11B shows an example mapping of one or more CSI-RSs. The CSI-RSs may be mapped in the time and frequency domains. Each rectangular block shown in FIG. 11B may correspond to a RB within a bandwidth of a cell. A base station may send/transmit one or more RRC messages comprising CSI-RS resource configuration parameters indicating one or more CSI-RSs. One or more of parameters may be configured by higher layer signaling (e.g., RRC and/or MAC signaling) for a CSI-RS resource configuration. The one or more of the parameters may comprise at least one of: a CSI-RS resource configuration identity, a number of CSI-RS ports, a CSI-RS configuration (e.g., symbol and RE locations in a subframe), a CSI-RS subframe configuration (e.g., a subframe location, an offset, and periodicity in a radio frame), a CSI-RS power parameter, a CSI-RS sequence parameter, a code division multiplexing (CDM) type parameter, a frequency density, a transmission comb, QCL parameters (e.g., QCL-scramblingidentity, crs-portscount, mbsfn-subframeconfiglist, csi-rs-configZPid, qcl-csi-rs-configNZPid), and/or other radio resource parameters.

One or more beams may be configured for a wireless device in a wireless device-specific configuration. Three beams may be shown in FIG. 11B (beam #1, beam #2, and beam #3), but more or fewer beams may be configured. Beam #1 may be allocated with CSI-RS 1101 that may be sent/transmitted in one or more subcarriers in an RB of a first symbol. Beam #2 may be allocated with CSI-RS 1102 that may be sent/transmitted in one or more subcarriers in an RB of a second symbol. Beam #3 may be allocated with CSI-RS 1103 that may be sent/transmitted in one or more subcarriers in an RB of a third symbol. A base station may use other subcarriers in the same RB (e.g., those that are not used to send/transmit CSI-RS 1101) to transmit another CSI-RS associated with a beam for another wireless device, for example, by using frequency division multiplexing (FDM). Beams used for a wireless device may be configured such that beams for the wireless device use symbols different from symbols used by beams of other wireless devices, for example, by using time domain multiplexing (TDM). A wireless device may be served with beams in orthogonal symbols (e.g., no overlapping symbols), for example, by using the TDM.

CSI-RSs (e.g., CSI-RSs 1101, 1102, 1103) may be sent/transmitted by the base station and used by the wireless device for one or more measurements. The wireless device may measure a reference signal received power (RSRP) of configured CSI-RS resources. The base station may configure the wireless device with a reporting configuration, and the wireless device may report the RSRP measurements to a network (e.g., via one or more base stations) based on the reporting configuration. The base station may determine, based on the reported measurement results, one or more transmission configuration indication (TCI) states comprising a number of reference signals. The base station may indicate one or more TCI states to the wireless device (e.g., via RRC signaling, a MAC CE, and/or DCI). The wireless device may receive a downlink transmission with an Rx beam determined based on the one or more TCI states. The wireless device may or may not have a capability of beam correspondence. The wireless device may determine a spatial domain filter of a transmit (Tx) beam, for example, based on a spatial domain filter of the corresponding Rx beam, if the wireless device has the capability of beam correspondence. The wireless device may perform an uplink beam selection procedure to determine the spatial domain filter of the Tx beam, for example, if the wireless device does not have the capability of beam correspondence. The wireless device may perform the uplink beam selection procedure, for example, based on one or more SRS resources configured to the wireless device by the base station. The base station may select and indicate uplink beams for the wireless device, for example, based on measurements of the one or more SRS resources sent/transmitted by the wireless device.

A wireless device may determine/assess (e.g., measure) a channel quality of one or more beam pair links, for example, in a beam management procedure. A beam pair link may comprise a Tx beam of a base station and an Rx beam of the wireless device. The Tx beam of the base station may send/transmit a downlink signal, and the Rx beam of the wireless device may receive the downlink signal. The wireless device may send/transmit a beam measurement report, for example, based on the assessment/determination. The beam measurement report may indicate one or more beam pair quality parameters comprising at least one of: one or more beam identifications (e.g., a beam index, a reference signal index, or the like), an RSRP, a PMI, a CQI, and/or a RI.

FIG. 12A shows examples of downlink beam management procedures. One or more downlink beam management procedures (e.g., downlink beam management procedures P1, P2, and P3) may be performed. Procedure P1 may enable a measurement (e.g., a wireless device measurement) on Tx beams of a TRP (or multiple TRPs) (e.g., to support a selection of one or more base station Tx beams and/or wireless device Rx beams). The Tx beams of a base station and the Rx beams of a wireless device are shown as ovals in the top row of P1 and bottom row of P1, respectively. Beamforming (e.g., at a TRP) may comprise a Tx beam sweep for a set of beams (e.g., the beam sweeps shown, in the top rows of P1 and P2, as ovals rotated in a counter-clockwise direction indicated by the dashed arrows). Beamforming (e.g., at a wireless device) may comprise an Rx beam sweep for a set of beams (e.g., the beam sweeps shown, in the bottom rows of P1 and P3, as ovals rotated in a clockwise direction indicated by the dashed arrows). Procedure P2 may be used to enable a measurement (e.g., a wireless device measurement) on Tx beams of a TRP (shown, in the top row of P2, as ovals rotated in a counter-clockwise direction indicated by the dashed arrow). The wireless device and/or the base station may perform procedure P2, for example, using a smaller set of beams than the set of beams used in procedure P1, or using narrower beams than the beams used in procedure P1. Procedure P2 may be referred to as a beam refinement. The wireless device may perform procedure P3 for an Rx beam determination, for example, by using the same Tx beam(s) of the base station and sweeping Rx beam(s) of the wireless device.

FIG. 12B shows examples of uplink beam management procedures. One or more uplink beam management procedures (e.g., uplink beam management procedures U1, U2, and U3) may be performed. Procedure U1 may be used to enable a base station to perform a measurement on Tx beams of a wireless device (e.g., to support a selection of one or more Tx beams of the wireless device and/or Rx beams of the base station). The Tx beams of the wireless device and the Rx beams of the base station are shown as ovals in the bottom row of U1 and top row of U1, respectively). Beamforming (e.g., at the wireless device) may comprise one or more beam sweeps, for example, a Tx beam sweep from a set of beams (shown, in the bottom rows of U1 and U3, as ovals rotated in a clockwise direction indicated by the dashed arrows). Beamforming (e.g., at the base station) may comprise one or more beam sweeps, for example, an Rx beam sweep from a set of beams (shown, in the top rows of U1 and U2, as ovals rotated in a counter-clockwise direction indicated by the dashed arrows). Procedure U2 may be used to enable the base station to adjust its Rx beam, for example, if the wireless device (e.g., UE) uses a fixed Tx beam. The wireless device and/or the base station may perform procedure U2, for example, using a smaller set of beams than the set of beams used in procedure P1, or using narrower beams than the beams used in procedure P1. Procedure U2 may be referred to as a beam refinement. The wireless device may perform procedure U3 to adjust its Tx beam, for example, if the base station uses a fixed Rx beam.

A wireless device may initiate/start/perform a beam failure recovery (BFR) procedure, for example, based on detecting a beam failure. The wireless device may send/transmit a BFR request (e.g., a preamble, UCI, an SR, a MAC CE, and/or the like), for example, based on the initiating the BFR procedure. The wireless device may detect the beam failure, for example, based on a determination that a quality of beam pair link(s) of an associated control channel is unsatisfactory (e.g., having an error rate higher than an error rate threshold, a received signal power lower than a received signal power threshold, an expiration of a timer, and/or the like).

The wireless device may measure a quality of a beam pair link, for example, using one or more RSs comprising one or more SS/PBCH blocks, one or more CSI-RS resources, and/or one or more DM-RSs. A quality of the beam pair link may be based on one or more of a block error rate (BLER), an RSRP value, a signal to interference plus noise ratio (SINR) value, an RSRQ value, and/or a CSI value measured on RS resources. The base station may indicate that an RS resource is QCLed with one or more DM-RSs of a channel (e.g., a control channel, a shared data channel, and/or the like). The RS resource and the one or more DM-RSs of the channel may be QCLed, for example, if the channel characteristics (e.g., Doppler shift, Doppler spread, an average delay, delay spread, a spatial Rx parameter, fading, and/or the like) from a transmission via the RS resource to the wireless device are substantially the same or similar as the channel characteristics from a transmission via the channel to the wireless device.

A network (e.g., an NR network comprising a gNB and/or an ng-eNB) and/or the wireless device may initiate/start/perform a random access procedure. A wireless device in an RRC idle (e.g., an RRC_IDLE) state and/or an RRC inactive (e.g., an RRC_INACTIVE) state may initiate/perform the random access procedure to request a connection setup to a network. The wireless device may initiate/start/perform the random access procedure from an RRC connected (e.g., an RRC_CONNECTED) state. The wireless device may initiate/start/perform the random access procedure to request uplink resources (e.g., for uplink transmission of an SR if there is no PUCCH resource available) and/or acquire/obtain/determine an uplink timing (e.g., if an uplink synchronization status is non-synchronized). The wireless device may initiate/start/perform the random access procedure to request one or more SIBs (e.g., or any other system information blocks, such as SIB2, SIB3, and/or the like). The wireless device may initiate/start/perform the random access procedure for a beam failure recovery request. A network may initiate/start/perform a random access procedure, for example, for a handover and/or for establishing time alignment for an SCell addition.

FIG. 13A shows an example four-step random access procedure. The four-step random access procedure may comprise a four-step contention-based random access procedure. A base station may send/transmit a configuration message 1310 to a wireless device, for example, before initiating the random access procedure. The four-step random access procedure may comprise transmissions of four messages comprising: a first message (e.g., Msg 1 1311), a second message (e.g., Msg 2 1312), a third message (e.g., Msg 3 1313), and a fourth message (e.g., Msg 4 1314). The first message (e.g., Msg 1 1311) may comprise a preamble (or a random access preamble). The first message (e.g., Msg 1 1311) may be referred to as a preamble. The second message (e.g., Msg 2 1312) may comprise as a random access response (RAR). The second message (e.g., Msg 2 1312) may be referred to as an RAR.

The configuration message 1310 may be sent/transmitted, for example, using one or more RRC messages. The one or more RRC messages may indicate one or more RACH parameters to the wireless device. The one or more RACH parameters may comprise at least one of: general parameters for one or more random access procedures (e.g., RACH-configGeneral); cell-specific parameters (e.g., RACH-ConfigCommon); and/or dedicated parameters (e.g., RACH-configDedicated). The base station may send/transmit (e.g., broadcast or multicast) the one or more RRC messages to one or more wireless devices. The one or more RRC messages may be wireless device-specific. The one or more RRC messages that are wireless device-specific may be, for example, dedicated RRC messages sent/transmitted to a wireless device in an RRC connected (e.g., an RRC_CONNECTED) state and/or in an RRC inactive (e.g., an RRC_INACTIVE) state. The wireless devices may determine, based on the one or more RACH parameters, a time-frequency resource and/or an uplink transmit power for transmission of the first message (e.g., Msg 1 1311) and/or the third message (e.g., Msg 3 1313). The wireless device may determine a reception timing and a downlink channel for receiving the second message (e.g., Msg 2 1312) and the fourth message (e.g., Msg 4 1314), for example, based on the one or more RACH parameters.

The one or more RACH parameters provided/configured/comprised in the configuration message 1310 may indicate one or more PRACH occasions available for transmission of the first message (e.g., Msg 1 1311). The one or more PRACH occasions may be predefined (e.g., by a network comprising one or more base stations). The one or more RACH parameters may indicate one or more available sets of one or more PRACH occasions (e.g., prach-ConfigIndex). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. The one or more RACH parameters may indicate a quantity/number of SS/PBCH blocks mapped to a PRACH occasion and/or a quantity/number of preambles mapped to a SS/PBCH blocks.

The one or more RACH parameters provided/configured/comprised in the configuration message 1310 may be used to determine an uplink transmit power of first message (e.g., Msg 1 1311) and/or third message (e.g., Msg 3 1313). The one or more RACH parameters may indicate a reference power for a preamble transmission (e.g., a received target power and/or an initial power of the preamble transmission). There may be one or more power offsets indicated by the one or more RACH parameters. The one or more RACH parameters may indicate: a power ramping step; a power offset between SSB and CSI-RS; a power offset between transmissions of the first message (e.g., Msg 1 1311) and the third message (e.g., Msg 3 1313); and/or a power offset value between preamble groups. The one or more RACH parameters may indicate one or more thresholds, for example, based on which the wireless device may determine at least one reference signal (e.g., an SSB and/or CSI-RS) and/or an uplink carrier (e.g., a normal uplink (NUL) carrier and/or a supplemental uplink (SUL) carrier).

The first message (e.g., Msg 1 1311) may comprise one or more preamble transmissions (e.g., a preamble transmission and one or more preamble retransmissions). An RRC message may be used to configure one or more preamble groups (e.g., group A and/or group B). A preamble group may comprise one or more preambles. The wireless device may determine the preamble group, for example, based on a pathloss measurement and/or a size of the third message (e.g., Msg 3 1313). The wireless device may measure an RSRP of one or more reference signals (e.g., SSBs and/or CSI-RSs) and determine at least one reference signal having an RSRP above an RSRP threshold (e.g., rsrp-ThresholdSSB and/or rsrp-ThresholdCSI-RS). The wireless device may select at least one preamble associated with the one or more reference signals and/or a selected preamble group, for example, if the association between the one or more preambles and the at least one reference signal is configured by an RRC message.

The wireless device may determine the preamble, for example, based on the one or more RACH parameters provided/configured/comprised in the configuration message 1310. The wireless device may determine the preamble, for example, based on a pathloss measurement, an RSRP measurement, and/or a size of the third message (e.g., Msg 3 1313). The one or more RACH parameters may indicate at least one of: a preamble format; a maximum quantity/number of preamble transmissions; and/or one or more thresholds for determining one or more preamble groups (e.g., group A and group B). A base station may use the one or more RACH parameters to configure the wireless device with an association between one or more preambles and one or more reference signals (e.g., SSBs and/or CSI-RSs). The wireless device may determine the preamble to be comprised in first message (e.g., Msg 1 1311), for example, based on the association if the association is configured. The first message (e.g., Msg 1 1311) may be sent/transmitted to the base station via one or more PRACH occasions. The wireless device may use one or more reference signals (e.g., SSBs and/or CSI-RSs) for selection of the preamble and for determining of the PRACH occasion. One or more RACH parameters (e.g., ra-ssb-OccasionMskIndex and/or ra-OccasionList) may indicate an association between the PRACH occasions and the one or more reference signals.

The wireless device may perform a preamble retransmission, for example, if no response is received based on (e.g., after or in response to) a preamble transmission (e.g., for a period of time, such as a monitoring window for monitoring an RAR). The wireless device may increase an uplink transmit power for the preamble retransmission. The wireless device may select an initial preamble transmit power, for example, based on a pathloss measurement and/or a target received preamble power configured by the network. The wireless device may determine to resend/retransmit a preamble and may ramp up the uplink transmit power. The wireless device may receive one or more RACH parameters (e.g., PREAMBLE POWER RAMPING STEP) indicating a ramping step for the preamble retransmission. The ramping step may be an amount of incremental increase in uplink transmit power for a retransmission. The wireless device may ramp up the uplink transmit power, for example, if the wireless device determines a reference signal (e.g., SSB and/or CSI-RS) that is the same as a previous preamble transmission. The wireless device may count the quantity/number of preamble transmissions and/or retransmissions, for example, using a counter parameter (e.g., PREAMBLE TRANSMISSION COUNTER). The wireless device may determine that a random access procedure has been completed unsuccessfully, for example, if the quantity/number of preamble transmissions exceeds a threshold configured by the one or more RACH parameters (e.g., preambleTransMax) without receiving a successful response (e.g., an RAR).

The second message (e.g., Msg 2 1312) (e.g., received by the wireless device) may comprise an RAR. The second message (e.g., Msg 2 1312) may comprise multiple RARs corresponding to multiple wireless devices. The second message (e.g., Msg 2 1312) may be received, for example, based on (e.g., after or in response to) the sending/transmitting of the first message (e.g., Msg 1 1311). The second message (e.g., Msg 2 1312) may be scheduled on the DL-SCH and may be indicated by a PDCCH, for example, using a random access radio network temporary identifier (RA RNTI). The second message (e.g., Msg 2 1312) may indicate that the first message (e.g., Msg 1 1311) was received by the base station. The second message (e.g., Msg 2 1312) may comprise a time-alignment command that may be used by the wireless device to adjust the transmission timing of the wireless device, a scheduling grant for transmission of the third message (e.g., Msg 3 1313), and/or a Temporary Cell RNTI (TC-RNTI). The wireless device may determine/start a time window (e.g., ra-ResponseWindow) to monitor a PDCCH for the second message (e.g., Msg 2 1312), for example, after sending/transmitting the first message (e.g., Msg 1 1311) (e.g., a preamble). The wireless device may determine the start time of the time window, for example, based on a PRACH occasion that the wireless device uses to send/transmit the first message (e.g., Msg 1 1311) (e.g., the preamble). The wireless device may start the time window one or more symbols after the last symbol of the first message (e.g., Msg 1 1311) comprising the preamble (e.g., the symbol in which the first message (e.g., Msg 1 1311) comprising the preamble transmission was completed or at a first PDCCH occasion from an end of a preamble transmission). The one or more symbols may be determined based on a numerology. The PDCCH may be mapped in a common search space (e.g., a Type1-PDCCH common search space) configured by an RRC message. The wireless device may identify/determine the RAR, for example, based on an RNTI. RNTIs may be used depending on one or more events initiating/starting the random access procedure. The wireless device may use a RA-RNTI, for example, for one or more communications associated with random access or any other purpose. The RA-RNTI may be associated with PRACH occasions in which the wireless device sends/transmits a preamble. The wireless device may determine the RA-RNTI, for example, based on at least one of: an OFDM symbol index; a slot index; a frequency domain index; and/or a UL carrier indicator of the PRACH occasions. An example RA-RNTI may be determined as follows:

$$\text{RA-RNTI} = 1 + s_id + 14 \times t_id + 14 \times 80 \times f_id + 14 \times 80 \times 8 \times ul_carrier_id,$$

where s_id may be an index of a first OFDM symbol of the PRACH occasion (e.g., $0 \leq$ s id < 14), t id may be an index of a first slot of the PRACH occasion in a system frame (e.g., $0 \leq$ t id < 80), f id may be an index of the PRACH occasion in the frequency domain (e.g., $0 \leq$ f id < 8), and ul carrier id may be a UL carrier used for a preamble transmission (e.g.,

0 for an NUL carrier, and 1 for an SUL carrier).

The wireless device may send/transmit the third message (e.g., Msg 3 1313), for example, based on (e.g., after or in response to) a successful reception of the second message (e.g., Msg 2 1312) (e.g., using resources identified in the Msg 2 1312). The third message (e.g., Msg 3 1313) may be used, for example, for contention resolution in the contention-based random access procedure. A plurality of wireless devices may send/transmit the same preamble to a base station, and the base station may send/transmit an RAR that corresponds to a wireless device. Collisions may occur, for example, if the plurality of wireless device interpret the RAR as corresponding to themselves. Contention resolution (e.g., using the third message (e.g., Msg 3 1313) and the fourth message (e.g., Msg 4 1314)) may be used to increase the likelihood that the wireless device does not incorrectly use an identity of another wireless device. The wireless device may comprise a device identifier in the third message (e.g., Msg 3 1313) (e.g., a C-RNTI if assigned, a TC RNTI comprised in the second message (e.g., Msg 2 1312), and/or any other suitable identifier), for example, to perform contention resolution.

The fourth message (e.g., Msg 4 1314) may be received, for example, based on (e.g., after or in response to) the sending/transmitting of the third message (e.g., Msg 3 1313). The base station may address the wireless device on the PDCCH (e.g., the base station may send the PDCCH to the wireless device) using a C-RNTI, for example, if the C-RNTI was included in the third message (e.g., Msg 3 1313). The random access procedure may be determined to be successfully completed, for example, if the unique C-RNTI of the wireless device is detected on the PDCCH (e.g., the PDCCH is scrambled by the C-RNTI). The fourth message (e.g., Msg 4 1314) may be received using a DL-SCH associated with a TC-RNTI, for example, if the TC RNTI is comprised in the third message (e.g., Msg 3 1313) (e.g., if the wireless device is in an RRC idle (e.g., an RRC IDLE) state or not otherwise connected to the base station). The wireless device may determine that the contention resolution is successful and/or the wireless device may determine that the random access procedure is successfully completed, for example, if a MAC PDU is successfully decoded and a MAC PDU comprises the wireless device contention resolution identity MAC CE that matches or otherwise corresponds with the CCCH SDU sent/transmitted in third message (e.g., Msg 3 1313).

The wireless device may be configured with an SUL carrier and/or an NUL carrier. An initial access (e.g., random access) may be supported via an uplink carrier. A base station may configure the wireless device with multiple RACH configurations (e.g., two separate RACH configurations comprising: one for an SUL carrier and the other for an NUL carrier). For random access in a cell configured with an SUL carrier, the network may indicate which carrier to use (NUL or SUL). The wireless device may determine to use the SUL carrier, for example, if a measured quality of one or more reference signals (e.g., one or more reference signals associated with the NUL carrier) is lower than a broadcast threshold. Uplink transmissions of the random access procedure (e.g., the first message (e.g., Msg 1 1311) and/or the third message (e.g., Msg 3 1313)) may remain on, or may be performed via, the selected carrier. The wireless device may switch an uplink carrier during the random access procedure (e.g., for the first message (e.g., Msg 1 1311) and/or the third message (e.g., Msg 3 1313)). The wireless device may determine and/or switch an uplink carrier for the first message (e.g., Msg 1 1311) and/or the third message (e.g., Msg 3 1313), for example, based on a channel clear assessment (e.g., a listen-before-talk).

FIG. 13B shows a two-step random access procedure. The two-step random access procedure may comprise a two-step contention-free random access procedure. Similar to the four-step contention-based random access procedure, a base station may, prior to initiation of the procedure, send/transmit a configuration message 1320 to the wireless device. The configuration message 1320 may be analogous in some respects to the configuration message 1310. The procedure shown in FIG. 13B may comprise transmissions of two messages: a first message (e.g., Msg 1 1321) and a second message (e.g., Msg 2 1322). The first message (e.g., Msg 1 1321) and the second message (e.g., Msg 2 1322) may be analogous in some respects to the first message (e.g., Msg 1 1311) and a second message (e.g., Msg 2 1312), respectively. The two-step contention-free random access procedure may not comprise messages analogous to the third message (e.g., Msg 3 1313) and/or the fourth message (e.g., Msg 4 1314).

The two-step (e.g., contention-free) random access procedure may be configured initiated for a beam failure recovery, other SI request, an SCell addition, and/or a handover. A base station may indicate, or assign to, the wireless device a preamble to be used for the first message (e.g., Msg 1 1321). The wireless device may receive, from the base station via a PDCCH and/or an RRC, an indication of the preamble (e.g., ra-PreambleIndex).

The wireless device may start a time window (e.g., ra-ResponseWindow) to monitor a PDCCH for the RAR, for example, based on (e.g., after or in response to) sending/transmitting the preamble. The base station may configure the wireless device with one or more beam failure recovery parameters, such as a separate time window and/or a separate PDCCH in a search space indicated by an RRC message (e.g., recoverySearchSpaceId). The base station may configure the one or more beam failure recovery parameters, for example, in association with a beam failure recovery request. The separate time window for monitoring the PDCCH and/or an RAR may be configured to start after sending/transmitting a beam failure recovery request (e.g., the window may start any quantity of symbols and/or slots after sending/transmitting the beam failure recovery request). The wireless device may monitor for a PDCCH transmission addressed to a Cell RNTI (C-RNTI) on the search space. During the two-step (e.g., contention-free) random access procedure, the wireless device may determine that a random access procedure is successful, for example, based on (e.g., after or in response to) sending/transmitting first message (e.g., Msg 1 1321) and receiving a corresponding second message (e.g., Msg 2 1322). The wireless device may determine that a random access procedure has successfully been completed, for example, if a PDCCH transmission is addressed to a corresponding C-RNTI. The wireless device may determine that a random access procedure has successfully been completed, for example, if the wireless device receives an RAR comprising a preamble identifier corresponding to a preamble sent/transmitted by the wireless device and/or the RAR comprises a MAC sub-PDU with the preamble identifier. The wireless device may determine the response as an indication of an acknowledgement for an SI request.

FIG. 13C shows an example two-step random access procedure. Similar to the random access procedures shown in FIGS. 13A and 13B, a base station may, prior to initiation of the procedure, send/transmit a configuration message 1330 to the wireless device. The configuration message 1330 may be analogous in some respects to the configuration message 1310 and/or the configuration message 1320. The procedure shown in FIG. 13C may comprise transmissions of multiple messages (e.g., two messages comprising: a first message (e.g., Msg A 1331) and a second message (e.g., Msg B 1332)).

The first message (e.g., Msg A 1331) may be sent/transmitted in an uplink transmission by the wireless device. The first message (e.g., Msg A 1331) may comprise one or more transmissions of a preamble 1341 and/or one or more transmissions of a transport block 1342. The transport block 1342 may comprise contents that are similar and/or equivalent to the contents of the third message (e.g., Msg 3 1313) (e.g., shown in FIG. 13A). The transport block 1342 may comprise UCI (e.g., an SR, a HARQ ACK/NACK, and/or the like). The wireless device may receive the second message (e.g., Msg B 1332), for example, based on (e.g., after or in response to) sending/transmitting the first message (e.g., Msg A 1331). The second message (e.g., Msg B 1332) may comprise contents that are similar and/or equivalent to the contents of the second message (e.g., Msg 2 1312) (e.g., an RAR shown in FIG. 13A), the contents of the second message (e.g., Msg 2 1322) (e.g., an RAR shown in FIG. 13B) and/or the fourth message (e.g., Msg 4 1314) (e.g., shown in FIG. 13A).

The wireless device may start/initiate the two-step random access procedure (e.g., the two-step random access procedure shown in FIG. 13C) for a licensed spectrum and/or an unlicensed spectrum. The wireless device may determine, based on one or more factors, whether to start/initiate the two-step random access procedure. The one or more factors may comprise at least one of: a radio access technology in use (e.g., LTE, NR, and/or the like); whether the wireless device has a valid TA or not; a cell size; the RRC state of the wireless device; a type of spectrum (e.g., licensed vs. unlicensed); and/or any other suitable factors.

The wireless device may determine, based on two-step RACH parameters comprised in the configuration message 1330, a radio resource and/or an uplink transmit power for the preamble 1341 and/or the transport block 1342 (e.g., comprised in the first message (e.g., Msg A 1331)). The RACH parameters may indicate an MCS, a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the wireless device to determine a reception timing and a downlink channel for monitoring for and/or receiving second message (e.g., Msg B 1332).

The transport block 1342 may comprise data (e.g., delay-sensitive data), an identifier of the wireless device, security information, and/or device information (e.g., an International Mobile Subscriber Identity (IMSI)). The base station may send/transmit the second message (e.g., Msg B 1332) as a response to the first message (e.g., Msg A 1331). The second message (e.g., Msg B 1332) may comprise at least one of: a preamble identifier; a timing advance command; a power control command; an uplink grant (e.g., a radio resource assignment and/or an MCS); a wireless device identifier (e.g., a UE identifier for contention resolution); and/or an RNTI (e.g., a C-RNTI or a TC-RNTI). The wireless device may determine that the two-step random access procedure is successfully completed, for example, if a preamble identifier in the second message (e.g., Msg B 1332) corresponds to, or is matched to, a preamble sent/transmitted by the wireless device and/or the identifier of the wireless device in second message (e.g., Msg B 1332) corresponds to, or is matched to, the identifier of the wireless device in the first message (e.g., Msg A 1331) (e.g., the transport block 1342).

A wireless device and a base station may exchange control signaling (e.g., control information). The control signaling may be referred to as L1/L2 control signaling and may originate from the PHY layer (e.g., layer 1) and/or the MAC layer (e.g., layer 2) of the wireless device or the base station. The control signaling may comprise downlink control signaling sent/transmitted from the base station to the wireless device and/or uplink control signaling sent/transmitted from the wireless device to the base station.

The downlink control signaling may comprise at least one of: a downlink scheduling assignment; an uplink scheduling grant indicating uplink radio resources and/or a transport format; slot format information; a preemption indication; a power control command; and/or any other suitable signaling. The wireless device may receive the downlink control signaling in a payload sent/transmitted by the base station via a PDCCH. The payload sent/transmitted via the PDCCH may be referred to as DCI. The PDCCH may be a group common PDCCH (GC-PDCCH) that is common to a group of wireless devices. The GC-PDCCH may be scrambled by a group common RNTI.

A base station may attach one or more cyclic redundancy check (CRC) parity bits to DCI, for example, in order to facilitate detection of transmission errors. The base station may scramble the CRC parity bits with an identifier of a wireless device (or an identifier of a group of wireless devices), for example, if the DCI is intended for the wireless device (or the group of the wireless devices). Scrambling the CRC parity bits with the identifier may comprise Modulo-2 addition (or an exclusive-OR operation) of the identifier value and the CRC parity bits. The identifier may comprise a 16-bit value of an RNTI.

DCIs may be used for different purposes. A purpose may be indicated by the type of an RNTI used to scramble the CRC parity bits. DCI having CRC parity bits scrambled with a paging RNTI (P-RNTI) may indicate paging information and/or a system information change notification. The P-RNTI may be predefined as "FFFE" in hexadecimal. DCI having CRC parity bits scrambled with a system information RNTI (SI-RNTI) may indicate a broadcast transmission of the system information. The SI-RNTI may be predefined as "FFFF" in hexadecimal. DCI having CRC parity bits scrambled with a random access RNTI (RA-RNTI) may indicate a random access response (RAR). DCI having CRC parity bits scrambled with a cell RNTI (C-RNTI) may indicate a dynamically scheduled unicast transmission and/or a triggering of PDCCH-ordered random access. DCI having CRC parity bits scrambled with a temporary cell RNTI (TC-RNTI) may indicate a contention resolution (e.g., a Msg 3 analogous to the Msg 3 1313 shown in FIG. 13A). Other RNTIs configured for a wireless device by a base station may comprise a Configured Scheduling RNTI (CS RNTI), a Transmit Power Control-PUCCH RNTI (TPC PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C RNTI), and/or the like.

A base station may send/transmit DCIs with one or more DCI formats, for example, depending on the purpose and/or content of the DCIs. DCI format 0_0 may be used for scheduling of a PUSCH in a cell. DCI format 0_0 may be a fallback DCI format (e.g., with compact DCI payloads). DCI format 0_1 may be used for scheduling of a PUSCH in a cell (e.g., with more DCI payloads than DCI format 0_0). DCI format 1_0 may be used for scheduling of a PDSCH in a cell. DCI format 1_0 may be a fallback DCI format (e.g., with compact DCI payloads). DCI format 1_1 may be used for scheduling of a PDSCH in a cell (e.g., with more DCI payloads than DCI format 1_0). DCI format 2_0 may be used for providing a slot format indication to a group of wireless devices. DCI format 2_1 may be used for informing/notifying a group of wireless devices of a physical resource block and/or an OFDM symbol where the group of wireless devices may assume no transmission is intended to the group of wireless devices. DCI format 2_2 may be used for transmission of a transmit power control (TPC) command for PUCCH or PUSCH. DCI format 2_3 may be used for transmission of a group of TPC commands for SRS transmissions by one or more wireless devices. DCI format(s) for new functions may be defined in future releases. DCI formats may have different DCI sizes, or may share the same DCI size.

The base station may process the DCI with channel coding (e.g., polar coding), rate matching, scrambling and/or QPSK modulation, for example, after scrambling the DCI with an RNTI. A base station may map the coded and modulated DCI on resource elements used and/or configured for a PDCCH. The base station may send/transmit the DCI via a PDCCH occupying a number of contiguous control channel elements (CCEs), for example, based on a payload size of the DCI and/or a coverage of the base station. The number of the contiguous CCEs (referred to as aggregation level) may be 1, 2, 4, 8, 16, and/or any other suitable number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

FIG. 14A shows an example of CORESET configurations. The CORESET configurations may be for a bandwidth part or any other frequency bands. The base station may send/transmit DCI via a PDCCH on one or more CORESETs. A CORESET may comprise a time-frequency resource in which the wireless device attempts/tries to decode DCI using one or more search spaces. The base station may configure a size and a location of the CORESET in the time-frequency domain. A first CORESET 1401 and a second CORESET 1402 may occur or may be set/configured at the first symbol in a slot. The first CORESET 1401 may overlap with the second CORESET 1402 in the frequency domain. A third CORESET 1403 may occur or may be set/configured at a third symbol in the slot. A fourth CORESET 1404 may occur or may be set/configured at the seventh symbol in the slot. CORESETs may have a different number of resource blocks in frequency domain.

FIG. 14B shows an example of a CCE-to-REG mapping. The CCE-to-REG mapping may be performed for DCI transmission via a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping (e.g., by an RRC configuration). A CORESET may be configured with an antenna port QCL parameter. The antenna port QCL parameter may indicate QCL information of a DM-RS for a PDCCH reception via the CORESET.

The base station may send/transmit, to the wireless device, one or more RRC messages comprising configuration parameters of one or more CORESETs and one or more search space sets. The configuration parameters may indicate an association between a search space set and a CORESET. A search space set may comprise a set of PDCCH candidates formed by CCEs (e.g., at a given aggregation level). The configuration parameters may indicate at least one of: a number of PDCCH candidates to be monitored per aggregation level; a PDCCH monitoring periodicity and a PDCCH monitoring pattern; one or more DCI formats to be monitored by the wireless device; and/or whether a search space set is a common search space set or a wireless device-specific search space set (e.g., a UE-specific search space set). A set of CCEs in the common search space set may be predefined and known to the wireless device. A set of CCEs in the wireless device-specific search space set (e.g., the UE-specific search space set) may be configured, for example, based on the identity of the wireless device (e.g., C-RNTI).

As shown in FIG. 14B, the wireless device may determine a time-frequency resource for a CORESET based on one or more RRC messages. The wireless device may determine a CCE-to-REG mapping (e.g., interleaved or non-interleaved, and/or mapping parameters) for the CORESET, for example, based on configuration parameters of the CORESET. The wireless device may determine a quantity/number (e.g., at most 10) of search space sets configured on/for the CORESET, for example, based on the one or more RRC messages. The wireless device may monitor a set of PDCCH candidates according to configuration parameters of a search space set. The wireless device may monitor a set of PDCCH candidates in one or more CORESETs for detecting one or more DCIs. Monitoring may comprise decoding one or more PDCCH candidates of the set of the PDCCH candidates according to the monitored DCI formats. Monitoring may comprise decoding DCI content of one or more PDCCH candidates with possible (or configured) PDCCH locations, possible (or configured) PDCCH formats (e.g., the quantity/number of CCEs, the quantity/number of PDCCH candidates in common search spaces, and/or the quantity/number of PDCCH candidates in the wireless device-specific search spaces) and possible (or configured) DCI formats. The decoding may be referred to as blind decoding. The wireless device may determine DCI as valid for the wireless device, for example, based on (e.g., after or in response to) CRC checking (e.g., scrambled bits for CRC parity bits of the DCI matching an RNTI value). The wireless device may process information comprised in the DCI (e.g., a scheduling assignment, an uplink grant, power control, a slot format indication, a downlink preemption, and/or the like).

The wireless device may send/transmit uplink control signaling (e.g., UCI) to a base station. The uplink control signaling may comprise HARQ acknowledgements for received DL-SCH transport blocks. The wireless device may send/transmit the HARQ acknowledgements, for example, based on (e.g., after or in response to) receiving a DL-SCH transport block. Uplink control signaling may comprise CSI indicating a channel quality of a physical downlink channel. The wireless device may send/transmit the CSI to the base station. The base station, based on the received CSI, may determine transmission format parameters (e.g., comprising multi-antenna and beamforming schemes) for downlink transmission(s). Uplink control signaling may comprise SR. The wireless device may send/transmit an SR indicating that uplink data is available for transmission to the base station. The wireless device may send/transmit UCI (e.g., HARQ acknowledgements (HARQ-ACK), CSI report, SR, and the like) via a PUCCH or a PUSCH. The wireless device may send/transmit the uplink control signaling via a PUCCH using one of several PUCCH formats.

There may be multiple PUCCH formats (e.g., five PUCCH formats). A wireless device may determine a PUCCH format, for example, based on a size of UCI (e.g., a quantity/number of uplink symbols of UCI transmission and a quantity/number of UCI bits). PUCCH format 0 may have a length of one or two OFDM symbols and may comprise two or fewer bits. The wireless device may send/transmit UCI via a PUCCH resource, for example, using PUCCH format 0 if the transmission is over/via one or two symbols and the quantity/number of HARQ-ACK information bits with positive or negative SR (HARQ-ACK/SR bits) is one or two. PUCCH format 1 may occupy a quantity/number of OFDM symbols (e.g., between four and fourteen OFDM symbols) and may comprise two or fewer bits. The wireless device may use PUCCH format 1, for example, if the transmission is over/via four or more symbols and the quantity/number of HARQ-ACK/SR bits is one or two. PUCCH format 2 may occupy one or two OFDM symbols and may comprise more than two bits. The wireless device may use PUCCH format 2, for example, if the transmission is over/via one or two symbols and the quantity/number of UCI bits is two or more. PUCCH format 3 may occupy a quantity/number of OFDM symbols (e.g., between four and fourteen OFDM symbols) and may comprise more than two bits. The wireless device may use PUCCH format 3, for example, if the transmission is four or more symbols, the quantity/number of UCI bits is two or more, and the PUCCH resource does not comprise an orthogonal cover code (OCC). PUCCH format 4 may occupy a quantity/number of OFDM symbols (e.g., between four and fourteen OFDM symbols) and may comprise more than two bits. The wireless device may use PUCCH format 4, for example, if the transmission is four or more symbols, the quantity/number of UCI bits is two or more, and the PUCCH resource comprises an OCC.

The base station may send/transmit configuration parameters to the wireless device for a plurality of PUCCH resource sets, for example, using an RRC message. The plurality of PUCCH resource sets (e.g., up to four sets in NR, or up to any other quantity of sets in other systems) may be configured on an uplink BWP of a cell. A PUCCH resource set may be configured with a PUCCH resource set index, a plurality of PUCCH resources with a PUCCH resource being identified by a PUCCH resource identifier (e.g., pucch-Resourceid), and/or a quantity/number (e.g. a maximum number) of UCI information bits the wireless device may send/transmit using one of the plurality of PUCCH resources in the PUCCH resource set. The wireless device may select one of the plurality of PUCCH resource sets, for example, based on a total bit length of the UCI information bits (e.g., HARQ-ACK, SR, and/or CSI) if configured with a plurality of PUCCH resource sets. The wireless device may select a first PUCCH resource set having a PUCCH resource set index equal to "0," for example, if the total bit length of UCI information bits is two or fewer. The wireless device may select a second PUCCH resource set having a PUCCH resource set index equal to "1," for example, if the total bit length of UCI information bits is greater than two and less than or equal to a first configured value. The wireless device may select a third PUCCH resource set having a PUCCH resource set index equal to "2," for example, if the total bit length of UCI information bits is greater than the first configured value and less than or equal to a second configured value. The wireless device may select a fourth PUCCH resource set having a PUCCH resource set index equal to "3," for example, if the total bit length of UCI information bits is greater than the second configured value and less than or equal to a third value (e.g., 1406, 1706, or any other quantity of bits).

The wireless device may determine a PUCCH resource from a PUCCH resource set for UCI (HARQ-ACK, CSI, and/or SR) transmission, for example, after determining the PUCCH resource set from a plurality of PUCCH resource sets. The wireless device may determine the PUCCH resource, for example, based on a PUCCH resource indicator in DCI (e.g., with DCI format 1_0 or DCI for 1_1) received on/via a PDCCH. An n-bit (e.g., a three-bit) PUCCH resource indicator in the DCI may indicate one of multiple (e.g., eight) PUCCH resources in the PUCCH resource set. The wireless device may send/transmit the UCI (HARQ-ACK, CSI and/or SR) using a PUCCH resource indicated by the PUCCH resource indicator in the DCI, for example, based on the PUCCH resource indicator.

FIG. 15A shows an example of communications between a wireless device and a base station. A wireless device 1502 and a base station 1504 may be part of a communication network, such as the communication network 100 shown in FIG. 1A, the communication network 150 shown in FIG. 1B, or any other communication network. A communication network may comprise more than one wireless device and/or more than one base station, with substantially the same or similar configurations as those shown in FIG. 15A.

The base station 1504 may connect the wireless device 1502 to a core network (not shown) via radio communications over the air interface (or radio interface) 1506. The communication direction from the base station 1504 to the wireless device 1502 over the air interface 1506 may be referred to as the downlink. The communication direction from the wireless device 1502 to the base station 1504 over the air interface may be referred to as the uplink. Downlink transmissions may be separated from uplink transmissions, for example, using various duplex schemes (e.g., FDD, TDD, and/or some combination of the duplexing techniques).

For the downlink, data to be sent to the wireless device 1502 from the base station 1504 may be provided/transferred/sent to the processing system 1508 of the base station 1504. The data may be provided/transferred/sent to the processing system 1508 by, for example, a core network. For the uplink, data to be sent to the base station 1504 from the wireless device 1502 may be provided/transferred/sent to the processing system 1518 of the wireless device 1502. The processing system 1508 and the processing system 1518 may implement layer 3 and layer 2 OSI functionality to process the data for transmission. Layer 2 may comprise an SDAP layer, a PDCP layer, an RLC layer, and a MAC layer, for example, described with respect to FIG. 2A, FIG. 2B, FIG. 3, and FIG. 4A. Layer 3 may comprise an RRC layer, for example, described with respect to FIG. 2B.

The data to be sent to the wireless device 1502 may be provided/transferred/sent to a transmission processing system 1510 of base station 1504, for example, after being processed by the processing system 1508. The data to be sent to base station 1504 may be provided/transferred/sent to a transmission processing system 1520 of the wireless device 1502, for example, after being processed by the processing system 1518. The transmission processing system 1510 and the transmission processing system 1520 may implement layer 1 OSI functionality. Layer 1 may comprise a PHY layer, for example, described with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

A reception processing system 1512 of the base station 1504 may receive the uplink transmission from the wireless device 1502. The reception processing system 1512 of the base station 1504 may comprise one or more TRPs. A reception processing system 1522 of the wireless device 1502 may receive the downlink transmission from the base station 1504. The reception processing system 1522 of the wireless device 1502 may comprise one or more antenna panels. The reception processing system 1512 and the reception processing system 1522 may implement layer 1 OSI functionality. Layer 1 may include a PHY layer, for example, described with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

The base station 1504 may comprise multiple antennas (e.g., multiple antenna panels, multiple TRPs, etc.). The wireless device 1502 may comprise multiple antennas (e.g., multiple antenna panels, etc.). The multiple antennas may be used to perform one or more MIMO or multi-antenna techniques, such as spatial multiplexing (e.g., single-user MIMO or multi-user MIMO), transmit/receive diversity, and/or beamforming. The wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518, respectively, to carry out one or more of the functionalities (e.g., one or more functionalities described herein and other functionalities of general computers, processors, memories, and/or other peripherals). The transmission processing system 1510 and/or the reception processing system 1512 may be coupled to the memory 1514 and/or another memory (e.g., one or more non-transitory computer readable mediums) storing computer program instructions or code that may be executed to carry out one or more of their respective functionalities. The transmission processing system 1520 and/or the reception processing system 1522 may be coupled to the memory 1524 and/or another memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and/or the base station 1504 to operate in a wireless environment.

The processing system 1508 may be connected to one or more peripherals 1516. The processing system 1518 may be connected to one or more peripherals 1526. The one or more peripherals 1516 and the one or more peripherals 1526 may comprise software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive input data (e.g., user input data) from, and/or provide output data (e.g., user output data) to, the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 may be connected to a Global Positioning System (GPS) chipset 1517. The processing system 1518 may be connected to a Global Positioning System (GPS) chipset 1527. The GPS chipset 1517 and the GPS chipset 1527 may be configured to determine and provide geographic location information of the wireless device 1502 and the base station 1504, respectively.

FIG. 15B shows example elements of a computing device that may be used to implement any of the various devices described herein, including, for example, the base station 160A, 160B, 162A, 162B, 220, and/or 1504, the wireless device 106, 156A, 156B, 210, and/or 1502, or any other base station, wireless device, AMF, UPF, network device, or computing device described herein. The computing device 1530 may include one or more processors 1531, which may execute instructions stored in the random-access memory (RAM) 1533, the removable media 1534 (such as a USB drive, compact disk (CD) or digital versatile disk (DVD), or floppy disk drive), or any other desired storage medium. Instructions may also be stored in an attached (or internal) hard drive 1535. The computing device 1530 may also include a security processor (not shown), which may execute instructions of one or more computer programs to monitor the processes executing on the processor 1531 and any process that requests access to any hardware and/or software components of the computing device 1530 (e.g., ROM 1532, RAM 1533, the removable media 1534, the hard drive 1535, the device controller 1537, a network interface 1539, a GPS 1541, a Bluetooth interface 1542, a WiFi interface 1543, etc.). The computing device 1530 may include one or more output devices, such as the display 1536 (e.g., a screen, a display device, a monitor, a television, etc.), and may include one or more output device controllers 1537, such as a video processor. There may also be one or more user input devices 1538, such as a remote control, keyboard, mouse, touch screen, microphone, etc. The computing device 1530 may also include one or more network interfaces, such as a network interface 1539, which may be a wired interface, a wireless interface, or a combination of the two. The network interface 1539 may provide an interface for the computing device 1530 to communicate with a network 1540 (e.g., a RAN, or any other network). The network interface 1539 may include a modem (e.g., a cable modem), and the external network 1540 may include communication links, an external network, an in-home network, a provider's wireless, coaxial, fiber, or hybrid fiber/coaxial distribution system (e.g., a DOCSIS network), or any other desired network. Additionally, the computing device 1530 may include a location-detecting device, such as a GPS microprocessor 1541, which may be configured to receive and process global positioning signals and determine, with possible assistance from an external server and antenna, a geographic position of the computing device 1530.

The example in FIG. 15B may be a hardware configuration, although the components shown may be implemented as software as well. Modifications may be made to add, remove, combine, divide, etc. components of the computing device 1530 as desired. Additionally, the components may be implemented using basic computing devices and components, and the same components (e.g., processor 1531, ROM storage 1532, display 1536, etc.) may be used to implement any of the other computing devices and components described herein. For example, the various components described herein may be implemented using computing devices having components such as a processor executing computer-executable instructions stored on a computer-readable medium, as shown in FIG. 15B. Some or all of the entities described herein may be software based, and may co-exist in a common physical platform (e.g., a requesting entity may be a separate software process and program from a dependent entity, both of which may be executed as software on a common computing device).

FIG. 16A shows an example structure for uplink transmission. Processing of a baseband signal representing a physical uplink shared channel may comprise/perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA), CP-OFDM signal for an antenna port, or any other signals; and/or the like. An SC-FDMA signal for uplink transmission may be generated, for example, if transform precoding is enabled. A CP-OFDM signal for uplink transmission may be generated, for example, if transform precoding is not enabled (e.g., as shown in FIG. 16A). These functions are examples and other mechanisms for uplink transmission may be implemented.

FIG. 16B shows an example structure for modulation and up-conversion of a baseband signal to a carrier frequency. The baseband signal may be a complex-valued SC-FDMA, CP-OFDM baseband signal (or any other baseband signals) for an antenna port and/or a complex-valued Physical Random Access Channel (PRACH) baseband signal. Filtering may be performed/employed, for example, prior to transmission.

FIG. 16C shows an example structure for downlink transmissions. Processing of a baseband signal representing a physical downlink channel may comprise/perform one or more functions. The one or more functions may comprise: scrambling of coded bits in a codeword to be sent/transmitted on/via a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are examples and other mechanisms for downlink transmission may be implemented.

FIG. 16D shows an example structure for modulation and up-conversion of a baseband signal to a carrier frequency. The baseband signal may be a complex-valued OFDM baseband signal for an antenna port or any other signal. Filtering may be performed/employed, for example, prior to transmission.

A wireless device may receive, from a base station, one or more messages (e.g. RRC messages) comprising configuration parameters of a plurality of cells (e.g., a primary cell, one or more secondary cells). The wireless device may communicate with at least one base station (e.g., two or more base stations in dual-connectivity) via the plurality of cells. The one or more messages (e.g. as a part of the configuration parameters) may comprise parameters of PHY, MAC, RLC, PCDP, SDAP, RRC layers for configuring the wireless device. The configuration parameters may comprise parameters for configuring PHY and MAC layer channels, bearers, etc. The configuration parameters may comprise parameters indicating values of timers for PHY, MAC, RLC, PCDP, SDAP, RRC layers, and/or communication channels.

A timer may begin running, for example, once it is started and continue running until it is stopped or until it expires. A timer may be started, for example, if it is not running or restarted if it is running. A timer may be associated with a value (e.g., the timer may be started or restarted from a value or may be started from zero and expire once it reaches the value). The duration of a timer may not be updated, for example, until the timer is stopped or expires (e.g., due to BWP switching). A timer may be used to measure a time period/window for a process. With respect to an implementation and/or procedure related to one or more timers or other parameters, it will be understood that there may be multiple ways to implement the one or more timers or other parameters. One or more of the multiple ways to implement a timer may be used to measure a time period/window for the procedure. A random access response window timer may be used for measuring a window of time for receiving a random access response. The time difference between two time stamps may be used, for example, instead of starting a random access response window timer and determine the expiration of the timer. A process for measuring a time window may be restarted, for example, if a timer is restarted. Other example implementations may be configured/provided to restart a measurement of a time window.

A base station may communicate with a wireless device via a wireless network (e.g., a communication network). The communications may use/employ one or more radio technologies (e.g., new radio technologies, legacy radio technologies, and/or a combination thereof). The one or more radio technologies may comprise at least one of: one or multiple technologies related to a physical layer; one or multiple technologies related to a medium access control layer; and/or one or multiple technologies related to a radio resource control layer. One or more enhanced radio technologies described herein may improve performance of a wireless network. System throughput, transmission efficiencies of a wireless network, and/or data rate of transmission may be improved, for example, based on one or more configurations described herein. Battery consumption of a wireless device may be reduced, for example, based on one or more configurations described herein. Latency of data transmission between a base station and a wireless device may be improved, for example, based on one or more configurations described herein. A network coverage of a wireless network may increase, for example, based on one or more configurations described herein.

A base station may send/transmit one or more MAC PDUs to a wireless device. A MAC PDU may be a bit string that is byte aligned (e.g., aligned to a multiple of eight bits) in length. Bit strings may be represented by one or more tables in which the most significant bit may be the leftmost bit of the first line of a table, and the least significant bit may be the rightmost bit on the last line of the table. The bit string may be read from left to right and then in the reading order of the lines (e.g., from the topmost line of the table to the bottommost line of the table). The bit order of a parameter field within a MAC PDU may be represented with the first and most significant bit in the leftmost bit and the last and least significant bit in the rightmost bit.

A MAC SDU may be a bit string that is byte aligned (e.g., aligned to a multiple of eight bits) in length. A MAC SDU may be comprised in a MAC PDU from the first bit onward. A MAC CE may be a bit string that is byte aligned (e.g., aligned to a multiple of eight bits) in length. A MAC subheader may be a bit string that is byte aligned (e.g., aligned to a multiple of eight bits) in length. A MAC subheader may be placed immediately in front of a corresponding MAC SDU, MAC CE, or padding. A wireless device (e.g., the MAC entity of the wireless device) may ignore a value of reserved bits in a downlink (DL) MAC PDU.

A MAC PDU may comprise one or more MAC subPDUs. A MAC subPDU of the one or more MAC subPDUs may comprise: a MAC subheader only (including padding); a MAC subheader and a MAC SDU; a MAC subheader and a MAC CE; a MAC subheader and padding, and/or a combination thereof. The MAC SDU may be of variable size. A MAC subheader may correspond to a MAC SDU, a MAC CE, or padding.

A MAC subheader may comprise: an R field with a one-bit length; an F field with a one-bit length; an LCID field with a multi-bit length; an L field with a multi-bit length; and/or a combination thereof, for example, if the MAC subheader corresponds to a MAC SDU, a variable-sized MAC CE, or padding.

FIG. 17A shows an example of a MAC subheader. The MAC subheader may comprise an R field, an F field, an LCID field, and/or an L field. The LCID field may be six bits in length (or any other quantity of bits). The L field may be eight bits in length (or any other quantity of bits). Each of the R field and the F field may be one bit in length (or any other quantity of bits). FIG. 17B shows an example of a MAC subheader. The MAC subheader may comprise an R field, an F field, an LCID field, and/or an L field. Similar to the MAC subheader shown in FIG. 17A, the LCID field may be six bits in length (or any other quantity of bits), the R field may be one bit in length (or any other quantity of bits), and the F field may be one bit in length (or any other quantity of bits). The L field may be sixteen bits in length (or any other quantity of bits, such as greater than sixteen bits in length). A MAC subheader may comprise: an R field with a two-bit length (or any other quantity of bits) and/or an LCID field with a multi-bit length (or single bit length), for example, if the MAC subheader corresponds to a fixed sized MAC CE or padding. FIG. 17C shows an example of a MAC subheader. In the example MAC subheader shown in FIG. 17C, the LCID field may be six bits in length (or any other quantity of bits), and the R field may be two bits in length (or any other quantity of bits).

FIG. 18A shows an example of a MAC PDU (e.g., a DL MAC PDU). Multiple MAC CEs, such as MAC CE 1 and 2 shown in FIG. 18A, may be placed together (e.g., located within the same MAC PDU). A MAC subPDU comprising a MAC CE may be placed (e.g., located within a MAC PDU) before any MAC subPDU comprising a MAC SDU or a MAC subPDU comprising padding. MAC CE 1 may be a fixed-sized MAC CE that follows a first-type MAC subheader. The first-type MAC subheader may comprise an R field and an LCID field (e.g., similar to the MAC CE shown in FIG. 17C). MAC CE 2 may be a variable-sized MAC CE that follows a second-type MAC subheader. The second-type MAC subheader may comprise an R field, an F field, an LCID field and an L field (e.g., similar to the MAC CEs shown in FIG. 17A or FIG. 17B). The size of a MAC SDU that follows the second-type MAC subheader may vary.

FIG. 18B shows an example of a MAC PDU (e.g., a UL MAC PDU). Multiple MAC CEs, such as MAC CE 1 and 2 shown in FIG. 18B, may be placed together (e.g., located within the same MAC PDU). A MAC subPDU comprising a MAC CE may be placed (e.g., located within a MAC PDU) after all MAC subPDUs comprising a MAC SDU. The MAC subPDU and/or the MAC subPDU comprising a MAC CE may be placed (e.g., located within a MAC PDU) before a MAC subPDU comprising padding. Similar to the MAC CEs shown in FIG. 18A, MAC CE 1 shown in FIG. 18B may be a fixed-sized MAC CE that follows a first-type MAC subheader. The first-type MAC subheader may comprise an R field and an LCID field (e.g., similar to the MAC CE shown in FIG. 17C). Similar to the MAC CEs shown in FIG. 18A, MAC CE 2 shown in FIG. 18B may be a variable-sized MAC CE that follows a second-type MAC subheader. The second-type MAC subheader may comprise an R field, an F field, an LCID field and an L field (e.g., similar to the MAC CEs shown in FIG. 17A or FIG. 17B). The size of a MAC SDU that follows the second-type MAC subheader may vary.

A base station (e.g., the MAC entity of a base station) may send/transmit one or more MAC CEs to a wireless device (e.g., a MAC entity of a wireless device). FIG. 19 shows example LCID values. The LCID values may be associated with one or more MAC CEs. The LCID values may be associated with a downlink channel, such as a DL-SCH. The one or more MAC CEs may comprise at least one of: an semi-persistent zero power CSI-RS (SP ZP CSI-RS) Resource Set Activation/Deactivation MAC CE, a PUCCH spatial relation Activation/Deactivation MAC CE, an SP SRS Activation/Deactivation MAC CE, an SP CSI reporting on PUCCHActivation/Deactivation MAC CE, a TCI State Indication for wireless device-specific (e.g., UE-specific) PDCCH MAC CE, a TCI State Indication for wireless device-specific (e.g., UE-specific) PDSCH MAC CE, an Aperiodic CSI Trigger State Subselection MAC CE, an SP CSI-RS/CSI interference measurement (CSI-IM) Resource Set Activation/Deactivation MAC CE, a wireless device (e.g., UE) contention resolution identity MAC CE, a timing advance command MAC CE, a DRX command MAC CE, a Long DRX command MAC CE, an SCell activation/deactivation MAC CE (e.g., 1 Octet), an SCell activation/deactivation MAC CE (e.g., 4 Octet), and/or a duplication activation/deactivation MAC CE. A MAC CE, such as a MAC CE sent/transmitted by a base station (e.g., a MAC entity of a base station) to a wireless device (e.g., a MAC entity of a wireless device), may be associated with (e.g., correspond to) an LCID in the MAC subheader corresponding to the MAC CE. Different MAC CEs may correspond to a different LCID in the MAC subheader corresponding to the MAC CE. An LCID having an index value "111011" in a MAC subheader may indicate that a MAC CE associated with the MAC subheader is a long DRX command MAC CE, for example, for a MAC CE associated with the downlink.

A wireless device (e.g., a MAC entity of a wireless device) may send/transmit to a base station (e.g., a MAC entity of a base station) one or more MAC CEs. FIG. 20 shows an example LCID values that may be associated with the one or more MAC CEs. The LCID values may be associated with an uplink channel, such as a UL-SCH. The one or more MAC CEs may comprise at least one of: a short buffer status report (BSR) MAC CE, a long BSR MAC CE, a C-RNTI MAC CE, a configured grant confirmation MAC CE, a single entry power headroom report (PHR) MAC CE, a multiple entry PHR MAC CE, a short truncated BSR, and/or a long truncated BSR. A MAC CE may be associated with (e.g., correspond to) an LCID in the MAC subheader corresponding to the MAC CE. Different MAC CEs may correspond to a different LCID in the MAC subheader corresponding to the MAC CE. An LCID having an index value "111011" in a MAC subheader may indicate that a MAC CE associated with the MAC subheader is a short-truncated command MAC CE, for example, for a MAC CE associated with the uplink.

Two or more CCs may be aggregated, such as in carrier aggregation (CA). A wireless device may simultaneously receive and/or transmit data via one or more CCs, for example, depending on capabilities of the wireless device (e.g., using the technique of CA). A wireless device may support CA for contiguous CCs and/or for non-contiguous CCs. CCs may be organized into cells. CCs may be organized into one PCell and one or more SCells.

A wireless device may have an RRC connection (e.g., one RRC connection) with a network, for example, if the wireless device is configured with CA. During an RRC connection establishment/re-establishment/handover, a cell providing/sending/configuring NAS mobility information may be a serving cell. During an RRC connection reestablishment/handover procedure, a cell providing/sending/configuring a security input may be a serving cell. The serving cell may be a PCell. A base station may send/transmit, to a wireless device, one or more messages comprising configuration parameters of a plurality of SCells, for example, depending on capabilities of the wireless device.

A base station and/or a wireless device may use/employ an activation/deactivation mechanism of an SCell, for example, if configured with CA. The base station and/or the wireless device may use/employ an activation/deactivation mechanism of an SCell, for example, to improve battery use and/or power consumption of the wireless device. A base station may activate or deactivate at least one of one or more SCells, for example, if a wireless device is configured with the one or more SCells. An SCell may be deactivated unless an SCell state associated with the SCell is set to an activated state (e.g., "activated") or a dormant state (e.g., "dormant"), for example, after configuring the SCell.

A wireless device may activate/deactivate an SCell. A wireless device may activate/deactivate a cell, for example, based on (e.g., after or in response to) receiving an SCell Activation/Deactivation MAC CE. The SCell Activation/Deactivation MAC CE may comprise one or more fields associated with one or more SCells, respectively, to indicate activation or deactivation of the one or more SCells. The SCell Activation/Deactivation MAC CE may correspond to one octet comprising seven fields associated with up to seven SCells, respectively, for example, if the aggregated cell has less than eight SCells. The SCell Activation/Deactivation MAC CE may comprise an R field. The SCell Activation/Deactivation MAC CE may comprise a plurality of octets comprising more than seven fields associated with more than seven SCells, for example, if the aggregated cell has more than seven SCells.

FIG. 21A shows an example SCell Activation/Deactivation MAC CE of one octet. A first MAC PDU subheader comprising a first LCID (e.g., '111010' as shown in FIG. 19) may indicate/identify the SCell Activation/Deactivation MAC CE of one octet. The SCell Activation/Deactivation MAC CE of one octet may have a fixed size. The SCell Activation/Deactivation MAC CE of one octet may comprise a single octet. The single octet may comprise a first quantity/number of C-fields (e.g., seven or any other quantity/number) and a second quantity/number of R-fields (e.g., one or any other quantity/number).

FIG. 21B shows an example SCell Activation/Deactivation MAC CE of four octets. A second MAC PDU subheader comprising a second LCID (e.g., '111001' as shown in FIG. 19) may indicate/identify the SCell Activation/Deactivation MAC CE of four octets. The SCell Activation/Deactivation MAC CE of four octets may have a fixed size. The SCell Activation/Deactivation MAC CE of four octets may comprise four octets. The four octets may comprise a third quantity/number of C-fields (e.g., 31 or any other quantity/number) and a fourth quantity/number of R-fields (e.g., 1 or any other quantity/number).

As shown in FIG. 21A and/or FIG. 21B, a Ci field may indicate an activation/deactivation status of an SCell with/corresponding to an SCell index i, for example, if an SCell with/corresponding to SCell index i is configured. An SCell with an SCell index i may be activated, for example, if the Ci field is set to one. An SCell with an SCell index i may be deactivated, for example, if the Ci field is set to zero. The wireless device may ignore the Ci field, for example, if there is no SCell configured with SCell index i. An R field may indicate a reserved bit. The R field may be set to zero or any other value (e.g., for other purposes).

A base station may configure a wireless device with uplink (UL) BWPs and downlink (DL) BWPs to enable bandwidth adaptation (BA) on a PCell. The base station may further configure the wireless device with at least DL BWP(s) (i.e., there may be no UL BWPs in the UL) to enable BA on an SCell, for example, if carrier aggregation is configured. An initial active BWP may be a first BWP used for initial access, for example, for a PCell. A first active BWP may be a second BWP configured for the wireless device to operate on a SCell upon the SCell being activated. A base station and/or a wireless device may independently switch a DL BWP and an UL BWP, for example, in paired spectrum (e.g., FDD). A base station and/or a wireless device may simultaneously switch a DL BWP and an UL BWP, for example, in unpaired spectrum (e.g., TDD).

A base station and/or a wireless device may switch a BWP between configured BWPs using a DCI message or a BWP inactivity timer. The base station and/or the wireless device may switch an active BWP to a default BWP based on (e.g., after or in response to) an expiry of the BWP inactivity timer associated with the serving cell, for example, if the BWP inactivity timer is configured for a serving cell. The default BWP may be configured by the network. One UL BWP for an uplink carrier (e.g., each uplink carrier) and one DL BWP may be active at a time in an active serving cell, for example, if FDD systems are configured with BA. One DL/UL BWP pair may be active at a time in an active serving cell, for example, for TDD systems. Operating on the one UL BWP and the one DL BWP (or the one DL/UL pair) may improve wireless device battery consumption. BWPs other than the one active UL BWP and the one active DL BWP that the wireless device may work on may be deactivated. The wireless device may not monitor PDCCH transmission, for example, on deactivated BWPs. The wireless device may not send (e.g., transmit) on PUCCH, PRACH, and UL-SCH, for example, on deactivated BWPs.

A serving cell may be configured with at most a first number/quantity (e.g., four) of BWPs. There may be one active BWP at any point in time, for example, for an activated serving cell. A BWP switching for a serving cell may be used to activate an inactive BWP and deactivate an active BWP at a time. The BWP switching may be controlled by a PDCCH transmission indicating a downlink assignment or an uplink grant. The BWP switching may be controlled by a BWP inactivity timer (e.g., bwp-InactivityTimer). The BWP switching may be controlled by a wireless device (e.g., a MAC entity of the wireless device) based on (e.g., after or in response to) initiating a Random Access procedure. One BWP may be initially active without receiving a PDCCH transmission indicating a downlink assignment or an uplink grant, for example, upon addition of an SpCell or activation of an SCell. The active BWP for a serving cell may be indicated by configuration parameter(s) (e.g., parameters of RRC message) and/or PDCCH transmission. A DL BWP may be paired with a UL BWP for unpaired spectrum, and BWP switching may be common for both UL and DL.

FIG. 22 shows an example of BWP activation/deactivation. The BWP activation/deactivation may be on a cell (e.g., PCell or SCell). The BWP activation/deactivation may be associated with BWP switching (e.g., BWP switching may comprise the BWP activation/deactivation). A wireless device 2220 may receive (e.g., detect) at step 2202, (e.g., from a base station 2200), at least one message (e.g., RRC message) comprising parameters of a cell and one or more BWPs associated with the cell. The RRC message may comprise at least one of: RRC connection reconfiguration message (e.g., RRCReconfiguration), RRC connection reestablishment message (e.g., RRCRestablishment), and/or RRC connection setup message (e.g., RRCSetup). Among the one or more BWPs, at least one BWP may be configured as the first active BWP (e.g., BWP 1), one BWP as the default BWP (e.g., BWP 0). The wireless device 2220 may receive (e.g., detect) a command at step 2204 (e.g., RRC message, MAC CE or DCI message) to activate the cell at an nth slot. The wireless device 2220 may not receive (e.g., detect) a command activating a cell, for example, a PCell. The wireless device 2220 may activate the PCell at step 2212, for example, after the wireless device 2220 receives/detects RRC message comprising configuration parameters of the PCell. The wireless device 2220 may start monitoring a PDCCH transmission on BWP 1 based on (e.g., after or in response to) activating the PCell at step 2212.

The wireless device 2220 may start (or restart) at step 2214, a BWP inactivity timer (e.g., bwp-InactivityTimer) at an mth slot based on (e.g., after or in response to) receiving a DCI message 2206 indicating DL assignment on BWP 1. The wireless device 2220 may switch back at step 2216 to the default BWP (e.g., BWP 0) as an active BWP, for example, if the BWP inactivity timer expires at step 2208, at sth slot. At step 2210, the wireless device 2220 may deactivate the cell and/or stop the BWP inactivity timer, for example, if a secondary cell deactivation timer (e.g., sCell-DeactivationTimer) expires at step 2210 (e.g., if the cell is a SCell). The wireless device 2220 may not deactivate the cell and may not apply or use a secondary cell deactivation timer (e.g., sCellDeactivationTimer) on the PCell, for example, based on the cell being a PCell.

A wireless device (e.g., a MAC entity of the wireless device) may apply or use various operations on an active BWP for an activated serving cell configured with a BWP. The various operations may comprise at least one of: sending (e.g., transmitting) on UL-SCH, sending (e.g., transmitting) on RACH, monitoring a PDCCH transmission, sending (e.g., transmitting) PUCCH, receiving DL-SCH, and/or (re-) initializing any suspended configured uplink grants of configured grant Type 1 according to a stored configuration, if any.

A wireless device (e.g., a MAC entity of the wireless device) may not perform certain operations, for example, on an inactive BWP for an activated serving cell (e.g., each activated serving cell) configured with a BWP. The certain operations may include at least one of sending (e.g., transmit) on UL-SCH, sending (e.g., transmit) on RACH, monitoring a PDCCH transmission, sending (e.g., transmit) PUCCH, sending (e.g., transmit) SRS, or receiving DL-SCH. The wireless device (e.g., the MAC entity of the wireless device) may clear any configured downlink assignment and configured uplink grant of configured grant Type 2, and/or suspend any configured uplink grant of configured Type 1, for example, on the inactive BWP for the activated serving cell (e.g., each activated serving cell) configured with the BWP.

A wireless device may perform a BWP switching of a serving cell to a BWP indicated by a PDCCH transmission, for example, if a wireless device (e.g., a MAC entity of the wireless device) receives/detects the PDCCH transmission for the BWP switching and a random access procedure associated with the serving cell is not ongoing. A bandwidth part indicator field value may indicate the active DL BWP, from the configured DL BWP set, for DL receptions, for example, if the bandwidth part indicator field is configured in DCI format 1_1. A bandwidth part indicator field value may indicate the active UL BWP, from the configured UL BWP set, for UL transmissions, for example, if the bandwidth part indicator field is configured in DCI format 01.

A wireless device may be provided by a higher layer parameter such as a default DL BWP (e.g., Default-DL-BWP) among the configured DL BWPs, for example, for a primary cell. A default DL BWP may be the initial active DL BWP, for example, if a wireless device is not provided with the default DL BWP by the higher layer parameter (e.g., Default-DL-BWP). A wireless device may be provided with a higher layer parameter such as a value of a timer for the primary cell (e.g., bwp-InactivityTimer). The wireless device may increment the timer, if running, every interval of 1 millisecond for frequency range 1 or every 0.5 milliseconds for frequency range 2, for example, if the wireless device may not detect a DCI format 1_1 for paired spectrum operation or if the wireless device may not detect a DCI format 1_1 or DCI format 0_1 for unpaired spectrum operation during the interval.

Procedures of a wireless device on the secondary cell may be substantially the same as on the primary cell using a timer value for a secondary cell and the default DL BWP for the secondary cell, for example, if the wireless device is configured for the secondary cell with a higher layer parameter (e.g., Default-DL-BWP) indicating a default DL BWP among the configured DL BWPs and the wireless device is configured with a higher layer parameter (e.g., bwp-InactivityTimer) indicating the timer value. A wireless device may use an indicated DL BWP and an indicated UL BWP on a secondary cell respectively as a first active DL BWP and a first active UL BWP on the secondary cell or carrier, for example, if the wireless device is configured by a higher layer parameter (e.g., Active-BWP-DL-SCell) associated with the first active DL BWP and by a higher layer parameter (e.g., Active-BWP-UL-SCell) associated with the first active UL BWP on the secondary cell or carrier.

A set of PDCCH candidates for a wireless device to monitor may be referred to as PDCCH search space sets. A search space set may comprise a CSS set or a USS set. A wireless device may monitor PDCCH transmission candidates in one or more of the following search spaces sets: a Type0-PDCCH CSS set configured by pdcch-ConfigSIB1 in MIB or by searchSpaceSIB1 in PDCCH-ConfigCommon or by searchSpaceZero in PDCCH-ConfigCommon for a DCI format with CRC scrambled by a SI-RNTI on the primary cell of the MCG, a Type0A-PDCCH CSS set configured by searchSpaceOtherSystemInformation in PDCCH-ConfigCommon for a DCI format with CRC scrambled by a SI-RNTI on the primary cell of the MCG, a Type1-PDCCH CSS set configured by ra-SearchSpace in PDCCH-ConfigCommon for a DCI format with CRC scrambled by a RA-RNTI, a MsgB-RNTI, or a TC-RNTI on the primary cell, a Type2-PDCCH CSS set configured by pagingSearchSpace in PDCCH-ConfigCommon for a DCI format with CRC scrambled by a P-RNTI on the primary cell of the MCG, a Type3-PDCCH CSS set configured by SearchSpace in PDCCH-Config with searchSpaceType = common for DCI formats with CRC scrambled by INT-RNTI, SFI-RNTI, TPC-PUSCH-RNTI, TPC-PUCCH-RNTI, TPC-SRS-RNTI, CI-RNTI, or PS-RNTI and, for the primary cell, C-RNTI, MCS-C-RNTI, or CS-RNTI(s), and a USS set configured by SearchSpace in PDCCH-Config with searchSpaceType = ue-Specific for DCI formats with CRC scrambled by C-RNTI, MCS-C-RNTI, SP-CSI-RNTI, CS-RNTI(s), SL-RNTI, SL-CS-RNTI, or SL-L-CS-RNTI.

A wireless device may determine a PDCCH transmission monitoring occasion on an active DL BWP based on one or more PDCCH transmission configuration parameters (e.g., as described with respect to FIG. 27) comprising at least one of: a PDCCH transmission monitoring periodicity, a PDCCH transmission monitoring offset, or a PDCCH transmission monitoring pattern within a slot. For a search space set (SS *s*), the wireless device may determine that a PDCCH transmission monitoring occasion(s) exists in a slot with number/quantity $n^{\mu}_{s,f}$ in a frame with number/quantity

$n_f$ if $\left(n_f \cdot N_{\text{slot}}^{\text{frame},\mu} + n_{s,f}^{\mu} - o_s\right) mod\ k_s = 0.$ $N_{\text{slot}}^{\text{frame},\mu}$ may be a number/quantity of slots in a frame if numerology $\mu$ is configured. $o_s$ may be a slot offset indicated in the PDCCH transmission configuration parameters. $k_s$ may be a PDCCH transmission monitoring periodicity indicated in the PDCCH transmission configuration parameters. The wireless device may monitor PDCCH transmission candidates for the search space set for $T_s$ consecutive slots, starting from slot $n_{s,f}^{\mu}$, and may not monitor PDCCH transmission candidates for search space set s for the next $k_s$ - $T_s$ consecutive slots. A USS at CCE aggregation level $L \in \{1, 2, 4, 8, 16\}$ may be defined by a set of PDCCH transmission candidates for CCE aggregation level L.

A wireless device may decide, for a search space set s associated with CORESET $p$, CCE indexes for aggregation level L corresponding to PDCCH transmission candidate $m_{s,n_{CI}}$ of the search space set in slot $n_{s,f}^{\mu}$ for an active DL BWP of a serving cell corresponding to carrier indicator field value $n_{CI}$ as $L \cdot \left\{\left(Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI}\right) mod \lfloor N_{CCE,p}/L \rfloor\right\} + i$, where, $Y_{p,n_{s,f}^{\mu}} = 0$ for any CSS; $Y_{p,n_{s,f}^{\mu}} = \left(A_p \cdot Y_{p,n_{s,f}^{\mu}-1}\right) mod\ D$ for a USS, $Y_{p,-1} = n_{RNTI} \neq 0$, $A_p = 39827$ for $p\ mod\ 3 = 0$, $A_p = 39829$ for $p\ mod\ 3 = 1$, $A_p = 39839$ for $p\ mod\ 3 = 2$, and $D = 65537$; i = 0, ⋯ , $L$ - 1; $N_{CCE,p}$ is the number/quantity of CCEs, numbered/quantified from 0 to $N_{CCE,p}$ - 1, in CORESET $p$; $n_{CI}$ is the carrier indicator field value if the wireless device is configured with a carrier indicator field by *CrossCarrierSchedulingConfig* for the serving cell on which PDCCH transmission is monitored; otherwise, including for any CSS, $n_{CI}$ = 0; $m_{s,n_{CI}} = 0, \ldots, M_{s,n_{CI}}^{(L)} - 1$, where $M_{s,n_{CI}}^{(L)}$ is the number/quantity of PDCCH transmission candidates the wireless device is configured to monitor for aggregation level L of a search space set s for a serving cell corresponding to $n_{CI}$; for any CSS, $M_{s,\max}^{(L)} = M_{s,0}^{(L)}$; for a USS, $M_{s,\max}^{(L)}$ is the maximum of $M_{s,n_{CI}}^{(L)}$ over configured $n_{CI}$ values for a CCE aggregation level L of search space set $s$; and the RNTI value used for $n_{RNTI}$ is the C-RNTI.

A wireless device may monitor a set of PDCCH transmission candidates according to configuration parameters of a search space set comprising a plurality of search spaces. The wireless device may monitor a set of PDCCH transmission candidates in one or more CORESETs for detecting one or more DCI messages. A CORESET may be configured, for example, as described with respect to FIG. 26. Monitoring may comprise decoding one or more PDCCH transmission candidates of the set of the PDCCH transmission candidates according to the monitored DCI formats. Monitoring may comprise decoding a DCI content of one or more PDCCH transmission candidates with possible (or configured) PDCCH transmission locations, possible (or configured) PDCCH transmission formats (e.g., number/quantity of CCEs, number/quantity of PDCCH transmission candidates in common search spaces, and/or number/quantity of PDCCH transmission candidates in the wireless device-specific search spaces (e.g., the UE-specific search spaces)) and possible (or configured) DCI formats. The decoding may be referred to as blind decoding. The possible DCI formats may be based on examples of FIG. 23.

FIG. 23 shows examples of various DCI formats. The various DCI formats may be used, for example, by a base station to send (e.g., transmit) control information (e.g., to a wireless device and/or to be used by the wireless device) for PDCCH transmission monitoring. Different DCI formats may comprise different DCI fields and/or have different DCI payload sizes. Different DCI formats may have different signaling purposes. DCI format 0_0 may be used to schedule PUSCH transmission in one cell. DCI format 0_1 may be used to schedule one or multiple PUSCH transmissions in one cell or indicate CG-DFI (configured grant-Downlink Feedback Information) for configured grant PUSCH transmission, etc. The DCI format(s), that the wireless device may monitor for reception via a search space, may be configured.

FIG. 24A shows an example MIB message. FIG. 24A shows example configuration parameters of a MIB of a cell. The cell may be a PCell (or any other cell). A wireless device may receive a MIB via a PBCH. The wireless device may receive the MIB, for example, based on receiving a PSS and/or an SSS. The configuration parameters of a MIB may comprise/indicate a SFN (e.g., indicated via a higher layer parameter systemFrameNumber), subcarrier spacing indication (e.g., indicated via a higher layer parameter subCarrierSpacingCommon), a frequency domain offset (e.g., indicated via a higher layer parameter ssb-SubcarrierOffset) between SSB and overall resource block grid in number of subcarriers, a parameter indicating whether the cell is barred (e.g., indicated via a higher layer parameter cellBarred), a DMRS position indication (e.g., indicated via a higher layer parameter dmrs-TypeA-Position) indicating position of DMRS, parameters of a CORESET and a search space of a PDCCH (e.g., indicated via a higher layer parameter pdcch-ConfigSIB1) comprising a common CORESET, a common search space and necessary PDCCH parameters, etc. Each of the higher layer parameters may be indicated via one or bits. For example, the SFN may be indicated using 6 bits (or any other quantity of bits).

A configuration parameter (e.g., pdcch-ConfigSIB 1) may comprise a first parameter (e.g., controlResourceSetZero) indicating a common CORESET of an initial BWP of the cell. The common CORESET may be associated with an indicator/index (e.g., 0, or any other indicator). For example, the common CORESET may be CORESET 0. The first parameter may be an integer between 0 and 15 (or any other integer). Each integer (e.g., between 0 and 15, or any other integer) may indicate/identify a configuration of CORESET 0.

FIG. 24B shows an example configuration of a CORESET. The CORESET may be CORESET 0 (or any other CORESET). A wireless device may determine an SSB and CORESET 0 multiplexing pattern, a quantity/number of RBs for CORESET 0, a quantity/number of symbols for CORESET 0, an RB offset for CORESET 0, for example, based on a value of the first parameter (e.g., controlResourceSetZero).

A higher layer parameter (e.g., pdcch-ConfigSIB1) may comprise a second parameter (e.g., searchSpaceZero). The second parameter may indicate a common search space of the initial BWP of the cell. The common search space may be associated with an indicator/index (e.g., 0, or any other indicator). For example, the common search space may be search space 0. The second parameter may be an integer between 0 and 15 (or any other integer). Each integer (e.g., between 0 and 15, or any other integer) may identify a configuration of search space 0.

FIG. 24C shows an example configuration of a search space. The search space may be search space 0 (or any other search space). A wireless device may determine one or more parameters (e.g., O, M) for slot determination for PDCCH monitoring, a first symbol indicator/index for PDCCH monitoring, and/or a quantity/number of search spaces per slot, for example, based on a value of the second parameter (e.g., searchSpaceZero). For example, for operation without shared spectrum channel access and for the SS/PBCH block and CORESET multiplexing pattern 1, the wireless device may monitor PDCCH (e.g., in the Type0-PDCCH CSS set) over two slots. For SS/PBCH block with index i, the wireless device may determine an index of slot $n_0$ as $n_0 = (O \cdot 2^{\mu} + \lfloor i \cdot M \rfloor) \mathrm{mod} N_{\mathrm{slot}}^{\mathrm{frame},\mu}$. Slot $n_0$ is may be in a frame with a SFN $SFN_C$ that satisfies the condition $SFN_c \mathrm{mod}2 = 0$ (e.g., if $\left\lfloor (O \cdot 2^{\mu} + \lfloor i \cdot M \rfloor)/N_{\mathrm{slot}}^{\mathrm{frame},\mu} \right\rfloor \mathrm{mod}2 = 0$ ), or in a frame with a SFN that $SFN_C$ satisfies the condition $SFN_c \mathrm{mod}2 = 1$ (e.g., if $\left\lfloor (O \cdot 2^{\mu} + \lfloor i \cdot M \rfloor)/N_{\mathrm{slot}}^{\mathrm{frame},\mu} \right\rfloor \mathrm{mod}2 = 1)$ ), where $\mu \in \{0,1,2,3,5,6\}$ based on the SCS for PDCCH receptions in the CORESET.

A wireless device may monitor a PDCCH for receiving DCI. The wireless device may monitor a search space 0 of a CORESET 0 for receiving the DCI. The DCI may schedule a SIB1. For example, a SIB1 message may be similar to as described with respect to FIG. 25. The wireless device may receive the DCI with CRC scrambled with a SI-RNTI dedicated for receiving the SIB1.

FIG. 25 shows an example SIB. The SIB may comprise one or more configuration parameters (e.g., RRC configuration parameters). A SIB (e.g., SIB1) may be sent/transmitted to one or more wireless devices. For example, the SIB may be broadcasted to multiple wireless devices. The SIB may contain information for evaluating/determining whether a wireless device is allowed to access a cell, information of paging configuration, and/or scheduling configuration of other system information. A SIB may comprise radio resource configuration information that may be common for multiple wireless devices and barring information used/applied to a unified access control. A base station may send/transmit, to a wireless device (or a plurality of wireless devices), one or more SIB information messages. As shown in FIG. 25, parameters of the one or more SIB information messages may comprise: one or more parameters for cell selection related to a serving cell (e.g., cellSelectionInfo), one or more configuration parameters of a serving cell (e.g., in ServingCellConfigCommonSIB information element (IE)), and/or one or more other parameters. The ServingCellConfigCommonSIB IE may comprise at least one of: common downlink parameters (e.g., in DownlinkConfigCommonSIB IE) of the serving cell, common uplink parameters (e.g., in UplinkConfigCommonSIB IE) of the serving cell, and/or other parameters.

A DownlinkConfigCommonSIB IE may comprise parameters of an initial downlink BWP (e.g., indicated via initialDownlinkBWP IE) of the serving cell (e.g., SpCell). The parameters of the initial downlink BWP may be comprised in a BWP-DownlinkCommon IE (e.g., as shown in FIG. 26). The BWP-DownlinkCommon IE may be used to configure common parameters of a downlink BWP of the serving cell. The base station may configure a parameter (e.g., locationAndBandwidth) such that the initial downlink BWP may comprise an entire CORESET (e.g., CORESET 0) of the serving cell in the frequency domain. The wireless device may use/apply the parameter locationAndBandwidth based on reception of the parameter. The wireless device may use/apply the parameter locationAndBandwidth to determine the frequency position of signals in relation to the frequency as indicated via locationAndBandwidth. The wireless device may keep CORESET 0, for example, until after reception of an RRC setup message (e.g., RRCSetup), RRC resume message (e.g., RRCResume) and/or an RRC reestablishment message (e.g., RRCReestablishment).

The DownlinkConfigCommonSIB IE may comprise parameters of a paging channel configuration. The parameters may comprise a paging cycle value (T, e.g., indicated by defaultPagingCycle IE), a parameter indicating total quantity/number (N) of paging frames (PFs) (e.g., indicated by nAndPagingFrameOffset IE) and paging frame offset in a paging DRX cycle (e.g., indicated by parameter PF_offset), a quantity/number (Ns) for total paging occasions (POs) per PF, a first PDCCH monitoring occasion indication parameter (e.g., firstPDCCH-MonitoringOccasionofPOIE) indicating a first PDCCH monitoring occasion for paging of each PO of a PF. The wireless device may monitor a PDCCH for receiving a paging message, for example, based on parameters of a PCCH configuration.

A parameter (e.g., first-PDCCH-MonitoringOccasionOfPO) may be signaled in SIB1 for paging in initial DL BWP. The parameter first-PDCCH-MonitoringOccasionOfPO may be signaled in the corresponding BWP configuration, for example, for paging in a DL BWP other than the initial DL BWP.

FIG. 26 shows example RRC configuration parameters. The configuration parameters may be RRC configuration parameters for a downlink BWP of a serving cell. The configuration parameters may be indicated via a higher layer parameter BWP-DownlinkCommon IE. A base station may send/transmit to a wireless device (or a plurality of wireless devices) one or more configuration parameters of a downlink BWP (e.g., initial downlink BWP) of a serving cell. The one or more configuration parameters of the downlink BWP may comprise: one or more generic BWP parameters of the downlink BWP, one or more cell-specific parameters for PDCCH of the downlink BWP (e.g., in pdcch-ConfigCommon IE), one or more cell specific parameters for the PDSCH of the BWP (e.g., in pdsch-ConfigCommon IE), and/or one or more other parameters. A pdcch-ConfigCommon IE may comprise parameters of CORESET 0 (e.g., indicated via parameter controlResourceSetZero) which may be used in any common or wireless device-specific search spaces. A value of the controlResourceSetZero may be interpreted in the same manner as the corresponding bits in MIB parameter pdcch-ConfigSIB1. A pdcch-ConfigCommon IE may comprise parameters (e.g., in commonControlResourceSet) of an additional common control resource set which may be configured and used for any common or wireless device-specific search space. The network may use a parameter ControlResourceSetId other than 0 for this ControlResourceSet, for example, if the network configures commonControlResourceSet. The network may configure the commonControlResourceSet in SIB1 such that the SIB1 is contained within the bandwidth of CORESET 0. A pdcch-ConfigCommon IE may comprise parameters (e.g., in commonSearchSpaceList) of a list of additional common search spaces. Parameters of a search space may be implemented based on example of FIG. 27. A pdcch-ConfigCommon IE may indicate, from a list of search spaces, a search space for paging (e.g., via parameter pagingSearchSpace), a search space for random access procedure (e.g., via parameter ra-SearchSpace), a search space for SIB1 message (e.g., via parameter searchSpaceSIB1), a common search space 0 (e.g., via parameter searchSpaceZero), and/or one or more other search spaces.

A CORESET may be associated with a CORESET indicator/index (e.g., indicated via parameter ControlResourceSetId). A CORESET may be implemented based on examples described with respect to FIG. 14A and/or FIG. 14B. The CORESET index 0 may identify a common CORESET configured in MIB and in ServingCellConfigCommon (e.g., indicated via controlResourceSetZero). The CORESET index 0 may not be used in the ControlResourceSet IE. The CORESET index with other values may identify CORESETs configured by dedicated signaling or in SIB1. The controlResourceSetId may be unique among the BWPs of a serving cell. A CORESET may be associated with coresetPoolIndex indicating an index of a CORESET pool for the CORESET. A CORESET may be associated with a time duration parameter (e.g., duration) indicating contiguous time duration of the CORESET (e.g., in terms of a quantity/number of symbols). Configuration parameters of a CORESET may comprise at least one of: frequency resource indication (e.g., frequencyDomainResources), a CCE-REG mapping type indicator (e.g., cce-REG-MappingType), a plurality of TCI states, and/or an indicator indicating whether a TCI is present in a DCI, etc. The frequency resource indication (e.g., comprising a quantity/number of bits, such as 45 bits, or any other quantity of bits) may indicate frequency domain resources. Each bit of the frequency resource indication may correspond to a group of RBs (e.g., 6 RBs, or any other quantity of RBs), with the grouping starting from the first RB group in a BWP of a cell (e.g., SpCell, SCell). For example, the first (e.g., left-most, most significant) bit may correspond to the first RB group in the BWP, with the other bits sequentially corresponding to other RB groups. A bit that is set to 1 may indicate that an RB group, corresponding to the bit, is contained in the frequency domain resource of the CORESET. Bits corresponding to a group of RBs not fully contained in the BWP within which the CORESET is configured may be set to zero.

FIG. 27 shows an example configuration of a search space. The configuration of the search space may be within a SearchSpace IE. One or more search space configuration parameters of a search space may comprise at least one of: a search space ID (e.g., searchSpaceId), a CORESET indicator (ID) (e.g., controlResourceSetId), a monitoring slot periodicity and offset parameter (e.g., monitoringSlotPeriodicityAndOffset), a search space time duration value (e.g., duration), a monitoring symbol indication (e.g., monitoringSymbolsWithinSlot), a quantity/number of candidates for an aggregation level (e.g., nrofCandidates), and/or a search space type indicating a common search space type or a wireless device-specific search space type (e.g., searchSpaceType). The monitoring slot periodicity and offset parameter may indicate slots (e.g., in a radio frame) and slot offset (e.g., related to a starting of a radio frame) for PDCCH monitoring. The monitoring symbol indication may indicate symbol(s), of a slot, in which a wireless device may monitor a PDCCH on the search space. The control resource set ID may indicate/identify a CORESET on which a search space may be located.

A wireless device, in an RRC idle state (e.g., RRC IDLE) or in an RRC inactive state (e.g., RRC_INACTIVE), may periodically monitor POs for receiving paging message(s) for the wireless device. The wireless device, in an RRC idle state or an RRC inactive state and before monitoring the POs, may wake up at a time before each PO for preparation and/or to activate (e.g., turn on) all components in preparation of data reception (e.g., warm up stage). The gap between the waking up and the PO may be set to be sufficient to accommodate all the processing requirements. The wireless device may perform, after the warming up, timing acquisition from SSB and coarse synchronization, frequency and time tracking, time and frequency offset compensation, and/or calibration of local oscillator. The wireless device, after warm up, may monitor a PDCCH for a paging DCI via one or more PDCCH monitoring occasions. The wireless device may monitor the PDCCH, for example, based on configuration parameters of the PCCH configuration (e.g., as configured in SIB1). The configuration parameters of the PCCH configuration may be as described with respect to FIG. 25.

FIG. 28 shows example cell dormancy management. Cell dormancy management may comprise transitioning between a dormant state and a non-dormant state. The example transitioning may be for operations on an SCell. A base station may send/transmit, to a wireless device, one or more RRC messages. The one or more RRC messages may comprise configuration parameters of the SCell. The SCell may comprise a plurality of BWPs. Among the plurality of BWPs, a first BWP (e.g., BWP 3) may be configured as a non-dormant BWP, and/or a second BWP (e.g., BWP 1) may be configured as a dormant BWP. A default BWP (e.g., BWP 0) may be configured in the plurality of BWPs. The non-dormant BWP may be a BWP which the wireless device may activate, for example, based on/in response to transitioning the SCell from a dormant state to a non-dormant state. The dormant BWP may be a BWP which the wireless device may switch to based on/in response to transitioning the SCell from a non-dormant state to a dormant state. The configuration parameters may indicate one or more search spaces and/or CORESETs configured on the non-dormant BWP. The configuration parameters may indicate no search spaces or no CORESETs for the dormant BWP. The configuration parameter may indicate CSI reporting configuration parameters for the dormant BWP.

An active BWP for the SCell may be a dormant BWP, a non-dormant BWP, or a default BWP. A default BWP may be different from a dormant BWP. The configuration parameters may indicate one or more search spaces and/or one or more CORESETs configured on the default BWP. A wireless device may switch to the default BWP as an active BWP, for example, if a BWP inactivity timer expires or based on receiving a DCI indicating switching to the default BWP. The wireless device may perform (e.g., if the default BWP is an active BWP), at least one of: monitoring PDCCH on the default BWP of the SCell, receiving a PDSCH transmission via the default BWP of the SCell, sending a PUSCH transmission via the default BWP of the SCell, sending an SRS via the default BWP of the SCell, and/or sending a CSI report (e.g., in a periodic, aperiodic, and/or semi-persistent manner) for the default BWP of the SCell. The wireless device may switch to the dormant BWP as an active BWP of the SCell, for example, if receiving a dormancy/non-dormancy indication indicating a dormant state for a SCell. The wireless device may (e.g., based on/in response to switching to the dormant BWP) perform at least one of: refraining from monitoring a PDCCH on the dormant BWP of the SCell (or for the SCell if the SCell is cross-carrier scheduled by another cell), refraining from receiving a PDSCH transmission via the dormant BWP of the SCell, refraining from sending a PUSCH transmission via the dormant BWP of the SCell, refraining from sending SRS via the dormant BWP of the SCell, and/or sending a CSI report (e.g., periodic, aperiodic, and/or semi-persistent CSI report) for the dormant BWP of the SCell.

A base station may send/transmit, to a wireless device, DCI via a PDCCH resource. The DCI may comprise a dormancy/non-dormancy indication indicating a dormant state or a non-dormant state for the SCell. The wireless device may (e.g., based on the dormancy/non-dormancy indication indicating a dormant state for the SCell): transition the SCell to the dormant state (e.g., if the SCell is in a non-dormant state before receiving the DCI), or maintain the SCell in the dormant state (e.g., if the SCell is in the dormant state before receiving the DCI). Transitioning the SCell to the dormant state may comprise switching to the dormant BWP (e.g., configured by the base station) of the SCell. The wireless device may (e.g., based on the dormancy/non-dormancy indication indicating a non-dormant state for the SCell): transition the SCell to the non-dormant state (e.g., if the SCell is in a dormant state before receiving the DCI), or maintain the SCell in the non-dormant state (e.g., if the SCell is in the non-dormant state before receiving the DCI). Transitioning the SCell to the non-dormant state may comprise switching to a non-dormant BWP (e.g., configured by the base station) of the SCell.

The wireless device may switch to the non-dormant BWP (e.g., BWP 3), configured by the base station, as an active BWP of the SCell, for example, based on transitioning the SCell from a dormant state to a non-dormant state. The wireless device may perform (e.g., based on the switching to the non-dormant BWP as the active BWP of the SCell) at least one of: monitoring PDCCH on the active BWP of the SCell (or monitoring PDCCH for the SCell if the SCell is configured to be cross-carrier scheduled by another cell), receiving a PDSCH transmission via the active BWP of the SCell, and/or sending a PUCCH transmission, a PUSCH transmission, a RACH transmission and/or an SRS transmission via the active BWP (e.g., if the active BWP is an uplink BWP).

The wireless device may switch to the dormant BWP (e.g., BWP 1 of the SCell), configured by the base station, for example, based on transitioning the SCell from a non-dormant state to a dormant state. The wireless device may perform (e.g., based on the switching to the dormant BWP of the SCell) at least one of: refraining from monitoring PDCCH on the dormant BWP of the SCell (or refraining from monitoring PDCCH for the SCell if a the SCell is configured to be cross-carrier scheduled by another cell), refraining from receiving a PDSCH transmission via the dormant BWP of the SCell, refraining from sending a PUCCH transmission, a PUSCH transmission, a RACH transmission, and/or an SRS transmission via the dormant BWP (e.g., if the dormant BWP is an uplink BWP), and/or sending a CSI report for the dormant BWP of the SCell (e.g., based on the CSI reporting configuration parameters configured on the dormant BWP of the SCell).

FIG. 29A shows an example power saving operation. The example power saving operation of FIG. 29A may be based on a wake-up indication. A base station may send/transmit one or more messages comprising parameters of a wake-up duration (e.g., a power saving duration, or a power saving channel (PSCH) occasion), to a wireless device. The wake-up duration may be located at (e.g., start from) a time that is a quantity/number of slots (or symbols) before a DRX ON duration of a DRX cycle. The quantity/number of slots (or symbols) may be a gap between a wake-up duration and a DRX ON duration. The quantity of slots may be configured in the one or more RRC messages or may be predefined as a fixed value. The gap may be used for at least one of: synchronization with the base station, measuring reference signals, and/or retuning RF parameters. The gap may be determined based on a capability of the wireless device and/or the base station. The parameters of the wake-up duration may be pre-defined without RRC configuration. The wake-up mechanism may be based on a wake-up indication (e.g., via a PSCH). The parameters of the wake-up duration may comprise at least one of: a PSCH channel format (e.g., numerology, DCI format, PDCCH format), a periodicity of the PSCH, a control resource set, and/or a search space of the PSCH. The wireless device may monitor the PSCH for receiving the wake-up signal during the wake-up duration, for example, if configured with the parameters of the wake-up duration. The wireless device may monitor the PSCH for detecting a wake-up indication during the PSCH occasion/wake-up duration, for example, if configured with the parameters of the PSCH occasion. The wireless device may wake up to monitor PDCCHs in a DRX active time (e.g., comprising DRX ON duration) of a next DRX cycle according to the DRX configuration, for example, based on/in response to receiving the wake-up signal/channel (or a wake-up indication via the PSCH). The wireless device may monitor PDCCHs in the DRX active time (e.g., when drx-onDurationTimer is running), for example, based on/in response to receiving the wake-up indication via the PSCH. The wireless device may go back to sleep if the wireless device does not receive PDCCH transmissions in the DRX active time. The wireless device may stay in a sleep state during the DRX OFF duration of the DRX cycle. The wireless device may skip monitoring PDCCHs in the DRX active time, for example, if the wireless device doesn't receive the wake-up signal/channel (or a wake-up indication via the PSCH) during the wake-up duration (or the PSCH occasion). The wireless device may skip monitoring PDCCHs in the DRX active time, for example, if the wireless device receives, during the wake-up duration (or the PSCH occasion), an indication indicating skipping PDCCH monitoring.

FIG. 29B shows an example power saving operation. The power saving operation of FIG. 29B may be based on go-to-sleep indication. The wireless device may go back to sleep and skip monitoring PDCCHs during the DRX active time (e.g., during a next DRX ON duration of a DRX cycle), for example, based on/in response to receiving a go-to-sleep indication via the PSCH. The wireless device may monitor PDCCH during the DRX active time, according to the configuration parameters of the DRX operation, for example, if the wireless device doesn't receive the go-to-sleep indication via the PSCH during the wake-up duration. The power saving mechanisms of FIG. 29A and 29B may reduce power consumption for PDCCH monitoring during the DRX active time.

A power saving operation may be based on combining the operations described with respect to FIG. 29A and FIG. 29B. A base station may send/transmit a power saving indication, in DCI via a PSCH, indicating whether the wireless device may wake up for a next DRX ON duration or skip the next DRX ON duration. The wireless device may receive the DCI via the PSCH. The wireless device may wake up for next DRX ON duration, for example, based on/in response to the power saving indication indicating that the wireless device may wake up for next DRX ON duration. The wireless device may monitor PDCCH in the next DRX ON duration in response to the waking up. The wireless device may go to sleep during or skip the next DRX ON duration, for example, based on/in response to the power saving indication indicating the wireless device may skip (or go to sleep) for next DRX ON duration. The wireless device may skip monitoring PDCCH in the next DRX ON duration, for example, based on/in response to the power saving indication indicating the wireless device shall go to sleep for next DRX ON duration. Various examples described with respect to FIG. 28, FIG. 29A, and/or FIG. 29B may be extended and/or combined to further improve power consumption of a wireless device and/or signaling overhead of a base station.

FIG. 30A shows an example DCI format. The DCI format may correspond to DCI format 2_0 and may comprise one or more search space set groups (or SSSGs) switching indications (or SSSG switching flags). The DCI format 2_0 may comprise one or more slot format indicators (e.g., slot format indicator 1, slot format indicator 2, ... slot format indicator N), one or more available RB set indicators, one or more channel occupancy time (COT) duration indications, and/or one or more SSSG switching flags. Each of the one or more SSSG switching flags may correspond to a respective cell group of a plurality of cell groups. Each cell group of the plurality of cell groups may comprise one or more cells. An SSSG switching flag, of the one or more SSSG switching flags, corresponding to a cell group, may indicate switching from a first SSSG to a second SSSG for each cell of the cell group, for example, if the SSSG switching flag is set to a first value. The SSSG switching flag may indicate switching from the second SSSG to the first SSSG for each cell of the cell group, for example, if the SSSG switching flag is set to a second value.

FIG. 30B shows an example SSSG switching. The SSSG switching may be based on DCI (e.g., corresponding to DCI format 2_0, or other DCI formats as described with respect to FIG. 23). A wireless device 3004 may receive configuration 3006 of SSSG for a BWP of a cell. The configuration 3006 may comprise a plurality of parameters. The configuration 3006 may be via RRC messaging and/or SIB1 messaging.

The wireless device 3004 may be provided/indicated with a group indicator/index for a search space set (e.g., a Type3-PDCCH CSS set, a USS set, or any other type of search space set) by a parameter (e.g., searchSpaceGroupIdList, as described with respect to FIG. 27) for PDCCH monitoring on a serving cell.

The wireless device 3004 may or may not be provided/indicated with the parameter searchSpaceGroupIdList for a search space set. The SSSG switching as described with respect to FIG. 30B may not be applicable for PDCCH monitoring on the search space, for example, if the search space set is not configured with searchSpaceGroupIdList. The wireless device 3004 may monitor the search space set on a BWP, without switching away from the search space set, for PDCCH monitoring, for example, if the search space set is not configured with searchSpaceGroupIdList.

SSSG switching as shown in FIG. 30B may use/apply to all serving cells within each group, for example, if the wireless device 3004 is provided/indicated with parameter cellGroupsForSwitchList (e.g., as described with respect to FIG. 26), indicating one or more groups of serving cells. The SSSG switching as described with respect to FIG. 30B may use/apply only to a serving cell for which the wireless device 3004 is provided/indicated with parameter searchSpaceGroupIdList, for example, if the wireless device 3004 is not provided/indicated with the parameter cellGroupsForSwitchList. The wireless device 3004 may reset PDCCH monitoring according to search space sets with a specific group index (e.g., group index 0), for example, if a wireless device 3004 is provided/indicated with parameter searchSpaceGroupIdList.

The wireless device 3004 may be provided/indicated with parameter searchSpaceSwitchDelay (e.g., as shown in FIG. 26) with a quantity/number of symbols $P_{switch}$ based on wireless device processing capability (e.g., wireless device processing capability 1, wireless device processing capability 2, etc.) and sub-carrier spacing (SCS) configuration $\mu$. Wireless device processing capability 1 for SCS configuration $\mu$ may use/apply unless the wireless device 3004 indicates support for wireless device processing capability 2. For example, $P_{switch}$ may be 25 for wireless device capability 1 and $\mu$=0, $P_{switch}$ may be 25 for wireless device capability 1 and $\mu$=1, $P_{switch}$ may be 25 for wireless device capability 1 and $\mu$=2, $P_{switch}$ may be 10 for wireless device capability 2 and $\mu$=0, $P_{switch}$ may be 12 for wireless device capability 2 and $\mu$=1, and $P_{switch}$ may be 22 for wireless device capability 2 and $\mu$=2, etc.

The wireless device 3004 may be provided/indicated with parameter searchSpaceSwitchTimer (in units of slots, e.g., as shown in FIG. 26). The parameter searchSpaceSwitchTimer may be with a timer value for a serving cell for which the wireless device 3004 is provided with the parameter searchSpaceGroupIdList or may be for a set of serving cells indicated by parameter cellGroupsForSwitchList (e.g., if provided). The wireless device 3004 may decrement the timer value by one after each slot based on a reference SCS configuration that is a smallest SCS configuration $\mu$ among all configured downlink BWPs in the serving cell, or in the set of serving cells. The wireless device 3004 may maintain the reference SCS configuration during the timer decrement procedure.

Parameter searchSpaceSwitchTimer may be defined as a value in unit of slots. The parameter searchSpaceSwitchTimer may indicate a time duration for monitoring PDCCH in the active downlink BWP of the serving cell before moving to a default search space group (e.g., search space group 0). The timer value may be based on SCS. A valid timer value may be one of {1, ... , 20}, for example, if SCS is 15 kHz. A valid timer value may be one of {1, ..., 40}, for example, if SCS is 30 kHz. A valid timer value may be one of {1, ..., 80}, for example, if SCS is 60 kHz. The base station may configure a same timer value for all serving cells in a same cell group as indicated by parameter CellGroupForSwitch.

The wireless device 3004 may monitor (e.g., step 3012) PDCCH on a first SSSG (e.g., search space sets with group index 0) based on configuration of SSSG of a BWP of a cell (e.g., via configuration 3006). The wireless device 3004 may be provided/indicated with SearchSpaceSwitchTrigger indicating a location of a SSSG switching flag field for a serving cell as present in DCI (e.g., DCI corresponding to a DCI format 2_0). The parameter SearchSpaceSwitchTrigger may be configured as shown in FIG. 27.

The wireless device 3004 may receive DCI 3008 (e.g., with DCI format 2_0). The DCI 3008 may indicate a SSSG switching for the cell, for example, if a value of the SSSG switching flag field in the DCI 3008 is 1 (or any other predefined value). The wireless device 3004 may switch (e.g., step 3014) to a second SSSG for PDCCH monitoring. The wireless device 3004 may start monitoring PDCCH on the second SSSG (e.g., search space sets with group index 1) and stop monitoring PDCCH on the first SSSG (or the search space sets with group index 0) for the serving cell. The wireless device 3004 may start monitoring PDCCH on the second SSSG (e.g., search space sets with group index 1) and stop monitoring PDCCH on the first SSSG at a first slot that is at least $P_{switch}$ symbols after a last symbol of the PDCCH comprising the DCI. The wireless device 3004 may start window (e.g., start a search space switching timer), for example, based on switching to the second SSSG. The wireless device 3004 may set the timer value of the search space switching timer to the value provided/indicated by parameter searchSpaceSwitchTimer, for example, based on receiving the DCI.

The wireless device 3004 may monitor PDCCH on the second SSSG (e.g., search space sets with group index 1) based on configuration of SSSGs of a BWP of a cell. The wireless device 3004 may be indicated, via parameter SearchSpaceSwitchTrigger, a location of a SSSG switching flag field for a serving cell in DCI (e.g., corresponding to DCI format 2_0). The wireless device 3004 may receive DCI. The DCI may indicate SSSG switching for the cell, for example, if a value of the SSSG switching flag field in the DCI is 0. The wireless device 3004 may start monitoring PDCCH on search space sets with group index 0 and stop monitoring PDCCH on search space sets with group index 1 for the serving cell, for example, if a value of the SSSG switching flag field in the DCI is 0. The wireless device 3004 may start monitoring the PDCCH on search space sets with group index 0 and stop monitoring PDCCH on search space sets with group index 1 at a first slot that is at least $P_{switch}$ symbols after the last symbol of the PDCCH comprising the DCI.

The wireless device 3004 may start monitoring PDCCH for the serving cell on the second SSSG (e.g., search space sets with group index 1), and stop monitoring PDCCH on the first SSSG (e.g., search space sets with group index 0), for example, if the wireless device 3004 initially monitors PDCCH for the serving cell on the first SSSG. The wireless device 3004 may start monitoring PDCCH for the serving cell on the second SSSG and stop monitoring PDCCH on the first SSSG at the beginning of the first slot that is at least $P_{switch}$ symbols after a slot where the timer expires or after a last symbol of a remaining channel occupancy duration for the serving cell (e.g., as indicated by the DCI 3008).

The wireless device 3004 may or may not be provided/indicated with parameter SearchSpaceSwitchTrigger for a serving cell. For example, the parameter SearchSpaceSwitchTrigger may be absent in configuration parameters corresponding to SlotFormatIndicator (e.g., wherein SlotFormatIndicator is configured for monitoring a Group-Common-PDCCH for Slot-Format-Indicators (SFI)). The DCI 3008 (e.g., corresponding to DCI format 2_0) may not comprise a SSSG switching flag field, for example, based on the parameter SearchSpaceSwitchTrigger not being provided. The wireless device 3004 may start monitoring PDCCH on the second SSSG (e.g., a search space sets with group index 1) and stop monitoring PDCCH according on the first SSSG (e.g., a search space sets with group index 0) for the serving cell, for example, if the parameter SearchSpaceSwitchTrigger is not provided and if the wireless device 3004 detects DCI based on monitoring PDCCH on the first SSSG. The wireless device 3004 may start monitoring PDCCH on the second SSSG and stop monitoring PDCCH on the first SSSG at a first slot that is at least $P_{switch}$ symbols after the last symbol of the PDCCH comprising the DCI. The wireless device 3004 may set (or restart) the timer value to the value provided by parameter searchSpaceSwitchTimer, for example, if the wireless device 3004 detects DCI based on monitoring PDCCH in any search space set.

The wireless device 3004 may or may not be provided/indicated with parameter SearchSpaceSwitchTrigger for a serving cell. The wireless device 3004 may start monitoring PDCCH for the serving cell according to the second SSSG (e.g., search space sets with group index 1), and stop monitoring PDCCH according to the first SSSG (e.g., a search space sets with group index 0), for the serving cell, for example, if the parameter SearchSpaceSwitchTrigger is not provided and if the wireless device 3004 initially monitors PDCCH for a serving cell according to the first SSSG. The wireless device 3004 may start monitoring PDCCH for the serving cell according to the second SSSG and stop monitoring PDCCH according to the first SSSG at the beginning of the first slot that is at least $P_{switch}$ symbols after a slot where the timer expires. The wireless device 3004 may start monitoring PDCCH for the serving cell according to the second SSSG and stop monitoring PDCCH according to the first SSSG after a last symbol of a remaining channel occupancy duration for the serving cell that is indicated by DCI format 2_0, for example, if the wireless device 3004 is provided with a search space set to monitor PDCCH for detecting a DCI format 2_0.

The wireless device 3004 may switch back to the first SSSG for PDCCH monitoring (e.g., step 3016), for example, based on/after an expiration of the timer. The wireless device 3004 may start monitoring PDCCH on the first SSSG and stop monitoring PDCCH on the second SSSG, for example, based on expiration of the timer. The wireless device 3004 may receive second DCI 3010 based on the PDCCH monitoring. The second DCI 3010 may schedule a TB via a PDSCH. The wireless device 3004 may receive (e.g., step 3018) the TB via the PDSCH and based on the scheduling indicated via the second DCI 3010.

The wireless device 3004 may determine a slot and a symbol in a slot to start or stop PDCCH monitoring on search space sets for a serving cell for which the wireless device 3004 is provided/indicated with parameter search-SpaceGroupIdList. The wireless device 3004 may start or stop PDCCH monitoring on search space sets for a serving cell if parameter cellGroupsForSwitchList is provided/indicated for a set of serving cells, based on the smallest SCS configuration $\mu$ among all configured downlink BWPs. The downlink BWPs may be in the serving cell or in the set of serving cells and, if any, in the serving cell where the wireless device 3004 receives a PDCCH transmission and detects a corresponding DCI format 2_0 (e.g., triggering the start or stop of PDCCH monitoring on search space sets).

FIG. 31 shows an example PDCCH skipping-based power saving operation. A base station 3102 may send/transmit, to a wireless device 3104, one or more RRC messages comprising configuration parameters 3106. The configuration parameters 3106 may be for a PDCCH for a BWP of a cell (e.g., as described with respect to FIG. 26 and/or FIG. 27). The wireless device 3104 may monitor PDCCH on the BWP, for example, based on the configuration parameters 3106 of the PDCCH. The BWP may a downlink BWP which may be in an active state. The wireless device 3104 may activate the BWP as described with respect to FIG. 22.

The wireless device 3104 may receive first DCI 3108 indicating skipping the PDCCH (e.g., monitoring/receiving via the PDCCH) within a time window 3116. A time value (e.g., duration) for the time window 3116 may be indicated by the first DCI 3108 or configured by the one or more RRC messages. The wireless device 3104 may stop monitoring the PDCCH on the BWP, for example, based on/in response to receiving the first DCI 3108. Stopping monitoring PDCCH on the BWP may comprise stopping monitoring the PDCCH on one or more SSSGs configured on the BWP. The wireless device 3104 may maintain an active state of the BWP. The first DCI 3108 may not indicate an active BWP switching. The base station 3102 may not send/transmit a PDCCH transmission to the wireless device 3104, for example, within/during the time window 3116 (or when a timer associated with the time window 3116 is running).

The wireless device 3104 may resume PDCCH monitoring on the BWP, for example, based on/after the expiration of the time window 3116. The wireless device 3104 may receive second DCI 3112 scheduling TB via a PDSCH, for example, based on resuming PDCCH monitoring. The wireless device 3104 may receive the TB via the PDSCH scheduled by the second DCI 3112. The base station 3102 may send/transmit the second DCI 3112 to the wireless device 3104, for example, based on/in response to expiration of the time window 3116.

A base station may send/transmit one or more SSBs (e.g., periodically) to a wireless device or a plurality of wireless devices. The wireless device (in RRC idle state, RRC inactive state, or RRC connected state) may use the one or more SSBs for time and frequency synchronization with a cell of the base station. An SSB, comprising a PSS, a SSS, a PBCH, and/or a PBCH DM-RS, may be sent/transmitted (e.g., as described with respect to FIG. 11A). An SSB may occupy a quantity/number (e.g., 4, or any other quantity) of OFDM symbols. The base station may send/transmit one or more SSBs in an SSB burst (e.g., to enable beam-sweeping for PSS/SSS and PBCH). An SSB burst may comprise a set of SSBs, with each SSB potentially being transmitted via a corresponding different beam. SSBs, in the SSB burst, may be transmitted using time-division multiplexing. An SSB burst may be within a time window (e.g., a 5 ms window, or a window of any other duration) and may be either located in first-half or in the second-half of a radio frame (e.g., with a duration of 10 ms, or any other duration). An SSB burst may be equivalently referred to as a transmission window (e.g., 5 ms, or any other time duration) in which the set of SSBs are transmitted.

The base station may indicate a transmission periodicity of SSB via an RRC message (e.g., a SIB1 message). For example, the transmission periodicity may be indicated using parameter ssb-PeriodicityServingCell as present in ServingCellConfigCommonSIB of a SIB1 message (e.g., as shown in FIG. 25). A candidate value of the transmission periodicity may be in a range of {5ms, 10ms, 20ms, 40ms, 80ms, 160ms}. The transmission periodicity may have any other value. A maximum quantity/number of candidate SSBs ($L_{max}$) within an SSB burst may depend on a carrier frequency/band of the cell. For example, Lmax=4 if fc<=3GHz. $L_{max}$=8 if 3GHz<fc<=6GHz. Lmax=64 if fc>=6GHz, etc., wherein $f_c$ may be the carrier frequency of the cell. A starting OFDM symbol indicator/index, of a candidate SSB (e.g., occupying 4 OFDM symbols) within an SSB burst (e.g., comprised in a 5 ms time window), may depend on an SCS and a carrier frequency band of the cell.

FIG. 32 shows example SSB configurations. FIG. 32 shows an example table for determination of a starting OFDM symbol index of candidate SSBs. OFDM starting symbols may be determined as a function of a SCS and carrier frequency. For example, starting OFDM symbol indexes of SSBs in an SSB burst, for a cell configured with 15 kHz SCS and carrier frequency fc<3GHz (e.g., $L_{max}$=4), may be 2, 8, 16, and 22. OFDM symbols in a half-frame may be indexed with the first symbol of the first slot being indexed as 0. Starting OFDM symbol indexes of SSBs in an SSB burst, for a cell configured with 15 kHz and carrier frequency 3GHz<fc<6GHz ($L_{max}$=8) may be 2, 8, 16, 22, 30, 36, 44 and 50. Starting OFDM symbol indexes for other SCSs and carrier frequencies may be similarly determined in accordance with the table shown in FIG. 32. The base station may send/transmit only one SSB by using the first SSB starting position, for example, if the base station is not transmitting the SSBs with beam forming.

FIG. 33 shows example SSB transmissions in a cell. An SCS of the cell may be 15 kHz, and the cell may be configured with carrier frequency $f_c$, such that 3GHz<fc<=6GHz. A maximum quantity of candidate SSBs in an SSB burst may be 8 ($L_{max}$=8), for example, based on the value of $f_c$. Starting symbols for SSB transmission may be determined in accordance with the table shown in FIG.32. SSB#1 may start at symbol 2 (of 70 symbols included in 5 ms half-frame), SSB#2 may start at symbol#8, SSB#3 may start at symbol#16, SSB#4 may start at symbol#22, SSB#5 may start at symbol#30, SSB#6 may start at symbol#36, SSB#7 may start at symbol#44, and SSB#8 may start at symbol 50. The SSB burst may be transmitted in the first half (and not the second half) of a radio frame (with 10 ms duration).

The SSB burst (and each SSB of the SSB burst) may be sent/transmitted with a periodicity. A default periodicity of an SSB burst may be 20 ms (e.g., as shown in FIG.33, or any other duration of time). The default transmission periodicity may be a periodicity, for example, before a wireless device may receive a SIB1 message for initial access of the cell. For example, the base station, with 20 ms transmission periodicity of SSB (or SSB burst), may send/transmit the SSB burst in the first 5 ms of each 20 ms period. The base station may not send/transmit the SSB burst in the rest 15 ms of the each 20 ms period.

A base station may send/transmit RRC messages (e.g., SIB1 messages) indicating cell specific configuration parameters of SSB transmission. The cell specific configuration parameters may comprise a value for a transmission periodicity (e.g., parameter ssb-PeriodicityServingCell) of an SSB burst and locations (e.g., presence) of SSBs (e.g.,

active SSBs), of a plurality of candidate SSBs, in the SSB burst. The plurality of candidate SSBs (e.g., starting symbols of candidate SSBs) may be determined as described with respect to FIG. 32. The cell specific configuration parameters may comprise a position indication of an SSB in an SSB burst (e.g., parameter ssb-PositionsInBurst). The position indication may comprise a first bitmap (e.g., groupPresence) and a second bitmap (e.g., inOneGroup) indicating locations/presence of SSBs in an SSB burst.

Carrier frequency $f_c$ and SCS may determine a maximum quantity of candidate SSBs in an SSB burst (e.g., as described with respect to FIG. 32). The position indication (e.g., parameter ssb-PositionsInBurst) may indicate SSBs (e.g., active SSBs, positions of the active SSBs), of a plurality of candidate SSBs, that are sent/transmitted in the SSB burst (e.g., as further described with respect to FIG. 34). A base station may indicate the transmitted active SSBs and/or a quantity of the active SSBs, in an SSB burst, using the position indication (e.g., parameter ssb-PositionsInBurst). The position indication may be transmitted by the base station, for example, via an RRC message and/or DCI.

FIG. 34 shows an example indication of SSB location in an SSB burst. Indication of SSB location may be in form of an indication of a presence of an SSB group among a plurality of SSB groups. Each group may comprise a subset of a plurality of candidate SSBs (e.g., maximum possible quantity of candidate SSBs) in an SSB burst. For example, a maximum possible quantity of candidate SSBs in an SSB burst may be equal to 64 (e.g., for SCS =120 kHz or 240 kHz, and $f_c$ > 6 GHz). The candidate SSBs in the SSB burst may comprise SSBs with indexes from 0 to 63. The candidate SSBs in an SSB burst may be divided into SSB groups.

A first bitmap (e.g., parameter groupPresence) may comprise a quantity of bits (e.g., 8, or any other quantity). The first bitmap may be configured/indicated by the SIB1 message. Each bit of the first bitmap may correspond to a respective group of SSB groups. As shown in FIG.34, a first bit (e.g., left most bit of the first bitmap) may correspond to a first SSB group comprising 1$^{st}$ SSB (with SSB index 0), 2$^{nd}$ SSB (with SSB index 1), ... and 8$^{th}$ SSB (with SSB index 7). A second bit (e.g., the second bit of the first bitmap) may correspond to a second SSB group comprising 9$^{th}$ SSB (with SSB index 8), 10$^{th}$ SSB (with SSB index 9), ... and 16th SSB (with SSB index 15). A last bit (e.g., right most bit of the first bitmap) may correspond to an 8$^{th}$ SSB group comprising 57$^{th}$ SSB (with SSB index 56), 58$^{th}$ SSB (with SSB index 57), ... and 64$^{th}$ SSB (with SSB index 63), etc. An SSB may belong/correspond to at most one SSB group of the first SSB groups. A bit, of the first bitmap, may indicate whether the base station may send/transmit an SSB group, corresponding to the bit, in an SSB burst. The bit being set to a first value (e.g., 1) may indicate that the corresponding SSB group may be sent/transmitted in the SSB burst by the base station. The bit being set to a second value (e.g., 0) may indicate that the corresponding SSB group is not sent/transmitted in the SSB burst by the base station, or vice versa.

A second bitmap (e.g., parameter inOneGroup) may comprise a quantity of bits (e.g., 8, or any other quantity). Each bit of the second bitmap may correspond to a respective group of SSB groups. A first bit (e.g., left most bit of the second bitmap) may correspond to a first SSB group comprising 1$^{st}$ SSB (with SSB index 0), 2$^{nd}$ SSB (with SSB index 8), ... and 8$^{th}$ SSB (with SSB index 56). A second bit (e.g., the second bit of the second bitmap) may correspond to a second SSB group comprising 1$^{st}$ SSB (with SSB index 1), 2$^{nd}$ SSB (with SSB index 9), ... and 8$^{th}$ SSB (with SSB index 57). A last bit (e.g., right most bit of the second bitmap) may correspond to an 8$^{th}$ SSB group comprising 1$^{st}$ SSB (with SSB index 7), 2$^{nd}$ SSB (with SSB index 15), ... and 8$^{th}$ SSB (with SSB index 63), etc. An SSB may belong/correspond to at most one SSB group of the second SSB groups. A bit, of the second bitmap, may indicate whether the base station may send/transmit an SSB group, corresponding to the bit, in an SSB burst. The bit being set to a first value (e.g., 1) may indicate that the corresponding SSB group is sent/transmitted in the SSB burst by the base station. The bit being set to a second value (e.g., 0) may indicate that the corresponding SSB group is not sent/transmitted in the SSB burst by the base station, or vice versa.

The plurality of SSBs (e.g., with SSB index from 0 to 63) may be grouped, for the first bitmap, into first SSB groups. Each of the first SSB groups may comprise SSBs with continuous SSB indexes. A first SSB group of the first SSB groups may comprise SSBs with SSB indexes from 0 to 7, a second SSB group may comprise SSB indexes from 8 to 15, etc. The plurality of SSBs may be also grouped, for the second bitmap, into second SSB groups. Each of the second SSB groups may comprise SSBs with discontinuous SSB indexes. A first SSB group of the second SSB groups may comprise SSBs with SSB indexes {0, 8, 16, ... 56}. A second SSB group of the second SSB groups comprises SSBs with SSB indexes {1, 9, 17, ... 57}, etc. SSB index gap between two neighboring SSB indexes in a second SSB group may be equal to 8 (or any other value).

Not all bits of the first and the second bitmap may be considered for determining an SSB group is sent/transmitted or not. A maximum quantity of SSBs within an SSB burst may be equal to four if fc ≤ 3 GHz (e.g., in accordance with FIG.32). A wireless device may determine that the four leftmost bits of a bitmap (e.g., the first bitmap and/or the second bitmap) are valid. The wireless device may ignore the four rightmost bits of the first bitmap and/or the second bitmap.

As shown in FIG. 34, the first bitmap may be indicated, by the base station, as {1 0 1 0 0 0 0 0} and the second bitmap may be indicated as {1 1 0 0 0 0 0 0}. The base station may send/transmit SSBs with indexes {0 1 16 17} in an SSB burst, for example, based on the grouping configuration of the first SSB groups and the second SSB groups and further based on the first bitmap and the second bitmap.

A base station may send/transmit a MIB via PBCH. The MIB may indicate configuration parameters (e.g., for CORESET 0), for a wireless device monitoring a PDCCH, for scheduling a SIB1 message. The base station may send/transmit a MIB message with a transmission periodicity of 80 ms (or with any other first periodicity). The same MIB message may be repeated (according to SSB periodicity) within the 80 ms. Contents of the MIB message may be the same over the 80 ms period. The same MIB may be sent/transmitted over all SSBs within an SSB burst. The PBCH transmission (e.g., MIB) may indicate that there is no associated SIB1. A wireless device may be pointed to/indicated another frequency from where to search for an SSB that is associated with a SIB1 as well as a frequency range where the wireless device may assume no SSB associated with SIB1 is present, for example, if the PBCH transmission indicates that there is no associated SIB1. The indicated frequency range may be confined within a contiguous spectrum allocation of the same operator in which SSB is detected.

A base station may send/transmit a SIB1 message with a periodicity of 160 ms (or with any other second periodicity). The base station may transmit the same SIB1 message with variable transmission repetition periodicity within 160 ms. A default transmission repetition periodicity of SIB1 may be 20 ms (or any other third periodicity). The base station may determine an actual transmission repetition periodicity based on network implementation. SIB1 repetition transmission period may be 20 ms, for example, for SSB and CORESET multiplexing pattern 1. SIB1 transmission repetition period may be the same as the SSB period, for example, for SSB and CORESET multiplexing patterns 2 or 3. SIB1 may comprise information regarding availability and scheduling (e.g., mapping of SIBs to system information (SI) message, periodicity, SI window size) of other SIBs and/or an indication whether one or more SIBs are only provided on demand. Configuration parameters needed by a wireless device to perform an SI request may be indicated in the SIB1 if the one or more SIBs are only provided on demand.

FIG. 35 shows an example CSI-RS configuration. FIG. 35 shows an example table of CSI-RS resource configuration parameters. A CSI-RS resource may be sent/transmitted with configuration parameters. The CSI-RS resource configuration parameters may comprise, for example, a quantity/number of antenna ports, a CDM type, a density (e.g., REs, port, and/or PRB for a CSI-RS resource), and/or any other configuration parameters for a CSI-RS resource. For example, a base station may send/transmit one or more CSI-RSs to a wireless device (or a group of wireless devices). The one or more CSI-RSs may be determined/implemented as described with respect to FIG. 11.

A CSI-RS may be based on a reference signal sequence. For example, the CSI-RS may be determined based on the reference signal sequence. The wireless device (and/or the base station) may determine the reference signal sequence r(m) as r(m) = $\frac{1}{\sqrt{2}}(1-2\cdot c(2m))+j\frac{1}{\sqrt{2}}(1-2\cdot c(2m+1))$ , where c(i) is a pseudo-random sequence with a pseudo-random sequence generator being initialized with $c_{init}=\left(2^{10}\left(N_{symb}^{slot}n_{s,f}^{\mu}+l+1\right)(2n_{ID}+1)+n_{ID}\right)\mathrm{mod}2^{31}$ at the start of each OFDM symbol, where $n_{s,f}^{\mu}$ is the slot number within a radio frame, l is the OFDM symbol number within a slot, and $n_{ID}$ equals the higher-layer parameter scramblingID or sequenceGenerationConfig. The scramblingID or sequenceGenerationConfig may be determined/implemented based on examples of FIG. 36 (e.g., described/explained herein).

For example, a pseudo-random sequence (e.g., for CSI-RS mapping) may be a generic pseudo-random sequence determined/defined by a length-31 Gold sequence. The output sequence c(n) of length $M_{PN}$, wheren = 0,1,..., $M_{PN}$ - 1, may be determined/defined as:

$$C(n)=\left(X_1(n+N_C)+X_2(n+N_C)\right)mod2$$

$$X_1(n+31)=\left(X_1(n+3)+X_1(n)\right)mod2$$

$$X_2(n+31)=\left(X_2(n+3)+X_2(n+2)+X_2(n+1)+X_2(n)\right)mod2,$$

where $N_C$ = 1600 and the first m-sequence $x_1(n)$ may be initialized with$x_1(0)$ = 1, and $x_1(n)$ = 0, for n = 1,2,...,30. The initialization of the second m-sequence (e.g., $x_2(n)$) may be denoted by $c_{init}=\sum_{i=0}^{30}x_2(i)\cdot 2^i$ with the value depending on the application of the sequence.

For example, for each CSI-RS configured, the wireless device may determine the sequence r(m) being mapped to REs (e.g., $k_p$, $l_\mu$) according to:

$$a_{k,l}^{(p,\mu)} = \beta_{CSIRS} w_f(k') \cdot w_f(k') \cdot r_{l,n_{s,f}}(m')$$

$$m' = \lfloor n\alpha \rfloor + k' + \left\lfloor \frac{\bar{k}\rho}{N_{sc}^{RB}} \right\rfloor$$

$$k = nN_{sc}^{RB} + \bar{k} + k'$$

$$l = \bar{l} + l'$$

$$\alpha = \begin{cases} \rho, & for\ X = 1 \\ 2\rho, & for\ X > 1 \end{cases}$$

$$n = 0,1, \ldots,$$

if the resource element (e.g., $k_p$, $l_\mu$) is within the RBs occupied by the CSI-RS resource for which the wireless device is configured. The reference point for k=0, for example, may be subcarrier 0 in common RB 0. The value of density $\rho$ may be indicated/given by the higher-layer parameter density in CSI-RS-ResourceMapping IE or CSI-RS-CellMobility IE, and the quantity/number of ports X may be indicated/given by the higher-layer parameter nrofPorts.

The wireless device may be not expected to receive CSI-RS and DM-RS on the same REs. The wireless device may assume (or determine) $\beta_{CSIRS} > 0$ for a non-zero-power CSI-RS, where $\beta_{CSIRS}$ is determined/selected such that the power offset specified by the higher-layer parameter powerControlOffsetSS in the NZP-CSI-RS-Resource IE, if provided, is fulfilled. An NZP-CSI-RS may be a CSI-RS with non-zero power transmission. A ZP-CSI-RS may be a CSI-RS with zero power transmission. The quantities such as k', l', $w_f$(k') , and $w_t$(l'), for example, may be indicated/given based on one or more tables (e.g., as shown in FIG. 35). The one or more tables may be implemented based on Tables 7.4.1.5.3-1 to 7.4.1.5.3-5 of TS 38.211, where each $(\overline{k,l})$ in a indicated/given row of Table 7.4.1.5.3-1 corresponds to a CDM group of size 1 (no CDM) or size 2, 4, or 8 (or any other size). The CDM type may be configured/provided by the higher layer parameter (e.g., cdm-Type) in the CSI-RS-ResourceMapping IE. The indices k' and l' may indicate/index REs within a CDM group.

Time-domain locations $l_0 \in \{0,1, \ldots, 13\}$ and/or $l_1 \in \{2, 3, \ldots, 12\}$ may be determined/provided by the higher-layer parameters firstOFDMSymbolInTimeDomain and firstOFDMSymbolInTimeDomain2, respectively, in the CSI-RS-ResourceMapping IE or the CSI-RS-ResourceConfigMobility IE, and may be determined/defined relative to the start of a slot. Frequency-domain location may be indicated/given by a bitmap provided by the higher-layer parameter frequencyDomainAllocation in the CSI-RS-ResourceMapping IE or the CSI-RS-ResourceConfigMobility IE with the bitmap and value of $k_i$ (as shown in the table in FIG. 35) indicated/given as:

$$[b_3 \cdots b_0], k_{i-1} = f(i),$$

for row 1

$$[b_{11} \cdots b_0], k_{i-1} = f(i),$$

for row 1

$$[b_3 \cdots b_0], k_{i-1} = f(i),$$

for row 2

$$[b_2 \cdots b_0], k_{i-1} = 4f(i),$$

for row 4

$$[b_5 \cdots b_0], k_{i-1} = 2f(i),$$

for all other cases,
where f(i) is the bit number of the $i^{th}$ bit in the bitmap set to one, repeated across every [1/ρ] of the RBs configured for CSI-RS reception by the wireless device. The starting position and quantity/number of the RBs (e.g., in which the wireless device may assume that CSI-RS is sent/transmitted) may be indicated/given by the higher-layer parameters freqBand and density in the CSI-RS-ResourceMapping IE for the BWP (e.g., indicated/given by the higher-layer parameter BWP-Id in the CSI-ResourceConfig IE) or may be indicated/given by the higher-layer parameters nrofPRBs in the CSI-RS-CellMobility IE, where the startPRB (e.g., indicated/given by csi-rs-MeasurementBW) is relative to common RB 0.

A wireless device, for example, may determine that a CSI-RS is sent/transmitted using antenna ports p numbered according to:

$$p = 3000 + s + jL$$

$$j = 0,1,\ldots,N/L - 1$$

$$s = 0,1,\ldots,L - 1,$$

where s is the sequence index as described in Tables 7.4.1.5.3-2 to 7.4.1.5.3-5 of TS 38.211, L ∈ {1,2,4,8} is the CDM group size, and N is the number of CSI-RS ports. The CDM group index j indicated/given in Table 7.4.1.5.3-1 (as shown in FIG. 35) may correspond to the frequency/time locations ($\bar{k},\bar{l}$), respectively, for a indicated/given row of the table. The CDM groups may be numbered in order of increasing frequency domain allocation (e.g., $\bar{k}$). The CDM groups may be numbered in order of increasing time domain allocation (e.g., 1). The wireless device may assume that a CSI-RS is sent/transmitted in slots , if the CSI-RS resource is configured as periodic or semi-persistent by the higher-layer parameter resourceType or configured by the higher-layer parameter CSI-RS-CellMobility. The slots may satisfy which follows as: ( $N_{slot}^{frame,\mu} n_f + n_{s,f}^{\mu} - T_{offset}$) mod $T_{CSI\text{-}RS}$ = 0, where the periodicity $T_{CSI\text{-}RS}$ (in slots) and slot offset $T_{offset}$ are determined/obtained based on the higher-layer parameter CSI-ResourcePeriodicityAndOffset or slotConfig. The wireless device may assume that CSI-RS is sent/transmitted in a candidate slot as described in clause 11.1 of TS 38.213. A wireless device, for example, may assume that antenna ports within a CSI-RS resource are QCLed comprising QCL Type A, Type D (when applicable), and/or average gain.

FIG. 36 shows example RRC configuration. The configuration may comprise RRC configuration parameters of CSI-RS resource. For example, a base station may send/transmit to a wireless device (or a group of wireless devices), one or more RRC messages comprising configuration parameters of CSI-RS resources. The one or more RRC messages may be cell specific RRC messages (e.g., used/applied for all wireless devices). The one or more RRC messages may be wireless device specific RRC messages (e.g., used/applied dedicatedly for the wireless device receiving the messages). The one or more RRC messages may comprise CSI-RS-resourceMapping IE to configure resource element mapping of a CSI-RS resource in time domain and/or frequency domain.

A CSI-RS-ResourceMapping IE may comprise, for each CSI-RS resource, a frequency domain allocation indication (e.g., frequencyDomainAllocation), a number of antenna ports (e.g., nrofPorts), a first time domain parameter (e.g., firstOFDMSymbolInTimeDomain), a second time domain parameter (e.g., firstOFDMSymbolInTimeDomain2), a CDM type indicator (e.g., cdm-Type), a density indication (e.g., density), a frequency band indication (e.g., freqBand)., The density indication $\rho$ for a CSI-RS resource may indicate 0.5, 1 or 3 RE/port/PRB for a quantity of ports X=1, the density $\rho$ may indicate 0.5 or 1 for a quantity of ports X=2, 16, 24 or 32, and the density $\rho$ may indicate 1 for a quantity of ports X=4, 8, or 12, etc. A CSI-RS resource, for example, may comprise a none-zero power transmission CSI-RS (e.g., NZP-CSI-RS). The NZP-CSI-RS may be configured by the base station with RRC messages (e.g., NZP-CSI-RS-Resource IE). The NZP-CSI-RS-Resource IE may configure, for a CSI-RS resource, an NZP-CSI-RS resource ID (e.g.,

NZP-CSI-RS-ResourceId), a resource mapping indication (e.g., CSI-RS-ResourceMapping), one or more power control parameters (e.g., powerControlOffset, powerControlOffsetSS), a scrambling ID, a periodicity and offset indication, a QCL indication, and etc.

For example, the base station may configure a plurality of CSI-RS resource sets. The CSI-RS resource sets may comprise a plurality of CSI-RS resources. A CSI-RS resource set may be configured by NZP-CSI-RS-ResourceSet IE. A CSI-RS resource set may be configured with parameters comprising at least one of a CSI-RS resource set ID (or index), a number of CSI-RS resource IDs, and/or a repetition indication (indicating on or off). The base station, for example, may configure a plurality of CSI resource configurations. The CSI resource configuration may be configured by the base station with RRC messages (e.g., CSI-ResourceConfig IE). A CSI-ResourceConfig IE may configure/indicate, for a CSI resource configuration, a CSI resource configuration ID, a number of NZP-CSI-RS-Resource sets, a number of SSB resource sets, a BWP ID and a resource type indication (indicating whether the resource is aperiodic, semi-persistence, or periodic resource) and etc.

FIG. 37A and FIG. 37B show example CSI-RS resources. The CSI-RS resources (e.g., as shown in FIG. 37A and FIG. 37B) may be based on configuration parameters as described with respect to FIG. 35 and/or FIG. 36. For example, a CSI-RS resource with 1 port and density 3 (e.g., 3 RE/port/RB) may be mapped to RE#1, RE#5, and RE#9 in a RB, in OFDM symbol#4 (e.g., in 14 symbols of a slot), as shown in FIG. 37A. RE#1 may be an anchor RE of RE#1, RE#5 and RE#9, which may be indicated in CSI-RS resource configuration parameters (e.g., via NZP-CSI-RS-Resource IE, and/or CSI-RS-ResourceMapping IE as described in FIG. 35). A CSI-RS resource with 2 ports and with density 1 (e.g., 1 RE/port/RB) may be mapped to RE #2 and RE#3 in OFDM symbol#7 (e.g., in 14 symbols of a slot). RE#2 may be an anchor RE of RE #2 and RE#3, indicated by the CSI-RS resource. A CSI-RS resource with 4 ports and with density 1 (e.g., 1 RE/port/RB) may be mapped to RE #8, RE #9, RE#10 and RE #11 in OFDM symbol#10 (e.g., of 14 symbols of a slot). RE#8 may be an anchor RE of RE #8, RE #9, RE#10 and RE #11, indicated in OFDM symbol#10.

For example, as shown in FIG. 37B, a CSI-RS resource with 16 ports and density 1 (e.g., 1 RE/port/RB) may be mapped to 4 CDM groups (e.g., CDM group 0, CDM group 1, CDM group 2, CDM group 3) (or any other quantity of CDM group). Each CDM group may comprise/occupy different 4 REs (e.g., two pairs of REs in two consecutive OFDM symbols) (or any other quantity of RE). For example, CDM group 0 may comprise/occupy RE#0 and RE#1 of OFDM symbol#3 and RE#0 and RE#1 of OFDM symbol#4. CDM group 1 may comprise/occupy RE#4 and RE#5 of OFDM symbol#3 and RE#4 and RE#5 of OFDM symbol#4. CDM group 2 may comprise/occupy RE#8 and RE#9 of OFDM symbol#3 and RE#8 and RE#9 of OFDM symbol#4. CDM group 3 occupies RE#10 and RE#11 of OFDM symbol#3 and RE#10 and RE#11 of OFDM symbol#4. 4 ports within a CDM group may be code-division multiplexed on the 4 REs with an 2x2 orthogonal code (e.g., based on Table 7.4.1.5.3-4 of TS 38.211).

FIG. 38 shows example CS-RS resource sets. A base station may send/transmit RRC messages. The RRC messages (e.g., sent/transmitted by a base station) may comprise configuration parameters of a plurality of CSI-RS resource sets. The CSI-RS resource sets may comprise a plurality of CSI-RS resources (e.g., based on configuration parameters of FIG. 35, FIG. 36, FIG. 37A and/or FIG. 37B). Configuration of CSI-RS resource set may enable the base station to send/transmit per CSI-RS resource set indication for saving signaling overhead. A CSI-RS resource of the plurality of CSI-RS resources may be implemented as described with respect to FIG. 35, FIG. 36, FIG. 37A and/or FIG. 37B. A base station may configure a plurality of CSI-RS resource sets (e.g., CSI-RS resource set 1, CSI-RS resource set 2, ... , CSI-RS resource set N). The CSI-RS resource sets may comprise overlapping CSI-RS resources, and/or non-overlapping CSI-RS resources. For example, CSI-RS resource set 1 may comprise CSI-RS resource 0, CSI-RS resource 1, CSI-RS resource 2, etc. CSI-RS resource set 2 may comprise CSI-RS resource 3, CSI-RS resource 4, etc. CSI-RS resource set N may comprise CSI-RS resource 5..., and CSI-RS resource 191, etc.

The CSI-RS resource sets, for example, may be configured with a repetition indicator. A base station may send/transmit, for example, CSI-RS resources of the CSI-RS resource set. Each of the CSI-RS resources may be sent/transmitted via/with different spatial domain filter (or sending/transmission beam), based on/in response to the repetition indicator, of the CSI-RS resource set, is set to off. A wireless device may perform downlink beam management based on sending/transmitting each CSI-RS resource in different beam. The wireless device may determine/identify a best transmission beam among the multiple beams of the multiple CSI-RS resources of the CSI-RS resource set (e.g., P2 as shown in FIG. 12A). Downlink beam management may be implemented as described with respect to FIG. 12A and/or FIG. 12B.

A base station may send/transmit, for example CSI-RS resources of the CSI-RS resource set. The CSI-RS resources may be sent/transmitted via/with the same spatial domain filter (or sending/transmission beam), based on/in response to the repetition indicator, of the CSI-RS resource set, is set to on. A wireless device may perform downlink beam management based on sending/transmitting each CSI-RS resource in the same beam. The wireless device may determine/identify a best receiving beam at the wireless device for receiving the CSI-RS resource set (e.g., P3 as shown in FIG. 12A). As shown in FIG. 38, CSI-RS resource set 1 may be associated with a repetition indicator being set to off, wherein the base station may send/transmit CSI-RS resource 0, CSI-RS resource 1 and CSI-RS resource 2 via/with different sending/transmission beams. CSI-RS resource set 2 may be associated with a repetition indicator being set to on, wherein the base station may send/transmit CSI-RS resource 3 and CSI-RS resource 4 via/with the same sending/transmission beam. CSI-RS resource set N may be associated with a repetition indicator being set to off, wherein the base station may send/transmit CSI-RS resource 5 and CSI-RS resource 191 via/with different sending/transmission beams.

FIG. 39 shows an example of frequency resource allocation. FIG. 39 shows an example of CSI-RS transmission in frequency domain. For example, a base station may send/transmit to a wireless device RRC messages. The RRC message (e.g., sent/transmitted by a base station) may comprise configuration parameters of a cell comprising a plurality of BWPs (e.g., BWP0, BWP1, BWP3, etc. as shown in FIG 39). A BWP may be implemented as described with respect to FIG. 9, FIG. 22, and/or FIG. 26. Each BWP of the cell may comprise a plurality of frequency resources (e.g., RBs/PRBs). Each RB/PRB may comprise a plurality of REs. An RE may be implemented as described with respect to FIG. 8. For example, BWP2 may comprise RB 1, RB 2, ... RB N. The base station may configure a number of RBs for CSI-RS sending/transmission based on the frequency resources of BWP2. The number of RBs, in which periodic (or aperiodic) CSI-RSs are transmitted, may be indicated with a starting RB and a total quantity/number of the RBs, using/via RRC parameters (e.g., startingRB IE and nrofRBs IE in CSI resource configuration RRC message NZP-CSI-RS-Resource IE). The startingRB IE may indicate a PRB, of a cell, where the CSI-RS starts in relation to common resource block #0 (CRB#0) on the common resource block grid. The CSI resource configuration RRC message may be implemented as described with respect to FIG. 36. A CSI-RS resource may be mapped to a plurality ofRBs (e.g., multiples of 4 or any other quantity ofRBs) comprised in a cell. The smallest configurable quantity/number of RBs may be the minimum of 24 (or any other quantity of RBs) and the width of the associated BWP. The wireless device may assume that the actual CSI-RS bandwidth is equal to the width of the BWP, if the configured value is larger than the width of the corresponding BWP. As shown in FIG. 39, the RRC message may indicate that the RBs (e.g., for the CSI-RS sending/transmission) start from RB 2 and end at RB N-2.

A base station may map a reference signal sequence to the configured frequency resources based on the configured frequency resources within a BWP. The reference signal sequence, for example, for the CSI-RS, may be a pseudo-random sequence with a pseudo-random sequence generator being initialized for each OFDM symbol based on a slot number and a scrambling ID. The configuration of frequency resources may be implemented as described with respect to FIG. 35 and/or FIG. 36. A base station, for example, may flexibly configure CSI-RS resources and CSI-RS resource sets in time domain, frequency domain and spatial/beam domain based on example embodiments of FIG. 37A, FIG. 37B, FIG. 38 and/or FIG. 39. A wireless device may perform beam management procedure and/or measure the channel quality and/or send/transmit a CSI report to the base station based on the configured CSI-RS resources and CSI-RS resource sets. A wireless device may send/transmit periodic CSI report, aperiodic CSI report and/or semi-persistent CSI report to a base station. The base station may control the time and frequency resources that may be used by the wireless device to report CSI. A CSI report may comprise Channel Quality Indicator (CQI), precoding matrix indicator (PMI), CSI-RS resource indicator (CRI), SS/PBCH Block Resource indicator (SSBRI), layer indicator (LI), rank indicator (RI), L1-RSRP and/or L1-SINR.

FIG. 40 shows an example of CSI reporting configuration. FIG. 40 shows an example RRC configuration of CSI reporting. For example, a wireless device may be configured for a CSI report comprising CQI, PMI, CRI, SSBRI, LI, RI, L1-RSRP, and/or L1-SINR by higher layers (e.g., with N≥1) CSI-ReportConfig reporting settings (e.g., as shown in FIG. 40), higher layers (e.g., with M≥1) CSI-ResourceConfig resource settings (e.g., as described with respect to FIG. 36), and one or two list(s) of trigger states (e.g., indicated/given by the higher layer parameters CSI-AperiodicTrigger-StateList and/or CSI-SemiPersistentOnPUSCH-TriggerStateList). Each trigger state in CSI-AperiodicTriggerStateList may comprise a list of associated CSI-ReportConfigs indicating the resource set IDs for channel and optionally for interference. Each trigger state in CSI-SemiPersistentOnPUSCH-TriggerStateList may comprise one associated CSI-ReportConfig. Each CSI-ReportConfig may be associated with a specific/single downlink BWP (e.g., identified/indicated by higher layer parameter BWP-Id), which is indicated/given in the associated CSI-ResourceConfig for channel measurement. CSI-ReportConfig may comprise the parameter(s) for one CSI reporting band, such as codebook configuration (e.g., including codebook subset restriction), time-domain behavior, frequency granularity for CQI and PMI, measurement restriction configurations, and the CSI-related quantities to be reported by the wireless device (e.g., LI, L1-RSRP, L1-SINR, CRI, and/or SSBRI (SSB Resource Indicator).

Time domain behavior of the CSI-ReportConfig may be identified/indicated by the higher layer parameter (e.g., reportConfigType). reportConfigType may be set to one of parameters, such as aperiodic, semiPersistentOnPUCCH, semiPersistentOnPUSCH, and/or periodic. The periodicity and slot offset may use/apply in the numerology of the UL BWP in which the CSI report is configured to be sent/transmitted, if periodic and semiPersistentOnPUCCH/semiPersistentOnPUSCH CSI reporting if configured. The higher layer parameter (e.g., reportQuantity) may indicate the CSI-related, L1-RSRP-related or L1-SINR-related quantities to be reported. The reportFreqConfiguration may indicate the reporting granularity in the frequency domain, including the CSI reporting band and whether PMI/CQI reporting is wideband or sub-band. The CSI-ReportConfig may comprise timeRestrictionForChannelMeasurements parameter (e.g., configured to enable time domain restriction for channel measurements). The CSI-ReportConfig may comprise timeRestrictionForInterferenceMeasurements parameter (e.g., configured to enable time domain restriction for interference measurements). The CSI-ReportConfig may comprise CodebookConfig, which comprises configuration parameters, such as Type I, Type II, Enhanced Type II CSI, and/or Further Enhanced Type II Port Selection, comprising codebook subset restriction if applicable, and configurations of group-based reporting.

Each CSI resource setting (e.g., CSI-ResourceConfig) may comprise a configuration of a list of (e.g., S≥1) CSI resource sets indicated/given by higher layer parameter (e.g., csi-RS-ResourceSetList), as described with respect to FIG. 36. The list may comprise references to either or both of NZP CSI-RS resource set(s) and SS/PBCH block set(s). The list may comprise references to CSI-IM resource set(s). All CSI resource setting may be located in the DL BWP identified/indicated by the higher layer parameter (e.g., BWP-id). All CSI resource settings associated with a CSI report setting may comprise the same DL BWP. Time domain behavior of the CSI-RS resources within a CSI Resource Setting may be identified/indicated by the higher layer parameter (e.g., resourceType). The time domain behavior of the CSI-RS resources may be set to aperiodic, periodic, or semi-persistent (e.g., as described with respect to FIG. 36). The number of CSI resource sets (e.g., configured for periodic and semi-persistent CSI resource settings) may be limited to S=2, if the wireless device is configured with group based beam report. The number of CSI-RS resource sets configured may be limited to S-1, if the wireless device is not configured with group based beam report.

The periodicity and slot offset configured for periodic and semi-persistent CSI resource settings may be based on (or given in) the numerology of the associated DL BWP, as indicated/given by the parameter (e.g., BWP-id). The same time domain behavior may be configured for multiple CSI-ResourceConfigs, if a wireless device is configured with the multiple CSI-ResourceConfigs that comprise the same NZP CSI-RS resource ID. The same time-domain behavior may be configured for multiple CSI-ResourceConfigs, if a wireless device is configured with the multiple CSI-ResourceConfigs that comprise the same CSI-IM resource ID. All CSI resource settings associated with (or linked to) a CSI report setting may comprise the same time domain behavior.

Single (e.g., one) CSI resource setting may be configured for L1-SINR measurement. The CSI resource setting may be indicated/given by higher layer parameter (e.g., resourcesForChannelMeasurement). The CSI resource setting may be configured for channel and interference measurement on NZP CSI-RS for L1-SINR computation. A wireless device may assume that same 1 port NZP CSI-RS resource(s) with density 3 REs/RB is used for both channel and interference measurements.

Double (e.g., two) CSI resource settings may be configured for L1-SINR measurement. The first CSI resource setting may be indicated/given by higher layer parameter (e.g., resourcesForChannelMeasurement). The first CSI resource setting may be configured for channel measurement on SSB or NZP CSI-RS. The second CSI resource setting may be indicated/given by either higher layer parameter (e.g., csi-IM-ResourcesForInterference) or higher layer parameter (e.g., nzp-CSI-RS-ResourcesForInterference). The second CSI resource setting may be configured for interference measurement performed on CSI-IM or on 1 port NZP CSI-RS with density 3 REs/RB. For example, each SSB and/or NZP CSI-RS resource for channel measurement may be associated with one CSI-IM resource and/or one NZP CSI-RS resource for interference measurement by the ordering of the SSB and/or NZP CSI-RS resource for channel measurement and CSI-IM resource and/or NZP CSI-RS resource for interference measurement in the corresponding resource sets. The quantity/number of SSB(s) and/or CSI-RS resources for channel measurement may be equal to the quantity/number of CSI-IM resources and/or the quantity/number of NZP CSI-RS resource for interference measurement. For example , a wireless device may use/apply either the SSB, or type D RS configured with qcl-Type set to type D to the NZP CSI-RS resource used for channel measurement, as the reference RS for determining type D assumption for the corresponding CSI-IM resource or the corresponding NZP CSI-RS resource used for interference measurement in a single (e.g., one) CSI reporting. Both of the NZP CSI-RS resource set used for channel measurement and the NZP-CSI-RS resource set used for interference measurement, for example, may be expected to be configured with the higher layer parameter repetition by a wireless device.

CSI-ReportConfig may be associated with (or linked to) periodic and/or semi-persistent Resource Setting(s) for semi-persistent or periodic CSI. The CSI resource setting may be used for channel measurement for L1-RSRP or for both channel and interference measurement for L1-SINR computation, if single (e.g., one) CSI resource setting is configured. The CSI resource setting may be indicated/given by higher layer parameter (e.g., resourcesForChannelMeasurement). For example, double (e.g., two) CSI resource settings may be configured. The first CSI resource setting may be used for channel measurement. The first CSI resource setting may be indicated/given by higher layer parameter (e.g., resourcesForChannelMeasurement). The second CSI resource setting may be used for interference measurement performed on CSI-IM. The second CSI resource setting may be indicated/given by higher layer parameter (e.g., csi-IM-ResourcesForInterference). For example, the second CSI resource setting may be used for interference measurement performed on CSI-IM and/or on NZP CSI-RS (e.g., configured for L1-SINR computation). The second CSI resource setting for L1-SINR computation may be indicated/given by higher layer parameter (e.g., csi-IM-ResourcesForInterference) or higher layer parameter (e.g., nzp-CSI-RS-ResourceForInterference).

A wireless device may be configured for L1-RSRP computation. The configuration of the wireless device may comprise resources, such as CSI-RS resources, SS/PBCH Block resources or both CSI-RS and SS/PBCH block resources, if resource-wise quasi co-located with type C and/or type D is applicable. The wireless device may be configured with CSI-RS resource setting comprising up to 16 CSI-RS resource sets (or any other quantity of resource sets). Each CSI-RS resource set may comprise up to 64 resources (or any other quantity of resources). The total quantity/number of different CSI-RS resources over all resource sets may be no more than 128 (or any other quantity of resources).

The reported L1-RSRP value (e.g., for L1-RSRP reporting) may be determined/defined by a 7-bit (or any other quantity of bits) value in the range [-140, -44] dBm (or any other range) with 1dB step size (or any other step size), if the higher layer parameter (e.g., nrofReportedRS) in CSI-ReportConfig is set to one. The wireless device may use differential L1-RSRP based reporting, if the higher layer parameter (e.g., nrofReportedRS) is configured to be larger than one, if the higher layer parameter (e.g., groupBasedBeamReporting) is configured as enabled, and/or if the higher layer parameter (e.g., groupBasedBeamReporting-r17) is configured. The largest measured value of L1-RSRP (e.g., for differential L1-SINR reporting) may be quantized to a 7-bit (or any other quantity of bits) value in the range [-140, -44] dBm (or any other range) with 1dB step size (or any other step size). The differential L1-RSRP may be quantized to a 4-bit value (or any other quantity of bits). The differential L1-RSRP value may be computed with 2 dB step size (or any other step size) with a reference to the largest measured L1-RSRP value which is part of the same L1-RSRP reporting instance. The mapping between the reported L1-RSRP value and the measured quantity may be described in TS 38.133.

The wireless device may identify/indicate the CSI resource set associated with the largest measured value of L1-RSRP, if the higher layer parameter (e.g., groupBasedBeamReporting-r17) in CSI-ReportConfig is configured. CRI and/or SSBRI of the identified/indicated CSI resource set may be presented first for each group. The wireless device may determine/derive the channel measurements for computing L1-RSRP value reported in uplink slot n based on only the SS/PBCH and/or NZP CSI-RS (e.g., as described/defined in TS 38.211), if the higher layer parameter (e.g., timeRestrictionForChannelMeasurements) in CSI-ReportConfig is set to notConfigured. The channel measurements for computing L1-RSRP value may be determined/derived (e.g., by the wireless device) no later than the CSI reference resource associated with the CSI resource setting.

The wireless device may determine/derive the channel measurements for computing L1-RSRP reported in uplink slot n based on only the most recent occasion of SS/PBCH and/or NZP CSI-RS (e.g., as described/defined in TS 38.211), if the higher layer parameter (e.g., timeRestrictionForChannelMeasurements) in CSI-ReportConfig is set to Configured. The channel measurements for computing L1-RSRP value may be determined/derived (e.g., by the wireless device) no later than the CSI reference resource associated with the CSI resource setting.

The wireless device may be configured for channel measurement (e.g., for L1-SINR computation) with NZP CSI-RS resources and/or SS/PBCH Block resources. The wireless device may be configured for interference measurement with NZP CSI-RS and/or CSI-IM resources. The wireless device may be configured for channel measurement with CSI-RS resource setting with up to 16 resource sets (or any other quantity of resource sets), with a total of up to 64 CSI-RS resources (or any other quantity of resources) or up to 64 SS/PBCH Block resources (or any other quantity of resources).

The reported L1-SINR value (e.g., for L1-SINR reporting) may be determined/defined by a 7-bit value (or any other quantity of bits) in the range [-23, 40] dB (or any other range) with 0.5 dB step size(or any other step size), if the higher layer parameter (e.g., nrofReportedRS) in CSI-ReportConfig is set to one. The wireless device may use differential L1-SINR based reporting, if the higher layer parameter (e.g., nrofReportedRS) is configured to be larger than one, if the higher layer parameter (e.g., groupBasedBeamReporting) is configured as enabled. The largest measured value of L1-SINR (e.g., for differential L1-SINR reporting) may be quantized to a 7-bit (or any other quantity of bits) value in the range [-23, 40] dB (or any other range) with 0.5 dB step size (or any other step size), The differential L1-SINR may be quantized to a 4-bit value (or any other quantity of bits). The differential L1-SINR may be computed with 1 dB step size (or any other step size) with a reference to the largest measured L1-SINR value which is part of the same L1-SINR reporting instance. The reported L1-SINR values should not be compensated by the power offset(s) indicated/given by higher layer parameter (e.g., powerControOffsetSS or powerControlOffset), if NZP CSI-RS is configured for channel measurement and/or interference measurement.

One or two resource settings may be configured for L1-SINR measurement. The wireless device may determine/derive the channel measurements for computing L1-SINR reported in uplink slot n based on only the SSB and/or NZP CSI-RS (e.g., as described/defined in TS 38.211), if the higher layer parameter (e.g., timeRestrictionForChannelMeasurements) in CSI-ReportConfig is set to notConfigured. The channel measurements for computing L1-SINR may be determined/derived (e.g., by the wireless device) no later than the CSI reference resource associated with the CSI resource setting. The wireless device may determine/derive the channel measurements for computing L1-SINR reported in uplink slot n based on only the most recent occasion of SSB and/or NZP CSI-RS (e.g., as described/defined in TS 38.211), if the higher layer parameter (e.g., timeRestrictionForChannelMeasurements) in CSI-ReportConfig is set to configured. The channel measurements for computing L1-SINR may be determine/derived (e.g., by the wireless device) no later than the CSI reference resource associated with the CSI resource setting. The wireless device may determine/derive the interference measurements for computing L1-SINR reported in uplink slot n based on only the CSI-IM and/or NZP CSI-RS for interference measurement (e.g., as described/defined in TS 38.211) and/or NZP CSI-RS for channel and/or interference measurement, if the higher layer parameter (e.g., timeRestrictionForInterferenceMeasurements) in CSI-ReportConfig is set to notConfigured. The interference measurements for computing L1-SINR may be determined/derived (e.g., by the wireless device) no later than the CSI reference resource associated with the CSI resource setting. The wireless device may determine/derive the interference measurements for computing the L1-SINR reported in uplink slot n based on the most recent occasion of CSI-IM and/or NZP CSI-RS for interference measurement (e.g., as described/defined in TS 38.211) and/or NZP CSI-RS for channel and interference measurement, if the higher layer parameter (e.g., timeRestrictionForInterferenceMeasurements) in CSI-ReportConfig is set to configured. The interference measurements for computing the L1-SINR may be determined/derived (e.g., by the wireless device) no later than the CSI reference resource associated with the CSI resource setting.

FIG. 41 shows an example of CSI reporting configuration in a cell. For example, a base station may send/transmit to a wireless device one or more RRC messages. The one or more RRC messages (e.g., ServingCellConfig IE) may comprise configuration parameters of a cell. ServingCellConfig IE may be used to configure (add or modify) the wireless device with a serving cell (e.g., a SpCell and/or an SCell of an MCG and/or SCG). The configuration parameters may be mostly specific to a wireless device. The configuration parameters may be partly specific to a cell (e.g., in additionally configured BWPs). Reconfiguration between a PUCCH and PUCCHless SCell may be supported using/via an SCell release and add. The configuration parameters may identify/indicate configurations, such as a plurality of BWPs configured on the cell, PDCCH configuration, PDSCH configuration, CSI measurement configuration (e.g., CSI-MeasConfig IE) and etc. CSI measurement configuration (e.g., as shown in FIG. 40) may be associated with parameters indicating, such as a plurality of NZP-CSI-RS resources, a plurality of NZP-CSI-RS resource sets, a plurality of CSI-IM resources, a plurality of CSI-IM resource sets, a plurality of CSI-SSB resource sets, a plurality of CSI resource configurations, a plurality of CSI report configurations, and etc. An NZP-CSI-RS resource (and set) may be implemented as described with respect to FIG. 35, FIG. 36, FIG. 37A, FIG. 37B, FIG. 38 and/or FIG. 39. A CSI resource configuration (e.g., CSI-ResourceConfig IE) may be implemented as described with respect to FIG. 36. A CSI report configuration (e.g., CSI-ReportConfig IE) may be implemented as described with respect to FIG. 40.

A wireless device may determine/derive CSI report based on SS/PBCH block and/or CSI-RSs. The wireless device may measure SS-RSRP (or L1-RSRP) (e.g., as described in specification of TS 38.215). The wireless device may measure SS-RSRP (or L1-RSRP) within a SMTC occasion based on the SS-RSRP being defined as the linear average over the power contributions (in [W]) of the REs that carry SSSs. The wireless device may use CSI-RSs in addition to SSSs for SS-RSRP measurement (e.g., for SS-RSRP determination), if indicated by higher layers. The wireless device may measure SS-RSRP using DM-RS for PBCH and/or CSI-RSs by linear averaging over the power contributions of the REs that carry corresponding RSs, considering power scaling for the RSs. The additional use of CSI-RS for SS-RSRP determination is not applicable, if SS-RSRP is not used for L1-RSRP. The wireless device may measure SS-RSRP only among the reference signals corresponding to SS/PBCH blocks with the same SS/PBCH block index and/or the same physical-layer cell identity. The wireless device may measure SS-RSRP only from an indicated set of SS/PBCH block(s), if SS-RSRP is not used for L1-RSRP and/or higher-layers indicate the set of SS/PBCH blocks for performing SS-RSRP measurements. The wireless device may determine (e.g., for frequency range 1) a reference point for the SS-RSRP measurement as an antenna connector of the wireless device. The wireless device may measure (e.g., for frequency range 2) SS-RSRP based on a combined signal from antenna elements corresponding to a indicated/given receiver branch. The wireless device may report SS-RSRP (e.g., for frequency range 1 and 2) with a value not lower than the corresponding SS-RSRP of any of the individual receiver branches, if receiver diversity is in use by the wireless device.

The wireless device may measure CSI-RSRP (or L1-RSRP) (e.g., as described in specification of TS 38.215) based on the CSI-RSRP. The CSI-RSRP may be determined/defined as the linear average over the power contributions (in [W]) of the resource elements of the antenna port(s) that carry CSI reference signals configured for RSRP measurements within the considered measurement frequency bandwidth in the configured CSI-RS occasions. The wireless device may use (e.g., for CSI-RSRP determination) CSI reference signals transmitted on antenna port 3000 (or any other port). CSI reference signals (e.g., transmitted on antenna ports 3000 and/or 3001) may be used for CSI-RSRP determination, if CSI-RSRP is used for L1-RSRP. The wireless device may be not expected to measure (e.g., for intra-frequency CSI-RSRP measurements) the CSI-RS resource(s) outside of the active DL BWP, if the measurement gap is not configured. The reference point for the CSI-RSRP may be the antenna connector of the wireless device (e.g., for frequency range). CSI-RSRP may be measured based on the combined signal from antenna elements corresponding to an indicated/given receiver branch (e.g., for frequency range 2,).The reported CSI-RSRP value may not be lower than the corresponding CSI-RSRP of any of the individual receiver branches (e.g. for frequency range 1 and 2), if receiver diversity is in use by the wireless device.

The wireless device may measure SS-RSRQ (or L1-RSRQ) (e.g., as described in specification of TS 38.215) based on SS-RSRQ. The SS-RSRQ may be determined/defined as the ratio of $\frac{N \times SS\text{-}RSRP}{NR\ carrier\ RSSI}$ , where N is the quantity/number of RBs in the NR carrier RSSI measurement bandwidth. The SS-RSRQ measurements (e.g., in the numerator and denominator) may be made over the same set of RBs. NR carrier received signal strength indicator (e.g., NR carrier RSSI) may comprise the linear average of the total received power (in [W]) observed only in certain OFDM symbols of measurement time resource(s), in the measurement bandwidth, over N quantity/number of RBs from all sources, including co-channel serving and non-serving cells, adjacent channel interference, thermal noise etc. The measurement time resources(s) for NR Carrier RSSI may be not constrained for cell selection. The measurement time resource(s) for NR Carrier RSSI may be confined within SMTC window duration. The NR Carrier RSSI may be measured (e.g., if indicated by higher-layers) in slots within the SMTC window duration that are indicated by the higher layer parameter (e.g., measurementSlots) and in predefined OFDM symbols, if measurement gap is not used. The NR Carrier RSSI may be measured (e.g., if indicated by higher-layers) in slots within the SMTC window duration that are indicated by the higher layer parameter (e.g., measurementSlots) and in the predefined OFDM symbols that are overlapped with the measurement gap, if measurement gap is used. NR Carrier RSSI may be measured with timing reference corresponding to the serving cell in the frequency layer for intra-frequency measurements. NR Carrier RSSI may be measured with timing reference corresponding to any cell in the target frequency layer for inter-frequency measurements. NR Carrier RSSI is measured (e.g., if not indicated by higher-layers) from OFDM symbols within SMTC window duration, if measurement gap is not used. NR Carrier RSSI may be measured (e.g., if not indicated by higher-layers) from OFDM symbols corresponding to overlapped time span between SMTC window duration and the measurement gap, if measurement gap is used. SS-RSRP may be measured only from the indicated set of SS/PBCH block(s), if higher-layers indicate certain SS/PBCH blocks for performing SS-RSRQ measurements. The reference point for the SS-RSRQ may be the antenna connector of the wireless device for frequency range 1. NR Carrier RSSI may be measured based on the combined signal from antenna elements corresponding to a given receiver branch for frequency range 2, The combining for NR Carrier RSSI may be the same as the one used for SS-RSRP measurements. The reported SS-RSRQ value may not be lower than the corresponding SS-RSRQ of any of the individual receiver branches for frequency range 1 and 2, if receiver diversity is in use by the wireless device.

The wireless device may measure CSI-RSRQ (or L1-RSRQ) (e.g., as described in specification of TS 38.215) based on CSI-RSRQ. The CSI-RSRQ may be determined/defined as the ratio of $\frac{N \times CSI-RSRP}{CSI-RSSI}$, where N is the quantity/number of RBs in the CSI-RSSI measurement bandwidth. The CSI-RSRQ measurements (e.g., in the numerator and denominator) may be made over the same set of RBs. CSI received signal strength indicator (e.g., CSI-RSSI) may comprise the linear average of the total received power (in [W]) observed only in OFDM symbols of measurement time resource(s), in the measurement bandwidth, over N quantity/number of RBs from all sources, including co-channel serving and non-serving cells, adjacent channel interference, thermal noise etc. The measurement time resource(s) for CSI-RSSI may correspond to OFDM symbols comprising configured CSI-RS occasions. The wireless device may use (e.g., for CSI-RSRQ determination) CSI reference signals transmitted on antenna port 3000 (or any other port). The wireless device may be not expected to measure (e.g., for intra-frequency CSI-RSRQ measurements) the CSI-RS resource(s) outside of the active DL BWP, if the measurement gap is not configured. The reference point for the CSI-RSRQ may be the antenna connector of the wireless device (e.g., for frequency range 1).CSI-RSSI may be measured based on the combined signal from antenna elements corresponding to a indicated/given receiver branch (e.g., for frequency range 2). The combining for CSI-RSSI may be the same as the one used for CSI-RSRP measurements. The reported CSI-RSRQ value may not be lower than the corresponding CSI-RSRQ of any of the individual receiver branches (e.g., for frequency range 1 and 2), if receiver diversity is in use by the wireless device .

The wireless device may measure SS-SINR (or L1-SINR) (e.g., as described in specification of TS 38.215) based on SS-SINR. The SS-SINR may be determined/defined as the linear average over the power contribution (in [W]) of the resource elements carrying SS signals divided by the linear average of the noise and/or interference power contribution (in [W]). The interference and/or noise may be measured over resource(s) indicated by higher layers, if SS-SINR is used for L1-SINR reporting with dedicated interference measurement resources. The interference and/or noise may be measured over the resource elements carrying SS signals within the same frequency bandwidth, if SS-SINR is not used for L1-SINR reporting with dedicated interference measurement resources. The measurement time resource(s) for SS-SINR may be confined within SMTC window duration. The measurement time resources(s) restriction by SMTC window duration may be not applicable, if SS-SINR is used for L1-SINR as configured by reporting configurations. The demodulation reference signals for physical broadcast channel (PBCH) in addition to secondary synchronization signals may be used for SS-SINR determination. SS-SINR may be measured only from the indicated set of SS/PBCH block(s), if SS-SINR is not used for L1-SINR and higher-layers indicate certain SS/PBCH blocks for performing SS-SINR measurements. The reference point for the SS-SINR may be the antenna connector of the wireless device (e.g., for frequency range 1). SS-SINR may be measured based on the combined signal from antenna elements corresponding to a given receiver branch (e.g., for frequency range 2). The reported SS-SINR value may not be lower than the corresponding SS-SINR of any of the individual receiver branches (e.g., for frequency range 1 and 2), if receiver diversity is in use by the wireless device.

The wireless device may measure CSI-SINR (or L1-SINR) (e.g., as described in specification of TS 38.215) based on CSI-SINR. The CSI-SINR may be determined/defined as the linear average over the power contribution (in [W]) of the resource elements carrying CSI reference signals divided by the linear average of the noise and/or interference power contribution (in [W]). The interference and/or noise may be measured over resource(s) indicated by higher layers, if CSI-SINR is used for L1-SINR reporting with dedicated interference measurement resources. The interference and/or noise may be measured over the resource elements carrying CSI reference signals within the same frequency bandwidth, if CSI-SINR is not used for L1-SINR reporting with dedicated interference measurement resources. The wireless device may use (e.g., for CSI-SINR determination) CSI reference signals transmitted on antenna port 3000 (or any other port). CSI reference signals (e.g., transmitted on antenna ports 3000 and/or 3001) may be used for CSI-SINR determination, if CSI-SINR is used for L1-SINR. The wireless device may be not expected to measure (e.g., for intra-frequency CSI-SINR measurements not used for L1-SINR reporting) the CSI-RS resource(s) outside of the active downlink bandwidth part, if the measurement gap is not configured. The reference point for the CSI-SINR may be the antenna connector of the wireless device (e.g., for frequency range 1). CSI-SINR may be measured based on the combined signal from antenna elements corresponding to a given receiver branch (e.g., for frequency range 2).The reported CSI-SINR value may not be lower than the corresponding CSI-SINR of any of the individual receiver branches (e.g., for frequency range 1 and 2), if receiver diversity is in use by the wireless device.

A wireless device may receive/obtain CSI-RS configuration parameters and/or measure CSI (and/or beam) based on FIG. 35, FIG. 36, FIG. 37A, FIG. 37B, FIG. 38, FIG. 39, FIG. 40 and/or FIG. 41. The wireless device may send/transmit CSI report to a base station. The base station (e.g., based on receiving the CSI report) may determine a scheduling strategy (e.g., determining a transmission beam, bandwidth, MCS, antenna ports, layers, ranks, etc.) for the wireless device. Network energy saving may be of great importance for environmental sustainability, to reduce environmental impact (e.g., caused by greenhouse gas emissions), and/or for operational cost savings. It may be required to handle more advanced services and applications that demand very high data rates (e.g., XR), for example as 5G, 6G, and other wireless communication technology becomes more widespread across different industries and/or geographical areas. Networks may become denser, using more antennas, larger bandwidths and more frequency bands. There may be a need to control the environmental impact of 5G, and/or to develop novel solutions to improve network energy efficiency.

A base station may instruct/indicate a wireless device to perform power saving operations, for example, if the wireless device does not have data traffic to transmit/receive. The power saving operations may comprise SCell dormancy, DRX configuration with or without wakeup indication, SSG switching, PDCCH skipping, and/or any other power saving operation. The power saving operations may be, for example, as described with respect to FIG. 28, FIG. 29A, FIG. 29B, FIG. 30A, FIG. 30B and/or FIG. 31. The base station may still need to send/transmit always-on and/or periodic signals for other wireless devices, if the wireless device performs the power saving operation. The always-on and/or periodic signals (e.g., for other wireless devices) may be for purpose, such as time and/or frequency synchronization, phase tracking, positioning, beam management, common control signaling, etc. The power saving operations implemented by a wireless device may not be applicable for the base station.

A base station may still send/transmit always-on signals, even if there is no active wireless devices in the coverage of the base station. The always-on signals (e.g., without active wireless devices in the coverage) may comprise MIB, SIB1, SSBs, periodical CSI-RSs, discovery RS, common control signaling, etc. The base station may send/transmit a RRC message, for example, if the base station is required to reduce the transmission power/bandwidth of the always-on DL signal transmission and/or reduce beams/antenna port of transmission of the always-on DL signal. The RRC message may comprise SIB1, cell-specific RRC message, UE-specific RRC message, etc. The RRC message may identify/indicate the reduction in transmission power/bandwidth and/or the reduction of beam quantity/number (e.g., by ssb-PositionsInBurst) for the always-on DL signal transmission. The reduction in transmission power/bandwidth and/or beams/antenna ports may be described with respect to FIG. 25 and/or FIG. 34.

SIB1 may be sent/transmitted via/with a fixed sending/transmission periodicity of 160ms (or any other period). The SIB1 transmission may comprise a repetition within 160ms (or any other period). The contents of SIB transmission may be substantially the same among the repetition transmissions within 160ms period (or any other period). The base station may send/transmit a second SIB1, at least 160ms (or any other period) after sending/transmitting a first SIB1. The second SIB1 may identify/indicate a change (e.g., in the SSB transmission power, SSB transmission periodicity and/or SSB locations in a SSB burst).

A base station may determine/configure (e.g., by RRC messages) a plurality of NZP-CSI-RS resource sets for a wireless device. In an example, , A maximum of NZP-CSI-RS resource sets (e.g., maxNrofNZP-CSI-RS-ResourceSetsPerConfig) may be configured for aperiodic resource type. The maxNrofNZP-CSI-RS-ResourceSetsPerConfig may be 16 (or any other quantity of NZP-CSI-RS resource sets). Only one NZP-CSI-RS resource set may be configured for periodic resource type. A maximum of NZP-CSI-RS resources (e.g., maxNrofNZP-CSI-RS-ResourcesPerSet) may be configured for each CSI-RS resource set. The maxNrofNZP-CSI-RS-ResourcesPerSet may be 64 (or any other quantity of NZP-CSI-RS resources).

There may be a limit to the quantity/number of NZP-CSI-RS resources (e.g., for CSI report) that may be configured for an NZP-CSI-RS resource set. The limit may be 8 NZP-CSI-RS resources (or any other quantity of resources). An NZP-CSI-RS resource (e.g., for periodic CSI-RS type) may be configured with a sending/transmission periodicity. The periodicity may comprise a value, such as 4 slots, 5 slots, 8 slots, 10 slots, 16 slots, 20 slots, 32 slots, 40 slots, 64 slots, 80 slots, 160 slots, 320 slots, 640 slots and etc. An NZP-CSI-RS resource may be sent/transmitted via a number of RBs (or PRBs) within an active BWP of a cell. For example, the density may be at most 3 REs/RB (or any other quantity), if a CSI-RS resource is 1 port. A CSI-RS resource may be mapped to a plurality of RBs (e.g., multiples of 4 (or any other quantity)) comprised in a cell. The smallest configurable quantity/number may be the minimum of 24 (or any other quantity) and the width of the associated BWP. The wireless device may assume that the actual CSI-RS bandwidth is equal to the width of the BWP, if the configured value is larger than the width of the corresponding BWP.

A base station may send/transmit periodic NZP-CSI-RS resources continuously according to the configuration parameters of the periodic NZP-CSI-RS resources in the BWP/cell, if the periodic NZP-CSI-RS resources (and resource set(s)) are configured in a BWP (e.g., of a cell). For example, the configuration parameters may configure transmission of the periodic NZP-CSI-RS resources, comprising a transmission density, a transmission periodicity, a number of CSI-RS resources, a transmission bandwidth, a number of antenna ports, and/or etc. A base station may send/transmit periodic NZP-CSI-RS resources continuously (e.g., even if there are few or no active wireless device in the cell), unlike aperiodic NZP-CSI-RS resources (e.g., triggered by DCI and sent/transmitted one-shot by the base station) or semi-persistent CSI-RS resources (e.g., activated by a first SP-CSI-RS resource set Activation/Deactivation MAC CE and sent/transmitted by the base station until deactivated by second SP-CSI-RS resource set Activation/Deactivation MAC CE). The periodic NZP-CSI-RSs may be sent/transmitted as described with respect to FIG. 35, FIG. 36, FIG. 37A, FIG. 37B, FIG. 38, FIG. 39, FIG. 40, and/or FIG. 41. Different NZP-CSI-RSs may be sent/transmitted via/with different transmission beams.

A base station may send/transmit a new RRC message (e.g., SIB1, cell-specific RRC message, UE-specific RRC message, etc.) to reduce power consumption of an active BWP/cell for the base station if there is little or no traffic in the BWP/cell. The RRC message may comprise/indicate a reconfiguration of parameters of the BWP/cell (e.g., to release the NZP-CSI resources, reduce sending/transmission density and/or quantity/number of antenna ports, reduce quantity/number of resources, reduce transmission bandwidth, reduce transmission periodicity, etc.). The sending/transmitting RRC message to adjust/change CSI-RS sending/transmission parameters may not be efficient, especially considering the dynamic and fast-changing traffic patterns (e.g., in scale of symbols/slots) of different wireless devices in 5G system and/or future system. A wireless device may require 10ms~20ms (or any other amount of time) to process a RRC message depending on the contents of the RRC message. This delay may be long relative to the dynamic and fast-changing traffic patterns of wireless devices and may cause the contents of the RRC message (e.g., for adjusting CSI-RS transmission parameters) to be not aligned and/or outdated with respect to the traffic and/or network conditions of the wireless device.

A bases station may send/transmit DCI indicating an energy saving for the base station. The sending/transmitting new configuration parameters (e.g., time, frequency and/or spatial domain) for the periodic NZP-CSI-RS resources (e.g., comprised/indicated in the DCI) may increase payload of the DCI, which may reduce reliability of reception of the DCI at wireless devices. As described herein, a base station may dynamically reduce power consumption for sending/transmission of periodic CSI-RSs, for example, if the base station dynamically reduces a bandwidth of an active BWP/cell (e.g., due to no or light load in coverage of a cell of the base station). As also described herein, a base station may efficiently communicate/indicate parameters changes of periodic CSI-RSs, for example, if the base station dynamically reduces the bandwidth of an active BWP/cell.

A base station may send/transmit parameters identifying/indicating the starting PRB of first PRBs (e.g., for periodic RSs) within a BWP comprising second PRBs. The base station may send/transmit the periodic RSs via/using the first PRBs in the BWP. The base station may send/transmit a DCI comprising/indicating a bandwidth change, of the BWP, from the second PRBs to third PRBs. The base station may send/transmit (e.g., based on the DCI) the periodic RSs via/using at least one PRB of the first PRBs, comprising the starting PRB, based on/in response to the starting PRB being within the third PRBs.

A base station may send/transmit parameters identifying/indicating the starting PRB of first PRBs (e.g., for periodic RSs) within a BWP comprising second PRBs. The base station may send/transmit the periodic RSs via/using the first PRBs in the BWP. The base station may send/transmit a DCI comprising/indicating a bandwidth change, of the BWP, from the second PRBs to third PRBs. The base station may send/transmit (e.g., based on the DCI) the periodic RSs via/using at least one PRB of the first PRBs, comprising the starting PRB, based on/in response to the starting PRB being within the third PRBs and the at least one PRB being within the third PRBs.

A base station may send/transmit messages comprising parameters identifying/indicating the starting PRB of first PRBs (e.g., for periodic RSs) within a BWP comprising second PRBs. The base station may send/transmit the periodic RSs via/using the first PRBs in the BWP. The base station may send/transmit a DCI comprising/indicating a bandwidth change, of the BWP, from the second PRBs to third PRBs. The base station may send/transmit (e.g., based on the DCI) the periodic RSs via/using at least one PRB being selected from the first PRBs and being within the third PRBs.

A base station may send/transmit parameters identifying/indicating the starting PRB of first PRBs (e.g., for periodic RSs) within a BWP comprising second PRBs. The base station may send/transmit the periodic RSs via/using the first PRBs in the BWP. The base station may send/transmit a DCI comprising/indicating a bandwidth change, of the BWP, from the second PRBs to third PRBs. The base station may stop (e.g., based on the DCI) sending/transmitting the periodic RS, based on/in response to the starting PRB being out of the third PRBs.

A base station may send/transmit parameters identifying/indicating the starting PRB of first PRBs (e.g., for periodic RSs) within a BWP comprising second PRBs. The base station may send/transmit the periodic RSs via/using the first PRBs in the BWP. The base station may send/transmit a DCI comprising/indicating a bandwidth change, of the BWP, from the second PRBs to third PRBs. The base station may determine whether to continue the sending/transmission of the periodic RSs based on whether the first PRBs are within the third PRBs. The base station may continue sending/transmitting the periodic RSs based on the first PRBs being within the third PRBs. The base station may stop sending/transmitting the periodic RSs based on the first PRBs being out of the third PRBs.

A wireless device may receive from a base station parameters identifying/indicating the starting PRB of first PRBs (e.g., for periodic RSs) within a BWP comprising second PRBs. The wireless device may receive the periodic RSs via/using the first PRBs in the BWP. The wireless device may receive a DCI comprising/indicating a bandwidth change, of the BWP, from the second PRBs to third PRBs. The wireless device may receive (e.g., based on the DCI) the periodic RSs via/using at least one PRB of the first PRBs, comprising the starting PRB, based on/in response to the starting PRB being within the third PRBs and the at least one PRB being within the third PRBs.

FIG. 42 shows an example CSI-RS configuration for energy saving. A base station (e.g., base station 4205) may send/transmit one or more RRC messages (e.g., step 4215). A wireless device (e.g., wireless device 4210) may receive the one or more RRC messages. The one or more RRC messages may comprise/indicate configuration parameter(s) of a plurality of periodic CSI-RS (P-CSI-RS) resources on a BWP of a cell. The configuration parameters may identify/indicate a first plurality/number/quantity of PRBs (or RBs) within the BWP (e.g., for the plurality of P-CSI-RS resources (or SSBs)). The configuration parameters may identify/indicate the starting PRB of the first plurality/number/quantity of PRBs. The starting PRB (e.g., of the first plurality/number/quantity of PRBs) may be identified/indicated using/by a starting PRB indication (e.g., startingRB IE) and an indication (e.g., nrofRBs IE) for the first plurality/number/quantity of PRBs, as described with respect to FIG. 36. For example, the first plurality/number/quantity of PRBs may be a multiple of 4 (or any other quantity). A P-CSI-RS may be an NZP-CSI-RS, for example, which is a periodic CSI-RS sent/transmitted using/with a non-zero power. The one or more RRC messages may be cell specific and/or wireless device specific, for example, as described with respect to FIG. 35, FIG. 36, FIG. 37A, FIG. 37B, FIG. 38, FIG. 39, FIG. 40, and/or FIG. 41. The configuration parameters may identify/indicate a first plurality/number/quantity of P-CSI-RS resources in a CSI-RS resource set. The CSI-RS resource set may comprise the first plurality/number/quantity of P-CSI-RS resources, for example, as described with respect to FIG. 38. The configuration parameters may comprise/indicate the first sending/transmission density and/or the sending/transmission periodicity for each P-CSI-RS resource of the first plurality /number of P-CSI-RS resources in the CSI-RS resource set. The configuration parameters may identify/indicate a plurality/number/quantity of CSI-RS resource sets. Different CSI-RS resource sets may be used (e.g., for the wireless device) for measuring different CSI quantities (e.g., CQI, PMI, CRI, SSBRI, LI, RI, L1-RSRP, L1-SINR, and etc.). A base station may send/transmit the P-CSI-RSs in the first plurality/number/quantity of PRBs within the BWP (e.g., step 4220). The base station may send/transmit the P-CSI-RSs in the first plurality/number/quantity of PRBs within the BWP, based on the one or more RRC messages. The base station may send/transmit the P-CSI-RSs in the first plurality/number/quantity of PRBs within the BWP (e.g., as described with respect to FIG. 39).

As shown in FIG. 42, the wireless device may receive periodically sent/transmitted P-CSI-RSs (e.g., using/via the first plurality/number/quantity of PRBs in the BWP) configured in the one or more RRC messages (e.g., step 4225). For example, the wireless device may determine that the P-CSI-RSs are sent/transmitted in configured locations (e.g., in the time domain and frequency domain) comprising configurations (e.g. a periodicity, a quantity/number of beams, and/or a sending/transmission power).The wireless device may obtain (e.g., based on the determination on the sent/transmitted P-CSI-RSs) the first periodic CSI report and/or beam measurements, such as CSI/L1-RSRP/L1-SINR, etc. (e.g., step 4230). The wireless device may determine/measure the CSI/beam quantities, for example, as described with respect to FIG. 41. A wireless device may determine/measure CSI quantities (e.g., based on periodic sent/transmitted SSBs). The SSB may be implemented, for example, as described with respect to FIG. 32, FIG. 33 and/or FIG. 34.

A wireless device may obtain/transmit CSI report (e.g., based on measurements on SSBs and P-CSI-RSs according to configuration parameters of the CSI report). The configuration parameters of the CSI report may be, for example, as described with respect to FIG. 36 and/or FIG. 40. The CSI report (e.g., measured based on SSBs and P-CSI-RSs) may comprise a SSB index of a SSB (e.g., with the best RSRP value among RSRP values of SSBs), a CSI-R resource index of a P-CSI-RS (e.g., with the best RSRP value among RSRP values of the P-CSI-RSs), a RSRP value and/or a differential RSRP value.

A base station may send/transmit SSBs using/with wider beams than the P-CSI-RSs (e.g., in high frequency deployment). The base station may send/transmit SSBs using/with wider beams to achieve sufficient coverage for multiple wireless devices in a cell. The base station may send/transmit P-CSI-RSs using/with narrower beams to facilitate a specific wireless device to determine/identify a good beam pair between the wireless device and the base station (e.g., for actual data/control information transmissions).

As shown in FIG. 42, the wireless device may send/transmit the first periodic CSI report (e.g., step 4235), for example, based on the measured CSI report. The wireless device may send/transmit the first periodic CSI report using/via an uplink channel (e.g., PUCCH/PUSCH). The first periodic CSI report may comprise a plurality of CSI quantities (e.g., CQI, PMI, CRI, SSBRI, LI, RI, L1-RSRP, L1-SINR, and etc.). The CSI quantities (e.g., comprised in the first periodic CSI report) may be determined based on configuration parameters of the CSI report (e.g., as described with respect to FIG. 39). For example, the wireless device may send/transmit the first periodic CSI report using/via a PUCCH resource (e.g., configured for the periodic CSI report). The first periodic CSI report (e.g., measured using/via the first P-CSI-RSs and/or SSBs) may be referred to as the CSI report in a normal power state (or a non-energy-saving state). The first P-CSI-RSs (e.g., sent/transmitted by the base station) may be referred to as CSI-RSs in a normal power state.

A base station may determine to switch/transition from a normal power state (or a non-energy-saving state) to an energy saving state (e.g., for one or more cells). The base station may send/transmit the P-CSI-RSs using/via the first plurality/number/quantity of PRBs within the BWP, for example, if the base station is in the normal power state. The base station may send/transmit the P-CSI-RSs (via a cell) with a first sending/transmission periodicity, a first sending/transmission density, a first plurality/number/quantity of P-CSI-RSs (in a CSI-RS resource set), and/or a first plurality/number/quantity of CSI-RS resource sets, for example, in sending/transmission occasions (e.g., if the base station is in the normal power state).

A wireless device may provide the base station (e.g., to determine the switching/transitioning) wireless device assistance information, such as traffic pattern, data volume, latency requirement, etc. For example (not shown in FIG. 42), the wireless device may send/transmit the wireless device assistance information to the base station using a RRC message (e.g., a MAC CE and/or an UCI). The wireless device assistance information may comprise a data volume of (expected/predicted) data packets of the wireless device, a power state of the wireless device, a service type of the wireless device, etc. For example, the base station may determine the switching/transitioning. The base station may determine the transitioning based on uplink signal (e.g., SRS, PRACH, DM-RS, UCI, etc.) measurement/assessment/detection (e.g., at the base station). The base station may determine the switching/transitioning based on information exchanged with/from a neighbor base station using/via X2 interface. For example, the information exchanged may comprise an identification/indication of the switching/transitioning, traffic load information, etc.

As shown in FIG. 42, a base station may send/transmit (e.g., step 4240) DCI (or MAC CE). A wireless device may receive the DCI (or the MAC CE). The DCI (or the MAC CE) may comprise an energy saving identification/indication. The energy saving identification/indication may comprise/indicate bandwidth change of the BWP from the second plurality/number/quantity of PRBs to the third plurality/number/quantity of PRBs. The energy saving identification/indication may comprise/indicate a switch/transition from the non-energy-saving state to the energy saving state (e.g., for one or more cells). The DCI (or the MAC CE) may comprise/indicate a second sending/transmission periodicity, a second sending/transmission density, and/or a second sending/transmission bandwidth for transmission of the first plurality/number/quantity of P-CSI-RS resources (e.g., for the energy saving state). For example, the base station may send/transmit (e.g., using/via a search space and/or a control resource set of the cell) the DCI comprising an energy saving identification/indication. The energy saving identification/indication may identify/indicate a switch/transition from the non-energy-saving state (or mode/configuration) to the energy saving state (or mode/configuration).

The one or more RRC messages may comprise configuration parameters for the search space and/or the control resource set. The search space may be implemented as described with respect to FIG. 14A, FIG. 14B and/or FIG. 27. A control resource set may be implemented as described with respect to FIG. 14A, FIG. 14B and/or FIG. 26. The energy saving identification/indication may be indicated by (or comprised in) a MAC CE. The base station may send/transmit, for example, a MAC CE comprising an energy saving identification/indication. The wireless device may receive the MAC CE (e.g., sent/transmitted by the base station). A MAC CE (e.g., associated with a LCID identifying a specific usage of the MAC CE) may be implemented as described with respect to FIG. 17A, FIG. 17B, FIG. 17C, FIG. 18A, FIG. 18B, FIG. 19 and/or FIG. 20. The MAC CE (e.g., comprising the energy saving identification/indication) may be associated with a LCID value different from any of FIG. 19 and/or FIG. 20. The MAC CE (e.g., comprising the energy saving identification/indication) may comprise a flexible payload size with a MAC subheader, for example, as described with respect to FIG. 17A and/or FIG. 17B. The MAC CE comprising the energy saving identification /indication may comprise a fixed payload size with a MAC subheader, for example, as described with respect to FIG. 17C. A MAC CE (e.g., comprising the energy saving identification/indication) may reuse an existing MAC CE. For example, a R bit of SCell activation/deactivation MAC CE (as described with respect to FIG. 21A and/or FIG. 21B) may be used for energy saving identification/indication. The R bit may identify/indicate a power offset value for SSB sending/transmission (e.g., of a PCell, and/or all active SCells) in energy saving state.

The search space (e.g., for sending/transmission of the DCI comprising/indicating the energy saving) may be a type 0 common search space. The DCI comprising the energy saving identification/indication may share the same type 0 common search space with other DCIs (e.g., scheduling SIBx message). The base station may send/transmit the configuration parameter of the type 0 common search space in a MIB message and/or a SIB1 message. The base station may send/transmit the MIB message using/via a PBCH and/or indicating system information of the base station. The base station may send/transmit the SIB1 message (e.g., scheduled by a group common PDCCH with CRC scrambled by SI-RNTI) comprising/indicating at least one of: information for evaluating if a wireless device is allowed to access a cell of the base station, information for scheduling of other system information, radio resource configuration information that is common for all wireless devices, and barring information used/applied to access control.

The search space (e.g., for sending/transmission of the DCI identifying/indicating the energy saving) may be a type 2 (or 2A) common search space. The DCI (e.g., comprising the energy saving identification/indication) may share the same type 2 common search space with other DCIs (e.g., scheduling paging message) with CRC scrambled by P-RNTI. The DCI (e.g., comprising the energy saving identification/indication may share the same type 2A common search space with other DCIs (e.g., with DCI format 2_7 for paging early indication) with CRC scrambled by PEI-RNTI.

The search space (e.g., for sending/transmission of the DCI identifying/indicating the energy saving) may be a type 3 common search space. The DCI (e.g., comprising the energy saving identification/indication) may share the same type 3 common search space with a plurality of group common DCIs. The plurality of group common DCIs may comprise a DCI format 2_0 indicating slot format based on CRC bits scrambled by SFI-RNTI, a DCI format 2_1 indicating a downlink pre-emption based on CRC being scrambled by an INT-RNTI, a DCI format 2_4 indicating an uplink cancellation based on CRC being scrambled by a CI-RNTI, a DCI format 2_2/2_3 indicating uplink power control based on CRC bits being scrambled with TPC-PUSCH-RNTI, TPC-PUCCH-RNTI, or TPC-SRS-RNTI, a DCI format 2_6 indicating a power saving operation (wake-up/go-to-sleep and/or SCell dormancy) based on CRC bits being scrambled by PS-RNTI, and/or etc.

The search space (e.g., for sending/transmission of the DCI identifying/indicating the energy saving) may be a wireless device specific search space. The wireless device specific search space may be, for example, different from common search spaces (type 0/0A/1/2/2A/3). The DCI (e.g., indicating the energy saving may be a legacy DCI format. The legacy DCI format, for example, may be DCI format 1_0/1_1/1_2/0_0/0_1/0_2/2_0/2_1/2_2/2_3/2_4/2_5/2_6/2_7. The DCI may be a new DCI format. The new DCI format, for example, may comprise the same DCI size as DCI format 2_0/2_1/2_2/2_3/2_4/2_5/2_6/2_7. The DCI may be a new DCI format comprising/with the same DCI size as DCI format 1_0/0_0. The DCI may be a new DCI format comprising/with the same DCI size as DCI format 1_1/0_1.

The configuration parameters (e.g., of the one or more RRC messages) may indicate that a control resource set of a plurality of control resource sets is associated with the search space for the DCI (e.g., indicating the energy saving for the base station). The configuration parameters may comprise/indicate (e.g., for the control resource set), for example, frequency radio resources, time domain resources, CCE-to-REG mapping type, and/or etc. The wireless device may monitor the search space (e.g., of the control resource set). The search space of the control resource set may be monitored (e.g., by the wireless device) for receiving the DCI (e.g., comprising/indicating the energy saving for the base station). The base station may send/transmit the DCI (e.g., comprising the energy saving identification/indication for the base station). The DCI may be comprised in one or more radio resources associated with the search space (e.g., in the control resource set).

DCI (or a MAC CE) (e.g., identifying/indicating the energy saving operation for the base station) may comprise/indicate second configuration parameters (e.g., density, bandwidth, antenna ports, quantity/number of resources of the resource set, etc.) of the P-CSI-RS resources. The DCI may comprise a DCI format (e.g., as described with respect to FIG. 23) comprising a field for indicating to a bandwidth change of the active BWP. The field of the DCI with a DCI format may be configured (e.g., by the base station) to identify/indicate the bandwidth change for an active BWP. For example, the base station may send/transmit RRC messages comprising configuration parameters indicating that the DCI format comprises the field (e.g., indicating the bandwidth change for the active BWP).

The field comprised in the DCI may identify/indicate a second sending/transmission bandwidth for the P-CSI-RS resources. The second sending/transmission bandwidth may be narrower than the first sending/transmission bandwidth for a normal state (or non-energy-saving state). For example, the base station may configure the second sending/transmission bandwidth of the P-CSI-RS resources for the energy saving operation. the second sending/transmission bandwidth may be preconfigured without identification/indication by the MAC CE and/or DCI.

A base station may send/transmit the DCI to identify/indicate the switch/transition from the non-energy-saving state to the energy saving state. For example, the base station (e.g., if in an energy saving state) may implement changes (e.g., to reduce energy consumption compared with a non-energy-saving state) in the sending/transmission, such as reducing power, reducing bandwidth, reducing quantity of beams/ports, and/or increasing periodicity value of P-CSI-RSs (e.g., from 4ms to 20ms, from 20ms to 40ms, etc.). A sending/transmission periodicity of P-CSI-RSs may be implemented, for example, as described with respect to FIG. 36. For example, the base station (e.g., if in an energy saving state) may send/transmit P-CSI-RS resources with a smaller quantity/number of resources (or a smaller quantity/number of beams) than in a non-energy-saving state.

The base station (e.g., if in an energy saving state) may continue/keep receiving uplink transmissions from wireless device(s). The base station (e.g., if in the energy saving state) may comprise/maintain RRC connections (e.g., existing RRC connections) (or may not break RRC connections) with one or more wireless devices that have set up RRC connections with one or more cells of the base station. The base station (e.g., if in the energy saving state), for example, may comprise/maintain existing interface(s) with other network entities (e.g., another base station, an AMF, a UPF, and/or etc., as shown in FIG. 1B).

A switch/transition from the non-energy-saving state to the energy saving state may comprise/involve maintaining an active state of a BWP unchanged in the cell and reducing the bandwidth of the active BWP. The maintaining the active state of the BWP (e.g., for the energy saving state switch/transition) may enable/allow for quick switching (e.g., without having to switch the BWP) between the non-energy-saving state and the energy saving state. A BWP switching may be implemented, for example, as described with respect to FIG. 22.

The base station may determine a fourth plurality/number/quantity of PRBs (e.g., within the third plurality/number/quantity of PRBs) for the CSI-RS resource. The base station may determine a fourth plurality/number/quantity of PRBs (e.g., within the third plurality/number/quantity of PRBs) for the CSI-RS resource, for example, based on sending/transmitting the DCI indicating to reduce the bandwidth of the active BWP from a second plurality/number/quantity of PRBs to a third plurality/number/quantity of PRBs. For example, the base station may determine a fourth plurality/number/quantity of PRBs (e.g., within the third plurality/number/quantity ofPRBs) for the CSI-RS resource. The base station (and/or the wireless device) may determine the fourth plurality/number/quantity of PRBs. The wireless device may determine the fourth plurality/number of PRBs (e.g., step 4245). The fourth plurality/number/quantity of PRBs may be implemented, for example, that will be described later in FIG. 43, FIG. 44 and/or FIG. 45. A wireless device may receive the DCI indicating to reduce bandwidth of the active BWP (e.g., from the second plurality/number/quantity of PRBs to the third plurality/number/quantity of PRBs). The wireless device may stop monitoring (or measuring) beam/CSI quantities for CSI-RSs outside of the third plurality/number/quantity of PRBs on the BWP (e.g., based on the received DCI indicating the bandwidth reduction). The wireless device may monitor the CSI-RSs using/via the fourth plurality/number/quantity of PRBs (e.g., within the third plurality/number/quantity of PRBs) of the BWP.

As shown in FIG. 42, a base station may send/transmit the CSI-RSs in the fourth plurality/number/quantity of PRBs within the BWP (e.g., step 4250). For example, the base station may send/transmit the CSI-RSs with a second sending/transmission periodicity, a second sending/transmission density, and/or a second quantity/number of antenna ports. A wireless device may receive periodically sent/transmitted CSI-RSs (e.g., step 4255) The wireless device may receive the CSI-RSs, for example, in the fourth plurality/number/quantity of PRBs within the BWP. The wireless device may receive the CSI-RSs, for example, using the second periodicity and/or density of transmission and/or the second quantity/number of antenna ports. A wireless device may determine/obtain a second periodic CSI report (e.g., step 4260). Based on monitoring CSI-RSs received using/via the fourth plurality/number/quantity of PRBs (e.g., within the bandwidth-reduced BWP), for example, the wireless device may determine/obtain the second periodic CSI report. The wireless device may send/transmit the second periodic CSI report to the base station (e.g., step 4265). The wireless device may send/transmit the second periodic CSI report (e.g., if in the energy saving state), for example, determined/obtained based on the CSI-RSs received using/via the for the plurality/number/quantity of PRBs. The wireless device may skip sending/transmitting the second periodic CSI report to the base station. The wireless device may skip sending/transmitting the second periodic CSI report (e.g., if in the energy saving state), for example, determined/obtained based on the CSI-RSs received using/via the for the plurality/number/quantity of PRBs.

A base station may send/transmit a command (e.g., RRC/MAC CE/DCI). The command may be comprising/indicating whether the wireless device sends/transmits the second periodic CSI report to the base station (e.g., if in the energy saving state). The wireless device may send/transmit the second periodic CSI report to the base station, based on/in response to the command comprising/indicating that the wireless device is requested to send/transmit the second periodic CSI report in the energy saving state. The wireless device may skip sending/transmitting the second periodic CSI report to the base station, based on/in response to the command comprising/indicating that the wireless device is requested to skip sending/transmission the second periodic CSI report in the energy saving state. The base station may enable/allow control of the sending/transmitting of a periodic CSI report from a wireless device, for example, if the base station is in energy saving state.

FIG. 43 shows an example BWP for energy saving. The BWP (e.g., for energy saving) may be determined, for example, as described with respect to FIG. 42. A BWP may be configured (e.g., as described with respect to FIG. 42) with a plurality of PRBs (e.g., comprising starting from RB 1 to RB N). RRC messages (e.g., as described with respect to FIG. 42) may comprise/indicate a plurality of PRBs (e.g., from RB 2 to RB N-2), for example, of the BWP to be used for CSI-RS sending/transmission. The RRC messages may comprise a starting PRB identification/indication (e.g., by startingRB IE) and/or a quantity/number (e.g., by nrofRBs IE) for the PRBs used for the CSI-RS sending/transmission within the BWP. As shown in FIG. 43, the starting PRB identification/indication may identify/indicate RB 2 as the starting PRB for CSI-RS sending/transmission.

The base station may reduce the bandwidth of the active BWP (e.g., from N RBs to K RBs) based on sending/transmitting a DCI comprising an energy saving identification/indication (e.g., by implementing as described with respect to FIG. 42). The base station (e.g., based on/in response to reducing the bandwidth of the active BWP) may determine to use RB 1 to RB K for sending/transmission (e.g., if in energy saving on the BWP). In this case, the reduced bandwidth of the active BWP may start from the same initial PRB (e.g., RB 1) as the active BWP in the non-energy-saving state. The base station (e.g., based on/in response to reducing the bandwidth of the active BWP) may determine a default bandwidth (e.g., 5MHz, or 24 PRBs) at which the base station may work on within the active BWP for the energy saving. The default bandwidth of the active BWP (e.g., used for the energy saving state), for example, may be RRC configured or preconfigured (without RRC indication).

The base station (e.g., based on/in response to reducing the bandwidth of the active BWP) may determine a reduced bandwidth based on the DCI (e.g., comprising/indicating a ratio between the original bandwidth of the BWP and a reduced bandwidth of the BWP). For example, the ratio may be set to 1/2, in which case the base station may use half of the original bandwidth of the BWP. The bases station may determine to use the lower half or the upper half of the frequency resources, for example, based on RRC configuration, MAC CE/DCI indication, and/or preconfigured/pre-defined. For example, the ratio may be set to 1/3, in which case the base station may use 1/3 of the original bandwidth of the BWP. The bases station may determine to use the lower 1/3, the middle 1/3, or the upper 1/3 of the frequency resources, for example, based on RRC configuration, MAC CE/DCI indication, and/or preconfigured/predefined.

The base station (e.g., based on/in response to reducing the bandwidth of the active BWP) may determine a reduced bandwidth based on the DCI (e.g., comprising/indicating a starting PRB and a new (or reduced compared with the original quantity/number N of PRBs) quantity/number for the reduced bandwidth). The DCI may comprise a DCI field identifying/indicating the starting PRB and the new quantity/number of PRBs for the reduced bandwidth of the active BWP. The DCI may not comprise a DCI field identifying/indicating the (new) bandwidth for the P-CSI-RSs within the reduced bandwidth of the active BWP (e.g., due to DCI payload size limitation). As shown in FIG. 43, the reduced bandwidth of the active BWP may comprise K RBs (e.g., from RB 1 to RB K). The base station (e.g., based on determining the reduced bandwidth), for example, may determine whether to send/transmit the P-CSI-RSs in the reduced bandwidth of the active BWP and/or may determine a (new) bandwidth for the P-CSI-RSs sending/transmission within the reduced bandwidth of the active BWP in the energy saving state.

The base station may configure a starting PRB (e.g., RB 2 as shown in FIG. 43) for the P-CSI-RSs being within the reduced bandwidth of the active BWP. The base station may determine whether the P-CSI-RSs are available in the reduced bandwidth of the active BWP. The wireless device) may determine whether the P-CSI-RSs are sent/transmitted in the reduced bandwidth of the active BWP. Maintaining (without change) the frequency location of the starting PRB for the CSI-RS sending/transmission in the reduced bandwidth of the active BWP (e.g., in the energy saving state) may simplify implementation of the wireless device and/or the base station. Otherwise, the base station may need to send/transmit indication to indicate a new starting PRB for the CSI-RS sending/transmission in the reduced bandwidth of the active BWP. The indication (e.g., of the new starting PRB for the CSI-RS sending/transmission in the reduced bandwidth of the active BWP) may cause additional signaling overhead. The base station may configure a starting PRB for the P-CSI-RSs not being within (or being outside of) the reduce bandwidth of the active BWP. For example, the base station may determine the P-CSI-RSs are unavailable in the reduced bandwidth of the active BWP. The wireless device) may determine the P-CSI-RSs are not sent/transmitted in the reduced bandwidth of the active BWP.

The base station may configure the last PRB (e.g., PRB N-2 as shown in FIG. 43) for the P-CSI-RSs being outside of the reduced bandwidth of the active BWP. For example, the base station (and/or the wireless device) may determine that the actual bandwidth of the P-CSI-RS is not greater than the reduced bandwidth of the active BWP. As shown in FIG. 43, the reduced bandwidth of the active BWP may comprise RB 1, RB 2, ...., RB K, from the configured bandwidth comprising RB 1, RB 2..., RB K..., RB N. The original bandwidth of P-CSI-RS may comprise RB 2, RB 3, ..., RB N-2.For example, the base station may determine not to send/transmit CSI-RSs via RBs (e.g., RB K+1, RB K+2, ..., RB N-2) outside of the reduced bandwidth (e.g., comprising RB 1~ RB K) of the active BWP, based on/in response to N-2 is greater than K. The base station may determine to send/transmit the CSI-RSs to RBs (e.g., RB 2, ..., RB K) within the reduced bandwidth of the active BWP.

A wireless device may align with the base station regarding where the (new) P-CSI-RSs are (actually) sent/transmitted by the base station within an active BWP with reduced bandwidth indicated by a DCI. The wireless device may determine that the P-CSI-RSs are actually sent/transmitted, for example, based on/in response to the (RRC configured) starting PRB of the P-CSI-RSs is within the reduced bandwidth of the active BWP. The wireless device may determine that the P-CSI-RSs are not sent/transmitted (or are unavailable) on the active BWP in the energy saving state, for example, based on/in response to the (RRC configured) starting PRB of the P-CSI-RSs being outside of the reduced bandwidth of the active BWP.

The RRC-configured bandwidth of the P-CSI-RSs may be greater than the reduced bandwidth of the active BWP (wherein the RRC-configured bandwidth of the P-CSI-RSs is not greater than RRC-configured bandwidth of the active BWP). The wireless device may determine that the P-CSI-RSs are not sent/transmitted via PRBs outside of the reduced bandwidth of the active BWP, for example, based on/in response to the RRC-configured bandwidth of the P-CSI-RSs may be greater than the reduced bandwidth of the active BWP. The wireless device may determine that the actual bandwidth of P-CSI-RSs (e.g., in the energy saving state), for example, may be not greater than the reduced bandwidth of the active BWP (e.g., if in the energy saving state).

A wireless device may determine that the P-CSI-RSs are actually sent/transmitted (e.g., based on the determined frequency locations within the reduced bandwidth of the active BWP). The wireless device may determine/obtain CSI report based on the P-CSI-RSs and/or send/transmit the CSI report to the base station. The determination of the sent/transmitted P-CSI-RSs may reduce signaling overhead, and/or may enable the wireless device and the base station to align on the sending/transmission bandwidth (and/or frequency location) of the P-CSI-RSs in the energy saving state. For example, the alignment of the wireless device and the base station may increase CSI report measurement accuracy of a wireless device, if the base station dynamically reduces bandwidth of an active BWP for energy saving.

FIG. 44 shows an example method of CSI reporting for energy saving. In step 4420, a wireless device (e.g., the wireless device 4205) may receive, from a base station (the base station 4210), one or more RRC messages. The one or more RRC messages may comprise parameters identifying/indicating a starting RB (or PRB) of a first plurality/number/quantity of RBs for CSI-RSs in a BWP. The one or more RRC messages may be implemented, for example, as described with respect to FIG. 42 and/or FIG. 43. The wireless device may activate the BWP as an active BWP of a cell. The wireless device may activate the BWP, for example, as described with respect to FIG. 22.

In step 4430, the wireless device may measure the CSI-RSs. The wireless device may measure the CSI-RSs, for example, based on activation of the BWP and the configuration parameters of CSI-RSs on the BWP. The wireless device may measure the CSI-RSs via the first plurality/number/quantity of RBs in the BWP (e.g., for CSI reporting, time-frequency tracking, beam management, etc.). For example, the first plurality/number/quantity of RBs may be multiples of 4 (or any other quantity/number). The wireless device may perform CSI reporting based on the CSI-RSs (and/or SSBs). The wireless device may perform CSI reporting by implementing, for example, as described with respect to FIG. 40 and/or FIG. 41. The wireless device may perform beam management based on the CSI-RSs (and/or SSBs). The wireless device may perform beam management, for example, by implementing as described with respect to FIG. 12A and/or FIG. 12B. A CSI-RS, for example, may be used for time/frequency tracking, if the CSI-RS is configured with trs-Info IE (e.g., set to true as described in FIG. 36).For example, a CSI-RS (e.g., used for time-frequency tracking) may be referred to as a tracking RS (or TRS) (e.g., as described herein with respect to FIG. 49).

In step 4440, the wireless device may receive a DCI (and/or a MAC CE). The DCI (and/or the MAC CE) may be identifying/indicating to reduce the bandwidth of the active BWP. The DCI (and/or the MAC CE) may identify/indicate a switch/transition from a non-energy-saving state to an energy saving state for the base station. The DCI (and/or the MAC CE) may be implemented, for example, as described with respect to FIG. 42. The wireless device may determine the reduced bandwidth of the active BWP based on the DCI, for example, by implementing as described with respect to FIG. 42 and/or FIG. 43. In step 4450, the wireless device may determine whether the reduced bandwidth of the active BWP comprises the (configured) starting RB of mapping CSI-RSs. The starting RB (e.g., of the first plurality/number/quantity of RBs) may be configured in the one or more RRC messages, for example, as described with respect to FIG. 36.

In step 4460, the wireless device may determine a second plurality/number/quantity of RBs, based on/in response to the reduced bandwidth of the active BWP comprise the starting RB. The second plurality/number/quantity of RBs may be comprised within the reduced bandwidth of the active BWP (e.g., for CSI-RS sending/transmission in the energy saving state). The second plurality/number/quantity of RBs may starts from the same starting RB of the first plurality/number/quantity of RBs. The second plurality/number/quantity of RBs may comprise a subset RBs of the first plurality/number/quantity of RBs. For example, the subset RBs may be comprised/located within the reduced bandwidth of the active BWP. For example, a total quantity/number of the subset RBs may be multiples of 4 (or any other quantity/number). Based on the determined second plurality/number/quantity of RBs for the CSI sending/transmission in the reduced bandwidth of the active BWP, the wireless device may measure the CSI-RSs (e.g., in step 4470). In step 4480, the measurement of the CSI-RSs may be configured for CSI reporting, beam management and/or tracking, etc. For example, the CSI report (e.g., based on the measurement of the CSI-RSs in the BWP) may be sent/transmit to the base station. The wireless device may skip measuring the CSI-RSs in one or more RBs, located outside of the reduced bandwidth of the active BWP, of the first number of RBs. The wireless device may determine that CSI-RSs are unavailable in the reduced bandwidth of the active BWP in the energy saving state, based on/in response to the reduced bandwidth of the active BWP is not comprising the (configured) starting RB (e.g., no in step 4450). The wireless device (e.g., based on the determining) may stop measuring CSI-RSs in the active BWP in the energy saving state (e.g., in step 4490).

For example, a wireless device and/or a base station may determine the frequency resources of P-CSI-RSs in an active BWP. A wireless device and/or a base station may determine the frequency resources ofP-CSI-RSs in an active BWP with alignment, for example, (e.g., without explicit indication of frequency resources of the P-CSI-RSs in DCI and/or MAC CE). The determination (e.g., with the alignment) may be made even if the bandwidth of the active BWP is dynamically reduced for energy saving. The determination may be implemented, for example, as described with respect to FIG. 42, FIG. 43 and/or FIG. 44. The implementation of CSI measurement of a wireless device may be simplified than as described with respect to FIG. 43 and/or FIG. 44. For example, the wireless device and/or the base station may determine that the second plurality/number/quantity of RBs (e.g., used for CSI-RS sending/transmission in a reduced bandwidth of an active BWP) is a subset of the first number of RBs which are configured for the CSI-RS sending/transmission in the configured bandwidth of the active BWP.

FIG. 45 shows an example BWP for energy saving. The BWP may be configured for CSI-RS sending/transmission in energy saving state, for example, as described with respect to FIG. 42. A BWP may be configured (e.g., as described with respect to FIG. 42) with a plurality of PRBs (e.g., comprising starting from RB 1 to RB N. The RRC messages (e.g., as described with respect to FIG. 42) may comprise/indicate a plurality of PRBs (e.g., from RB 2 to RB N-2), for example, of the BWP to be used for CSI-RS sending/transmission. The RRC messages may comprise a starting PRB identification indication (e.g., by startingRB IE) and/or a quantity/number (e.g., by nrofRBs IE) for the PRBs used for the CSI-RS sending/transmission within the BWP. As shown in FIG. 45, the starting PRB identification/indication may identify/indicate RB 2 as the starting PRB for CSI-RS sending/transmission within the BWP. A base station may reduce the bandwidth of the active BWP (e.g., from N RBs to K-2 RBs) based on sending/transmitting a DCI comprising an energy saving identification/indication (e.g., by implementing as described with respect to FIG. 42).

The base station (e.g., based on/in response to reducing the bandwidth of the active BWP) may determine to use RB 3 to RB K for sending/transmission (e.g., if in energy saving on the BWP). The base station may determine to use RB 3 to RB K for sending/transmission, for example, as described with respect to FIG. 42. In this case, the reduced bandwidth of the active BWP may start from the initial PRB (e.g., RB 3) different from the initial PRB (e.g., RB 1) of the active BWP in the non-energy-saving state. As shown in FIG. 45, the reduced bandwidth may comprise K-2 RBs (e.g., from RB 3 to RB K) of the active BWP. The base station (e.g., based on determining the reduced bandwidth), for example, may determine whether to send/transmit the P-CSI-RSs in the reduced bandwidth of the active BWP and/or may determine a (new) bandwidth for the P-CSI-RSs sending/transmission within the reduced bandwidth of the active BWP in the energy saving state.

A base station may configure a starting PRB (e.g., RB 2 as shown in FIG. 45) for the P-CSI-RSs being outside of the reduced bandwidth of the active BWP. The base station (and/or the wireless device) may determine whether the P-CSI-RSs (e.g., sent/transmitted in the energy saving state) starts from the first PRB (e.g., RB 3 as shown in FIG. 45) of the reduced bandwidth of the active BWP. For example, the P-CSI-RSs may start from the first PRB of the reduced bandwidth of the active BWP. The base station dynamically adjust the bandwidth of the active BWP. The wireless device may align to the base station regarding the availability of the CSI-RSs in the active BWP, if the configured starting PRB is out of the reduced bandwidth of the active BWP. Otherwise, the wireless device may assume (e.g., based on the configured starting PRB for the CSI-RSs) that the CSI-RSs are still available in the configured starting PRB. The assumption (e.g., by the wireless device) may result in incorrectly CSI measurements.

The configured last PRB (e.g., PRB N-2 as shown in FIG. 45) for the P-CSI-RSs may be outside of the reduced bandwidth of the active BWP. The base station (and/or the wireless device) may determine that the actual bandwidth of the P-CSI-RS is not greater than the reduced bandwidth of the active BWP based on the configured last PRB being outside of the reduced bandwidth of the active BWP. As shown in FIG. 45, the reduced bandwidth of the active BWP may comprise RB 3, ...., and RB K. The configured bandwidth may comprise RB 1, RB 2..., RB K..., and RB N. The original bandwidth of P-CSI-RS may comprise RB 2, RB 3, ..., and RB N-2. For example, the base station may determine not to send/transmit CSI-RSs using/via RBs (e.g., RB K + 1, RB K+2, ..., and RB N-2) outside of the reduced bandwidth (e.g., comprising RB 3 to RB K), if RB N-2 is greater than RB K. The base station may determine to send/transmit the CSI-RSs using/via RBs (e.g., RB 3, ..., and RB K) within the reduced bandwidth of the active BWP (e.g., comprising RB 3 to RB K).

A base station and/or a wireless device may determine that the CSI-RSs are actually sent/transmitted (or available) in the overlapped RBs (e.g., between a reduced bandwidth of the active BWP and a configured bandwidth of CSI-RSs), if the reduced bandwidth of the active BWP overlaps with the configured bandwidth of CSI-RS transmission in the active BWP. As shown in FIG. 45, the overlapped RBs may comprise RB 3, RB 4... and RB K. The wireless device may send/transmit CSI report and/or perform time/frequency tracking based on the CSI-RSs sent/transmitted using/via the overlapped RBs within the reduced bandwidth of the active BWP.

A base station and a wireless device may align CSI-RS transmissions in energy saving, for example, as described with respect to FIG. 42, FIG. 43, FIG. 44 and/or FIG. 45. For example, a base station and a wireless device may align CSI-RS transmissions in energy saving state, if the base station reduces sending/transmission bandwidth of an active BWP in the energy saving state. Aligning the CSI-RS transmissions in the energy saving state may improve channel measurement qualities for the energy saving. A base station may indicate (e.g., in RRC messages) whether time restriction for channel (and/or interference) measurement is enabled or disabled. The base station may indicate that time restriction is enabled, for example, if the base station determines to obtain (short-timer or instant) channel/interference measurement. The base station may indicate that time restriction is disabled, for example, if the base station determines to obtain (long-term averaged) channel/interference measurements.

A wireless device may derive the channel measurements for computing L1-RSRP value reported in uplink slot n, if the higher layer parameter (e.g., timeRestrictionForChannelMeasurements) in CSI-ReportConfig is set to notConfigured (or time restriction is disabled for channel measurement). The channel measurements may be derived by the wireless device based on the SS/PBCH or NZP CSI-RS (e.g., no later than the CSI reference resource), for example, associated with the CSI resource setting. A wireless device may derive the channel measurements for computing L1-RSRP reported in uplink slot n, if the higher layer parameter (e.g., timeRestrictionForChannelMeasurements) in CSI-ReportConfig is set to Configured (or time restriction is enabled for channel measurement). The channel measurements may be derived by the wireless device based on the most recent (e.g., no later than the CSI reference resource), for example, occasion of SS/PBCH or NZP CSI-RS associated with the CSI resource setting.

A CSI reference resource for a serving cell (or an active BWP) may be determined/defined (e.g., in the frequency domain) as a group of downlink PRBs corresponding to the band to which the determined/derived CSI relates. A CSI reference resource for a serving cell (or an active BWP) may be defined (e.g., in time domain) for a CSI reporting in uplink slot n, as a single downlink slot $n - n_{CSI_ref} - K_{offset} \cdot \frac{2^{\mu_{DL}}}{2^{\mu_{K_{offset}}}}$, where $K_{offset}$ is a parameter configured by higher layer (e.g., based on specification of 3GPP TS 38.213), and where $\mu_{K_{offset}}$ is the subcarrier spacing configuration for $K_{offset}$ with a value of 0 for frequency range 1. For example, $n = \left\lfloor n' \cdot \frac{2^{\mu_{DL}}}{2^{\mu_{UL}}} \right\rfloor + \left\lfloor \left( \frac{N_{slot,offset,UL}^{CA}}{2^{\mu_{offset,UL}}} - \frac{N_{slot,offset,DL}^{CA}}{2^{\mu_{offset,DL}}} \right) \cdot 2^{\mu_{DL}} \right\rfloor$, where $\mu_{DL}$ and $\mu_{UL}$ are the subcarrier spacing configurations for DL and UL, respectively, and $N_{slot,\ offset}^{CA}$ and $\mu_{offset}$ are determined by higher-layer configured (e.g., ca-SlotOffset) for the cells sending/transmitting the uplink and downlink, respectively. A value $n_{CSI_ref}$(e.g., for periodic and/or semi-persistent CSI reporting) may be the smallest value greater than or equal to $4 \cdot 2^{\mu_{DL}}$ (e.g., it corresponds to a valid downlink slot), if a single CSI-RS/SSB resource is configured for channel measurement . $n_{CSI_ref}$ (e.g., for periodic and/or semi-persistent CSI reporting) may be the smallest value greater than or equal to $5 \cdot 2^{\mu_{DL}}$ (e.g., it corresponds to a valid downlink slot, if multiple CSI-RS/SSB resources are configured for channel measurement.

A slot in a serving cell may be considered to be a valid downlink slot, if it comprises at least one higher layer configured downlink or flexible symbol and it does not fall within a configured measurement gap for the wireless device. For example, CSI reporting may be omitted for the serving cell in uplink slot n, if there is no valid downlink slot for the CSI reference resource corresponding to a CSI Report Setting in a serving cell. A wireless device may send a CSI report after the CSI report (re)configuration, serving cell activation, BWP change, and/or activation of SP-CSI. The wireless device may send a CSI report, if the wireless device receive at least one CSI-RS sending/transmission occasion for channel measurement and/or CSI-RS and/or CSI-IM occasion for interference measurement (e.g., no later than CSI reference resource. Otherwise, the wireless device may drop the report.

A wireless device may send a CSI report (e.g., if DRX is configured). The wireless device may only the CSI report (e.g., if the wireless device receives at least one CSI-RS sending/transmission occasion for channel measurement and/or CSI-RS and/or CSI-IM occasion for interference measurement within DRX active time). The CSI report may be sent (e.g., if the sending/transmission occasion is received no later than CSI reference resource). Otherwise, the wireless device may drop the CSI report. The wireless device may send a CSI report (e.g., if DRX is configured and the CSI-RS resource set for channel measurement corresponding to the CSI report is configured with two resource groups and N resource pairs). For example, the wireless device may send a CSI report (e.g., only if the wireless device receive at least one CSI-RS sending/transmission occasion for each CSI-RS resource in a resource pair within the same DRX active time). The CSI report may be sent, for example, if the sending/transmission occasion is received (e.g., no later than CSI reference resource). Otherwise, the wireless device may drop the report.

A wireless device may send a CSI report, if the wireless device is configured to monitor DCI format 2_6 and/or if the wireless device configured by higher layer parameter (e.g., ps-TransmitOtherPeriodicCSI) to report CSI with the higher layer parameter (e.g., reportConfigType set to periodic and reportQuantity set to quantities other than cri-RSRP, ssb-Index-RSRP, cri-RSRP-Capability[Set]Index, and ssb-Index-RSRP-Capability[Set]Index). For example, the wireless device may report CSI during the time duration indicated by drx-onDurationTimer in DRX-Config outside active time (e.g., if drx-onDurationTimer is not started). The wireless device may send a CSI report, for example, if the wireless device receives at least one CSI-RS sending/transmission occasion for channel measurement and/or CSI-RS and/or CSI-IM occasion for interference measurement during the time duration indicated by drx-onDurationTimer in DRX-Config either outside DRX active time or in DRX active time (e.g., no later than CSI reference resource). Otherwise, the wireless device may drop the CSI report. For example, the wireless device may report L1-RSRP, if the wireless device is configured to monitor DCI format 2_6 and/or if the wireless device configured by higher layer parameter (e.g., ps-TransmitPeriodicL1-RSRP) to report L1-RSRP with the higher layer parameter (e.g., reportConfigType set to periodic and reportQuantity set to cri-RSRP, ssb-Index-RSRP, cri-RSRP-CapabilityIndex, or ssb-Index-RSRP-CapabilityIndex). The wireless device may report L1-RSRP during the time duration indicated by drx-onDurationTimer in DRX-Config outside active time (e.g., if drx-onDurationTimer is not started). The L1-RSRP may be sent, for example (e.g.,, if reportQuantity set to cri-RSRP or cri-RSRP-Capability[Set]Index). The L1-RSRP may be sent, for example, if the wireless device receives at least one CSI-RS sending/transmission occasion for channel measurement during the time duration indicated by drx-onDurationTimer in DRX-Config, either outside DRX active time or in DRX active time (e.g., no later than CSI reference resource). Otherwise, the wireless device may drop the L1-RSRP report.

FIG. 46A and FIG. 46B show examples of CSI reporting based on time restriction. FIG. 46A shows an example of CSI reporting based on time restriction being set to notConfigured. For example, a base station may send/transmit to a wireless device 4605 RRC messages. The RRC messages (e.g., sent/transmitted by the base station) may comprise configuration parameters of a CSI report. The configuration parameters (e.g., comprised in the RRC messages) may be implemented, for example, as described with respect to FIG. 40 and/or FIG. 41. The configuration parameters may comprise/indicate timeRestrictionForChannelMeasurements being set to notConfigured.

A wireless device 4605 may determine a CSI reference resource (and/or a slot associated with the CSI reference resource) for a CSI report in slot n. The wireless device 4605 may determine the CSI reference resource is located in slot m. The gap between slot m and slot n may be determined, for example, as described herein. CSI reports in different slots may comprise different CSI reference resources in different slots. The wireless device 4605 may derive the channel measurements for computing CSI quantities (e.g., L1-RSRP value) for the CSI report in slot n based on the higher layer parameter (e.g., timeRestrictionForChannelMeasurements) in CSI-ReportConfig being set to notConfigured (or time restriction is disabled for channel measurement). For example, the wireless device 4605 may derive the channel measurements for computing CSI quantities (e.g., L1-RSRP value) for the CSI report in slot n based on CSI-RSs (e.g., NZP-CSI-RSs) and/or SSBs (e.g., no later than slot m wherein the CSI reference resource is determined) associated with the CSI resource setting for the CSI report. As shown in FIG. 46A, the wireless device 4605 may determine/obtain a CSI report based on channel measurement. The channel measurement may be averaging over RSs received in slots, such as slot m, slot m-k, slot m-2k..., etc. wherein k is the sending/transmission periodicity of the RSs configured in the RRC messages.

FIG. 46B shows an example of CSI reporting based on time restriction being set to Configured. For example, a base station may send/transmit to a wireless device 4610 RRC messages. The RRC messages (e.g., sent/transmitted by the base station) may comprise configuration parameters of a CSI report. The configuration parameters (e.g., comprised in the RRC messages) may be implemented, for example, as described with respect to FIG. 40 and/or FIG. 41. The configuration parameters may comprise/indicate timeRestrictionForChannelMeasurements being set to Configured. The wireless device 4610 may determine a CSI reference resource (and/or a slot associated with the CSI reference resource) for a CSI report in slot n. The wireless device 4610 may determine the CSI reference resource is located in slot m. The gap between slot m and slot n may be determined, for example, as described herein. CSI reports in different slots may comprise different CSI reference resources in different slots. The wireless device 4610 may derive the channel measurements for computing CSI quantities (e.g., L1-RSRP value) for the CSI report in slot n, for example, based on the higher layer parameter (e.g., timeRestrictionForChannelMeasurements) in CSI-ReportConfig being set to Configured (or time restriction is enabled for channel measurement). For example, the wireless device 4610 may derive the channel measurements for computing CSI quantities (e.g., L1-RSRP value) for the CSI report in slot n based on the most recent, CSI-RSs (e.g., NZP-CSI-RSs) and/or SSBs (e.g., no later than slot m wherein the CSI reference resource is determined) associated with the CSI resource setting for the CSI report. As shown in FIG. 46B, the wireless device 4610 may determine/obtain the most recent slot, for example, is slot m (e.g., no later than slot m if slot m is a valid downlink slot). The wireless device 4610 may determine/obtain the CSI report based on channel measurement over RSs received in slot m (and/or not over RSs received one or more slots before slot m).

A wireless device may derive (e.g., based on measuring, obtaining, and/or averaging) a CSI report based on RSs received in a plurality of slots not later than a CSI reference resource associated with the CSI report, if the wireless device is configured with disabled time restriction for CSI measurement being (e.g., timerestrictionForChannelMeasurements is set to NotConfigured),. The base station may send/transmit a DCI (and/or a MAC CE) indicating a change (or update) of configuration parameters of the RSs, for example, if the base station determines to switch/transition from the non-energy-saving state to the energy saving state. Based on the DCI, the RSs sent/transmitted in the first slot (e.g., before the base station sends/transmits the DCI), and the RSs sent/transmitted in the second slot (e.g., after the base station sends/transmits the DCI), may comprise different configuration parameters (e.g., sending/transmission bandwidth, sending/transmission ports, quantity/number of beams, sending/transmission density, sending/transmission power, sending/transmission periodicity, etc.). The different configuration parameters may be determined, for example, as described with respect to FIG. 42, FIG. 43, and/or FIG. 45.

DCI (and/or the MAC CE) does not comprise/indicate any information regarding, such as CSI report (re)configuration, serving cell activation, BWP change/switching, and/or activation of SP-CSI. The wireless device may incorrectly measure the CSI report based on RSs received in a plurality of slots (e.g., no later than a CSI reference resource), based on/in response to the base station switches from the non-energy-saving state to the energy saving state, and change the parameters of RSs based on the DCI (and/or the MAC CE). The plurality of slots may comprise the first slot (e.g., which are before the parameters of RSs are changed), and the second slots (e.g., which are after the parameters of RSs are changed). The wireless device may result in an incorrect CSI report if the base station switches/transitions from the non-energy-saving state to the energy saving state. There is a need to improve the measurement quality for the CSI report if the base station switches/transitions from the non-energy-saving state to the energy saving state.

A wireless device may determine not to use channel measurements over slots before receiving the DCI (e.g., indicating energy saving state switching) by enabling a time restriction for channel measurements. The decision by the wireless device may be made based on/in response to receiving the DCI (e.g., indicating that the base station switches from the non-energy-saving state to the energy-saving state). The decision (e.g., not to use channel measurements over slots before receiving the DCI) may improve quality of the channel measurement, for example, if the base station switches/transitions from the non-energy-saving state to the energy saving state.

A wireless device may determine not to use channel measurements over slots before receiving the DCI (e.g., indicating energy saving switching) by maintaining a time restriction being disabled for channel measurements. The decision by the wireless device may be made based on/in response to receiving the DCI (e.g., indicating that the base station switches from the non-energy-saving state to the energy-saving state). The decision (e.g., not to use channel measurements over slots before receiving the DCI) may improve quality of the channel measurement, for example, if the base station switches/transitions from the non-energy-saving state to the energy saving state.

FIG. 47 shows an example of CSI reporting for energy saving. FIG. 47 shows an example of CSI reporting based on a base station 4705 switches/transitions from the non-energy-saving state to the energy saving state. The CSI report (e.g., if the base station 4705 switches/transitions from the non-energy-saving state to the energy saving state) may be configured, for example, as described with respect to FIG. 42, FIG. 43, FIG. 44 and/or FIG. 45. The base station 4705 may send/transmit to a wireless device 4710 one or more RRC messages (e.g., step 4715). The one or more RRC messages may comprise configuration parameters (e.g., of RSs for CSI reporting in a BWP of a cell). The configuration parameters may be implemented, for example, as described with respect to FIG. 42. For example, the configuration parameters may comprise/indicate time restriction for CSI measurements being set to disabled. The time restriction for CSI measurements may be implemented, for example, as described with respect to FIG. 46A. The RSs may comprise SSBs and/or CSI-RSs.

The base station 4705 may send/transmit RSs in the active BWP (e.g., step 4720). The RSs (e.g., in the active BWP) may be sent, for example, based on the configuration parameters. The configuration parameters of the RSs may be configured/implemented, for example, as described with respect to FIG. 33, FIG. 34, FIG. 35, FIG. 36, FIG. 37, FIG. 38, FIG. 39 and/or FIG. 42. The wireless device 4710 may obtain/measure the RSs for the first CSI report (e.g., step 4725). The first CSI report may be based on the measurement of the RSs received in a plurality of slots (e.g., no later than a CSI reference resource associated with the first CSI report) based on/in response to the time restriction being disabled. The first CSI report (e.g., if the time restriction is disabled) may be configured/implemented, for example, as described with respect to FIG. 46A. The wireless device 4710 may send/transmit the first CSI report to the base station 4705 (e.g., step 4730).

The base station 4705 may send/transmit to the wireless device 4710 DCI (and/or MAC CE) for energy saving (e.g., step 4735). The DCI (and/or MAC CE) may comprise/indicate to reduce bandwidth of an active BWP (and/or to update/change of parameters of RSs) (e.g., for energy saving). The DCI may comprise/indicate to reduce bandwidth of the active BWP (and/or update/change parameters of the RSs), as described with respect to FIG. 42. The wireless device 4710 may receive the DCI comprising/indicating the bandwidth reduction of the active BWP (and/or update/change of parameters of RSs). The wireless device 4710 may determine to enable the time restriction for CSI measurements, for example, based on the DCI (e.g., step 4740). The wireless device 4710 may determine to enable the time restriction for CSI measurements, although the RRC messages indicate that the time restriction is disabled.

As shown in FIG. 47, the base station 4705 may send/transmit RSs, for example, based on the update/change parameters for the bandwidth reduction of the active BWP (e.g., step 4745). The wireless device 4710 (e.g., based on determining to enable the time restriction for CSI measurements) may determine/obtain a second CSI report (e.g., step 4750) based on RSs received in the most recent slot (e.g., no later than the CSI reference resource corresponding to the second CSI report). The wireless device 4710 may send/transmit the second CSI report to the base station 4705 (e.g., step 4755). For example, the wireless device 4710 may determine/obtain the second CSI report (e.g., sent/transmitted in slot n+k) based on RSs received in slot n+p*m, wherein slot n+p*m is the most recent slot no later than the CSI reference resource, and p is the transmission periodicity of the RSs. The wireless device 4710 may determine not to use channel measurements via/over slots before receiving the DCI (e.g., in slot n), by enabling the time restriction for channel measurements (e.g., based on/in response to receiving the DCI indicating switch/transition of the base station from the non-energy-saving state to the energy-saving state). The method may improve quality of the channel measurement if the base station switches/transitions from the non-energy-saving state to the energy saving state.

FIG. 48 shows an example of CSI reporting for energy saving. FIG. 48 show an example of CSI reporting for energy saving based on a base station 4805 switches/transitions from the non-energy-saving state to the energy saving state. The CSI report (e.g., if the base station 4805 switches/transitions from the non-energy-saving state to the energy saving state) may be configured, as described with respect to FIG. 42, FIG. 43, FIG. 44 and/or FIG. 45. The base station 4805 may send/transmit to a wireless device 4810 one or more RRC messages (e.g., step 4815). The one or more RRC messages may comprise configuration parameters of RSs (e.g., for CSI reporting in a BWP of a cell). The configuration parameters may be implemented, for example, as described with respect to FIG. 42. For example, the configuration parameters may comprise/indicate time restriction for CSI measurements being set to disabled. The time restriction for CSI measurements may be configured, for example, as described with respect to FIG. 46A. The RSs may comprise SSBs and/or CSI-RSs.

The base station 4805 may send/transmit RSs in the active BWP (e.g., step 4820). The RSs (e.g., in the active BWP) may be sent, for example, based on the configuration parameters. The configuration parameters of the RSs may be configured/implemented, for example, as described with respect to FIG. 33, FIG. 34, FIG. 35, FIG. 36, FIG. 37, FIG. 38, FIG. 39, FIG. 42 and/or FIG. 45. The wireless device 4810 may obtain/measure the RSs for the first CSI report (e.g., step 4825). The first CSI report may be based on the measurement of the RSs received in a plurality of slots (e.g., no later than a CSI reference resource associated with the first CSI report) based on/in response to the time restriction being disabled. The first CSI report (e.g., if the time restriction is disabled) may be configured/implemented, for example, as described with respect to FIG. 46A.

The wireless device 4810 may send/transmit the first CSI report to the base station 4805 (e.g., step 4830). The base station 4805 may send/transmit to the wireless device 4810 DCI (and/or MAC CE) for energy saving (e.g., step 4835). The DCI (and/or MAC CE) may comprise/indicate to reduce bandwidth of an active BWP (and/or to update/change of parameters of RSs) (e.g., for energy saving). The DCI may comprise/indicate to reduce bandwidth of the active BWP (and/or update/change parameters of the RSs), as described with respect to FIG. 42. The wireless device 4810 may receive the DCI comprising/indicating the reduced bandwidth of the active BWP (and/or update/change of parameters of RSs). The wireless device 4810 may determine to maintain the time restriction being disabled for CSI measurements, based on the RRC messages indicating that the time restriction is disabled.

As shown in FIG. 48, the base station 4805 may send/transmit RSs (e.g., step 4840). The base station 4805 may send/transmit RSs for example, based on the update/change parameters (e.g., for the bandwidth reduction of the active BWP). The wireless device 4810 (e.g., based on maintaining the time restriction being disabled for CSI measurements) may determine/obtain the second CSI report (e.g., step 4845) based on RSs received in a plurality of slots (e.g., no later than the CSI reference resource corresponding to the second CSI report, and after the wireless device receives the DCI). The wireless device 4810 may send/transmit the second CSI report to the base station 4805 (e.g., step 4850). For example, the wireless device 4810 may receive the DCI in slot n. The wireless device 4810 may determine/obtain the second CSI report (e.g., sent/transmitted in slot n+k) based on RSs received in slots between slot n+m and slot n+p*m, wherein slot n+p*m is the most recent slot no later than the CSI reference resource, and p is the transmission periodicity of the RSs. The time gap (m) between slot n and slot n+m may be determined based on an application delay for using/applying the update/changes of the parameters of the RSs. The wireless device 4810 may determine not to use channel measurements via/over slots before receiving the DCI (e.g., in slot n) or in slot n+m if application delay is used/applicable (e.g., although the time restriction for channel measurements is disabled in the RRC messages). The wireless device may determine not to use (or determines to discard) channel measurements via/over slots before receiving the DCI (e.g., in slot n) or slot n+m if application delay is used/applicable, by maintaining the time restriction being disabled for channel measurements (e.g., based on/in response to receiving the DCI indicating the switch/transition of the base station from the non-energy-saving state to the energy-saving state. The method may improve quality of the channel measurement if the base station switches/transitions from the non-energy-saving state to the energy saving state.

A base station may configure a time gap between the first slot and the second slot in RRC, MAC CE and/or DCI. The first slot may be configured for the base station sends/transmits the DCI (e.g., the DCI in FIG. 42, FIG. 44, FIG. 47 and/or FIG. 48). The second slot may be configured for the base station uses/applies the new sending/transmission parameters (e.g., for RS/PDSCH/PDCCH) on the reduced bandwidth of the active BWP. The time gap may be indicated by the wireless device based on a capability indication of the wireless device. The time gap may be preconfigured as a fixed value (or a non-fixed value). The DCI and/or the MAC CE may maintain an active state of the BWP. The time gap may be smaller than a time gap used for BWP switching. The time gap for BWP switching may be implemented, for example, as described with respect to FIG. 22.

A wireless device may receive the DCI (or the MAC CE) indicating the switching/transitioning from the non-energy-saving state to the energy-saving state. The wireless device may determine a time gap starting from slot n for using/applying the switching/transitioning (e.g., based on the received DCI). The time gap may be a threshold (e.g., in symbols, symbol groups, slots, slot groups, millisecond, etc.). A wireless device may determine (or assume) that the RSs are sent/transmitted by the base station, if the wireless device receives the DCI (or the MAC CE) at slot n. The RSs may be sent/transmitted with the same transmission parameters (e.g., a quantity/number of beams, ports, density, bandwidth and etc.) The RSs may be sent/transmitted during a time window from slot n to slot n+m, wherein a time offset between slot n and slot n+m is the time gap. The wireless device may determine/obtain CSI quantities based on RS resources with original configuration parameters (e.g., between slot n and slot n+m). A wireless device may determine (or assume) that the base station switches to the new parameters for RS sending/transmissions from slot n+m, sends/transmits RS from slot n+m and/or changes to new sending/transmission parameters (e.g., ports, density, bandwidth etc.) for CSI-RS resources from slot n+m, if the wireless device receives the DCI (or the MAC CE) at slot n. The time offset between slot n and slot n+m is the time gap.

A wireless device may send/transmit HARQ ACK/NACK feedback to the base station at the second slot (not shown in FIG. 48), if the wireless device receives the DCI in slot n. The wireless device may start the application delay window from the second slot (e.g., different from described in FIG. 48). For example, the application delay window may start from slot n where the DCI is received by the wireless device. The length of the application delay window (or gap) may be implemented, for example, as described herein. For example, the wireless device (e.g., within the time window) may assume (or determine) that the base station send/transmit the P-CSI-RSs without changes of the parameters, and may measure CSI report based on the P-CSI-RSs. Based on/in response to the expiry of the window, the wireless device may determine that the base station switches to new parameters for the P-CSI-RSs and may measure the second CSI report based on the P-CSI-RSs. A wireless device may improve quality of the channel measurement (e.g., as described above with respect to FIG. 47), if the base station switches/transitions from the non-energy-saving state to the energy saving state. A base station may send/transmit different types of CSI-RSs to the wireless device for different purposes (e.g., beam managements, beam/cell level CSI report, phase tracking, time-frequency tracking, etc.).

A wireless device (e.g., in RRC connected mode) may receive the higher layer configuration (e.g., wireless device specific) of an NZP-CSI-RS-ResourceSet configured with higher layer parameter (e.g., trs-Info). For an NZP-CSI-RS-ResourceSet configured with the higher layer parameter (e.g., trs-Info), the wireless device may determine (or assume) that the antenna port is the same with the port index of the configured NZP CSI-RS resources in the NZP-CSI-RS-ResourceSet. A wireless device may be configured with one or more NZP CSI-RS set(s), if frequency range 1. Based on frequency range 1, an NZP-CSI-RS-ResourceSet may comprise four periodic NZP CSI-RS resources in two consecutive slots (e.g., two periodic NZP CSI-RS resources in each slot). The wireless device may be configured with one or more NZP CSI-RS set(s) (e.g., based on an NZP-CSI-RS-ResourceSet comprises two periodic NZP CSI-RS resources in one slot, if none of two consecutive slots is identified/indicated as downlink slots by tdd-UL-DL-ConfigurationCommon and/or tdd-UL-DL-ConfigDedicated.

The wireless device may be configured with one or more NZP CSI-RS set(s), if frequency range 2. Based on frequency range 2, an NZP-CSI-RS-ResourceSet may comprise two periodic CSI-RS resources in one slot, or four periodic NZP CSI-RS resources in two consecutive slots (e.g., two periodic NZP CSI-RS resources in each slot). A wireless device (e.g., configured with NZP-CSI-RS-ResourceSet(s) configured with higher layer parameter trs-Info) may have the CSI-RS resources configured as: periodic, with the CSI-RS resources in the NZP-CSI-RS-ResourceSet configured with same periodicity, bandwidth and subcarrier location; or periodic CSI-RS resource in one set and aperiodic CSI-RS resources in a second set, with the aperiodic CSI-RS and periodic CSI-RS resource having the same bandwidth (with same RB location) and the aperiodic CSI-RS being configured with qcl-Type set to 'typeA' and 'typeD', where applicable, with the periodic CSI-RS resources.

A wireless device may determine/expect that the periodic CSI-RS resource set and aperiodic CSI-RS resource set are configured with the same quantity/number of CSI-RS resources and with the same quantity/number of CSI-RS resources in a slot. A wireless device may not determine/expect to be configured with a CSI-ReportConfig that is linked to a CSI-ResourceConfig containing an NZP-CSI-RS-ResourceSet configured with trs-Info and with the CSI-ReportConfig configured with the higher layer parameter (e.g., timeRestrictionForChannelMeasurements being set to configured). A wireless device may not determine/expect to be configured with a CSI-ReportConfig with the higher layer parameter (e.g. reportQuantity being set to other than none for aperiodic NZP CSI-RS resource set configured with trs-Info). A wireless device may not determine/expect to be configured with a CSI-ReportConfig for periodic NZP CSI-RS resource set configured with trs-Info. A wireless device may not determine/expect to be configured with an NZP-CSI-RS-ResourceSet configured with both trs-Info and repetition.

Each CSI-RS resource (e.g., if configured as TRS) may be configured by the higher layer parameter (e.g., NZP-CSI-RS-Resource) with the restrictions such as: the time-domain locations of the two CSI-RS resources in a slot, or of the four CSI-RS resources in two consecutive slots (which are the same across two consecutive slots), as defined by higher layer parameter CSI-RS-resourceMapping, is given by one of $l \in \{4,8\}$, $l \in \{5,9\}$, or$l \in \{6,10\}$ for frequency range 1 and frequency range 2, $l \in \{0,4\}$, $l \in \{1,5\}$, $l \in \{2,6\}$, $l \in \{3,7\}$, $l \in \{7,11\}$, $l \in \{8,12\}$ or $l \in \{9,13\}$ for frequency range 2. A single port CSI-RS resource with density $\rho = 3$ and higher layer parameter density configured by CSI-RS-ResourceMapping. Based on carrier $N_{grid}^{size,\mu} = 52, N_{BWP,i}^{size} = 52$, $\mu = 0$ and the carrier is configured in paired spectrum, the bandwidth of the CSI-RS resource, as given by the higher layer parameter freqBand configured by CSI-RS-ResourceMapping, may be X resource blocks, where $X \geq 28$ resources if the UE indicates trs-AddBW-Set1 for the trs-AdditionalBandwidth capability for CSI-RS for tracking or [FG35-2, set 1] for the [FG35-2] capability for aperiodic CSI-RS for fast SCell activation and $X \geq 32$ if the UE indicates trs-AddBW-Set2 for the AdditionalBandwidth capability for CSI-RS for tracking or [FG35-2, set 2] for the [FG35-2] capability for aperiodic CSI-RS for fast SCell activation; in these cases, if the wireless device is configured with CSI-RS comprising X<52 resource blocks, the wireless device does not expect that the total number of PRBs allocated for DL transmissions but not overlapped with the PRBs carrying CSI-RS for tracking is more than 4, where all CSI-RS resource configurations shall span the same set of resource blocks; otherwise, the bandwidth of the CSI-RS resource, as given by the higher layer parameter freqBand configured by CSI-RS-ResourceMapping, is the minimum of 52 and $N_{BWP,i}^{size}$ resource blocks, or is equal to $N_{BWP,i}^{size}$ resource blocks. For operation with shared spectrum channel access, freqBand configured by CSI-RS-ResourceMapping, may be the minimum of 48 and $N_{BWP,i}^{size}$ resource blocks, or may be equal to $N_{BWP,i}^{size}$ resource blocks. The wireless device may be not expected to be configured with the periodicity of $2^{\mu} \times 10$ slots if the bandwidth of CSI-RS resource is larger than 52 resource blocks. The periodicity and slot offset for periodic NZP CSI-RS resources, as given by the higher layer parameter periodicityAndOffset configured by NZP-CSI-RS-Resource, may be one of $2^{\mu}X_p$ slots where $X_p$ =10, 20, 40, or 80 and where $\mu$ is defined as numerology of the active BWP. The same powerControlOffset and powerControlOffsetSS may be given by NZP-CSI-RS-Resource value across all resources.

For example, each NZP CSI-RS resource (e.g., for a wireless device in RRC_IDLE or RRC_INACTIVE) may be configured by the higher layer parameter (e.g., TRS-ResourceSet) with the restrictions such as: the quantity/number of periodic NZP CSI-RS resources configured by a TRS-ResourceSet is given by numberOfresources, the time-domain locations of the two CSI-RS resources in a slot, or of the four CSI-RS resources in two consecutive slots (which are the same across two consecutive slots), is one of $l \in \{4,8\}$, $l \in \{5,9\}$, or$l \in \{6,10\}$ for frequency range 1 and frequency range 2,1 $\in \{0,4\}$, $l \in \{1,5\}$, $l \in \{2,6\}$, $l \in \{3,7\}$, $l \in \{7,11\}$, $l \in \{8,12\}$ or $l \in \{9,13\}$ for frequency range 2, where the first symbol location in a slot is indicated by firstOFDMSymbolInTimeDomain in the TRS-ResourceSet and the second symbol location in a slot is firstOFDMSymbolInTimeDomain + 4 and a single port CSI-RS resource with density $\rho$ = 3. The bandwidth and the frequency location of the NZP CSI-RS resource may be given by the higher layer parameter nrofRBs, startingRB and frequencyDomainAllocation in a TRS-ResourceSet and may use/apply to all resources in a TRS-ResourceSet. Bandwidth, nrofRBs, and the initial CRB index, startingRB, of the NZP CSI-RS resource configured by TRS-ResourceSet may be not restricted by initial DL BWP. The wireless device may be not required to receive TRS occasions outside the initial DL BWP. The periodicity for periodic NZP CSI-RS resources, is given by the higher layer parameter periodicity-AndOffset configured by a TRS-ResourceSet, may be one of $2^{\mu}X_p$slots where $X_p$ =10, 20, 40, or 80, applies to all resources in a TRS-ResourceSet. The slot offset given by the higher layer parameter periodicityAndOffset configured by a TRS-ResourceSet may provide the location of the first slot containing the periodic NZP CSI-RS resources configured by a TRS-ResourceSet. The wireless device may not determine/expect the TRS-ResourceSet to be configured with the periodicity of $2^{\mu} \times 10$ slots if the bandwidth of NZP CSI-RS resource is larger than 52 resource blocks. The wireless device may determine/assume the sub-carrier spacing of the NZP CSI-RS resources configured by TRS-ResourceSet to be same as the sub-carrier spacing of the initial DL BWP. powerControlOffsetSS may be given by a TRS-ResourceSet applies to all resources in a TRS-ResourceSet. The QCL information for periodic NZP CSI-RS resources, is given by the higher layer parameter ssb-Index configured by a TRS-ResourceSet, may be a SS/PBCH block, applies to all resources in a TRS-ResourceSet. One or more scramblingIDs (e.g., if a single scramblingID is configured) may use/apply to all NZP-CSI-RS resources in the resource set, otherwise, each NZP-CSI-RS resource is provided with a scramblingID. The wireless device may determine/assume the quasi co-location type(s) such as: typeC with an SS/PBCH block and, when applicable, and typeD with the same SS/PBCH block.

A base station may send/transmit different P-CSI-RSs to a wireless device for different purposes (e.g., beam management, beam/cell level CSI report, phase tracking, time-frequency tracking, etc.). The base station may determine to switch from a non-energy-saving state to an energy saving state. The base station may determine to switch from a non-energy-saving state to an energy saving state, for example, as described with respect to FIG. 42, FIG. 47 and/or FIG. 48. The base station, for example, may stop sending/transmission of the P-CSI-RSs, and/or change/update parameters of the P-CSI-RSs, if the base station switches from the non-energy-saving state to the energy saving state. For example, stopping sending/transmission of the P-CSI-RSs (or changing/updating parameters of the P-CSI-RSs) without considering the purpose of the sending/transmissions of the P-CSI-RSs may result in increased channel/beam measurement error, and/or increased sending/transmission power of the base station. The base station may change the bandwidth, density, antenna port and quantity/number of beams for P-CSI-RSs, for example, if the base station switches to the energy saving state. The tracking RSs (a type of P-CSI-RSs) may be used to facilitate PDSCH decoding. Tracking RSs may enable to keep sending/transmitting of the P-CSI-RSs if the base station is in energy saving state The keeping sending/transmitting periodic tracking RSs may waste transmission power of the base station, since there may be no PDSCH being sent/transmitted to the wireless device and/or there may be no PDSCH being sent/transmitted with high modulation order if the base station in energy saving state. There is a need to reduce power consumption of the base station for different types of P-CSI-RS transmissions if the base station switches/transitions from the non-energy-saving state to the energy-saving state. A base station may stop sending/transmitting periodic TRSs for time/frequency/phase tracking for PDSCH decoding and/or continuing sending/transmitting periodic CSI-RSs for beam/CSI measurements, if the base station switches from the non-energy-saving state to the energy saving state. The method may reduce power consumption for the base station and/or improve beam/CSI measurement if the base station is in the energy saving state.

FIG. 49 shows an example of P-CSI-RS sending/transmission for energy saving. For example, a base station 4905 may send/transmit to a wireless device 4910 (or a group of wireless devices) one or more RRC messages (e.g., step 4915). The one or more RRC messages may comprise configuration parameters of P-CSI-RSs on a BWP of a cell. The RRC messages may comprise configuration parameter of SSBs. The RRC messages may configure parameter of SSBs, for example, as described with respect to FIG. 25, FIG. 32, and/or FIG. 33. The configuration parameters of P-CSI-RSs may be implemented as described with respect to FIG. 35, FIG. 36, FIG. 37 and/or FIG. 38. For example, the P-CSI-RSs may comprise the first P-CSI-RSs (or resource set) used for beam/CSI measurements (e.g., if a trs-info IE is not configured with the first P-CSI-RSs). The P-CSI-RSs may comprise the second P-CSI-RSs used for tracking (e.g., if the trs-info IE is associated with the second P-CSI-RSs, as described with respect to FIG. 36). The first P-CSI-RSs (e.g., used for beam/CSI measurements) may be referred to as P-CSI-RSs. The second P-CSI-RSs (e.g., used for tracking) may be referred to as TRSs. P-CSI-RSs and TRSs may be associated with different configuration parameters (e.g., antenna ports, quantity/number of beams, bandwidth, periodicity, time domain location in one or more slots, etc.). The base station 4905 may send/transmit the P-CSI-RSs for CSI measurements and the TRSs for tracking (e.g., step 4920). The base station 4905 may periodically send/transmit the SSBs (e.g., with wider sending/transmission beams according to the configuration parameters of the SSBs). The base station 4905 may periodically send/transmit the P-CSI-RSs and/or TRSs (e.g., with narrower sending/transmission beams according to the configuration parameters of the P-CSI-RSs/TRSs).

The wireless device 4910 may obtain (or measure) the first periodic CSI quantities. The wireless device 4910 may obtain/determine, for example, based on the periodically sent/transmitted SSBs and/or the P-CSI-RSs (e.g., step 4925). The wireless device 4910 may sent/transmit the first CSI report (e.g., step 4930). The wireless device 4910 may sent/transmit the first CSI report, for example, based on the periodic CSI quantities. For example, the first CSI report may comprise a SSB index of a SSB (e.g., with the best RSRP value among RSRP values of the SSBs), a CSI-R resource index of a P-CSI-RS (e.g., with the best RSRP value among RSRP values of the P-CSI-RSs), a RSRP value and/or a differential RSRP value. The wireless device 4910 may send/transmit the first CSI report using/via a PUCCH resource configured for the periodic CSI report. The wireless device 4910 may perform time-frequency tracking for facilitating PDSCH decoding based on the periodically sent/transmitted TRSs. The wireless device 4910 may perform time-frequency tracking (e.g., for facilitating PDSCH decoding), for example, if a transport block is sent/transmitted (e.g., using/via the PDSCH) with high modulation order (e.g., 1024 QAM) and/or in high frequency (e.g., FR2). For example, the wireless device 4910 (e.g., based on the special time/frequency pattern of the TRSs) may determine/estimate phase noise introduced by the hardware elements of the wireless device4910 working in high frequency and compensate the phase noise to decode TB using/via the PDSCH.

The base station 4905 may send/transmit DCI (and/or MAC CE) indicating an energy saving for the base station (e.g., step 4935). The wireless device 4910 may receive the DCI (and/or a MAC CE) indicating the energy saving. The DCI (e.g., indicating the energy saving) may be implemented, for example, as described with respect to FIG. 42, FIG. 44, FIG. 47 and/or FIG. 48. The base station 4905 may send/transmit the P-CSI-RSs for CSI/beam measurements and switch off the TRSs for tracking (e.g., step 4940). The base station 4905 may continue the periodical sending/transmissions of the P-CSI-RSs (or P-CSI-RS resource sets) used for beam/CSI measurements. For example, based on/in response to sending/transmitting the DCI (e.g., indicating the energy saving), the base station 4905 may continue the periodical sending/transmissions of the P-CSI-RSs (or P-CSI-RS resource sets) used for beam/CSI measurements (e.g., with changed parameters, as described with respect to FIG. 42). Based on/in response to sending/transmitting the DCI (e.g., indicating the energy saving), the base station may stop sending/transmitting the TRSs in the active BWP (e.g., or in a reduced bandwidth of the active BWP, as described with respect to FIG. 42).For example, the base station 4905 (e.g., if in the energy saving state) may stop using high modulation order (e.g., 1024 QAM) for PDSCH sending/transmission. The base station 4905 (e.g., if in the energy saving state) may stop sending/transmitting the PDSCH to the wireless device 4910. Stop using high modulation order (e.g., 1024 QAM) for PDSCH sending/transmission may enable the base station 4905 to stop sending/transmitting the periodic TRSs.

The wireless device 4910 may determine that the TRSs are not available in the energy saving state and obtain/determine the second CSI report (e.g., step 4945) The wireless device 4910 (e.g., based on/in response to receiving the DCI), for example, may determine that the P-CSI-RSs are sent/transmitted with changed parameters by the base station 4905 (e.g., or with an application time delay, as described and/or with respect to FIG. 42). For example, the wireless device 4910 (e.g., based on/in response to receiving the DCI) may determine that the SSBs are still sent/transmitted by the base station 4905 (with or without parameter changes based on configuration or indication of the DCI). The wireless device 4910 may obtain (or measure) the second periodic CSI quantities based on the P-CSI-PSs and/or SSBs. For example, based on determining the parameters-changed P-CSI-RSs in the energy saving, the wireless device 4910 may obtain (or measure) the second periodic CSI quantities based on the P-CSI-PSs and/or SSBs. The wireless device 4910 may send/transmit the second periodic CSI report comprising the second periodic CSI quantities, to the base station 4905 (e.g., step 4950). For example, based on determining that the TRS are switched off (or stopped) in the energy saving state, the wireless device 4910 may stop time/frequency/phase tracking based on the TRSs.

A base station may stop sending/ transmitting periodic TRSs for time/frequency/phase tracking for PDSCH decoding, and may continue sending/transmitting periodic CSI-RSs for beam/CSI measurements, if the base station switches from the non-energy-saving state to the energy saving state. The example method may reduce power consumption for the base station and/or improve beam/CSI measurement if the base station is in the energy saving state. A base station may configure at least two TRSs comprising the first TRS for the first wireless device in RRC_CONNECTED state and the second TRS for the second wireless device in RRC_IDLE state or RRC_INACTIVE state. The first TRS may be used by the first wireless device for phase/time/frequency tracking for PDSCH reception with high modulation order (e.g., 1024 QAM) in high frequency (e.g., FR2). The second TRS may be used by the second wireless device for time/frequency synchronization for receiving paging DCI in RRC_IDLE state or RRC_INACTIVE state (e.g., if SSB is not available for the synchronization before the monitoring occasion for paging DCI). The DCI indicating the energy saving switching/transitioning may be configured as described with respect to FIG. 42, FIG. 44, FIG. 47, FIG. 48 and/or FIG. 49. Based on/in response to receiving the DCI (e.g., indicating the energy saving switching/transitioning), the first wireless device (in RRC_CONNECTED state) may determine that the first TRS is stopped if the base station is in the energy saving state. Based on/in response to receiving the DCI (e.g., indicating the energy saving switching/transitioning), the second wireless device (in RRC_IDLE or RRC_INACTIVE state) may determine that the second TRS is maintained to be sent/transmitted by the base station if the base station is in the energy saving state. Maintaining the transmission of the second TRS for the wireless device in RRC_IDLE state or in RRC_INACTIVE state may enable the wireless device to obtain reference signals for time and frequency synchronization. Stopping the sending/transmission of the first TRS for the wireless device in RRC_CONNECTED state may enable the wireless device to stop monitoring the first TRS for tracking (e.g., if the wireless device does not have PDSCH reception with high modulation order and/or in high frequency).

A base station may send/transmit to a wireless device (or a group of wireless devices) base station energy saving (BS ES) parameters indicating PDCCH configuration for a DCI (e.g., indicating an energy saving transition). The DCI indicating the energy saving switch/transition may be configured as described with respect to FIG. 42, FIG. 44, FIG. 47, FIG. 48 and/or FIG. 49. The BS ES parameters may be comprised in common RRC messages (e.g., MIB, SIBx) and/or wireless device specific RRC messages. The BS ES parameters may indicate a search space (e.g., a common search space or a wireless device specific search space) for a (group common or wireless device specific) DCI indicating the ES (or an energy saving DCI) for the base station 4905. The DCI may be configured with a DCI format (e.g., as described with respect to FIG. 23, or different from described with respect to FIG. 23). A search space may be implemented, for example, as described with respect to FIG. 27. The search space may be a type 0/0A/0B/1/1A/2/2A/3 common search space. For example, the ES indication may be comprised in a DCI format 1_0 scrambled by a SI-RNTI in a type 0/0A common search space. The ES indication may be comprised in a DCI format 1_0 scrambled by a P-RNTI in a type 2 common search space. The ES indication may be comprised in a DCI format 2_0 scrambled by an SFI-RNTI in a type 3 common search space. The ES indication may be comprised in a DCI format 2_1 scrambled by an INT-RNTI in a type 3 common search space. The ES indication may be comprised in a DCI format 2_2 scrambled by a TPC-PUCCH-RNTI/TPC-PUCCH-RNTI in a type 3 common search space. The ES indication may be comprised in a DCI format 2_3 scrambled by a TPC-SRS-RNTI/ in a type 3 common search space. The ES indication may be comprised in a DCI format 2 4 scrambled by a CI-RNTI in a type 3 common search space. The ES indication may be comprised in a DCI format 2_5 scrambled by an AI-RNTI in a type 3 common search space. The ES indication may be comprised in a DCI format 2_6 scrambled by a PS-RNTI in a type 3 common search space. The ES indication may be comprised in DCI format 2_7 for notifying a paging early indication and TRS availability indication, scrambled by PEI-RNTI in a type 2A common search space. For example, the ES indication may be comprised in a new DCI format in a type 3 common search space, different from legacy 2_x DCI format.

The base station may be working in a normal power state (or a non-energy-saving state) during which the base station may send/transmit downlink signals and receive uplink signals with a normal sending/transmission power (or full transmission power). A wireless device may receive downlink signals and/or send/transmit uplink signals with the base station in the normal power state. While the base station is in the normal power state, the wireless device may be indicated to perform one or more power saving operations (e.g., as described with respect to FIG. 22, FIG. 28, FIG. 29A, FIG. 29B, FIG. 30A, FIG. 30B and/or FIG. 31). While the base station is in the normal power state, the base station may send/transmit periodic CSI-RS resources in one or more CSI-RS resource sets based on configuration parameters of CSI-RS resources.

The wireless device may periodically monitor the search space for receiving a DCI indicating the energy saving for the base station based on configuration parameters of the search space. A periodicity of PDCCH occasion for sending/transmitting the DCI may be comprised in the RRC message for the search space. The base station may determine to switch/transition from the normal power state to an energy saving state based on wireless device assistance information from the wireless device on traffic pattern, data volume. The base station may determine the switch/transition based on uplink signal measurement/assessment/detection at the base station. The base station may determine the switch/transition based on information exchange from a neighbor base station via X2 interface, wherein the information exchange may comprise indication of the switch/transition, traffic load information, etc. Based on the determination of the switch/transition from the normal power state to the energy saving state, the base station may send/transmit the DCI, in the PDCCH transmission occasion of the search space, indicating that the base station may switch/transition from the non-energy-saving state to the energy-saving state (e.g., as described with respect to FIG. 42, FIG. 44, FIG. 47, FIG. 48 and/or FIG. 49).

A base station may send/transmit parameters indicating a starting PRB of first PRBs, for Periodic RSs, within a BWP comprising second PRBs. The base station may send/transmit the periodic RSs using/via the first PRBs in the BWP. The base station may send/transmit a DCI indicating a bandwidth change, of the BWP, from the second PRBs to third PRBs. The base station may send/transmit, based on the DCI, the periodic RSs using/via at least one PRB of the first PRBs, comprising the starting PRB, based on/in response to the starting PRB being within the third PRBs.

A base station may send/transmit parameters indicating a starting PRB of first PRBs, for periodic RSs, within a BWP comprising second PRBs. The base station may send/transmit the periodic RSs using/via the first PRBs in the BWP. The base station may send/transmit a DCI indicating a bandwidth change, of the BWP, from the second PRBs to third PRBs. The base station may send/transmit, based on the DCI, the periodic RSs using/via at least one PRB of the first PRBs, comprising the starting PRB, based on/in response to the starting PRB being within the third PRBs and the at least one PRB being within the third PRBs.

A base station may send/transmit messages comprising parameters indicating a starting PRB of first PRBs, for periodic RSs, within a BWP comprising second PRBs. The base station may send/transmit the periodic RSs using/via the first PRBs in the BWP. The base station may send/transmit a DCI indicating a bandwidth change, of the BWP, from the second PRBs to third PRBs. The base station may send/transmit, based on the DCI, the periodic RSs using/via at least one PRB being selected from the first PRBs and being within the third PRBs.

A base station may send/transmit parameters indicating a starting PRB of first PRBs, for periodic RSs, within a BWP comprising second PRBs. The base station may send/transmit the periodic RSs using/via the first PRBs in the BWP. The base station may send/transmit a DCI indicating a bandwidth change, of the BWP, from the second PRBs to third PRBs. The base station may stop, based on the DCI, the sending/transmission of the periodic RS, based on/in response to the starting PRB being out of the third PRBs.

A base station may send/transmit parameters indicating a starting PRB of first PRBs, for periodic RSs, within a BWP comprising second PRBs. The base station may send/transmit the periodic RSs using/via the first PRBs in the BWP. The base station may send/transmit a DCI indicating a bandwidth change, of the BWP, from the second PRBs to third PRBs. The base station may determine whether to continue the sending/transmission of the periodic RSs based on whether the first PRBs are within the third PRBs. The base station may continue the sending/transmission of the periodic RSs based on the first PRBs being within the third PRBs.

A wireless device may receive from a base station, parameters indicating a starting PRB of first PRBs, for periodic RSs, within a BWP comprising second PRBs. The wireless device may receive the periodic RSs using/via the first PRBs in the BWP. The wireless device may receive a DCI indicating a bandwidth change, of the BWP, from the second PRBs to third PRBs. The wireless device may receive, based on the DCI, the periodic RSs using/via at least one PRB of the first PRBs, comprising the starting PRB, based on/in response to the starting PRB being within the third PRBs and the at least one PRB being within the third PRBs.

A base station may send/transmit RRC messages comprising parameters of periodic CSI-RS resources, wherein the periodic CSI-RS resources comprise first periodic CSI-RS resource for tracking and second periodic CSI-RS resource for CSI reporting. The base station may send/transmit the periodic CSI-RS resources. The base station may send/transmit a DCI comprising an energy saving indication. The base station, based on/in response to sending/transmitting the DCI, may stop the sending/transmissions of the first periodic CSI resource for tracking, and/or may continue the sending/transmissions of the second periodic CSI resource for CSI reporting. The base station may generate a signal sequence for the periodic RSs. The base station may map the signal sequence to a plurality of REs of the at least one PRB for the periodic RSs. The periodic RSs may comprise at least one of one or more periodic CSI-RSs and one or more SSBs. Each CSI-RS (e.g., of the one or more periodic CSI-RSs) may be associated with one or more parameters comprising at least one of a CSI-RS resource index identifying the CSI-RS, parameters of time and frequency resources for mapping the CSI-RS, one or more power control parameters, a scrambling identifier, a periodicity and offset indicator, and/or a quasi-correction information indication. The parameters of time, and/or frequency resources (e.g., for mapping the CSI-RS), for example, may comprise at least one of indications of one or more subcarriers of a PRB for the CSI-RS, indication of a quantity/number of ports for the CSI-RS, indication of first (starting) OFDM symbol in a slot for the CSI-RS, a code-division multiplexing (CDM) type indication, a density indication and/or a frequency band indication. The frequency band indication may indicate such as a starting PRB of the first PRBs, of the BWP, for the CSI-RS, and/or a plurality/number/quantity for the first PRBs for the CSI-RS.

DCI may be different from DCI formats comprising at least one of DCI format 2_0 for indication of slot format, available RB sets, COT duration and search space set group switching, DCI format 2_1 for indication of downlink pre-emption, DCI format 2_4 for indication of uplink cancellation, DCI format 2_6 for indication of power saving information outside DRX Active time for one or more wireless devices, and/or DCI format 2_7 for notifying the paging early indication and TRS availability indication for one or more wireless devices. DCI may comprise the same DCI size with at least one of the DCI format 2_0, the DCI format 2_1, and/or DCI format 2_4 for indication of uplink cancellation, DCI format 2_6 for indication of power saving information outside DRX Active time for one or more wireless devices, and/or DCI format 2_7 for notifying the paging early indication and TRS availability indication for one or more wireless devices. A base station may send/transmit the DCI using/via a primary cell of a plurality of cells. The base station may send/transmit the DCI using/via a secondary cell of a plurality of cells. DCI may comprise an energy saving indication (e.g., indicating that the base station switches from a non-energy-saving state to an energy saving state).

The base station may receive (e.g., from a wireless device) wireless device assistance information indicating a switch/transition of the base station from a non-energy-saving state to an energy saving state. The base station may send/transmit the DCI based on receiving the wireless device assistance information. The wireless device assistance information may be a second RRC message sent/transmitted from the wireless device to the base station. The wireless device assistance information may be uplink control information (UCI) sent/transmitted using/via a physical uplink channel (e.g., PUCCH and/or PUSCH) to the base station. The messages may comprise RRC message and/or SIB1 message.

The base station may send/transmit the periodic RSs using/via the first PRBs based on the base station in a non-energy-saving state. The non-energy-saving state may comprise a time duration if the base station send/transmit downlink signals with a first sending/transmission power and/or a first bandwidth comprising the second PRBs and receives uplink signals. The downlink signals may comprise at least one of SSBs/SIBs/PDSCH/PDCCH/CSI-RS/DM-RS. The uplink signals may comprise at least one of CSI reports/PUSCH/PUCCH/SRS/RACH. The parameters indicate the third PRBs, from the second PRBs, may be used for sending/transmissions via the BWP in an energy saving state. The base station may switch/transition from a non-energy-saving state to the energy saving state based on the switching/transmitting the DCI. A total quantity/number of the third PRBs may be preconfigured as a fixed value (or a non-fixed value). The second PRBs and/or the third PRBs may start at a PRB with the same PRB index. The second PRBs and/or the third PRBs may comprise the same frequency center. The second PRBs and/or the third PRBs may be configured with the same numerology. The third PRBs may comprise a smaller quantity/number of PRBs than the second PRBs. The energy saving state may comprise a second time duration if the base station sends/transmits the downlink signals within the third PRBs of the BWP.

The energy saving state of the base station may be separately and/or independently configured with DRX configuration of a wireless device. The energy saving state may comprise a time duration if the wireless device is in DRX active time of a DRX configuration. The energy saving state may comprise a time duration if the wireless device is not in DRX active time of a DRX configuration. A DRX configuration may be implemented, for example, as described with respect to FIG. 29A and/or FIG. 29B (e.g., with or without wake-up/go-to-sleep indication). The energy saving state may comprise a second time duration if the base station stops the receiving uplink signals.

The messages may comprise configuration parameters of a search space for sending/transmitting the DCI comprising the energy saving indication. The search space may be a type 0 common search space, wherein the configuration parameters is comprised in MIB message, and/or the base station sends/transmits the MIB message using/via a PBCH indicating system information of the base station. The search space may be a type 0 common search space, wherein the configuration parameters is comprised in SIB1 message, and/or the base station transmits the SIB1 message (e.g., scheduled by a physical downlink control channel) comprising/indicating at least one of information for evaluating if a wireless device is allowed to access a cell of the base station, information for scheduling of other system information, radio resource configuration information that is common for all wireless devices, and/or barring information used/applied to access control. The search space may be a type 2 common search space, wherein the type 2 common search space is used for downlink paging message sending/transmission. The search space may be a type 2A common search space, wherein the type 2A common search space is used for notifying the paging early indication and TRS availability indication for one or more wireless devices. The search space may be a type 3 common search space, wherein the type 3 common search space is used for sending/transmission, via a cell, of a second group common DCI with CRC bits scrambled by at least one of INT-RNTI/SFI-RNTI/CI-RNTI/TPC-PUSCH-RNTI/TPC-PUCCH-RNTI/TPC-SRS-RNTI. Based on/in response to the cell being a primary cell of a plurality of cells of the base station, the type 3 common search space may be used for sending/transmission of a second group common DCI with CRC bits scrambled by at least one of PS-RNTI/C-RNTI/MCS-C-RNTI/CS-RNTI.

The configuration parameters may comprise a RNTI for sending/transmission of the DCI comprising the energy saving indication, wherein the DCI is a group common DCI. The base station may send/transmit the DCI comprising the energy saving indication based on CRC bits of the DCI being scrambled by the RNTI. DCI may comprise the same DCI format as a DCI format 1_0. The RNTI associated with the DCI may be different from a C-RNTI identifying a specific wireless device. DCI may comprise the same DCI format comprising as at least one of DCI format 2_0 for indication of slot format, available RB sets, channel occupancy time (COT) duration and search space set group switching, DCI format 2_1 for indication of downlink pre-emption, DCI format 2_4 for indication of uplink cancellation, DCI format 2_6 for indication of power saving information outside DRX active time for one or more wireless devices, and/or DCI format 2_7 for notifying the paging early indication and TRS availability indication for one or more wireless devices. The RNTI associated with the DCI may be different from comprising a slot format indication RNTI (SFI-RNTI) associated with the DCI format 2_0, an interruption RNTI (INT RNTI) associated with DCI format 2_1, a cancellation RNTI (CI-RNTI) associated with the DCI format 2_4, a power saving RNTI (PS-RNTI) associated with the DCI format 2_6, and/or a paging early indication RNTI (PEI-RNTI) associated with the DCI format 2 7.

The configuration parameters may comprise a PDCCH monitoring periodicity value for the search space, wherein the PDCCH monitoring periodicity value indicates a plurality/number/quantity of slots between two contiguous transmissions of two DCIs for the energy saving indication. The base station may send/transmit the DCI at a beginning slot of the plurality/number/quantity of slots. DCI may comprise a DCI field indicating a total quantity/number of third PRBs. DCI field may indicate a ratio between a total quantity/number of the third PRBs and a total quantity/number of the second PRBs. DCI field may indicate a starting PRB of the third PRBs within the second PRBs. A base station may send/transmit the DCI at a first slot. The base station may switch (e.g., based on transmitting the DCI at the first slot), for example, from the second PRBs to the third PRBs on the BWP at a second slot, wherein a time gap between the first slot and the second slot is greater than a time threshold for the application of a switch/transition from the non-energy-saving state to the energy saving state. The switching may comprise sending/transmitting downlink signals using/via the third PRBs, and/or stopping sending/transmitting downlink signals using/via PRBs located outside of the third PRBs and within the second PRBs.

The time threshold may be configured in the messages. The time threshold may be smaller than a second time gap for switching active BWP from the BWP to a second BWP of the cell. A base station (and/or the wireless device) may maintain an active state of the BWP in response to switching, from the second PRBs to the third PRBs on the BWP, based on the DCI. The wireless device may send/transmit to the base station, a RRC message indicating the time threshold. The RRC message may comprise wireless device capability information comprising the time threshold. The RRC message may comprise wireless device assistance information comprising the time threshold. The base station may send/transmit the periodic RSs using/via the at least one PRB based on/in response to the at least one PRB comprising the starting PRB and/or the starting PRB being located within the third PRBs.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising transmitting, by a base station, at least one parameter indicating a starting physical resource block (PRB) of a plurality of first physical resource blocks (PRBs), for transmission of periodic reference signals (RSs), within a bandwidth part (BWP), wherein the BWP comprises a plurality of second PRBs.

Clause 2. The method of clause 1, further comprising transmitting a first periodic reference signal (RS) via the plurality of first PRBs of the BWP.

Clause 3. The method of any one of clauses 1 and 2, further comprising transmitting downlink control information (DCI) indicating a reduced bandwidth of the BWP.

Clause 4. The method of any one of clauses 1-3, further comprising transmitting, based on the DCI, a second periodic RS via at least one PRB that is comprised in the plurality of first PRBs and within the reduced bandwidth of the BWP.

Clause 5. The method of any one of clauses 1-4, further comprising generating a signal sequence for the second periodic RS.

Clause 6. The method of any one of clauses 1-5, further comprising mapping the signal sequence to a plurality of resource elements (REs) of the at least one PRB for transmission of the second periodic RS.

Clause 7. The method of any one of clauses 1-6, wherein the second periodic RS comprises at least one of: at least one periodic channel state information reference signal (CSI-RS); or at least one synchronization signal block (SSB).

Clause 8. The method of any one of clauses 1-7, wherein the DCI comprises indication of a transition of the base station from a non-energy-saving state to an energy saving state.

Clause 9. The method of any one of clauses 1-8, wherein the transmitting the first periodic RS via the plurality of first PRBs is based on the base station being in a non-energy-saving state.

Clause 10. The method of any one of clauses 1-9, wherein the reduced bandwidth of the BWP comprises a plurality of third PRBs, and wherein the at least one parameter indicates that the plurality of second PRBs comprises the plurality of third PRBs and that the plurality of third PRBs are used for transmission via the BWP in an energy saving state.

Clause 11. The method of any one of clauses 1 - 10, wherein the non-energy-saving state comprises a time duration in which: the base station transmits downlink signals with: a first transmission power; and a first bandwidth comprising the second PRBs; and the base station receives uplink signals.

Clause 12. The method of any one of clauses 1 - 11, wherein the downlink signals comprise at least one of: at least one synchronization signal block (SSB); system information blocks (SIBs); a physical downlink shared channel (PDSCH) signal; a physical downlink control channel (PDCCH) signal; a channel state information reference signal (CSI-RS); or a downlink demodulation reference signal (DM-RS).

Clause 13. The method of any one of clauses 1 - 12, wherein the uplink signals comprise at least one of: channel state information (CSI) reports; a physical uplink shared channel (PUSCH) signal; a physical uplink control channel (PUCCH) signal; a sounding reference signal (SRS); or a random access channel (RACH) signal.

Clause 14. The method of any one of clauses 1 - 13, further comprising transitioning, based on the transmitting the DCI, the base station from a non-energy-saving state to the energy saving state.

Clause 15. The method of any one of clauses 1 - 14, wherein the reduced bandwidth of the BWP comprises a plurality of third PRBs, and wherein a starting PRB of the plurality of second PRBs and a starting PRB of the plurality of third PRBs have a same PRB index.

Clause 16. The method of any one of clauses 1 - 15, further comprising switching, based on transmitting the DCI in a first slot, a bandwidth of the BWP to the reduced bandwidth of the BWP in a second slot, wherein a time gap between the first slot and the second slot is greater than a time threshold for a transition from a non-energy-saving state to an energy saving state.

Clause 17. The method of any one of clauses 1 - 16, wherein the transmitting the second periodic RS via the at least one PRB is based on the at least one PRB comprising the starting PRB.

Clause 18. The method of any one of clauses 1 - 17, wherein the reduced bandwidth of the BWP comprises a plurality of third PRBs, wherein the second periodic RS transmitted via the at least one PRB corresponds to a first sequence portion of the second periodic RS, and wherein the method further comprises dropping a second sequence portion of the second periodic RS corresponding to at least one PRB outside of the plurality of third PRBs.

Clause 19. The method of any one of clauses 1 - 18, wherein the second periodic RS is associated with at least one of: a channel state information reference signal (CSI-RS) resource index identifying the second periodic RS; parameters of time and frequency resources for mapping the second periodic RS; at least one power control parameter; a scrambling identifier; a periodicity and offset indicator; or a quasi-correction information indication.

Clause 20. The method of any one of clauses 1 - 19, wherein the parameters of time and frequency resources for mapping the second periodic RS comprise at least one of: indications of one or more subcarriers of a PRB for the second periodic RS; indication of a quantity of ports for the second periodic RS; indication of a starting orthogonal frequency division multiplexing (OFDM) symbol in a slot for the second periodic RS; a code-division multiplexing (CDM) type indication; a density indication; or a frequency band indication.

Clause 21. The method of any one of clauses 1 - 20, wherein the frequency band indication indicates: the starting PRB of the first PRBs, of the BWP, for the second periodic RS; and a quantity of the plurality of first PRBs for the second periodic RS.

Clause 22. The method of any one of clauses 1 - 21, wherein the transmitting the at least one parameter comprises transmitting a radio resource control (RRC) message comprising the at least one parameter.

Clause 23. The method of any one of clauses 1 - 22, wherein the reduced bandwidth of the BWP comprises a plurality of third PRBs, and wherein a total number of the third PRBs is preconfigured as a fixed value by a radio resource control (RRC) message

Clause 24. The method of any one of clauses 1 - 23, wherein the reduced bandwidth of the BWP comprises a plurality of third PRBs, and wherein the second PRBs and the third PRBs have a same frequency center.

Clause 25. The method of any one of clauses 1 - 24, wherein the reduced bandwidth of the BWP comprises a plurality of third PRBs, and wherein the second PRBs and the third PRBs are configured with a same numerology.

Clause 26. The method of any one of clauses 1 - 25, wherein the reduced bandwidth of the BWP comprises a plurality of third

PRBs, and wherein the third PRBs comprise a smaller number of PRBs than the second PRBs.

Clause 27. The method of any one of clauses 1 - 26, wherein the reduced bandwidth of the BWP comprises a plurality of third PRBs, and wherein the energy saving state comprises a second time duration in which the base station transmits the downlink signals within the third PRBs of the BWP.

Clause 28. A base station comprising: one or more processors; and memory storing instructions that, when executed by the one or more processors, cause the base station to perform the method of any one of clauses 1 - 27.

Clause 29. A system comprising: a base station configured to perform the method of any one of clauses 1 - 27; and a wireless device configured to receive the at least one parameter.

Clause 30. A computer-readable medium storing instructions that, when executed, cause performance of the method of any one of clauses 1 - 27.

Clause 31. A method comprising receiving, by a wireless device, at least one message indicating a starting physical resource block (PRB) of a plurality of physical resource blocks (PRBs), for transmission of periodic reference signals (RSs), within a bandwidth part (BWP).

Clause 32. The method of clause 31, further comprising receiving a first periodic reference signal (RS) via the plurality of PRBs of the BWP.

Clause 33. The method of any of clauses 31 and 32, further comprising receiving downlink control information (DCI) indicating a reduced bandwidth of the BWP.

Clause 34. The method of any of clauses 31 - 33, further comprising based on the reduced bandwidth of the BWP: skipping reception of a second periodic RS; or receiving at least a portion of the second periodic RS via at least one PRB that is comprised in the plurality of PRBs of the BWP and within the reduced bandwidth of the BWP.

Clause 35. The method of any of clauses 31 - 34, further comprising decoding a signal sequence of the at least a portion of the second periodic RS mapped to a plurality of resource elements (REs) of the at least one PRB.

Clause 36. The method of any of clauses 31 - 35, wherein the skipping reception of the second periodic RS is based on a size of the reduced bandwidth of the BWP being below a threshold.

Clause 37. The method of any of clauses 31 - 36, wherein the receiving the at least a portion of the second periodic RS is based on a size of the reduced bandwidth of the BWP being above a threshold.

Clause 38. A wireless device comprising: one or more processors; and memory storing instructions that, when executed by the one or more processors, cause the wireless device to perform the method of any of clauses 31 - 37.

Clause 39. A system comprising: a wireless device configured to perform the method of any of clauses 31 - 37; and a base station configured to transmit the at least one RRC message.

Clause 40. A computer-readable medium storing instructions that, when executed, cause performance of the method of any of clauses 31 - 37.

Clause 41. A method comprising transmitting, by a base station, at least one radio resource control (RRC) message indicating a starting physical resource block (PRB) of a plurality of physical resource blocks (PRBs), for transmission of periodic reference signals (RSs), within a bandwidth part (BWP).

Clause 42. The method of clause 41, further comprising transmitting a first periodic reference signal (RS) via the plurality of PRBs of the BWP.

Clause 43. The method of any of clauses 41 and 42, further comprising transmitting downlink control information (DCI) indicating a reduced bandwidth of the BWP.

Clause 44. The method of any of clauses 41 - 43, further comprising based on the reduced bandwidth of the BWP: dropping transmission of a second periodic RS; or transmitting at least a portion of the second periodic RS via at least one PRB that is comprised in the plurality of PRBs of the BWP and within the reduced bandwidth of the BWP.

Clause 45. The method of any of clauses 41 - 44, further comprising mapping a signal sequence of the at least a portion of the second periodic RS to a plurality of resource elements (REs) of the at least one PRB.

Clause 46. The method of any of clauses 41 - 45, wherein the dropping transmission of the second periodic RS is based on a size of the reduced bandwidth of the BWP being below a threshold.

Clause 47. The method of any of clauses 41 - 46, wherein the transmitting the at least a portion of the second periodic RS is based on a size of the reduced bandwidth of the BWP being above a threshold.

Clause 48. A base station comprising: one or more processors; and memory storing instructions that, when executed by the one or more processors, cause the base station to perform the method of any of clauses 41 - 47.

Clause 49. A system comprising: a base station configured to perform the method of any of clauses 41 - 47; and a wireless device configured to receive the at least one RRC message.

Clause 50. A computer-readable medium storing instructions that, when executed, cause performance of the method of any of clauses 41 - 47.

Clause 51. A method comprising receiving, by a wireless device, at least one parameter indicating disabling of a time domain restriction for channel measurements.

Clause 52. The method of clause 51, further comprising obtaining, based on the at least one parameter, first channel measurements for a first channel state information (CSI) report, via a plurality of first reference signals (RSs) received in a plurality of slots, wherein the plurality of slots precede a first CSI reference resource associated with the first CSI report.

Clause 53. The method of any of clauses 51 and 52, further comprising determining enabling of the time domain restriction for the channel measurements, based on receiving downlink control information (DCI) comprising an energy saving indication.

Clause 54. The method of any of clauses 51 - 53, further comprising obtaining, based on the determining, second channel measurements for a second CSI report, via a plurality of second RSs received in a slot, wherein the slot precedes a second CSI reference resource associated with the second CSI report.

Clause 55. The method of any of clauses 51 - 54, further comprising transmitting the second CSI report.

Clause 56. A wireless device comprising: one or more processors; and memory storing instructions that, when executed by the one or more processors, cause the wireless device to perform the method of any of clauses 51 - 55.

Clause 57. A system comprising: a wireless device configured to perform the method of any of clauses 51 - 55; and a base station configured to transmit the at least one parameter.

Clause 58. A computer-readable medium storing instructions that, when executed, cause performance of the method of any of clauses 51 - 55.

Clause 59. A method comprising receiving, by a wireless device, at least one parameter indicating disabling of a time domain restriction for channel measurements.

Clause 60. The method of clause 59, further comprising receiving, in a first slot, downlink control information (DCI) comprising an energy saving indication.

Clause 61. The method of any of clauses 59 and 60, further comprising obtaining, based on the at least one parameter and the DCI, channel measurements for a channel state information (CSI) report, via a plurality of reference signals (RSs) received in a plurality of slots, wherein the plurality of slots comprise: a starting slot that is offset by a number of slots after the first slot; and an ending slot having a CSI reference resource associated with the CSI report.

Clause 62. The method of any of clauses 59 - 61, further comprising transmitting the CSI report.

Clause 63. A wireless device comprising: one or more processors; and memory storing instructions that, when executed by the one or more processors, cause the wireless device to perform the method of any of clauses 59 - 62.

Clause 64. A system comprising: a wireless device configured to perform the method of any of clauses 59 - 62; and a base station configured to transmit the at least one parameter.

Clause 65. A computer-readable medium storing instructions that, when executed, cause performance of the method of any of clauses 59 - 62.

Clause 66. A method comprising transmitting, by a base station, at least one radio resource control (RRC) message comprising at least one parameter of periodic channel state information reference signal (CSI-RS) resources, wherein the periodic CSI-RS resources comprise: a first periodic CSI-RS resource for tracking; and a second periodic CSI-RS resource for CSI reporting.

Clause 67. The method of clause 66, further comprising transmitting the periodic CSI-RS resources.

Clause 68. The method of any of clauses 66 and 67, further comprising transmitting downlink control information (DCI) comprising an energy saving indication.

Clause 69. The method of any of clauses 66 - 68, further comprising based on the transmitting the DCI: stopping the transmitting of the first periodic CSI-RS resource for tracking; and continuing the transmission of the second periodic CSI-RS resource for CSI reporting.

Clause 70. A base station comprising: one or more processors; and memory storing instructions that, when executed by the one or more processors, cause the base station to perform the method of any of clauses 66 - 69.

Clause 71. A system comprising: a base station configured to perform the method of any of clauses 66 - 69; and a wireless device configured to receive the at least one RRC message.

Clause 72. A computer-readable medium storing instructions that, when executed, cause performance of the method of any of clauses 66 - 69.

Clause 73. A method comprising transmitting, by a base station, at least one message comprising at least one configuration parameter of a channel state information reference signal (CSI-RS) resource set, wherein the CSI-RS resource set comprises a plurality of periodic CSI-RS resources.

Clause 74. The method of clause 73, further comprising transmitting the CSI-RS resource set via a cell.

Clause 75. The method of any of clauses 73 and 74, further comprising transmitting a command configured to drop a first portion of the periodic CSI-RS resources of the CSI-RS resource set.

Clause 76. The method of any of clauses 73 - 75, further comprising transmitting, based on the command and via the cell, a second portion of the periodic CSI-RS resources of the CSI-RS resource set, wherein the second portion of the periodic CSI-RS resources excludes the first portion of the periodic CSI-RS resources.

Clause 77. A base station comprising: one or more processors; and memory storing instructions that, when executed by the one or more processors, cause the base station to perform the method of any of clauses 73 - 76.

Clause 78. A system comprising: a base station configured to perform the method of any of clauses 73 - 76; and a wireless device configured to receive the at least one message.

Clause 79. A computer-readable medium storing instructions that, when executed, cause performance of the method of any of clauses 73 - 76.

A base station may perform a method comprising multiple operations. The base station may send (or transmit) at least one parameter indicating a starting physical resource block (PRB) of a plurality of first physical resource blocks (PRBs) within a bandwidth part (BWP) for transmission of periodic reference signals (RSs). The BWP may comprise a plurality of second PRBs. The base station may send (or transmit) the at least one parameter comprises by transmitting a radio resource control (RRC) message comprising the at least one parameter. The base station may send (or transmit) a first periodic reference signal (RS) via the plurality of first PRBs of the BWP. The base station may send (or transmit) the first periodic RS via the plurality of first PRBs based on the base station being in a non-energy-saving state. The base station may send (or transmit) downlink control information (DCI) indicating a reduced bandwidth of the BWP. The DCI may comprise indication of a transition of the base station from a non-energy-saving state to an energy saving state. The reduced bandwidth of the BWP may comprise a plurality of third PRBs, and the at least one parameter may indicate that the plurality of second PRBs comprises the plurality of third PRBs and that the plurality of third PRBs are used for transmission via the BWP in an energy saving state. The reduced bandwidth of the BWP may comprise a plurality of third PRBs, and a starting PRB of the plurality of second PRBs and a starting PRB of the plurality of third PRBs may comprise a same PRB index. The non-energy-saving state may comprise a time duration in which the base station transmits downlink signals with a first transmission power and/or a first bandwidth comprising the second PRBs, and/or the base station receives uplink signals. The downlink signals may comprise at least one of at least one synchronization signal block (SSB), system information blocks (SIBs), a physical downlink shared channel (PDSCH) signal, a physical downlink control channel (PDCCH) signal, a channel state information reference signal (CSI-RS), and/or a downlink demodulation reference signal (DM-RS). The uplink signals may comprise at least one of channel state information (CSI) reports, a physical uplink shared channel (PUSCH) signal, a physical uplink control channel (PUCCH) signal, a sounding reference signal (SRS), and/or a random access channel (RACH) signal. The base station may transition from a non-energy-saving state to the energy saving state based on the transmitting the DCI. The base station may switch from a bandwidth of the BWP to the reduced bandwidth of the BWP in a second slot based on transmitting the DCI in a first slot. A time gap between the first slot and the second slot may be greater than a time threshold for a transition from a non-energy-saving state to an energy saving state. The reduced bandwidth of the BWP may comprise a plurality of third PRBs, and a total number of the third PRBs may be preconfigured as a fixed value by a radio resource control (RRC) message. The reduced bandwidth of the BWP may comprise a plurality of third PRBs, and the second PRBs and the third PRBs may comprise a same frequency center. The reduced bandwidth of the BWP may comprise a plurality of third PRBs, and the second PRBs and the third PRBs may be configured with a same numerology. The reduced bandwidth of the BWP may comprise a plurality of third PRBs, and the third PRBs may comprise a smaller number of PRBs than the second PRBs. The reduced bandwidth of the BWP may comprise a plurality of third PRBs, and the energy saving state may comprise a second time duration in which the base station may send (or transmit) the downlink signals within the third PRBs of the BWP. The base station may send (or transmit) a second periodic RS via at least one PRB based on the DCI. The base station may send (or transmit) the second periodic RS via the at least one PRB based on the at least one PRB comprising the starting PRB. The second periodic RS may comprise at least one of at least one periodic channel state information reference signal (CSI-RS), and/or at least one synchronization signal block (SSB). The at least one PRB may be comprised in the plurality of first PRBs and within the reduced bandwidth of the BWP. The reduced bandwidth of the BWP may comprise a plurality of third PRBs, the second periodic RS transmitted via the at least one PRB may correspond to a first sequence portion of the second periodic RS, and the method further may comprise dropping a second sequence portion of the second periodic RS corresponding to at least one PRB outside of the plurality of third PRBs. The base station may generate a signal sequence for the second periodic RS, and/or map the signal sequence to a plurality of resource elements (REs) of the at least one PRB for transmission of the second periodic RS. The second periodic RS may be associated with at least one of a channel state information reference signal (CSI-RS) resource index identifying the second periodic RS, parameters of time and frequency resources for mapping the second periodic RS, at least one power control parameter, a scrambling identifier, a periodicity and offset indicator, and/or a quasi-correction information indication. The parameters of time and frequency resources for mapping the second periodic RS may comprise at least one of indications of one or more subcarriers of a PRB for the second periodic RS, indication of a quantity of ports for the second periodic RS, indication of a starting orthogonal frequency division multiplexing (OFDM) symbol in a slot for the second periodic RS, a code-division multiplexing (CDM) type indication, a density indication and/or a frequency band indication. The frequency band indication may indicate the starting PRE of the first PRBs of the BWP for the second periodic RS, and/or a quantity of the plurality of first PRBs for the second periodic RS. The base station may comprise one or more processors; and memory storing instructions that, when executed by the one or more processors, cause the base station to perform the described method, additional operations and/or include the additional elements. A system may comprise the base station configured to perform the described method, additional operations and/or include the additional elements; and a wireless device to configured to receive one or more messages. A computer-readable medium may store instructions that, when executed, cause performance of the described method, additional operations and/or include the additional elements. A wireless device may perform a corresponding method comprising multiple operations. The wireless device may perform a corresponding method, for example, by receiving the at least one parameter.

A wireless device may perform a method comprising multiple operations. The wireless device may receive at least one message indicating a starting physical resource block (PRE) of a plurality of physical resource blocks (PRBs) within a bandwidth part (BWP) for transmission of periodic reference signals (RSs). The wireless device may receive a first periodic reference signal (RS) via the plurality of PRBs of the BWP. The wireless device may receive downlink control information (DCI) indicating a reduced bandwidth of the BWP. Based on the reduced bandwidth of the BWP, the wireless device may skip reception of a second periodic RS, and/or receive at least a portion of the second periodic RS via at least one PRB that is comprised in the plurality of PRBs of the BWP and within the reduced bandwidth of the BWP. The wireless device may skip the reception of the second periodic RS based on a size of the reduced bandwidth of the BWP being below a threshold. The wireless device may receive the at least a portion of the second periodic RS is based on a size of the reduced bandwidth of the BWP being above a threshold. The wireless device may decode a signal sequence of the at least a portion of the second periodic RS mapped to a plurality of resource elements (REs) of the at least one PRB. The wireless device may comprise one or more processors; and memory storing instructions that, when executed by the one or more processors, cause the wireless device to perform the described method, additional operations and/or include the additional elements. A system may comprise the wireless device configured to perform the described method, additional operations and/or include the additional elements; and a base station configured to send (or transmit) one or more messages. A computer-readable medium may store instructions that, when executed, cause performance of the described method, additional operations and/or include the additional elements. A base station may perform a corresponding method comprising multiple operations. The base station may perform a corresponding method, for example, by sending (or transmitting) the at least one message.

A base station may perform a method comprising multiple operations. The base station may send (or transmit) at least one radio resource control (RRC) message indicating a starting physical resource block (PRB) of a plurality of physical resource blocks (PRBs), for transmission of periodic reference signals (RSs), within a bandwidth part (BWP). The base station may send (or transmit) a first periodic reference signal (RS) via the plurality of PRBs of the BWP. The base station may send (or transmit) downlink control information (DCI) indicating a reduced bandwidth of the BWP. Based on the reduced bandwidth of the BWP, the base station may drop transmission of a second periodic RS and/or send (or transmit) at least a portion of the second periodic RS via at least one PRB that is comprised in the plurality of PRBs of the BWP and within the reduced bandwidth of the BWP. The base station may drop the transmission of the second periodic RS based on a size of the reduced bandwidth of the BWP being below a threshold. The base station may send (or transmit) the at least a portion of the second periodic RS based on a size of the reduced bandwidth of the BWP being above a threshold. The base station may map a signal sequence of the at least a portion of the second periodic RS to a plurality of resource elements (REs) of the at least one PRB. The base station may comprise one or more processors; and memory storing instructions that, when executed by the one or more processors, cause the base station to perform the described method, additional operations and/or include the additional elements. A system may comprise the base station configured to perform the described method, additional operations and/or include the additional elements; and a wireless device to configured to receive one or more RRC messages. A computer-readable medium may store instructions that, when executed, cause performance of the described method, additional operations and/or include the additional elements. A wireless device may perform a corresponding method comprising multiple operations. The wireless device may perform a corresponding method, for example, by receiving the at least one RRC message.

A wireless device may perform a method comprising multiple operations. The wireless device may receive at least one parameter indicating disabling of a time domain restriction for channel measurements. The wireless device may obtain, based on the at least one parameter, first channel measurements for a first channel state information (CSI) report, via a plurality of first reference signals (RSs) received in a plurality of slots, wherein the plurality of slots precede a first CSI reference resource associated with the first CSI report. The wireless device may determine enabling of the time domain restriction for the channel measurements, based on receiving downlink control information (DCI) comprising an energy saving indication. The wireless device may obtain, based on the determining, second channel measurements for a second CSI report, via a plurality of second RSs received in a slot, wherein the slot precedes a second CSI reference resource associated with the second CSI report. The wireless device may transmit the second CSI report. The wireless device may comprise one or more processors; and memory storing instructions that, when executed by the one or more processors, cause the wireless device to perform the described method, additional operations and/or include the additional elements. A system may comprise the wireless device configured to perform the described method, additional operations and/or include the additional elements; and a base station configured to send (or transmit) one or more messages. A computer-readable medium may store instructions that, when executed, cause performance of the described method, additional operations and/or include the additional elements. A base station may perform a corresponding method comprising multiple operations. The base station may perform a corresponding method, for example, by sending (or transmitting) the at least one parameter.

A wireless device may perform a method comprising multiple operations. The wireless device may receive at least one parameter indicating disabling of a time domain restriction for channel measurements. The wireless device may receive, in a first slot, downlink control information (DCI) comprising an energy saving indication. The wireless device may obtain, based on the at least one parameter and the DCI, channel measurements for a channel state information (CSI) report, via a plurality of reference signals (RSs) received in a plurality of slots, wherein the plurality of slots comprise: a starting slot that is offset by a number of slots after the first slot; and an ending slot having a CSI reference resource associated with the CSI report. The wireless device may transmit the CSI report. The wireless device may comprise one or more processors; and memory storing instructions that, when executed by the one or more processors, cause the wireless device to perform the described method, additional operations and/or include the additional elements. A system may comprise the wireless device configured to perform the described method, additional operations and/or include the additional elements; and a base station configured to send (or transmit) one or more messages. A computer-readable medium may store instructions that, when executed, cause performance of the described method, additional operations and/or include the additional elements. A base station may perform a corresponding method comprising multiple operations. The base station may perform a corresponding method, for example, by sending (or transmitting) the at least one parameter.

A base station may perform a method comprising multiple operations. The base station may send (or transmit) at least one radio resource control (RRC) message comprising at least one parameter of periodic channel state information reference signal (CSI-RS) resources, wherein the periodic CSI-RS resources comprise: a first periodic CSI-RS resource for tracking; and a second periodic CSI-RS resource for CSI reporting. The base station may send (or transmit) the periodic CSI-RS resources. The base station may send (or transmit) downlink control information (DCI) comprising an energy saving indication. Based on the transmitting the DCI, the base station may stop the transmitting of the first periodic CSI-RS resource for tracking; and continue the transmission of the second periodic CSI-RS resource for CSI reporting. The base station may comprise one or more processors; and memory storing instructions that, when executed by the one or more processors, cause the base station to perform the described method, additional operations and/or include the additional elements. A system may comprise the base station configured to perform the described method, additional operations and/or include the additional elements; and a wireless device to configured to receive one or more RRC messages. A computer-readable medium may store instructions that, when executed, cause performance of the described method, additional operations and/or include the additional elements. A wireless device may perform a corresponding method comprising multiple operations. The wireless device may perform a corresponding method, for example, by receiving the at least one RRC message.

A base station may perform a method comprising multiple operations. The base station may send (or transmit) at least one message comprising at least one configuration parameter of a channel state information reference signal (CSI-RS) resource set, wherein the CSI-RS resource set comprises a plurality of periodic CSI-RS resources. The base station may send (or transmit) the CSI-RS resource set via a cell. The base station may send (or transmit) a command configured to drop a first portion of the periodic CSI-RS resources of the CSI-RS resource set. The base station may send (or transmit), based on the command and via the cell, a second portion of the periodic CSI-RS resources of the CSI-RS resource set, wherein the second portion of the periodic CSI-RS resources excludes the first portion of the periodic CSI-RS resources. The base station may comprise one or more processors; and memory storing instructions that, when executed by the one or more processors, cause the base station to perform the described method, additional operations and/or include the additional elements. A system may comprise the base station configured to perform the described method, additional operations and/or include the additional elements; and a wireless device to configured to receive one or more RRC messages. A computer-readable medium may store instructions that, when executed, cause performance of the described method, additional operations and/or include the additional elements. A wireless device may perform a corresponding method comprising multiple operations. The wireless device may perform a corresponding method, for example, by receiving the at least one message.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, or other 3GPP or non-3GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, or other 3GPP or non-3GPP technology.

One or more parameters, fields, and/or Information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

**1.** A method comprising:

transmitting, by a base station, at least one parameter indicating a starting physical resource block (PRB) of a plurality of first physical resource blocks (PRBs), for transmission of periodic reference signals (RSs), within a bandwidth part (BWP), wherein the BWP comprises a plurality of second PRBs;
transmitting a first periodic reference signal (RS) via the plurality of first PRBs of the BWP;
transmitting downlink control information (DCI) indicating a reduced bandwidth of the BWP; and
transmitting, based on the DCI, a second periodic RS via at least one PRB that is comprised in the plurality of first PRBs and within the reduced bandwidth of the BWP.

**2.** The method of claim 1, further comprising:

generating a signal sequence for the second periodic RS; and
mapping the signal sequence to a plurality of resource elements (REs) of the at least one PRB for transmission of the second periodic RS.

**3.** The method of any one of claims 1-2, wherein the second periodic RS comprises at least one of:

at least one periodic channel state information reference signal (CSI-RS); or
at least one synchronization signal block (SSB).

**4.** The method of any one of claims 1-3, wherein the DCI comprises indication of a transition of the base station from a non-energy-saving state to an energy saving state.

**5.** The method of any one of claims 1-4, wherein the transmitting the first periodic RS via the plurality of first PRBs is based on the base station being in a non-energy-saving state.

**6.** The method of any one of claims 1-5, wherein the reduced bandwidth of the BWP comprises a plurality of third PRBs, and wherein the at least one parameter indicates that the plurality of second PRBs comprises the plurality of third PRBs and that the plurality of third PRBs are used for transmission via the BWP in an energy saving state.

**7.** The method of claim 6, further comprising transitioning, based on the transmitting the DCI, the base station from a non-energy-saving state to the energy saving state.

**8.** The method of any one of claims 1-7, wherein the reduced bandwidth of the BWP comprises a plurality of third PRBs, and wherein a starting PRB of the plurality of second PRBs and a starting PRB of the plurality of third PRBs have a same PRB index.

**9.** The method of any one of claims 1-8, further comprising:
switching, based on transmitting the DCI in a first slot, from a bandwidth of the BWP to the reduced bandwidth of the BWP in a second slot, wherein a time gap between the first slot and the second slot is greater than a time threshold for a transition from a non-energy-saving state to an energy saving state.

**10.** The method of any one of claims 1-9, wherein the transmitting the second periodic RS via the at least one PRB is based on the at least one PRB comprising the starting PRB.

**11.** The method of any one of claims 1-10, wherein the reduced bandwidth of the BWP comprises a plurality of third PRBs, wherein the second periodic RS transmitted via the at least one PRB corresponds to a first sequence portion of the second periodic RS, and wherein the method further comprises dropping a second sequence portion of the second periodic RS corresponding to at least one PRB outside of the plurality of third PRBs.

**12.** The method of any one of claims 1-11, wherein the second periodic RS is associated with at least one of:

a channel state information reference signal (CSI-RS) resource index identifying the second periodic RS;
parameters of time and frequency resources for mapping the second periodic RS;
at least one power control parameter;
a scrambling identifier;
a periodicity and offset indicator; or
a quasi-correction information indication.

**13.** A base station comprising:

one or more processors; and
memory storing instructions that, when executed by the one or more processors, cause the base station to perform the method of any one of claims 1-12.

**14.** A system comprising:

a base station configured to perform the method of any one of claims 1-12; and
a wireless device configured to receive the at least one parameter.

**15.** A computer-readable medium storing instructions that, when executed, cause performance of the method of any one of claims 1-12.

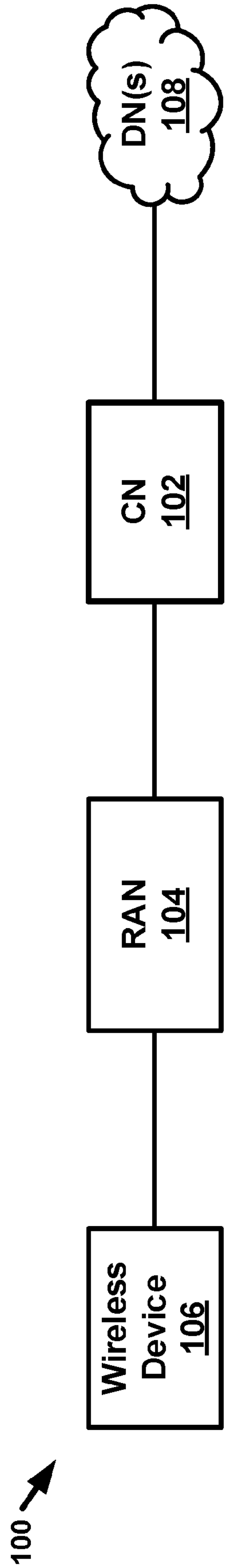
100
Wireless Device 106
RAN 104
CN 102
DN(s) 108

FIG. 1A

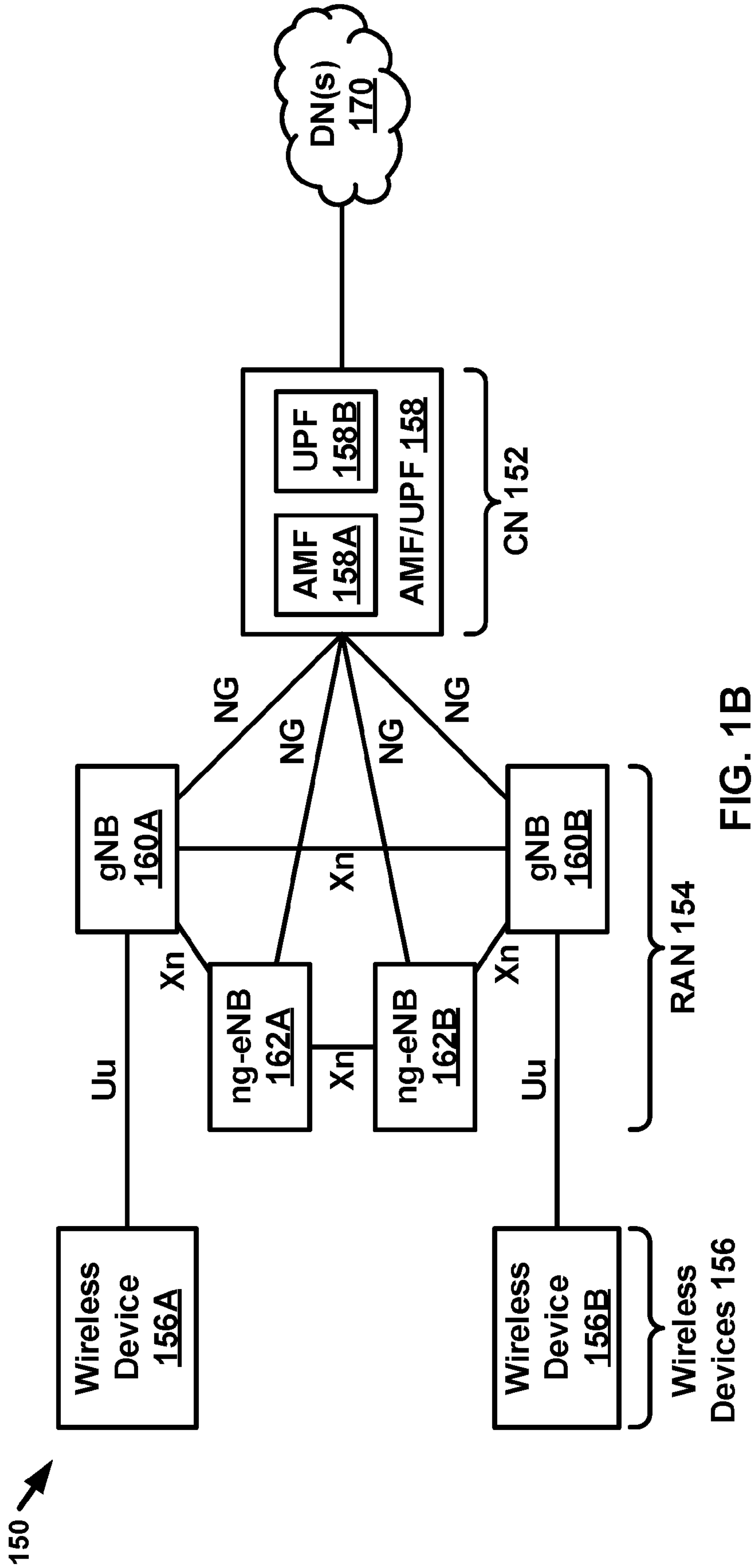
150
Wireless Device 156A
Wireless Device 156B
Wireless Devices 156
Uu
Uu
gNB 160A
gNB 160B
ng-eNB 162A
ng-eNB 162B
Xn
Xn
Xn
Xn
RAN 154
NG
NG
NG
NG
AMF 158A
UPF 158B
AMF/UPF 158
CN 152
DN(s) 170

FIG. 1B

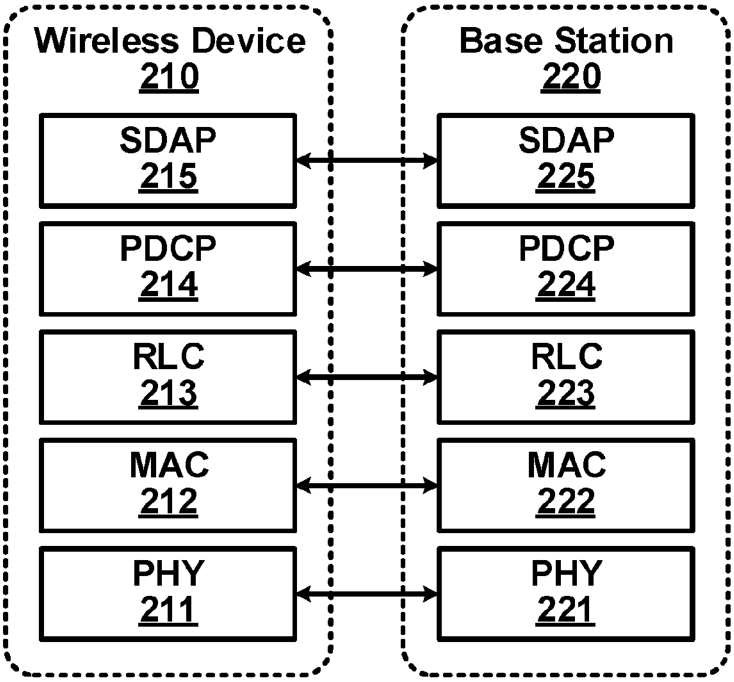
Wireless Device
210
SDAP
215
PDCP
214
RLC
213
MAC
212
PHY
211
Base Station
220
SDAP
225
PDCP
224
RLC
223
MAC
222
PHY
221

FIG. 2A

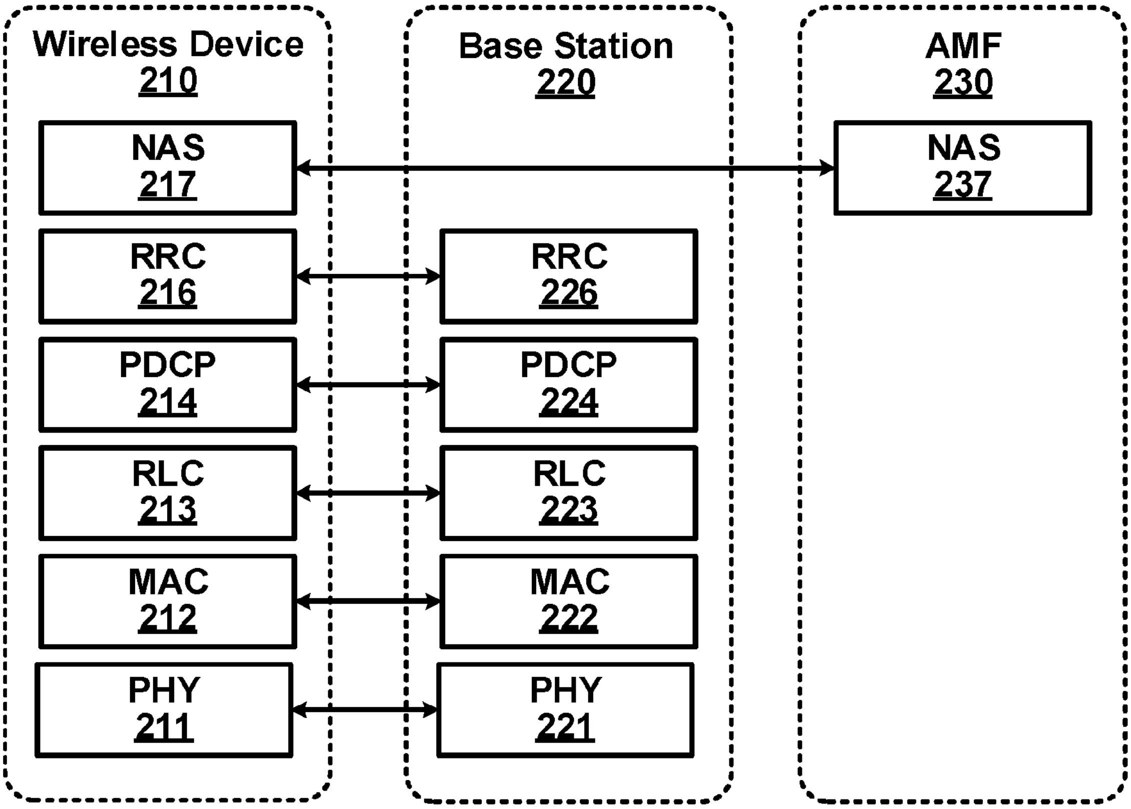
Wireless Device
210
NAS
217
RRC
216
PDCP
214
RLC
213
MAC
212
PHY
211
Base Station
220
RRC
226
PDCP
224
RLC
223
MAC
222
PHY
221
AMF
230
NAS
237

FIG. 2B

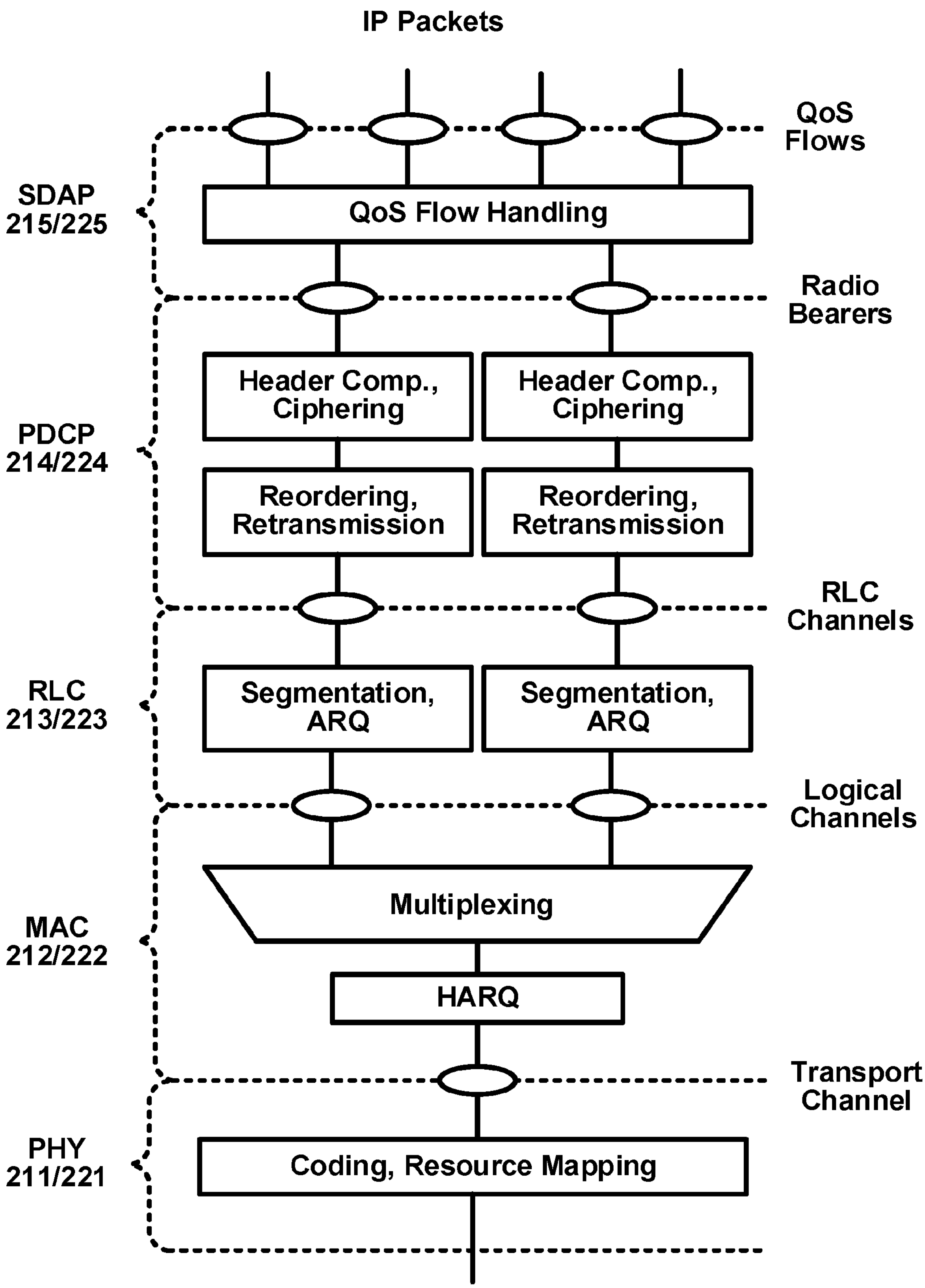
IP Packets
QoS Flows
SDAP 215/225
QoS Flow Handling
Radio Bearers
PDCP 214/224
Header Comp., Ciphering
Header Comp., Ciphering
Reordering, Retransmission
Reordering, Retransmission
RLC Channels
RLC 213/223
Segmentation, ARQ
Segmentation, ARQ
Logical Channels
MAC 212/222
Multiplexing
HARQ
Transport Channel
PHY 211/221
Coding, Resource Mapping

FIG. 3

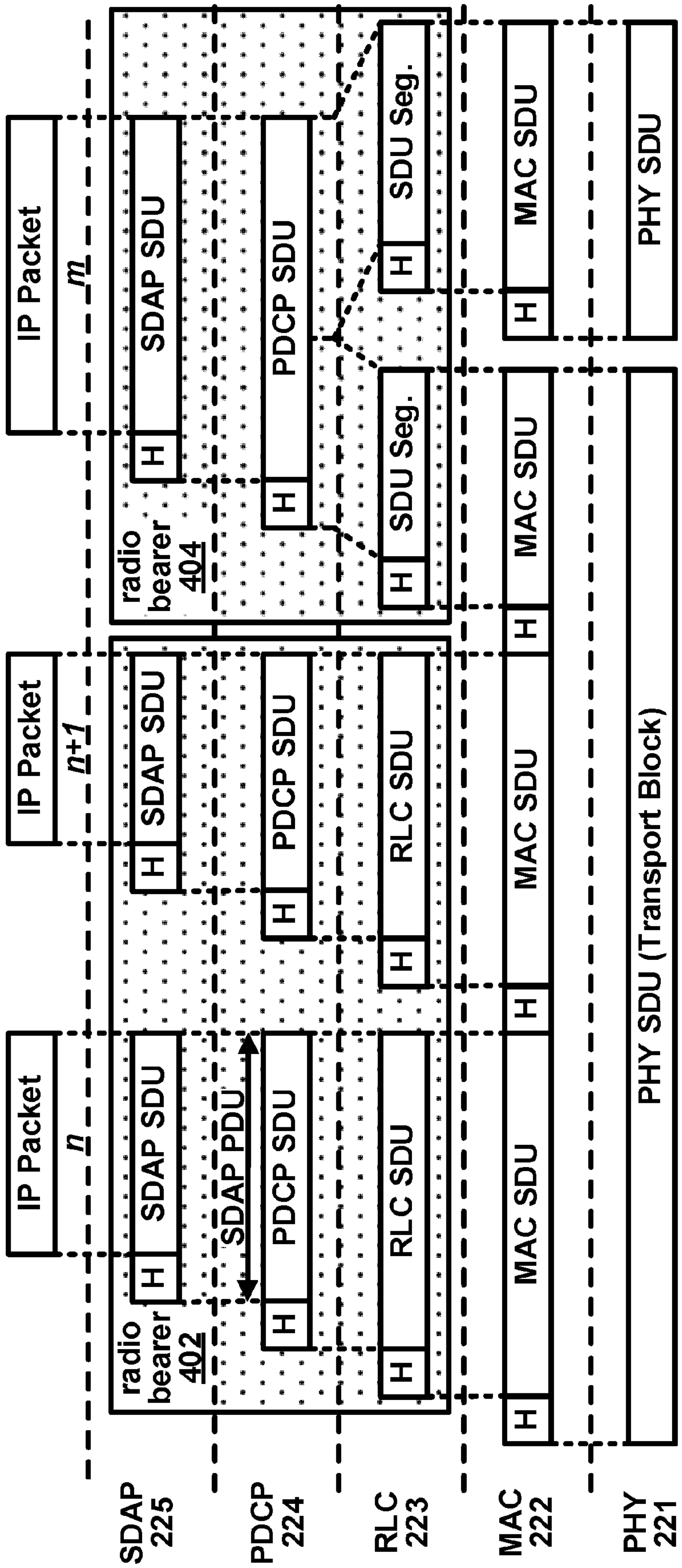

IP Packet n
IP Packet n+1
IP Packet m
SDAP 225
PDCP 224
RLC 223
MAC 222
PHY 221
radio bearer 402
radio bearer 404
H
SDAP SDU
SDAP PDU
PDCP SDU
RLC SDU
SDU Seg.
MAC SDU
PHY SDU (Transport Block)
PHY SDU


FIG. 4A

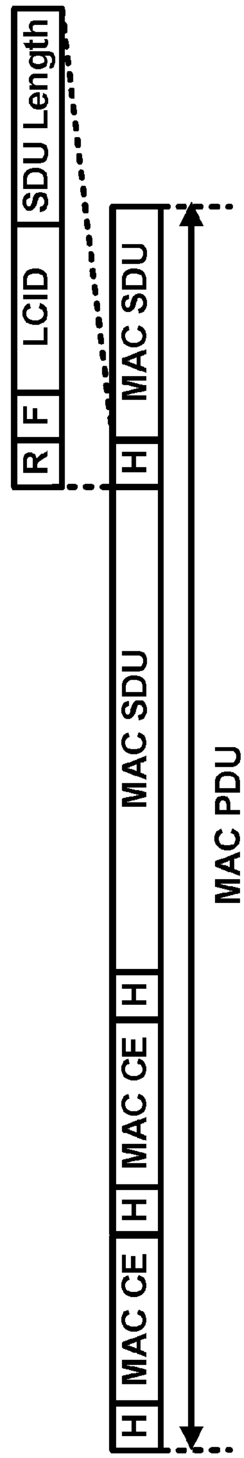

R
F
LCID
SDU Length
H
MAC CE
MAC SDU
MAC PDU


FIG. 4B

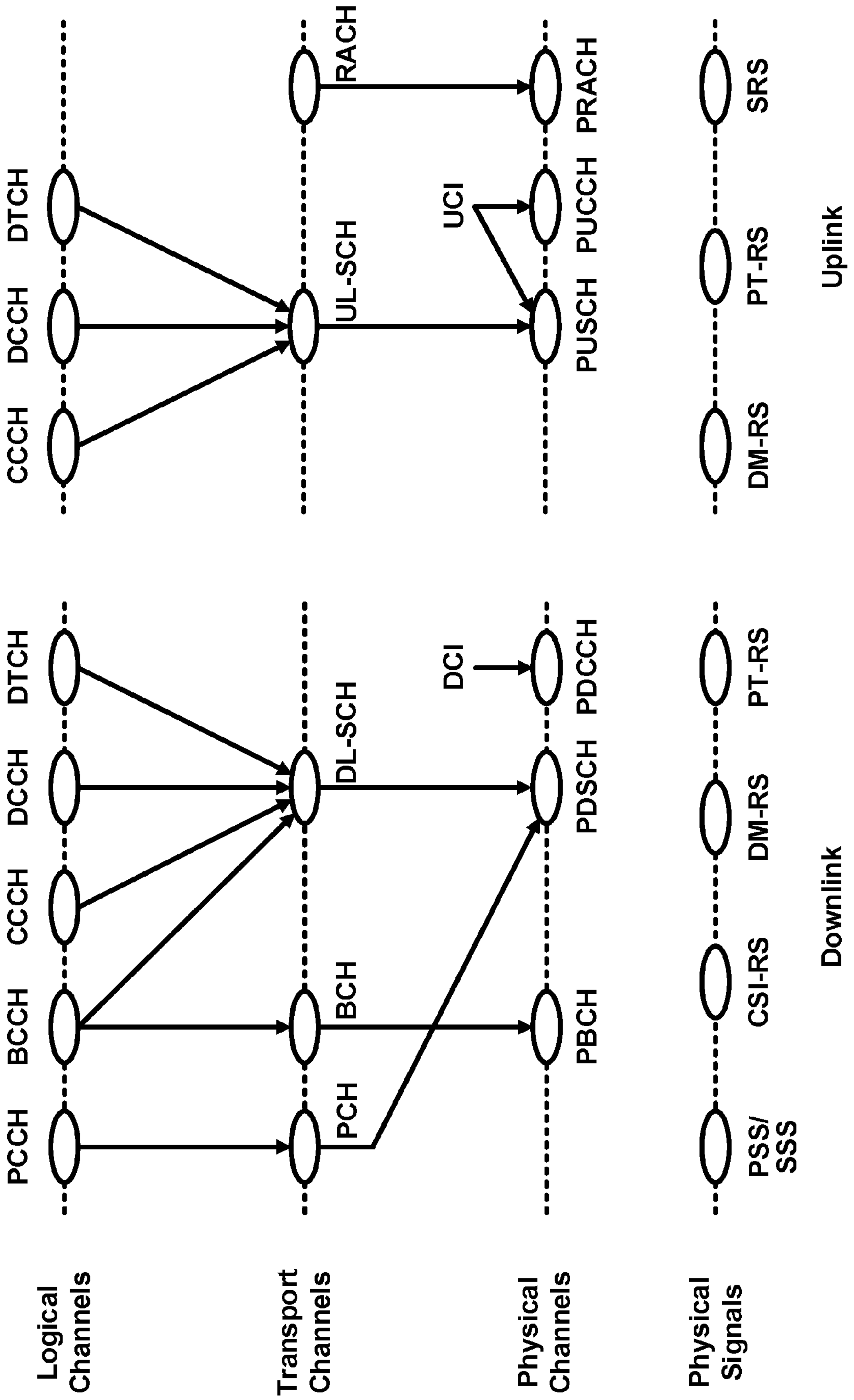
Logical Channels
Transport Channels
Physical Channels
Physical Signals
PCCH
BCCH
CCCH
DCCH
DTCH
PCH
BCH
DL-SCH
DCI
PBCH
PDSCH
PDCCH
PSS/SSS
CSI-RS
DM-RS
PT-RS
Downlink
CCCH
DCCH
DTCH
UL-SCH
RACH
UCI
PUSCH
PUCCH
PRACH
DM-RS
PT-RS
SRS
Uplink

FIG. 5A

FIG. 5B

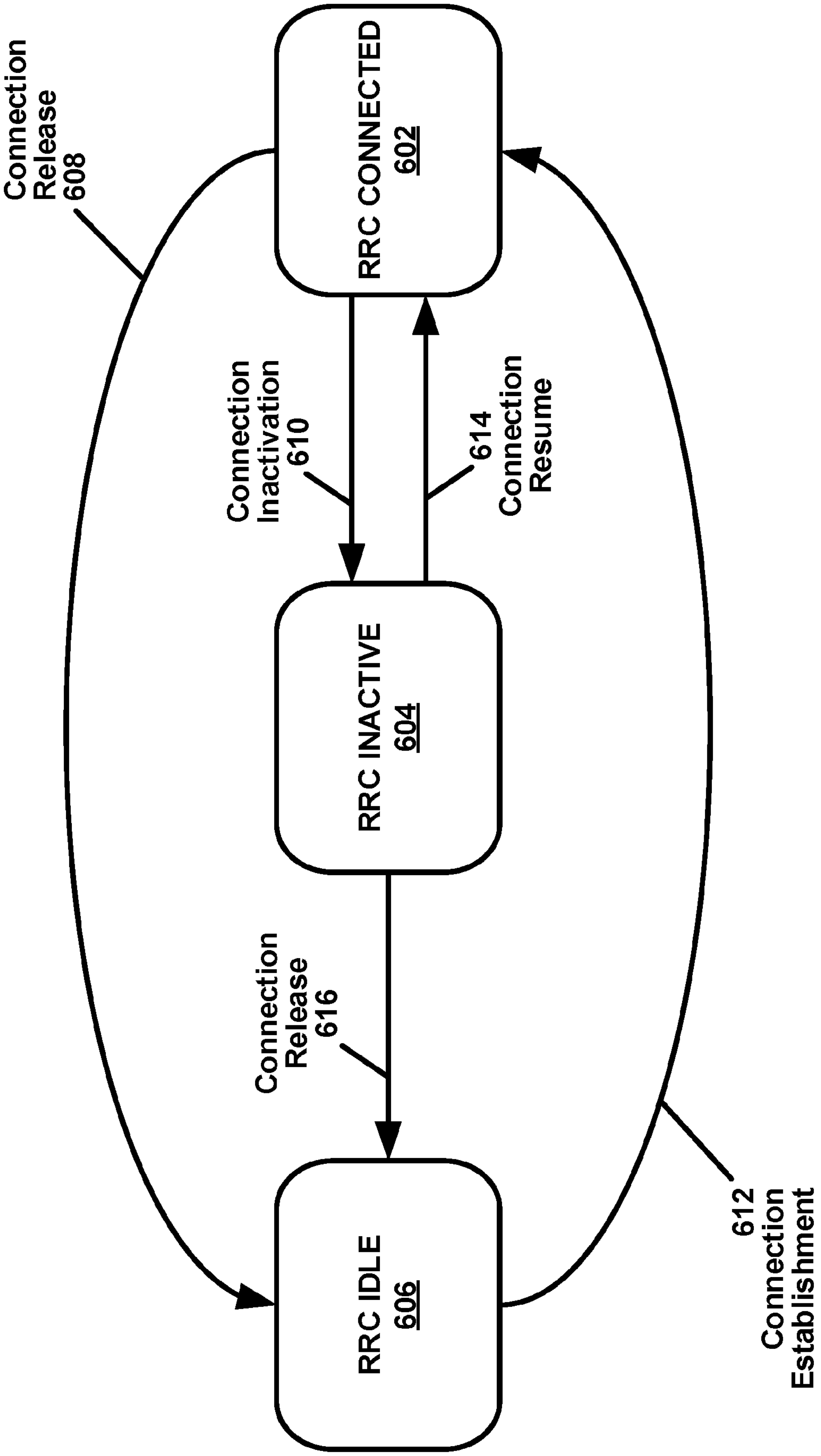
RRC CONNECTED
602
RRC INACTIVE
604
RRC IDLE
606
Connection Release 608
Connection Inactivation 610
612 Connection Establishment
614 Connection Resume
Connection Release 616

FIG. 6

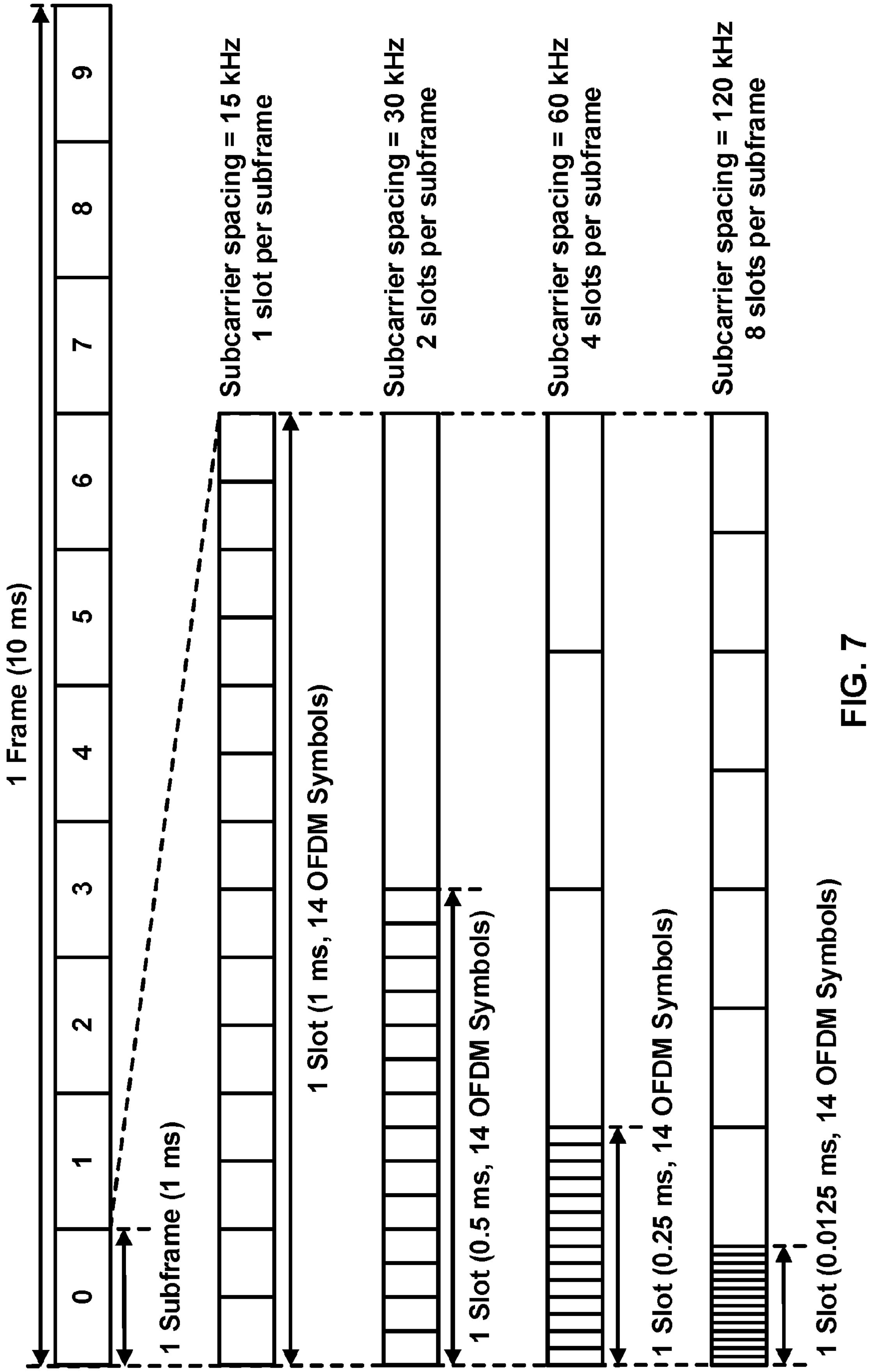
1 Frame (10 ms)
0
1
2
3
4
5
6
7
8
9
1 Subframe (1 ms)
Subcarrier spacing = 15 kHz
1 slot per subframe
1 Slot (1 ms, 14 OFDM Symbols)
Subcarrier spacing = 30 kHz
2 slots per subframe
1 Slot (0.5 ms, 14 OFDM Symbols)
Subcarrier spacing = 60 kHz
4 slots per subframe
1 Slot (0.25 ms, 14 OFDM Symbols)
Subcarrier spacing = 120 kHz
8 slots per subframe
1 Slot (0.0125 ms, 14 OFDM Symbols)

FIG. 7

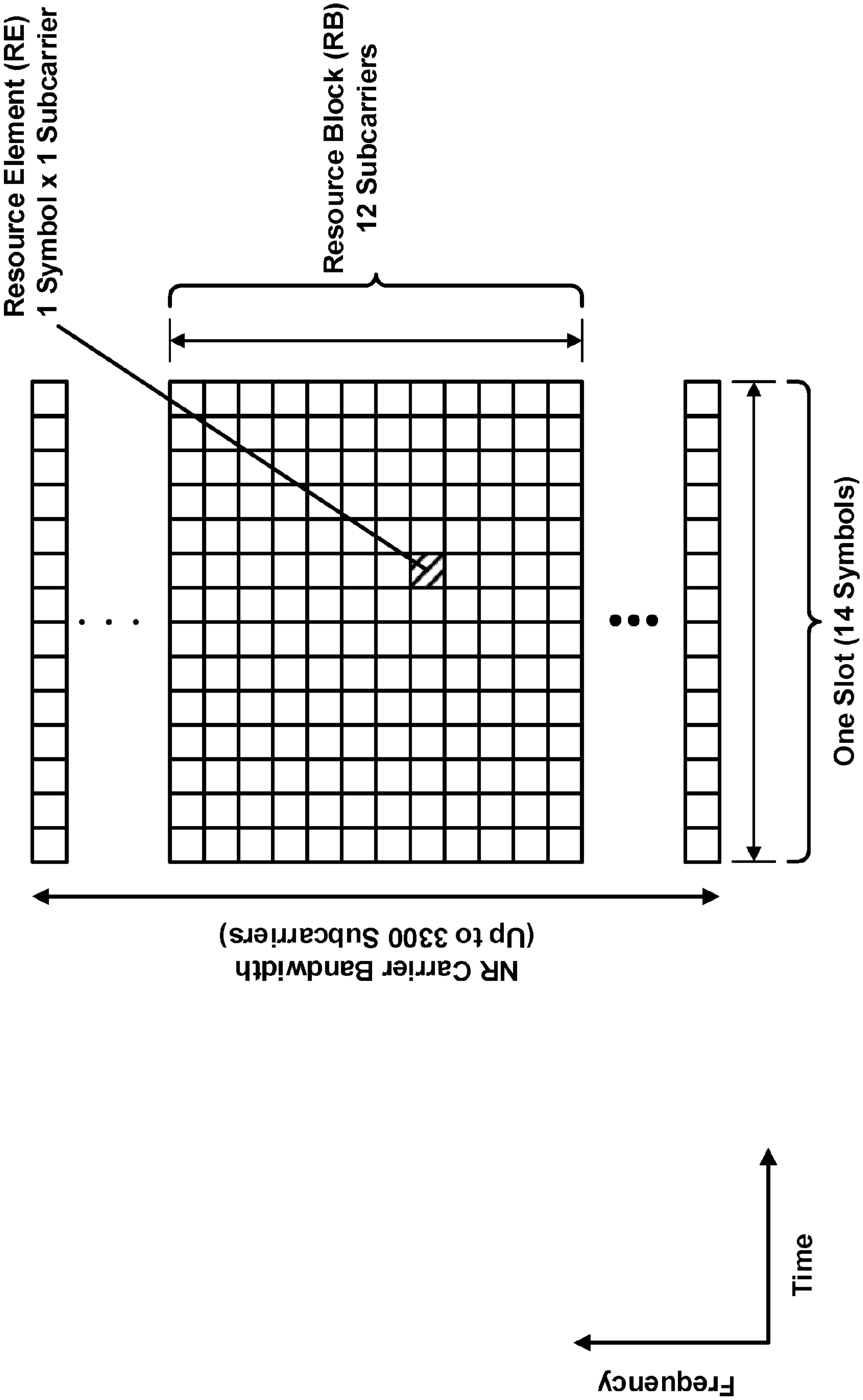
Resource Element (RE)
1 Symbol x 1 Subcarrier
Resource Block (RB)
12 Subcarriers
NR Carrier Bandwidth
(Up to 3300 Subcarriers)
One Slot (14 Symbols)
Time
Frequency

FIG. 8

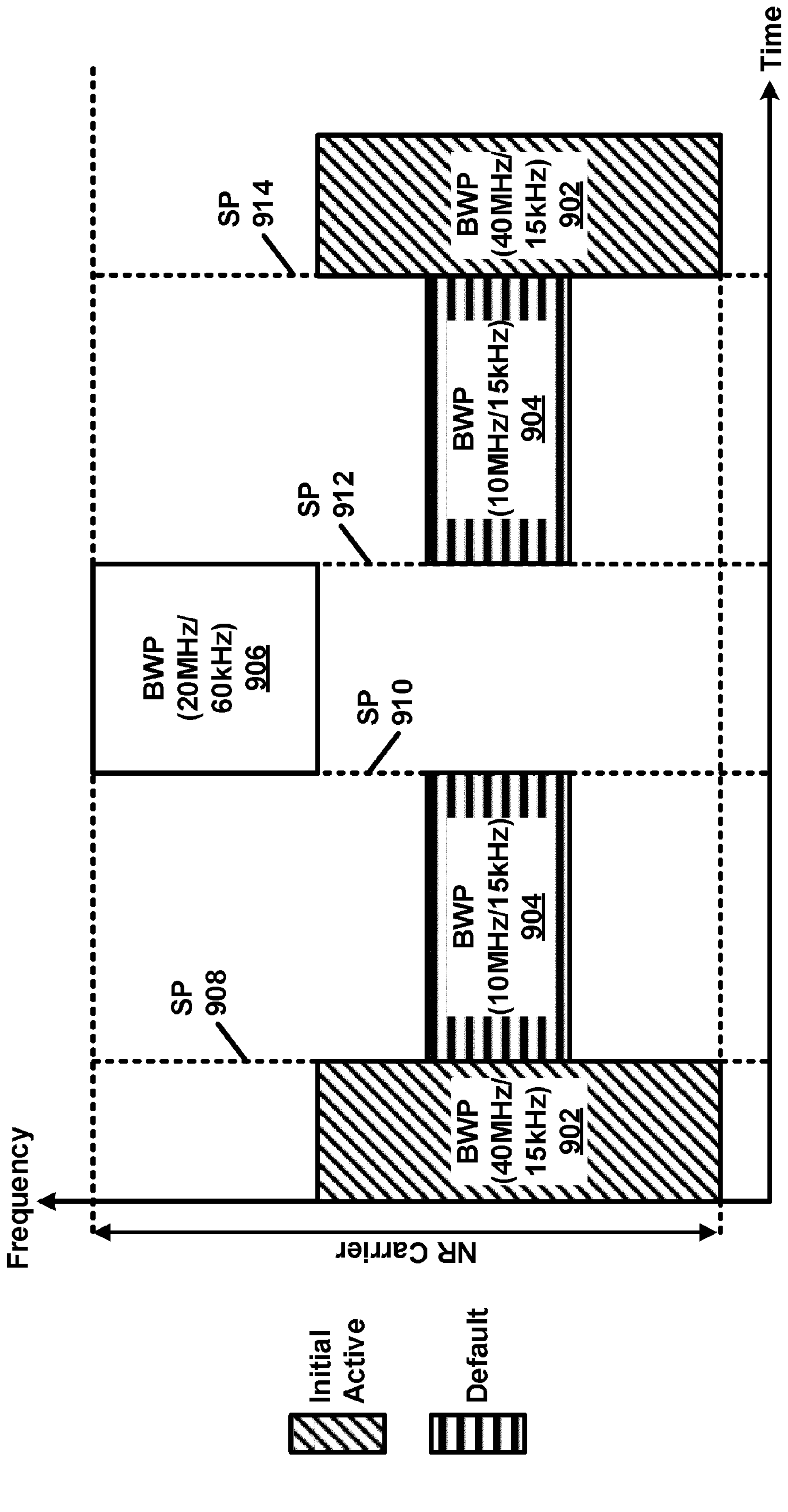
Time
Frequency
NR Carrier
SP 908
SP 910
SP 912
SP 914
BWP (40MHz/ 15kHz) 902
BWP (10MHz/15kHz) 904
BWP (20MHz/ 60kHz) 906
BWP (10MHz/15kHz) 904
BWP (40MHz/ 15kHz) 902
Initial Active
Default

FIG. 9

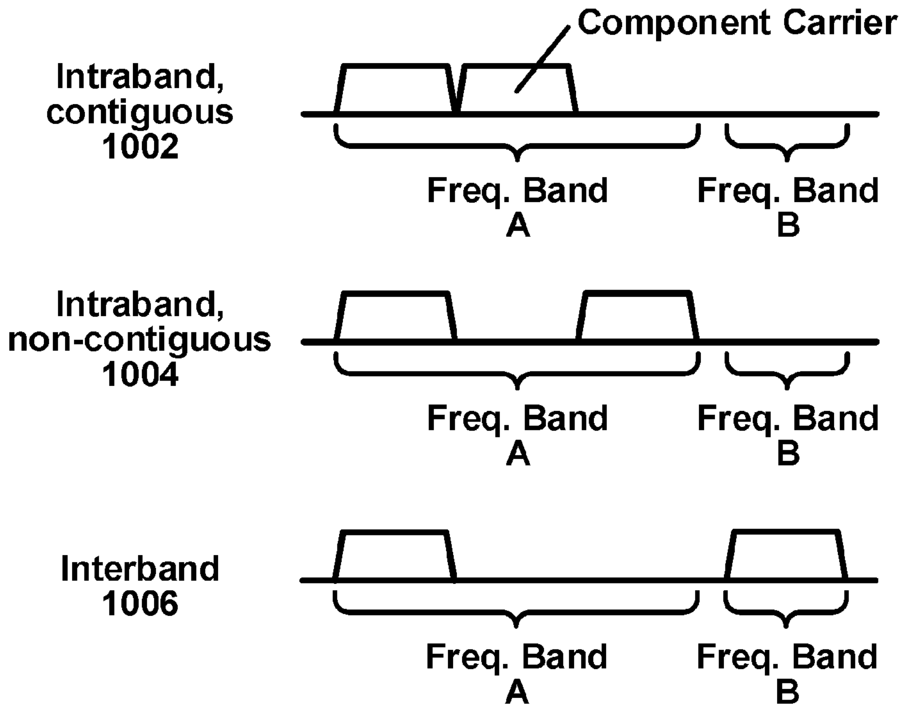


FIG. 10A

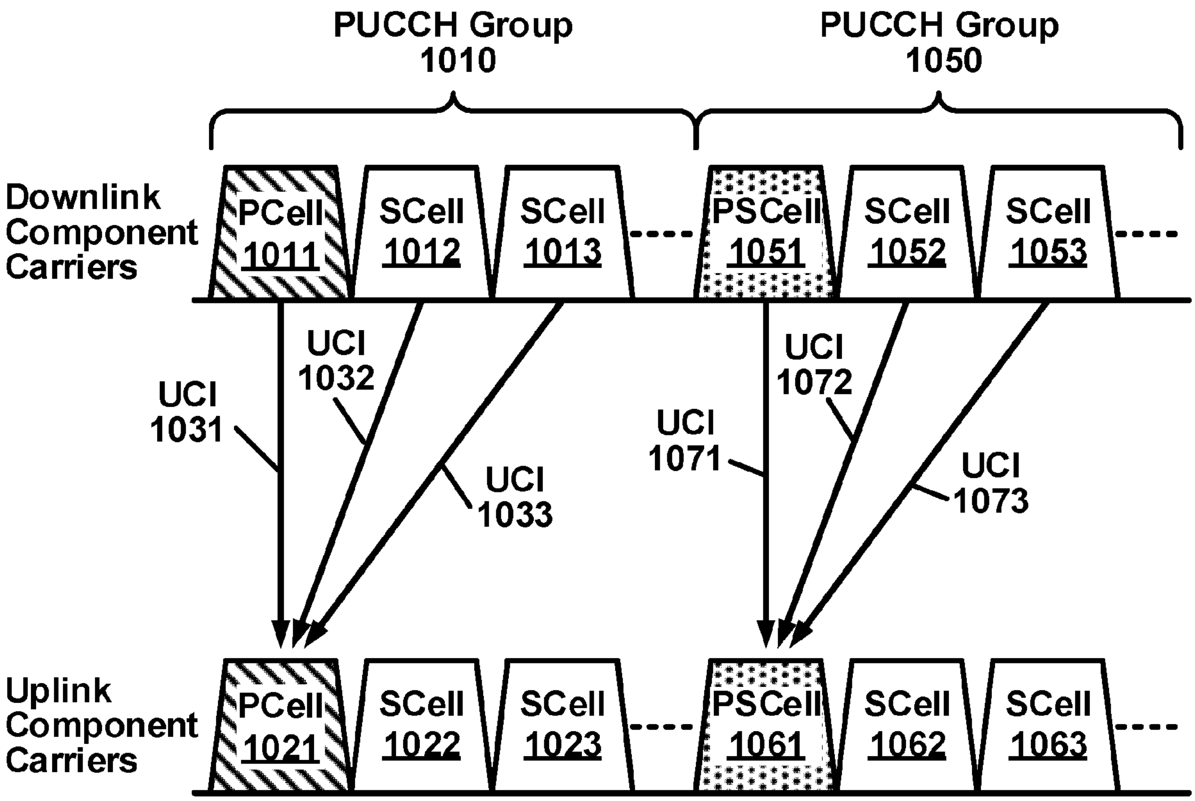


FIG. 10B

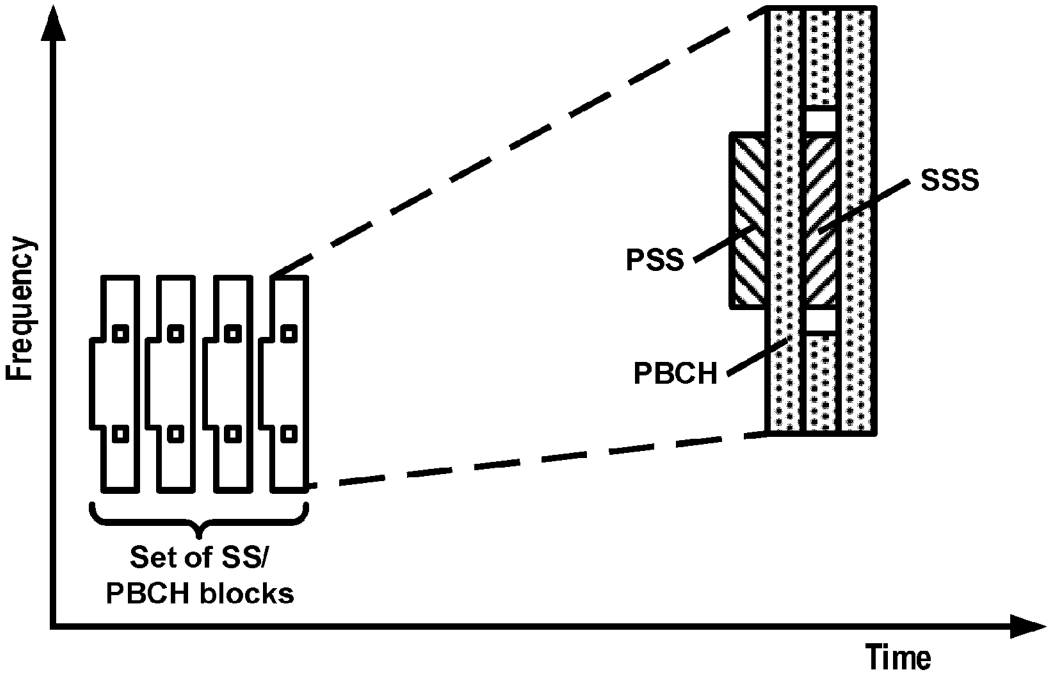


FIG. 11A

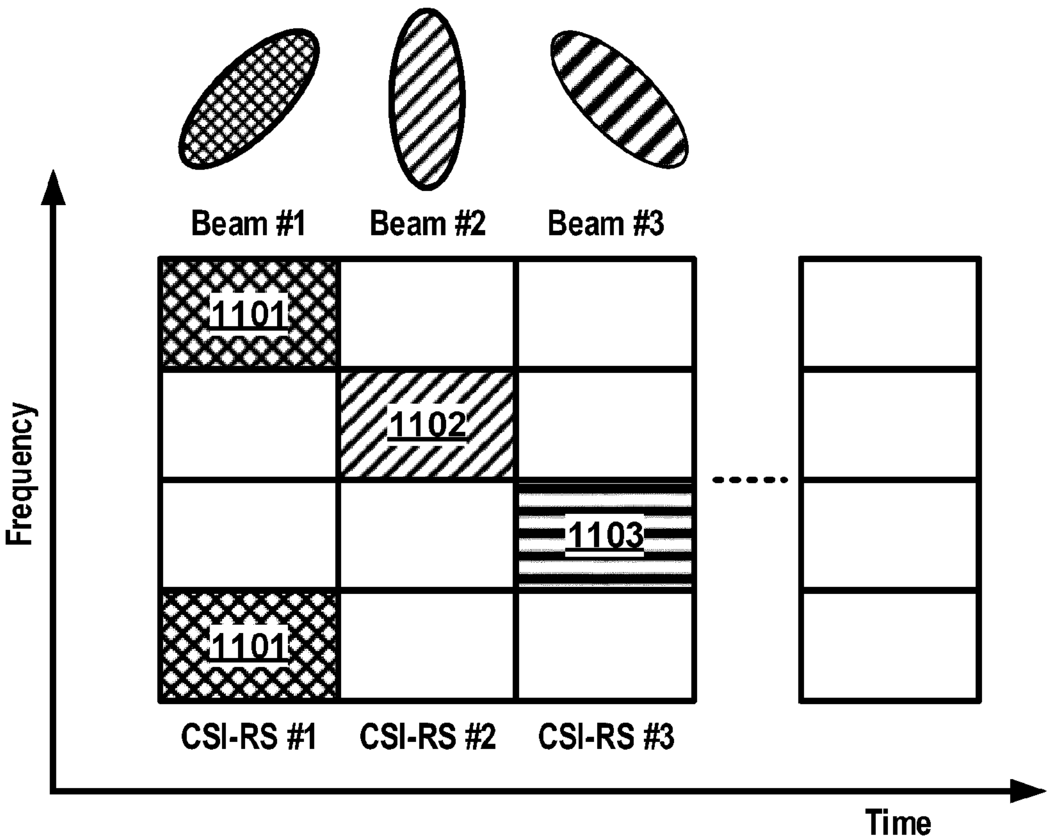


FIG. 11B

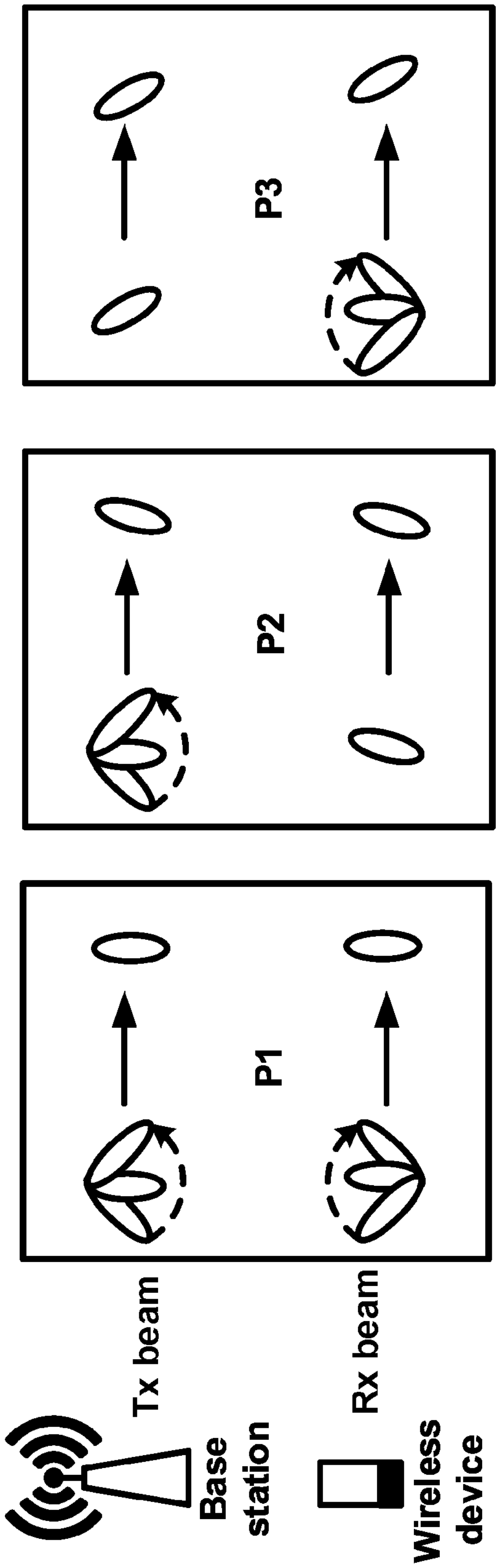


FIG. 12A

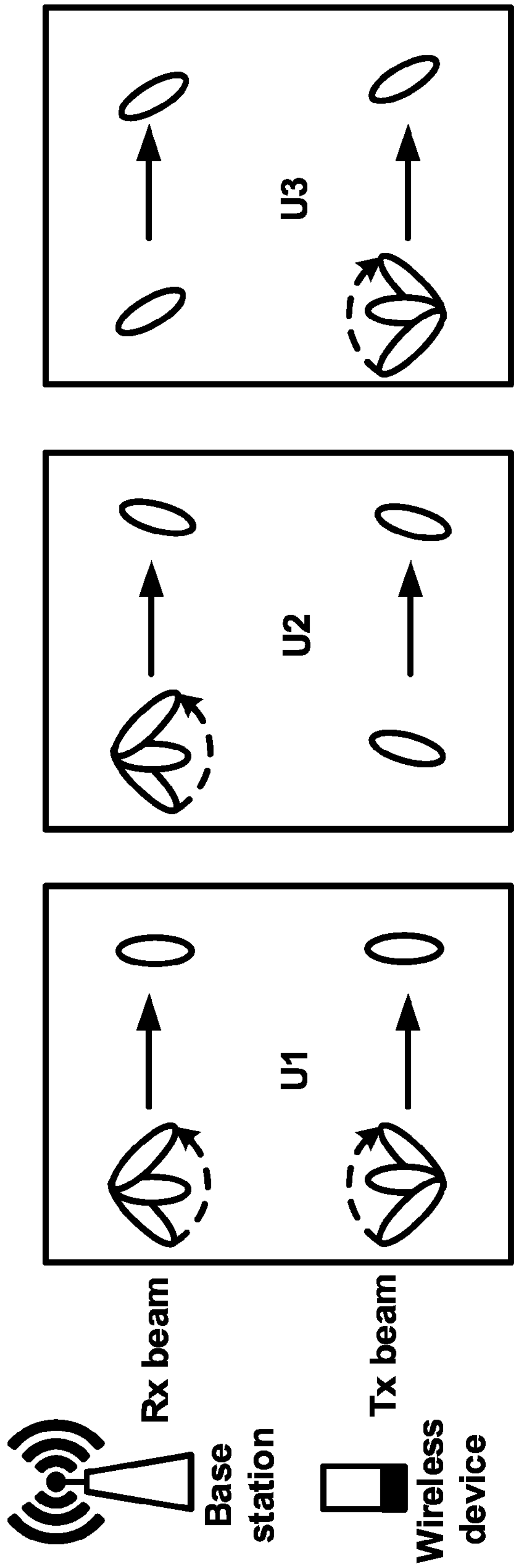


FIG. 12B

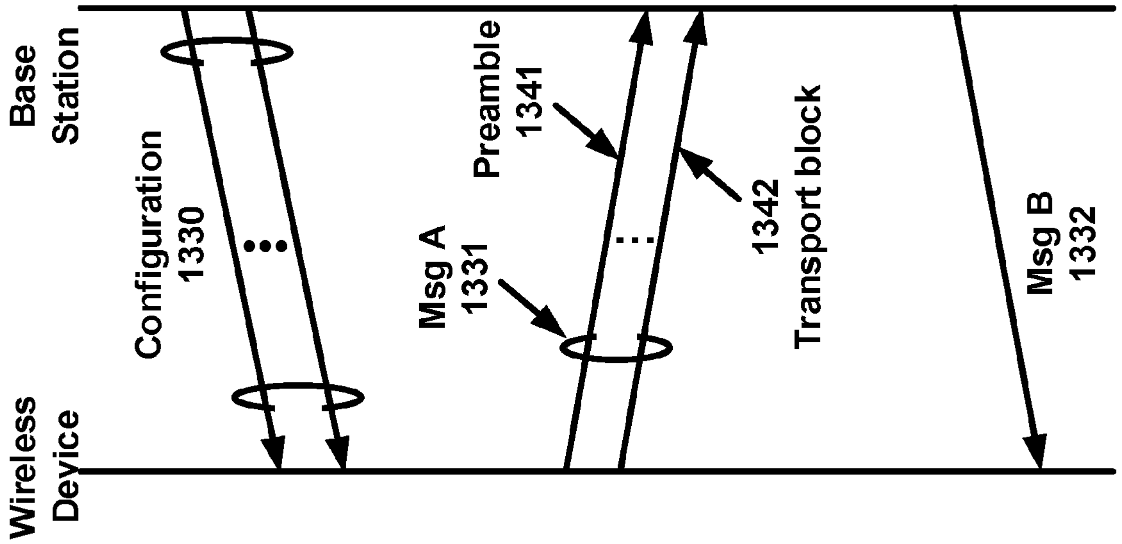


FIG. 13C

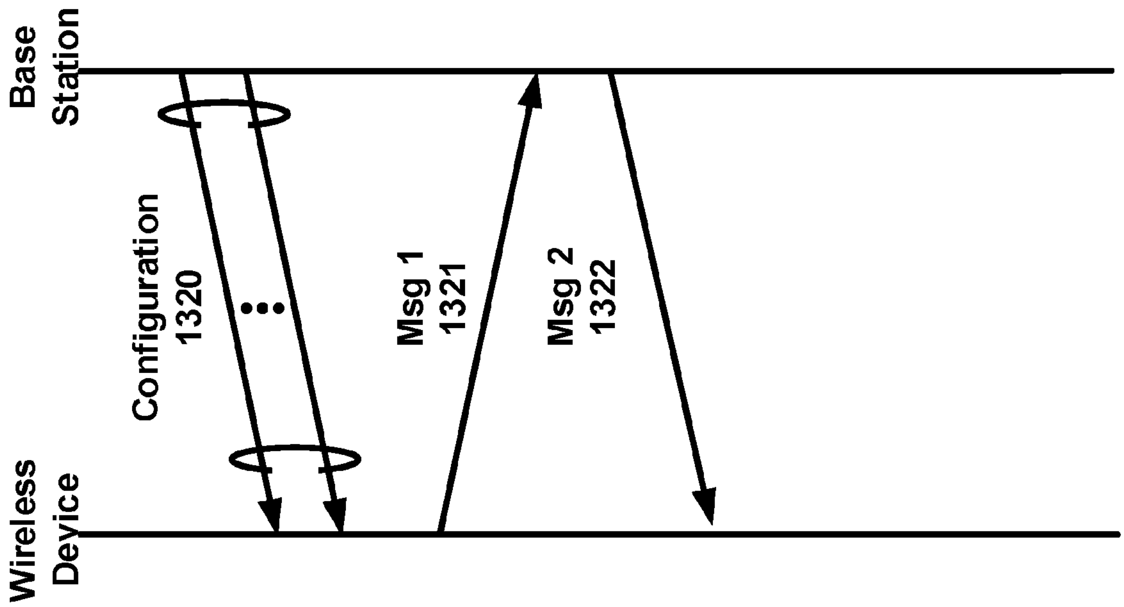


FIG. 13B

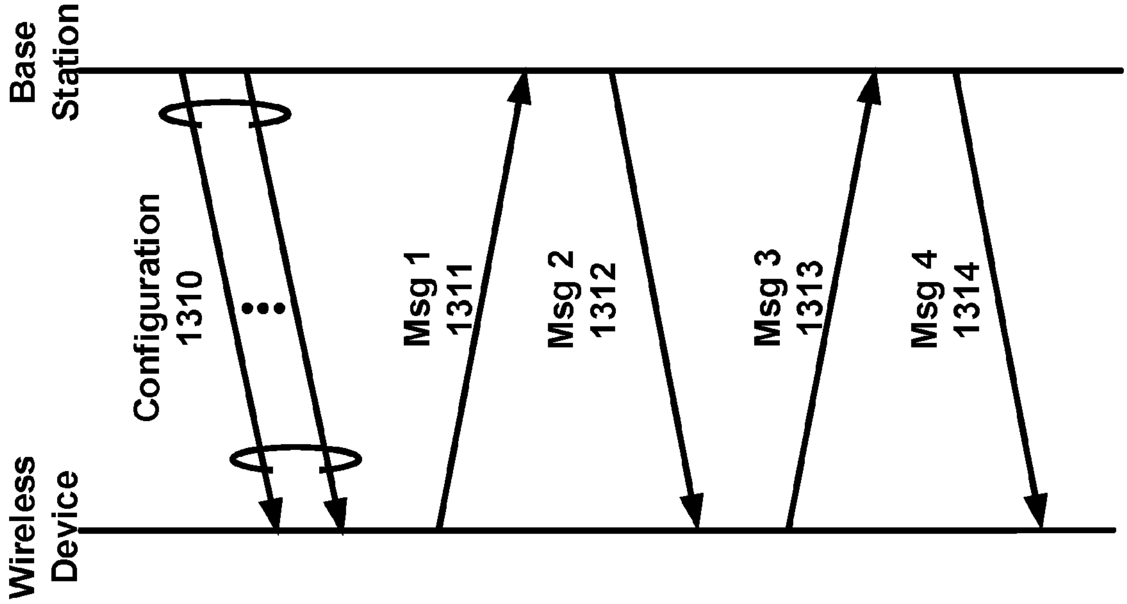


FIG. 13A

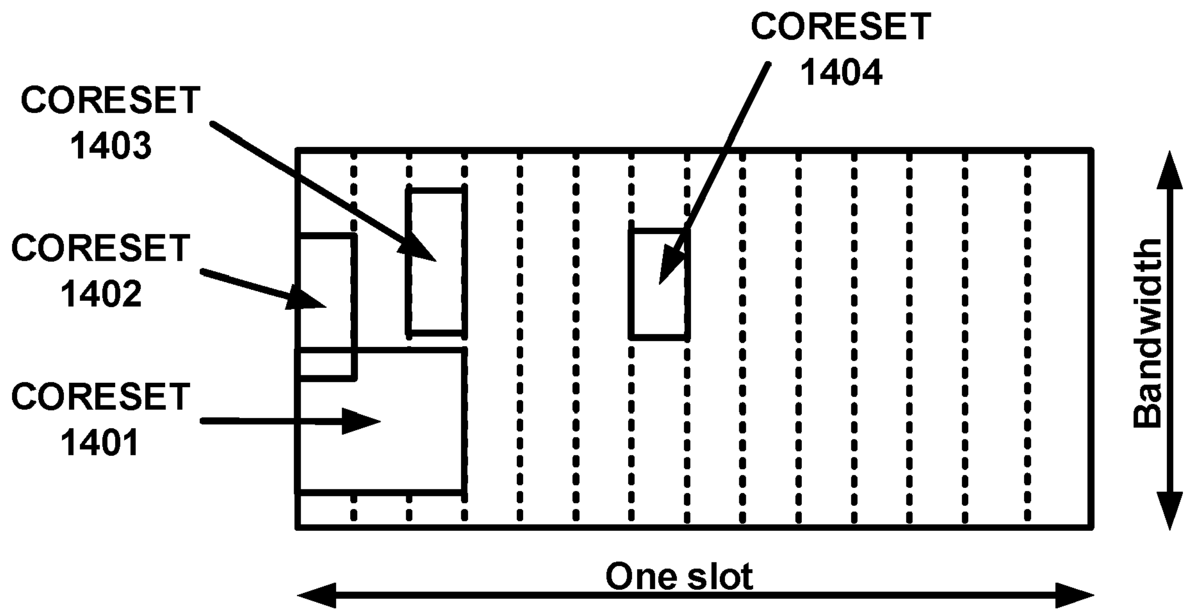


FIG. 14A

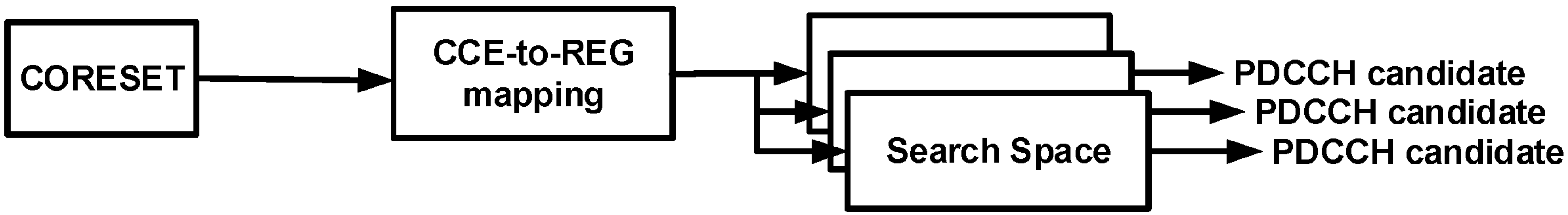


FIG. 14B

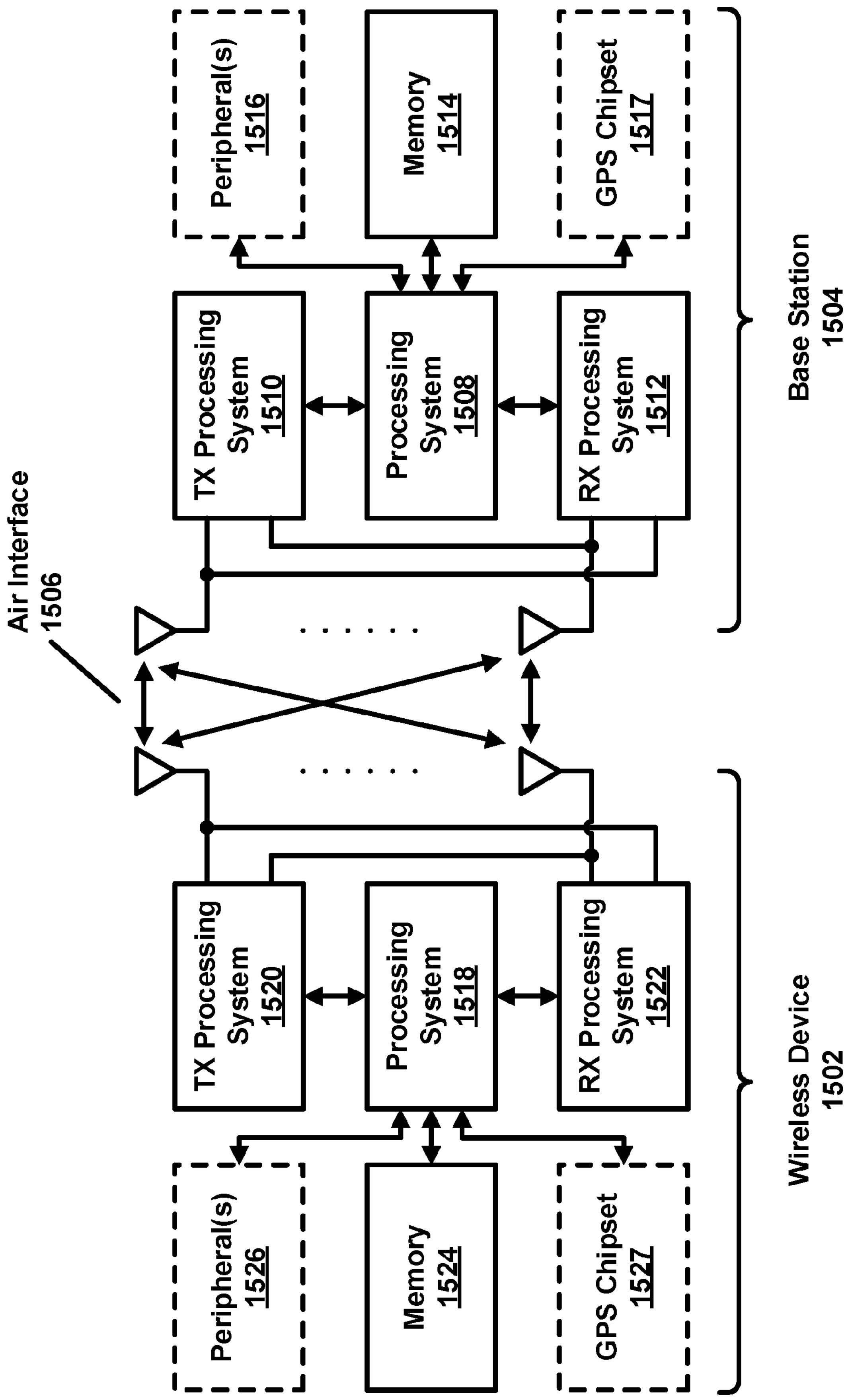
Air Interface
1506
Peripheral(s)
1516
Memory
1514
GPS Chipset
1517
TX Processing
System
1510
Processing
System
1508
RX Processing
System
1512
Base Station
1504
TX Processing
System
1520
Processing
System
1518
RX Processing
System
1522
Peripheral(s)
1526
Memory
1524
GPS Chipset
1527
Wireless Device
1502

FIG. 15A

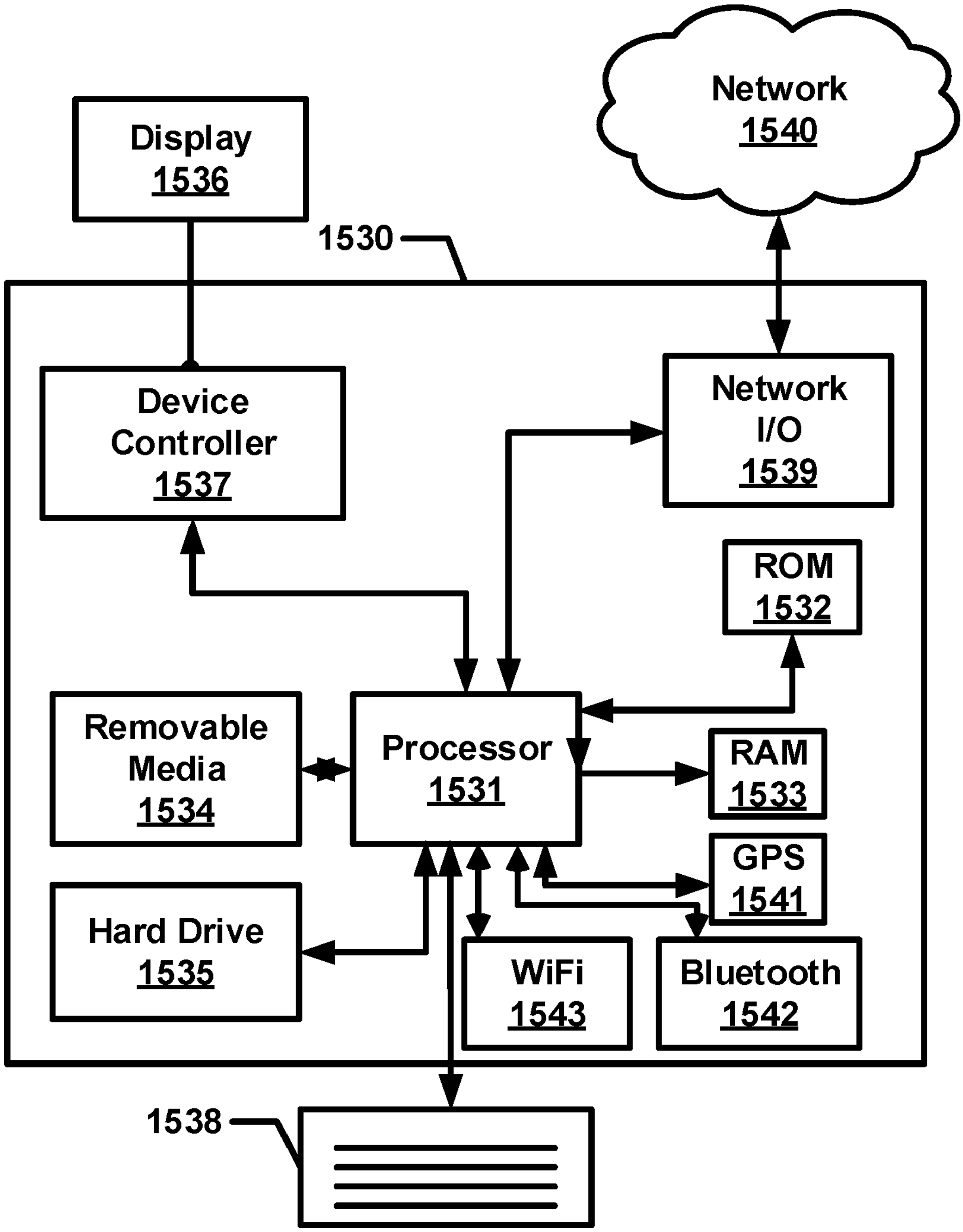
Display
1536
1530
Network
1540
Device
Controller
1537
Network
I/O
1539
ROM
1532
Removable
Media
1534
Processor
1531
RAM
1533
GPS
1541
Hard Drive
1535
WiFi
1543
Bluetooth
1542
1538

FIG. 15B

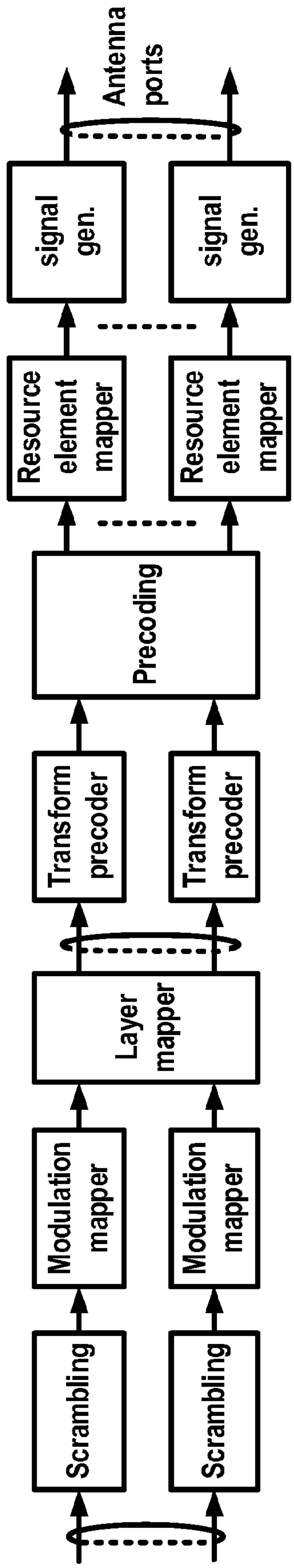


FIG. 16A

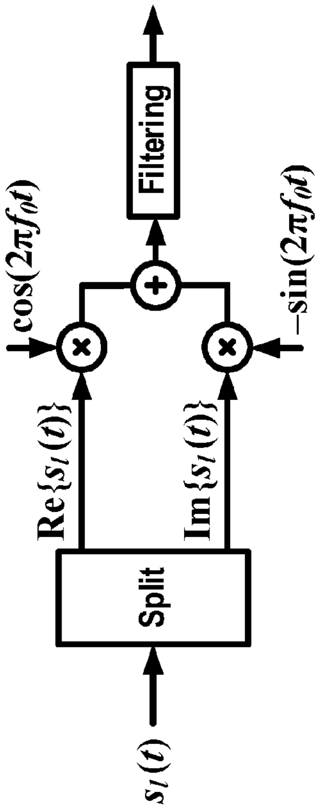


FIG. 16B

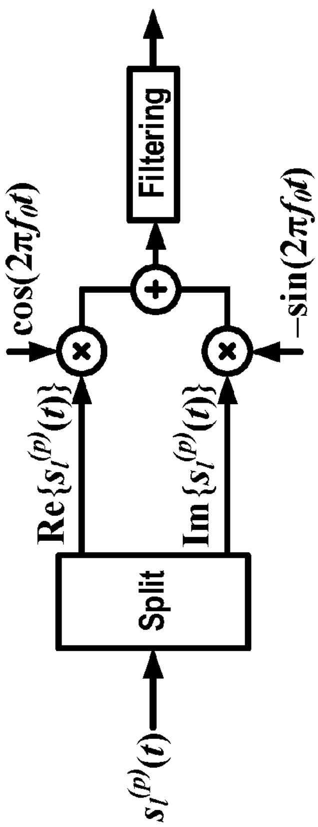


FIG. 16D

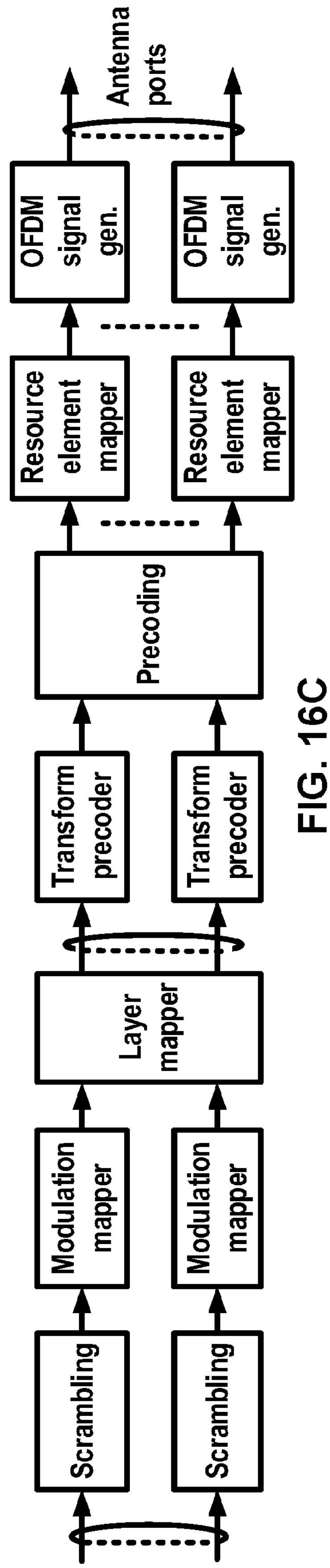


FIG. 16C

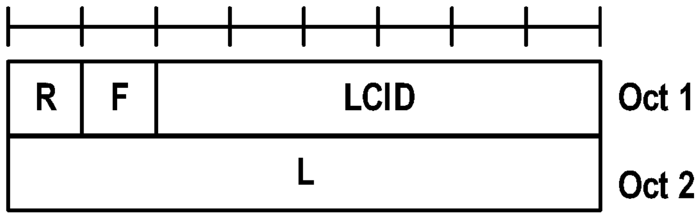


FIG. 17A

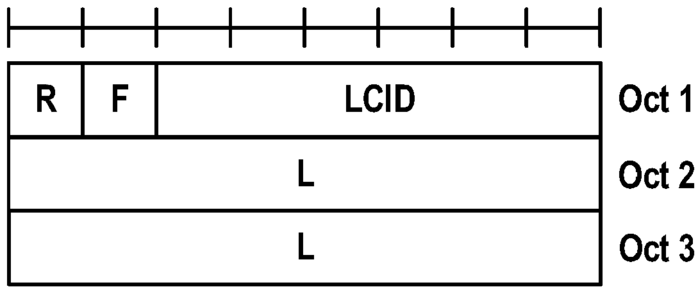


FIG. 17B

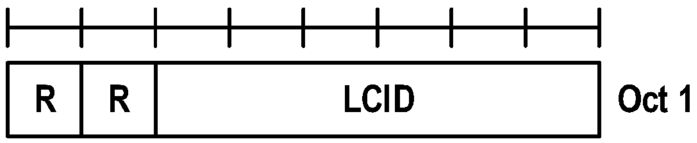


FIG. 17C

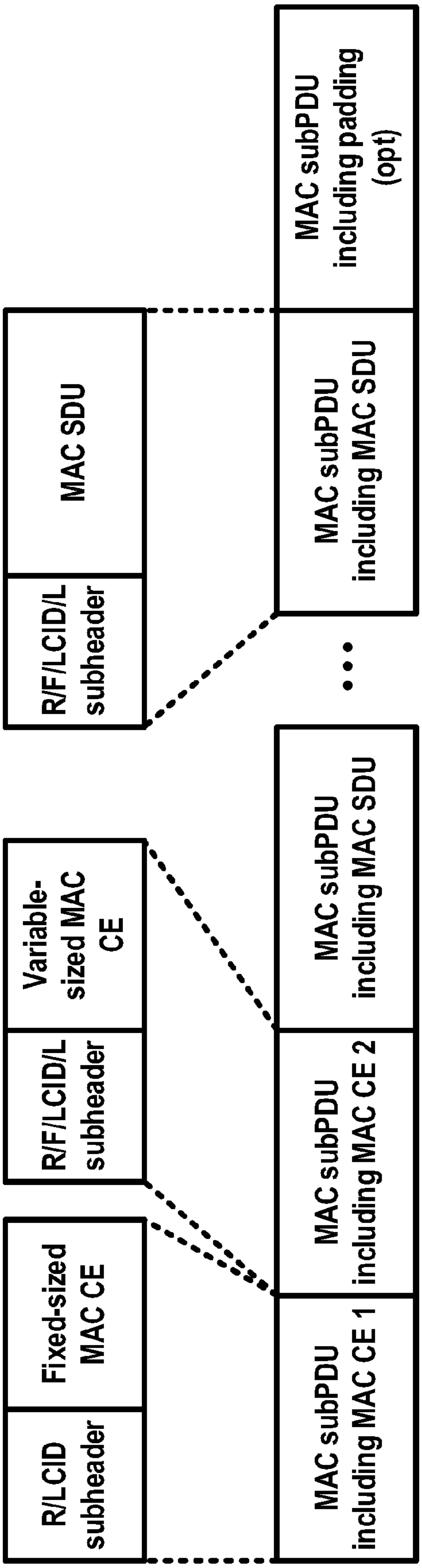


FIG. 18A

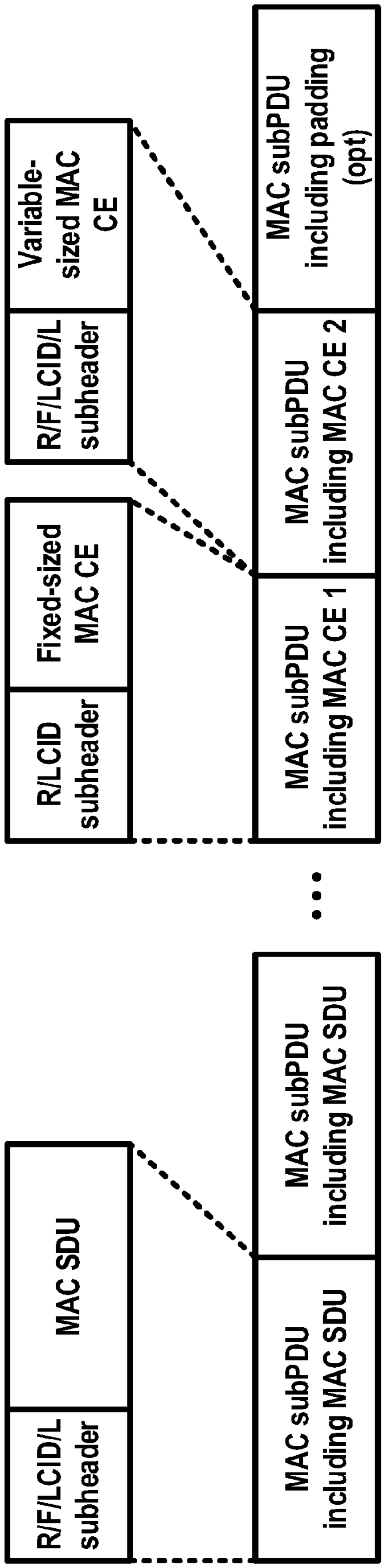


FIG. 18B

| Index | LCID values |
|---|---|
| 000000 | CCCH |
| 000001-100000 | Identity of a logical channel |
| 100001-101111 | Reserved |
| 110000 | SP ZP CSI-RS Resource Set Act./Deact. |
| 110001 | PUCCH spatial relation Act./Deact. |
| 110010 | SP SRS Act./Deact. |
| 110011 | SP CSI reporting on PUCCH Act./Deact. |
| 110100 | TCI State Indication for UE-specific PDCCH |
| 110101 | TCI State Indication for UE-specific PDSCH |
| 110110 | Aperiodic CSI Trigger State Subselection |
| 110111 | SP CSI-RS/CSI-IM Resource Set Act./Deact. |
| 111000 | Duplication Activation/deactivation |
| 111001 | SCell activation/deactivation (4 Octet) |
| 111010 | SCell activation/deactivation (1 Octet) |
| 111011 | Long DRX Command |
| 111100 | DRX Command |
| 111101 | Timing Advance Command |
| 111110 | UE Contention Resolution Identity |
| 111111 | Padding |

FIG. 19

| Index | LCID values |
|---|---|
| 000000 | CCCH |
| 000001-100000 | Identity of a logical channel |
| 100001-110110 | Reserved |
| 110111 | Configured Grant Confirmation |
| 111000 | Multiple Entry PHR |
| 111001 | Single Entry PHR |
| 111010 | C-RNTI |
| 111011 | Short Truncated BSR |
| 111100 | Long Truncated BSR |
| 111101 | Short BSR |
| 111110 | Long BSR |
| 111111 | Padding |

FIG. 20

| | | | | | | | | |
|---|---|---|---|---|---|---|---|---|
| $C_7$ | $C_6$ | $C_5$ | $C_4$ | $C_3$ | $C_2$ | $C_1$ | R | Oct 1 |

FIG. 21A

| | | | | | | | | |
|---|---|---|---|---|---|---|---|---|
| $C_7$ | $C_6$ | $C_5$ | $C_4$ | $C_3$ | $C_2$ | $C_1$ | R | Oct 1 |
| $C_{15}$ | $C_{14}$ | $C_{13}$ | $C_{12}$ | $C_{11}$ | $C_{10}$ | $C_9$ | $C_8$ | Oct 2 |
| $C_{23}$ | $C_{22}$ | $C_{21}$ | $C_{20}$ | $C_{19}$ | $C_{18}$ | $C_{17}$ | $C_{16}$ | Oct 3 |
| $C_{31}$ | $C_{30}$ | $C_{29}$ | $C_{28}$ | $C_{27}$ | $C_{26}$ | $C_{25}$ | $C_{24}$ | Oct 4 |

FIG. 21B

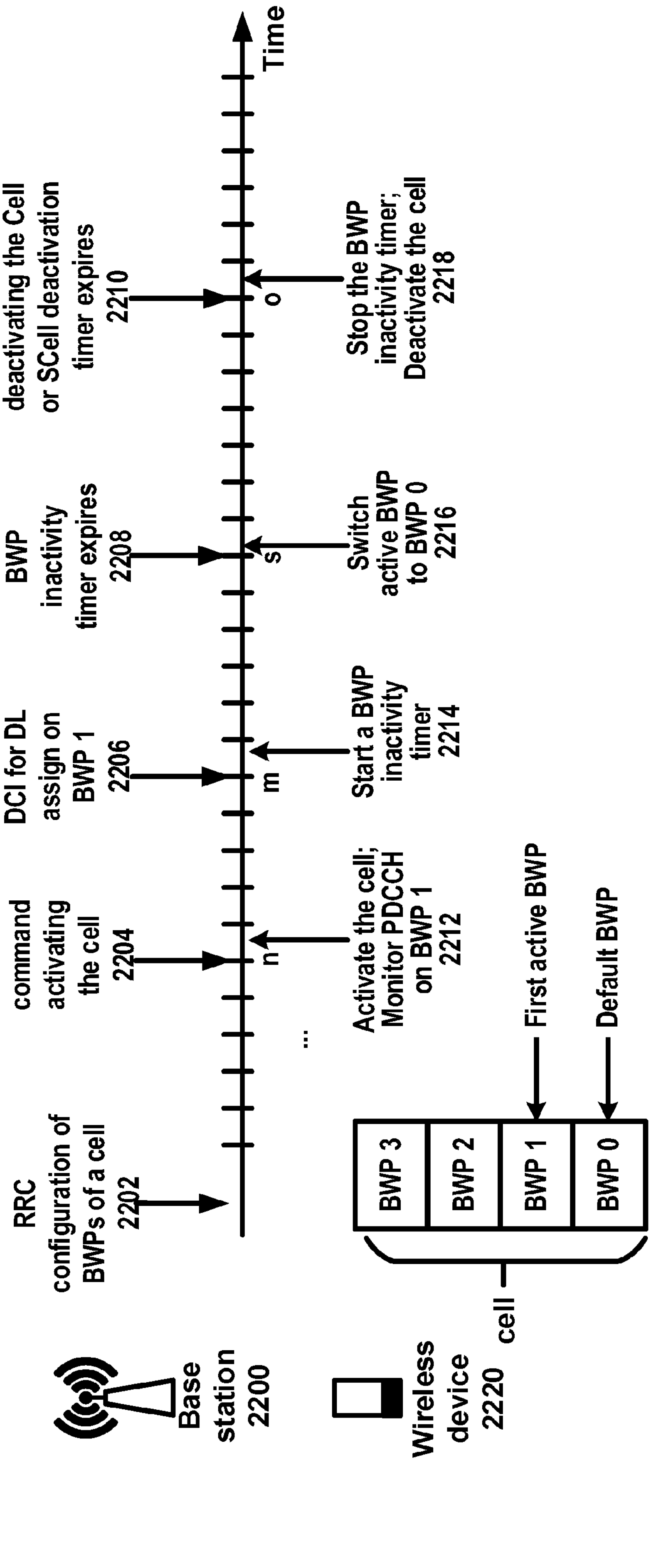

Base station 2200
Wireless device 2220
RRC configuration of BWPs of a cell 2202
command activating the cell 2204
DCI for DL assign on BWP 1 2206
BWP inactivity timer expires 2208
command deactivating the Cell or SCell deactivation timer expires 2210
Time
...
n
m
s
o
Activate the cell; Monitor PDCCH on BWP 1 2212
Start a BWP inactivity timer 2214
Switch active BWP to BWP 0 2216
Stop the BWP inactivity timer; Deactivate the cell 2218
cell
BWP 3
BWP 2
BWP 1
BWP 0
First active BWP
Default BWP


FIG. 22

| DCI format | Usage |
| --- | --- |
| 0_0 | Scheduling of PUSCH in one cell |
| 0_1 | Scheduling of one or multiple PUSCH in one cell, or indicating CG-DFI for configured grant PUSCH |
| 0_2 | Scheduling of PUSCH in one cell |
| 1_0 | Scheduling of PDSCH in one cell |
| 1_1 | Scheduling of PDSCH in one cell, and/or triggering one shot HARQ-ACK codebook feedback |
| 1_2 | Scheduling of PDSCH in one cell |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |
| 2_4 | Notifying a group of UEs of the PRB(s) and OFDM symbol(s) where UE cancels the corresponding UL transmission from the UE |
| 2_5 | Notifying the availability of soft resources |
| 2_6 | Notifying the power saving information outside DRX Active Time for one or more UEs |
| 2_7 | Notifying Paging early indication and TRS availability indication for one or more UEs |
| 3_0 | Scheduling of NR sidelink in one cell |
| 3_1 | Scheduling of LTE sidelink in one cell |
| 4_0 | Scheduling of PDSCH with CRC scrambled by MCCH-RNTI/G-RNTI for broadcast |
| 4_1 | Scheduling of PDSCH with CRC scrambled by G-RNTI/G-CS-RNTI for multicast |
| 4_2 | Scheduling of PDSCH with CRC scrambled by G-RNTI/G-CS-RNTI for multicast |

FIG. 23

```
MIB ::=                        SEQUENCE {
  systemFrameNumber                BIT STRING (SIZE (6)),
  subCarrierSpacingCommon          ENUMERATED {scs15or60, scs30or120},
  ssb-SubcarrierOffset             INTEGER (0..15),
  dmrs-TypeA-Position              ENUMERATED {pos2, pos3},
  pdcch-ConfigSIB1                 PDCCH-ConfigSIB1,
  cellBarred                       ENUMERATED {barred, notBarred},
  intraFreqReselection             ENUMERATED {allowed, notAllowed},
  spare                            BIT STRING (SIZE (1))}

PDCCH-ConfigSIB1 ::=           SEQUENCE {
  controlResourceSetZero           ControlResourceSetZero,
  searchSpaceZero                  SearchSpaceZero}
```

FIG. 24A

| Index | SS/PBCH block and CORESET multiplexing pattern | Number of RBs $N_{RB}^{CORESET}$ | Number of Symbols $N_{symb}^{CORESET}$ | Offset (RBs) |
|---|---|---|---|---|
| 0 | 1 | 24 | 2 | 0 |
| 1 | 1 | 24 | 2 | 2 |
| 2 | 1 | 24 | 2 | 4 |
| 3 | 1 | 24 | 3 | 0 |
| 4 | 1 | 24 | 3 | 2 |
| 5 | 1 | 24 | 3 | 4 |
| 6 | 1 | 48 | 1 | 12 |
| 7 | 1 | 48 | 1 | 16 |
| ... | ... | ... | ... | ... |

FIG. 24B

| Index | $O$ | Number of search space sets per slot | $M$ | First symbol index |
|---|---|---|---|---|
| 0 | 0 | 1 | 1 | 0 |
| 1 | 0 | 2 | 1/2 | {0, if $i$ is even}, {$N_{symb}^{CORESET}$, if $i$ is odd} |
| 2 | 2 | 1 | 1 | 0 |
| 3 | 2 | 2 | 1/2 | {0, if $i$ is even}, {$N_{symb}^{CORESET}$, if $i$ is odd} |
| 4 | 5 | 1 | 1 | 0 |
| 5 | 5 | 2 | 1/2 | {0, if $i$ is even}, {$N_{symb}^{CORESET}$, if $i$ is odd} |
| 6 | 7 | 1 | 1 | 0 |
| 7 | 7 | 2 | 1/2 | {0, if $i$ is even}, {$N_{symb}^{CORESET}$, if $i$ is odd} |
| ... | ... | ... | ... | ... |

FIG. 24C

```
SIB1 ::=       SEQUENCE {
   cellSelectionInfo              SEQUENCE {
      q-RxLevMin                     Q-RxLevMin,
      q-RxLevMinOffset               INTEGER (1..8) ...}
   cellAccessRelatedInfo          CellAccessRelatedInfo,
   connEstFailureControl          ConnEstFailureControl
   si-SchedulingInfo              SI-SchedulingInfo
   servingCellConfigCommon        ServingCellConfigCommonSIB
   ims-EmergencySupport           ENUMERATED {true}
   eCallOverIMS-Support           ENUMERATED {true}
   ue-TimersAndConstants          UE-TimersAndConstants
   uac-BarringInfo                SEQUENCE { ...}
   useFullResumeID                ENUMERATED {true}
   lateNonCriticalExtension       OCTET STRING
   nonCriticalExtension           SIB1-v16xy-IEs  }

ServingCellConfigCommonSIB ::=    SEQUENCE {
   downlinkConfigCommon           DownlinkConfigCommonSIB,
   uplinkConfigCommon             UplinkConfigCommonSIB
   supplementaryUplink            UplinkConfigCommonSIB
   n-TimingAdvanceOffset          ENUMERATED { n0, n25600, n39936 }
   ssb-PositionsInBurst           SEQUENCE {
      inOneGroup                     BIT STRING (SIZE (8)),
      groupPresence                  BIT STRING (SIZE (8)) },
   ssb-PeriodicityServingCell     ENUMERATED {ms5, ms10, ms20, ms40, ms80, ms160},
   tdd-UL-DL-ConfigurationCommon     TDD-UL-DL-ConfigCommon
   ss-PBCH-BlockPower             INTEGER (-60..50),
   ...,}

DownlinkConfigCommonSIB ::=    SEQUENCE {
   frequencyInfoDL                FrequencyInfoDL-SIB,
   initialDownlinkBWP             BWP-DownlinkCommon,
   bcch-Config                    BCCH-Config,
   pcch-Config                    PCCH-Config,  ...}

PCCH-Config ::=          SEQUENCE {
   defaultPagingCycle             PagingCycle,
   nAndPagingFrameOffset          CHOICE {
      oneT                           NULL,
      halfT                          INTEGER (0..1), ...},
   ns                             ENUMERATED {four, two, one},
   firstPDCCH-MonitoringOccasionOfPO   CHOICE {
      sCS15KHZoneT       SEQUENCE (SIZE (1..maxPO-perPF)) OF INTEGER (0..139),...}
   ...,
   [[  nrofPDCCH-MonitoringOccasionPerSSB-InPO-r16  INTEGER (2..4)  ]]
}
```

# FIG. 25

```
BWP-DownlinkCommon ::=          SEQUENCE {
   genericParameters            BWP,
   pdcch-ConfigCommon            SetupRelease { PDCCH-ConfigCommon }
   pdsch-ConfigCommon            SetupRelease { PDSCH-ConfigCommon }
   ...}
PDCCH-ConfigCommon ::=          SEQUENCE {
   controlResourceSetZero          ControlResourceSetZero
   commonControlResourceSet          ControlResourceSet
   searchSpaceZero               SearchSpaceZero
   commonSearchSpaceList           SEQUENCE (SIZE(1..4)) OF SearchSpace
   searchSpaceSIB1               SearchSpaceId
   searchSpaceOtherSystemInformation  SearchSpaceId
   pagingSearchSpace              SearchSpaceId
   ra-SearchSpace               SearchSpaceId
    [[
   firstPDCCH-MonitoringOccasionOfPO  CHOICE {
      sCS15KHZoneT   SEQUENCE (SIZE (1..maxPO-perPF)) OF INTEGER (0..139),
      ...
   }OPTIONAL   -- Cond OtherBWP
    ]]
   ...,}
PDCCH-ServingCellConfig ::=       SEQUENCE {
   slotFormatIndicator            SetupRelease { SlotFormatIndicator }...,
   [[
   availabilityIndicator-r16        SetupRelease {AvailabilityIndicator-r16}
   searchSpaceSwitchTimer-r16         INTEGER (1..80)
   ]]
}

SearchSpaceSwitchConfig-r16 ::=    SEQUENCE {
   cellGroupsForSwitchList-r16       SEQUENCE(SIZE (1..4)) OF CellGroupForSwitch-r16
   searchSpaceSwitchDelay-r16         INTEGER (10..52)
}
CellGroupForSwitch-r16 ::= SEQUENCE(SIZE (1..16)) OF ServCellIndex

ControlResourceSet ::=           SEQUENCE {
   controlResourceSetId            ControlResourceSetId,
   frequencyDomainResources          BIT STRING (SIZE (45)),
   duration                INTEGER (1..maxCoReSetDuration),
   cce-REG-MappingType             CHOICE {
      interleaved               SEQUENCE {
         reg-BundleSize             ENUMERATED {n2, n3, n6},
         interleaverSize            ENUMERATED {n2, n3, n6},
         shiftIndex              INTEGER(0..maxNrofPhysicalResourceBlocks-1)},
      nonInterleaved              NULL},
   precoderGranularity            ENUMERATED {sameAsREG-bundle, allContiguousRBs},
   pdcch-DMRS-ScramblingID             INTEGER (0..65535)
   ...,  }
```

FIG. 26

```
SearchSpace ::=                        SEQUENCE {
   searchSpaceId                         SearchSpaceId,
   controlResourceSetId                    ControlResourceSetId
   monitoringSlotPeriodicityAndOffset      CHOICE {
      sl1                              NULL,
      sl2                              INTEGER (0..1),...}
   duration                           INTEGER (2..2559)
   monitoringSymbolsWithinSlot             BIT STRING (SIZE (14))
   nrofCandidates                       SEQUENCE {
      aggregationLevel1                      ENUMERATED {n0, n1, n2, ... n8},
      aggregationLevel2                      ENUMERATED {n0, n1, n2, ... n8},
      ...}
   searchSpaceType                        CHOICE {
      common                            SEQUENCE {
         dci-Format0-0-AndFormat1-0           SEQUENCE {...}
         dci-Format2-0                    SEQUENCE {
            nrofCandidates-SFI               SEQUENCE {
               aggregationLevel1                ENUMERATED {n1, n2}
               aggregationLevel2                ENUMERATED {n1, n2}...},
            ...}
         dci-Format2-1                    SEQUENCE {...}
...
      },
      ue-Specific                         SEQUENCE {
         dci-Formats       ENUMERATED {formats0-0-And-1-0, formats0-1-And-1-1},
         ...,}
   }
 }

SearchSpaceExt-r16 ::=                  SEQUENCE {
   controlResourceSetId-r16               ControlResourceSetId-r16
   searchSpaceType-r16                    SEQUENCE {
      common-r16                         SEQUENCE {
         dci-Format2-4-r16                  SEQUENCE {
            nrofCandidates-CI-r16                SEQUENCE {
               aggregationLevel1-r16                ENUMERATED {n1, n2}...},...}
         dci-Format2-5-r16                 SEQUENCE {
            nrofCandidates-IAB-r16              SEQUENCE {
               aggregationLevel1-r16                ENUMERATED {n1, n2}...},...}
         dci-Format2-6-r16                  SEQUENCE {...}
         ...}
   }
   searchSpaceGroupIdList-r16          SEQUENCE (SIZE (1.. 2)) OF INTEGER (0..1)
   freqMonitorLocations-r16                    BIT STRING (SIZE (5))
}

SearchSpaceSwitchTrigger-r16 ::=   SEQUENCE {
   servingCellId-r16               ServCellIndex,
   positionInDCI-r16
INTEGER(0..maxSFI-DCI-PayloadSize-1)
}
```

**FIG. 27**

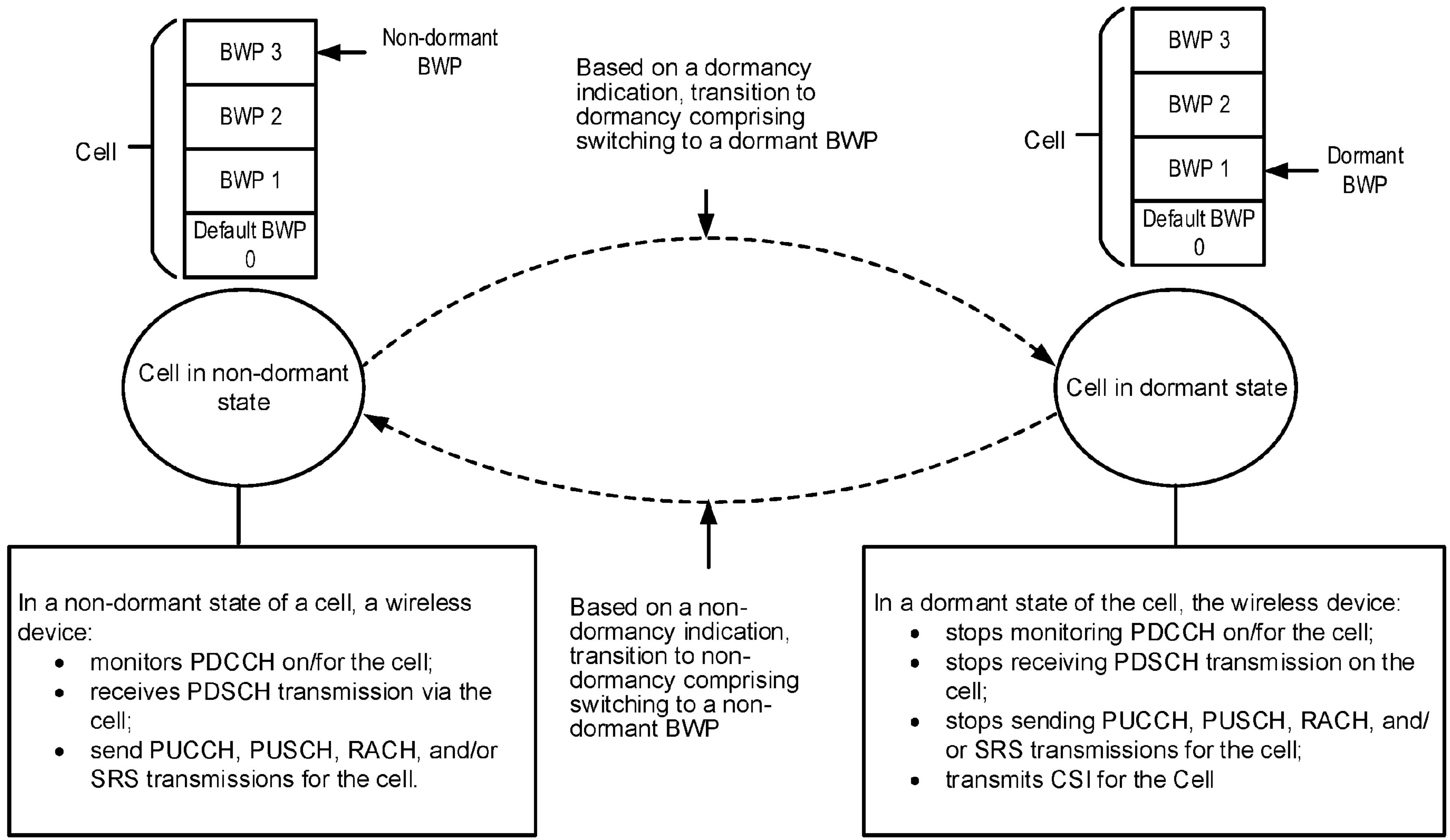
Cell
BWP 3
BWP 2
BWP 1
Default BWP 0
Non-dormant BWP
Based on a dormancy indication, transition to dormancy comprising switching to a dormant BWP
Cell
BWP 3
BWP 2
BWP 1
Default BWP 0
Dormant BWP
Cell in non-dormant state
Cell in dormant state
In a non-dormant state of a cell, a wireless device:
• monitors PDCCH on/for the cell;
• receives PDSCH transmission via the cell;
• send PUCCH, PUSCH, RACH, and/or SRS transmissions for the cell.
Based on a non-dormancy indication, transition to non-dormancy comprising switching to a non-dormant BWP
In a dormant state of the cell, the wireless device:
• stops monitoring PDCCH on/for the cell;
• stops receiving PDSCH transmission on the cell;
• stops sending PUCCH, PUSCH, RACH, and/or SRS transmissions for the cell;
• transmits CSI for the Cell

FIG. 28

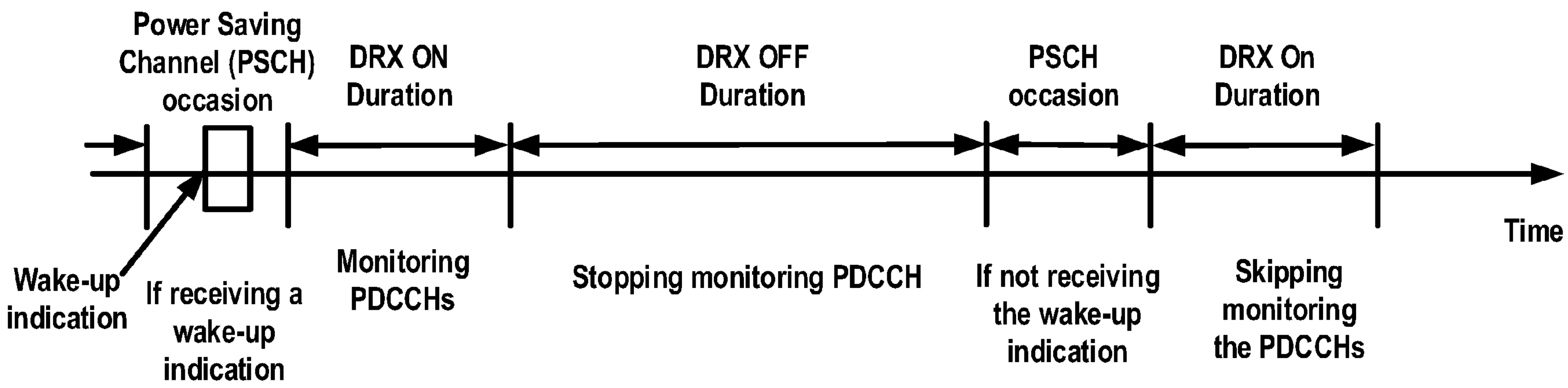


FIG. 29A

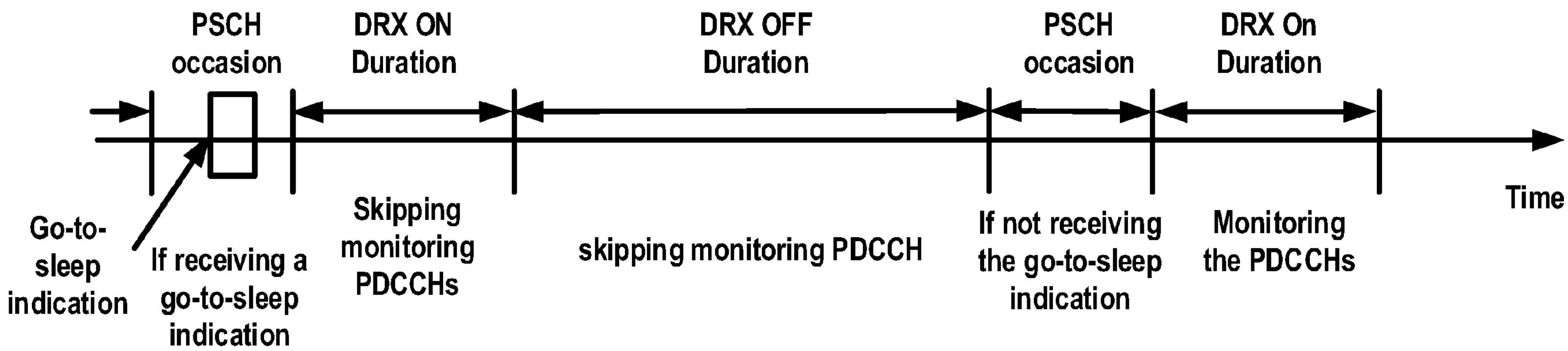


FIG. 29B

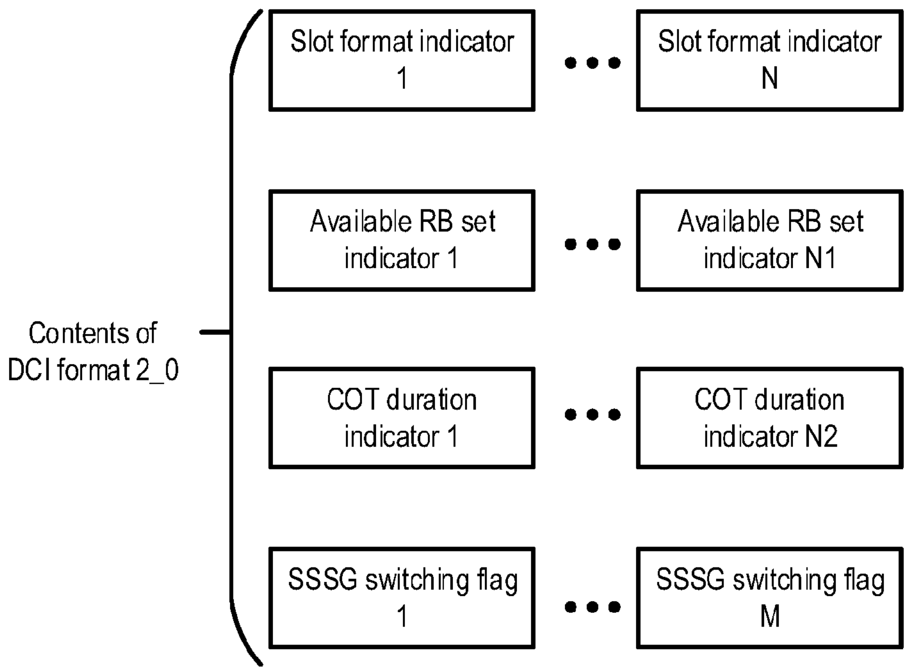


FIG. 30A

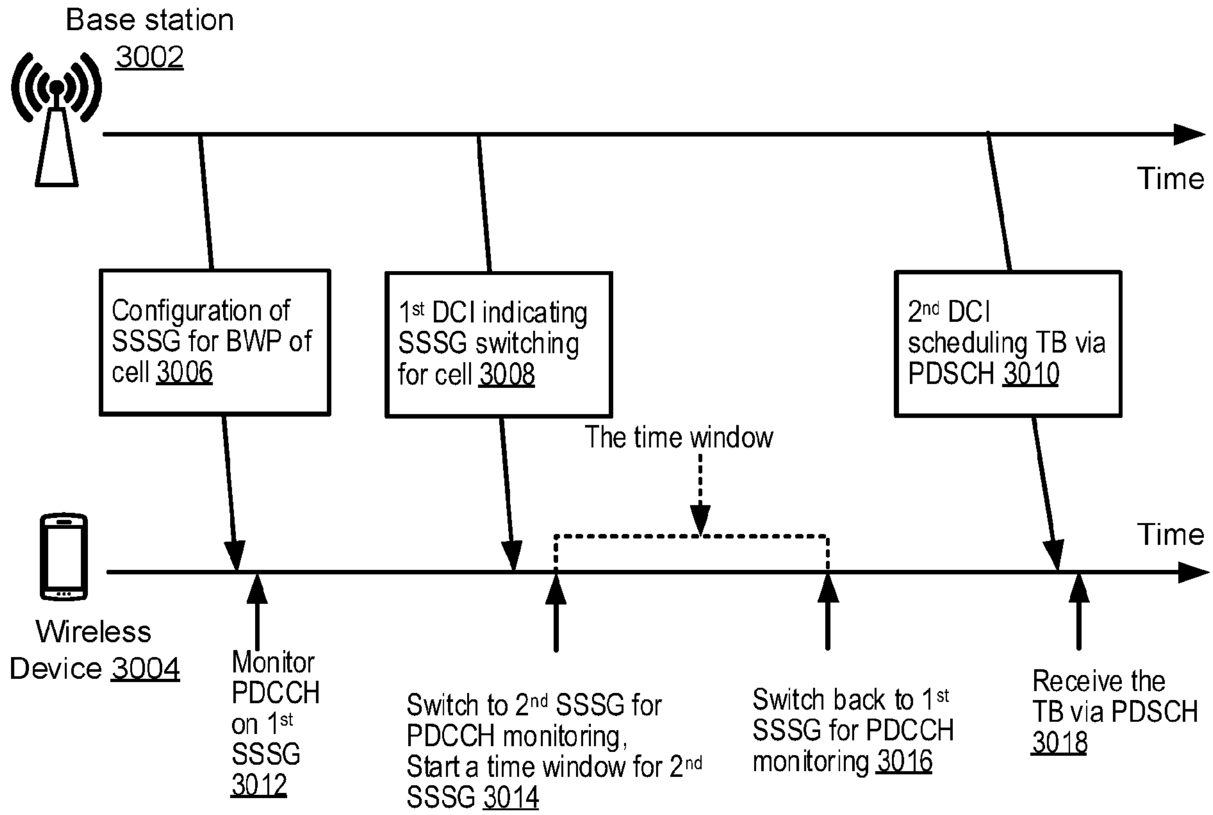


FIG. 30B

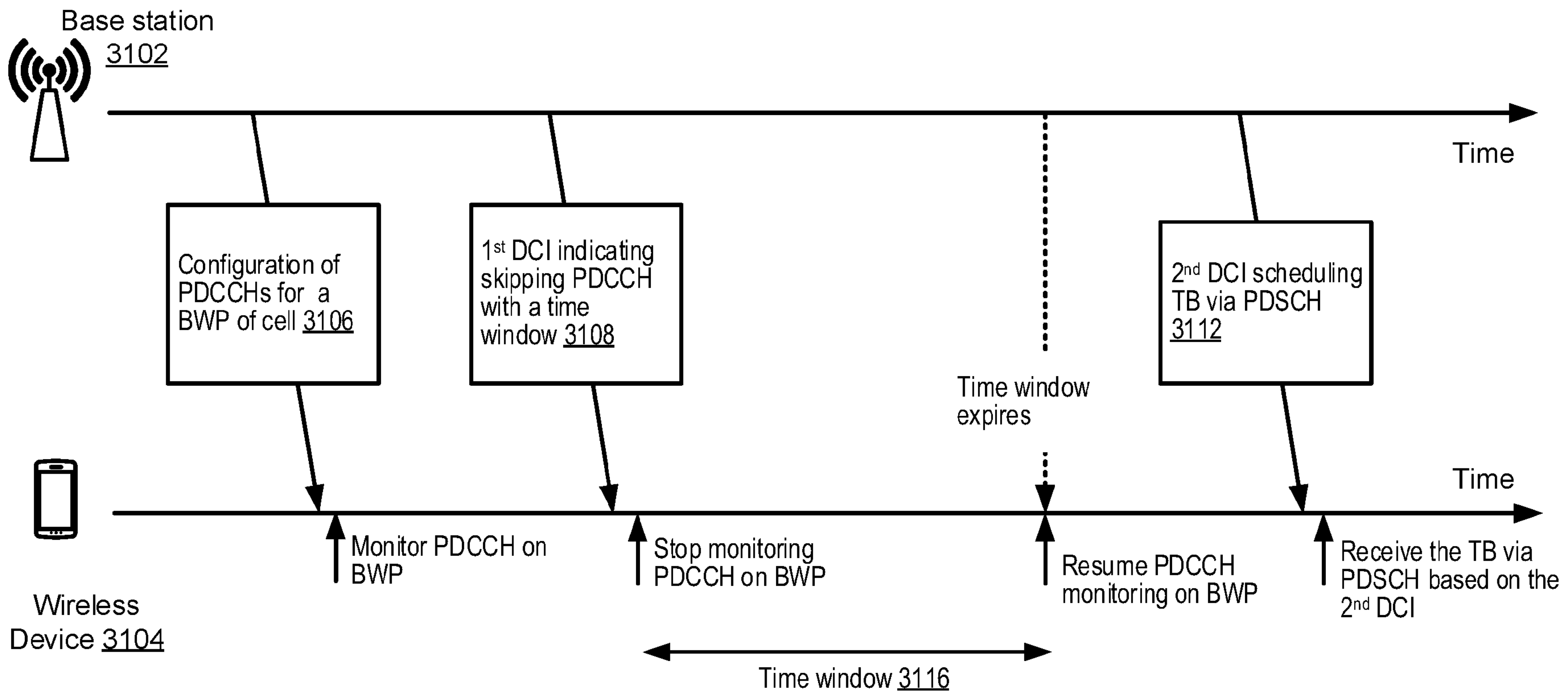

Base station 3102
Time
Configuration of PDCCHs for a BWP of cell 3106
1st DCI indicating skipping PDCCH with a time window 3108
Time window expires
2nd DCI scheduling TB via PDSCH 3112
Time
Monitor PDCCH on BWP
Stop monitoring PDCCH on BWP
Resume PDCCH monitoring on BWP
Receive the TB via PDSCH based on the 2nd DCI
Wireless Device 3104
Time window 3116


FIG. 31

| SCS | OFDM starting Symbols of the candidate SSBs | fc<=3GHz, Lmax=4 | 3GHz<fc<=6GHz, Lmax=8 | fc>6GHz, Lmax=64 |
|---|---|---|---|---|
| CaseA: 15 KHz | {2,8}+14n | n=0,1 | n=0,1,2,3 | Not Applicable (NA) |
| CaseB: 30 KHz | {4,8,16,20}+28n | n=0 | n=0,1 | NA |
| CaseC: 30 KHz | {2,8}+14n | n=0,1 | n=0,1,2,3 | NA |
| CaseD: 120 KHz | {4,8,16,20}+28n | NA | NA | n=0,1,2,3,5,6,7,8,10,11,12,13,15,16,17,18 |
| CaseE: 240 KHz | {8,12,16,20,32,36,40,44} + 56n | NA | NA | n=0,1,2,3,5,6,7,8 |

FIG. 32

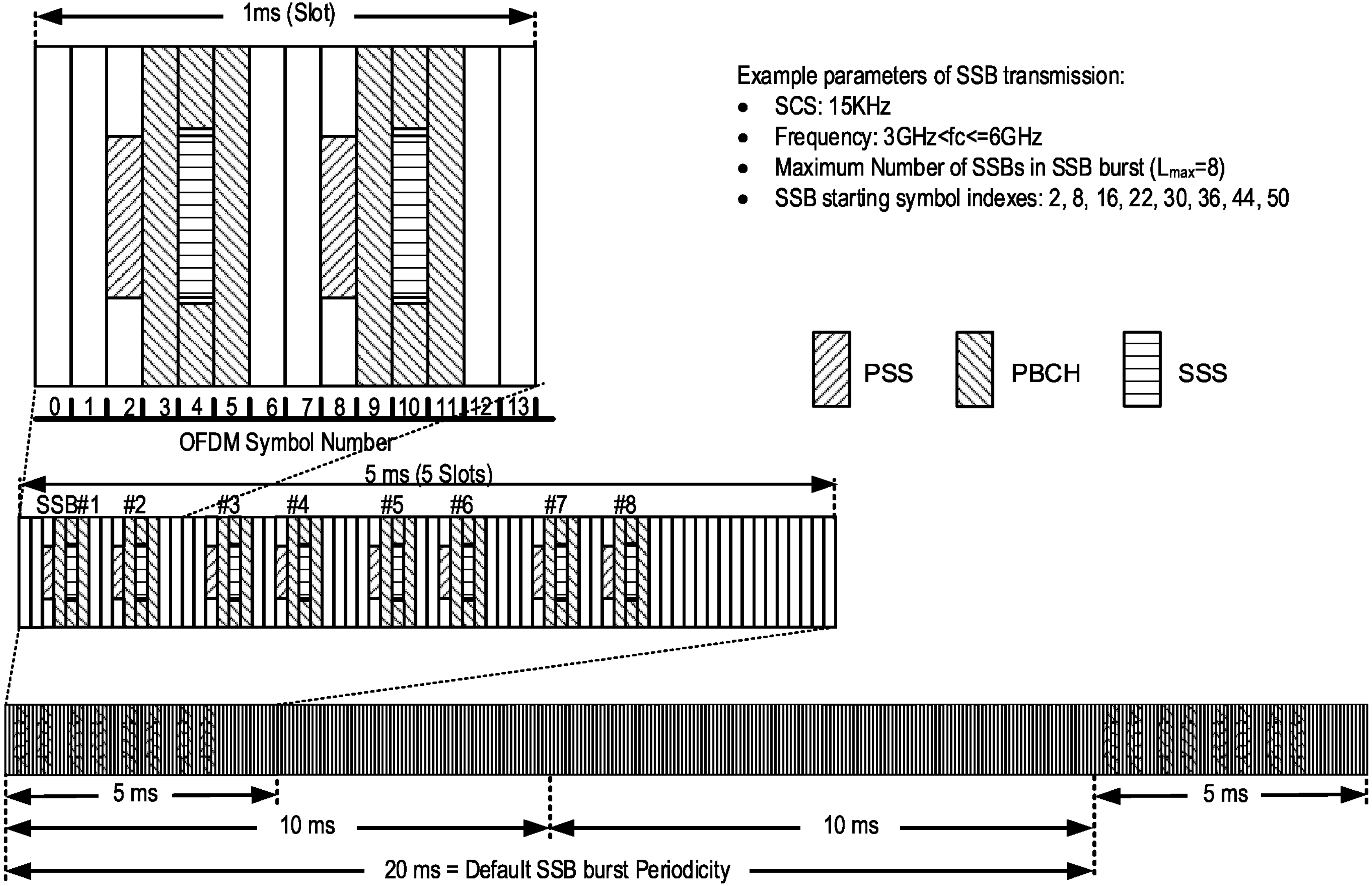
1ms (Slot)
0 1 2 3 4 5 6 7 8 9 10 11 12 13
OFDM Symbol Number
Example parameters of SSB transmission:
• SCS: 15KHz
• Frequency: 3GHz<fc<=6GHz
• Maximum Number of SSBs in SSB burst ($L_{max}$=8)
• SSB starting symbol indexes: 2, 8, 16, 22, 30, 36, 44, 50
PSS
PBCH
SSS
5 ms (5 Slots)
SSB#1 #2 #3 #4 #5 #6 #7 #8
5 ms
10 ms
10 ms
5 ms
20 ms = Default SSB burst Periodicity

FIG. 33

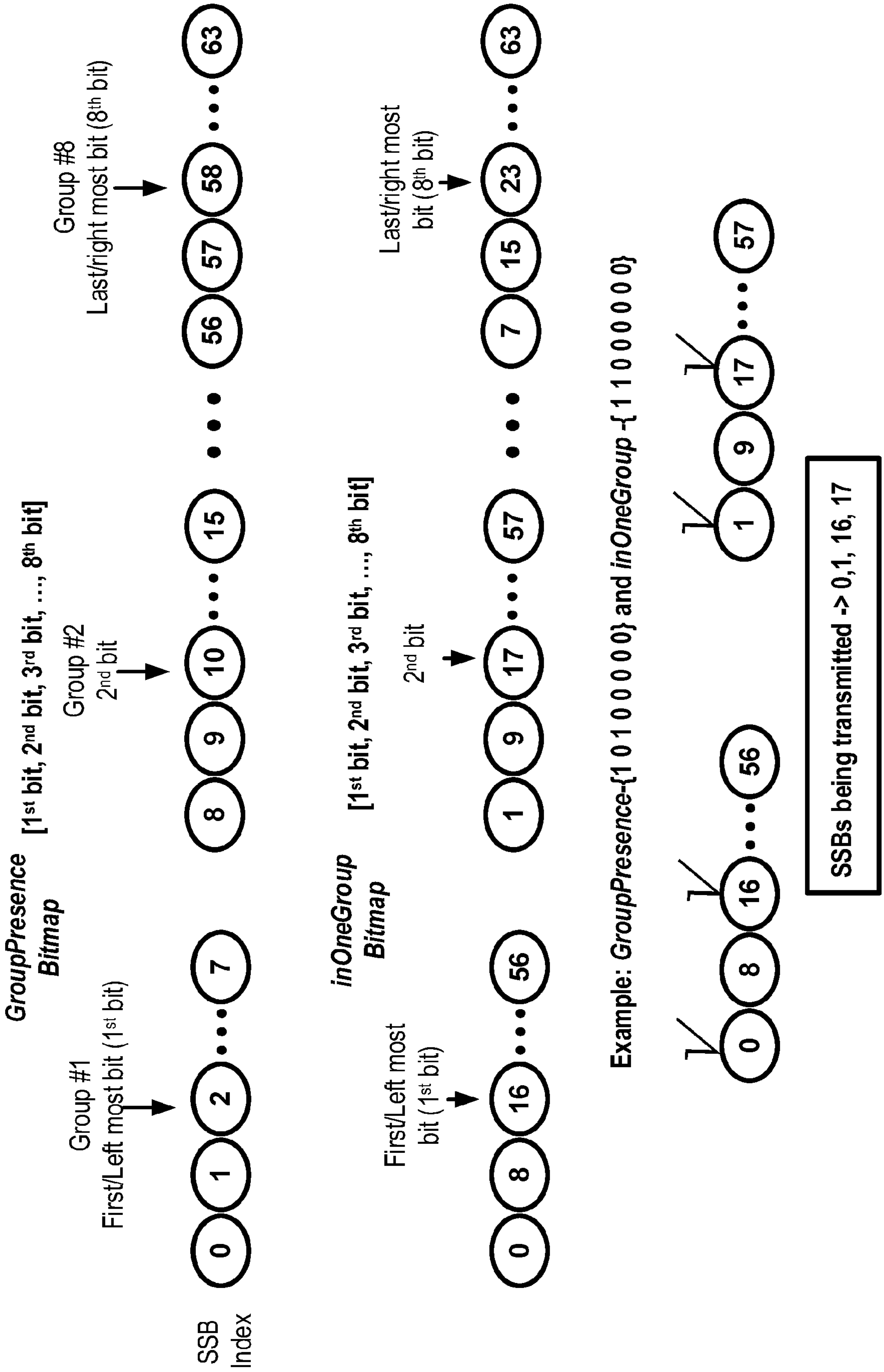

SSB Index
Group #1
First/Left most bit (1st bit)
GroupPresence Bitmap
[1st bit, 2nd bit, 3rd bit, ..., 8th bit]
Group #2
2nd bit
Group #8
Last/right most bit (8th bit)
0
1
2
7
8
9
10
15
56
57
58
63
First/Left most bit (1st bit)
inOneGroup Bitmap
[1st bit, 2nd bit, 3rd bit, ..., 8th bit]
2nd bit
Last/right most bit (8th bit)
0
8
16
56
1
9
17
57
7
15
23
63
Example: GroupPresence={1 0 1 0 0 0 0 0} and inOneGroup ={1 1 0 0 0 0 0 0}
0
8
16
56
1
9
17
57
SSBs being transmitted -> 0,1, 16, 17


FIG. 34

| Row | Ports $X$ | Density $\rho$ | cdm-Type | $(\bar{k}, \bar{l})$ | CDM group index $j$ | $k'$ | $l'$ |
|---|---|---|---|---|---|---|---|
| 1 | 1 | 3 | noCDM | $(k_0,l_0)$, $(k_0+4,l_0)$, $(k_0+8,l_0)$ | 0,0,0 | 0 | 0 |
| 2 | 1 | 1, 0.5 | noCDM | $(k_0,l_0)$ | 0 | 0 | 0 |
| 3 | 2 | 1, 0.5 | fd-CDM2 | $(k_0,l_0)$ | 0 | 0,1 | 0 |
| 4 | 4 | 1 | fd-CDM2 | $(k_0,l_0)$, $(k_0+2,l_0)$ | 0,1 | 0,1 | 0 |
| 5 | 4 | 1 | fd-CDM2 | $(k_0,l_0)$, $(k_0,l_0+1)$ | 0,1 | 0,1 | 0 |
| 6 | 8 | 1 | fd-CDM2 | $(k_0,l_0)$, $(k_1,l_0)$, $(k_2,l_0)$,$(k_3,l_0)$ | 0,1,2,3 | 0,1 | 0 |
| 7 | 8 | 1 | fd-CDM2 | $(k_0,l_0)$, $(k_1,l_0)$, $(k_0,l_0+1)$,$(k_1,l_0+1)$ | 0,1,2,3 | 0,1 | 0 |
| 8 | 8 | 1 | cdm4-FD2-TD2 | $(k_0,l_0)$, $(k_1,l_0)$ | 0,1 | 0,1 | 0,1 |
| ⋮ | | | | | | | |
| 17 | 32 | 1, 0.5 | cdm4-FD2-TD2 | $(k_0,l_0)$, $(k_1,l_0)$, $(k_2,l_0)$, $(k_3,l_0)$,$(k_0,l_1)$, $(k_1,l_1)$, $(k_2,l_1)$, $(k_3,l_1)$ | 0,1,2,3,4,5,6,7 | 0,1 | 0,1 |
| 18 | 32 | 1, 0.5 | cdm8-FD2-TD4 | $(k_0,l_0)$, $(k_1,l_0)$, $(k_2,l_0)$,$(k_3,l_0)$ | 0,1,2,3 | 0,1 | 0,1,2,3 |

FIG. 35

```
CSI-RS-ResourceMapping ::=        SEQUENCE {
   frequencyDomainAllocation         CHOICE {
      row1                          BIT STRING (SIZE (4)),
      row2                          BIT STRING (SIZE (12)),
      row4                          BIT STRING (SIZE (3)),
   },
   nrofPorts                      ENUMERATED {p1,p2,p4,p8,p12,p16,p24,p32},
   firstOFDMSymbolInTimeDomain       INTEGER (0..13),
   firstOFDMSymbolInTimeDomain2      INTEGER (2..12)
   cdm-Type                        ENUMERATED {noCDM, fd-CDM2, cdm4-FD2-TD2, ...},
   density                        CHOICE {
      dot5                         ENUMERATED {evenPRBs, oddPRBs},
      one                          NULL,
      three                        NULL,
   },
   freqBand                        CSI-FrequencyOccupation,
...}

CSI-FrequencyOccupation ::=       SEQUENCE {
   startingRB                      INTEGER (0..maxNrofPhysicalResourceBlocks-1),
   nrofRBs                         INTEGER (24..maxNrofPhysicalResourceBlocksPlus1),
...}

NZP-CSI-RS-Resource ::=           SEQUENCE {
   nzp-CSI-RS-ResourceId            NZP-CSI-RS-ResourceId,
   resourceMapping                 CSI-RS-ResourceMapping,
   powerControlOffset              INTEGER (-8..15),
   powerControlOffsetSS              ENUMERATED{db-3, db0, db3, db6}
   scramblingID                   ScramblingId,
   periodicityAndOffset             CSI-ResourcePeriodicityAndOffset
   qcl-InfoPeriodicCSI-RS            TCI-StateId
...}

NZP-CSI-RS-ResourceSet ::=        SEQUENCE {
   nzp-CSI-ResourceSetId    NZP-CSI-RS-ResourceSetId,
   nzp-CSI-RS-Resources    SEQUENCE OF NZP-CSI-RS-ResourceId,
   repetition                 ENUMERATED { on, off }
   aperiodicTriggeringOffset         INTEGER(0..6)
   trs-Info                   ENUMERATED {true}
   ...,}


CSI-ResourceConfig ::=     SEQUENCE {
   csi-ResourceConfigId       CSI-ResourceConfigId,
   csi-RS-ResourceSetList      CHOICE {
      nzp-CSI-RS-SSB            SEQUENCE {
         nzp-CSI-RS-ResourceSetList  SEQUENCE OF NZP-CSI-RS-ResourceSetId
         csi-SSB-ResourceSetList    SEQUENCE OF CSI-SSB-ResourceSetId
      },...
   },
   bwp-Id                  BWP-Id,
   resourceType              ENUMERATED { aperiodic, semiPersistent, periodic },
   ...}
```

**FIG. 36**

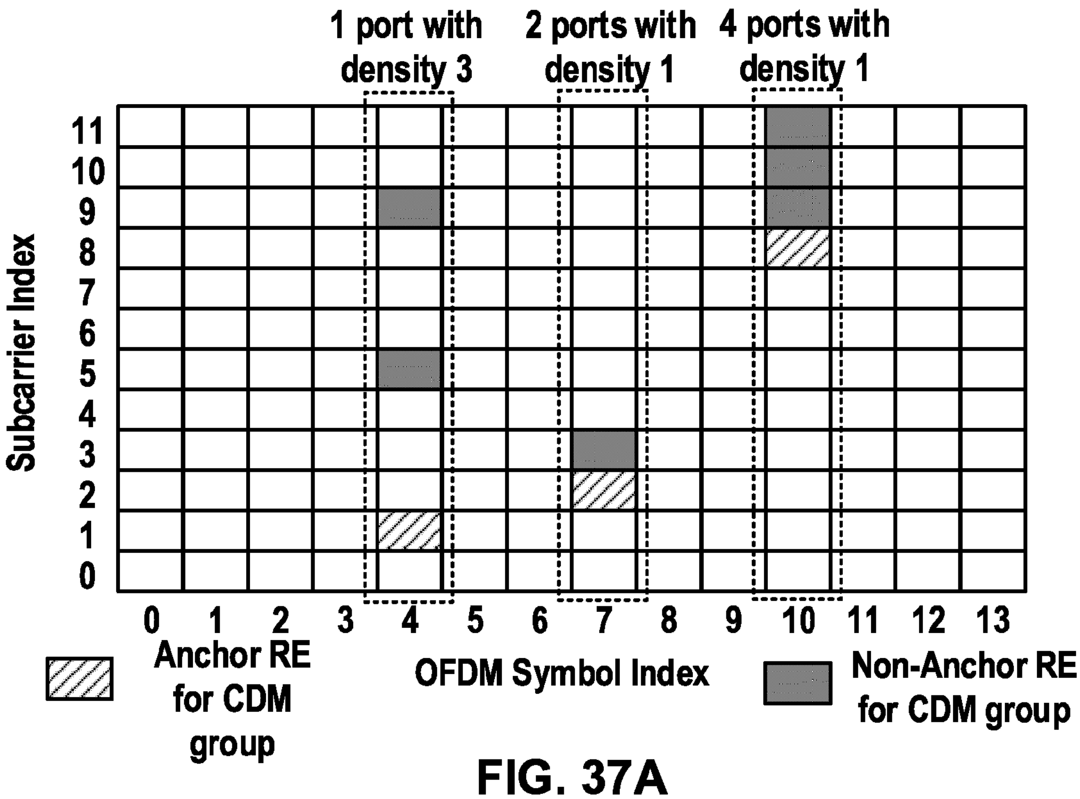


FIG. 37A

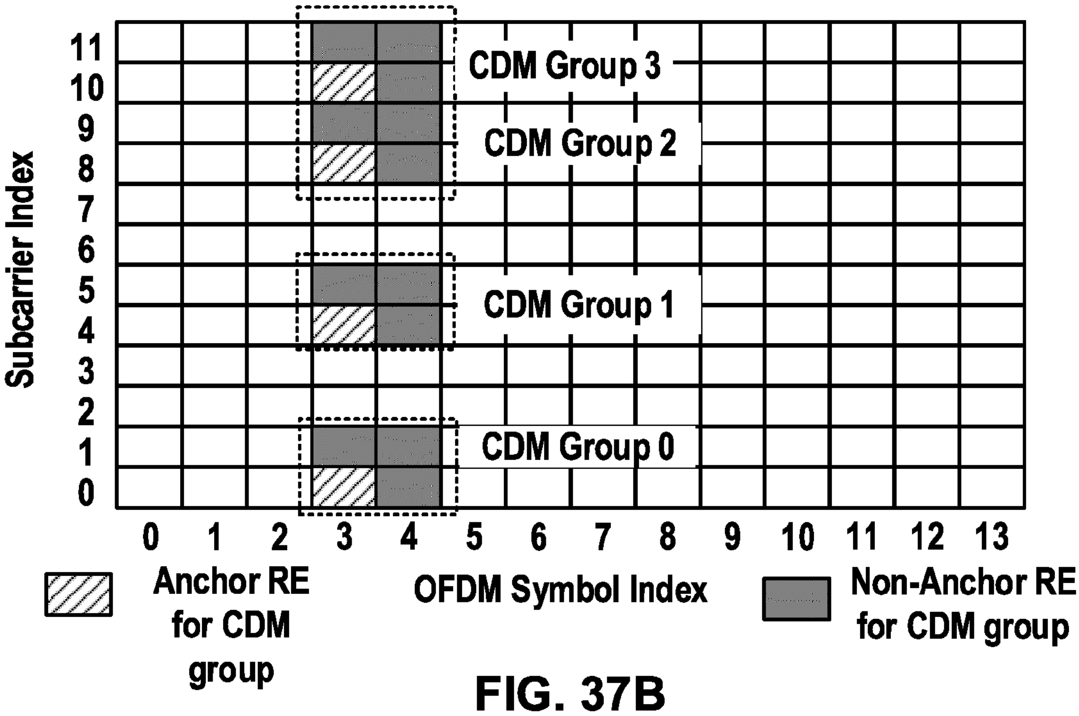


FIG. 37B

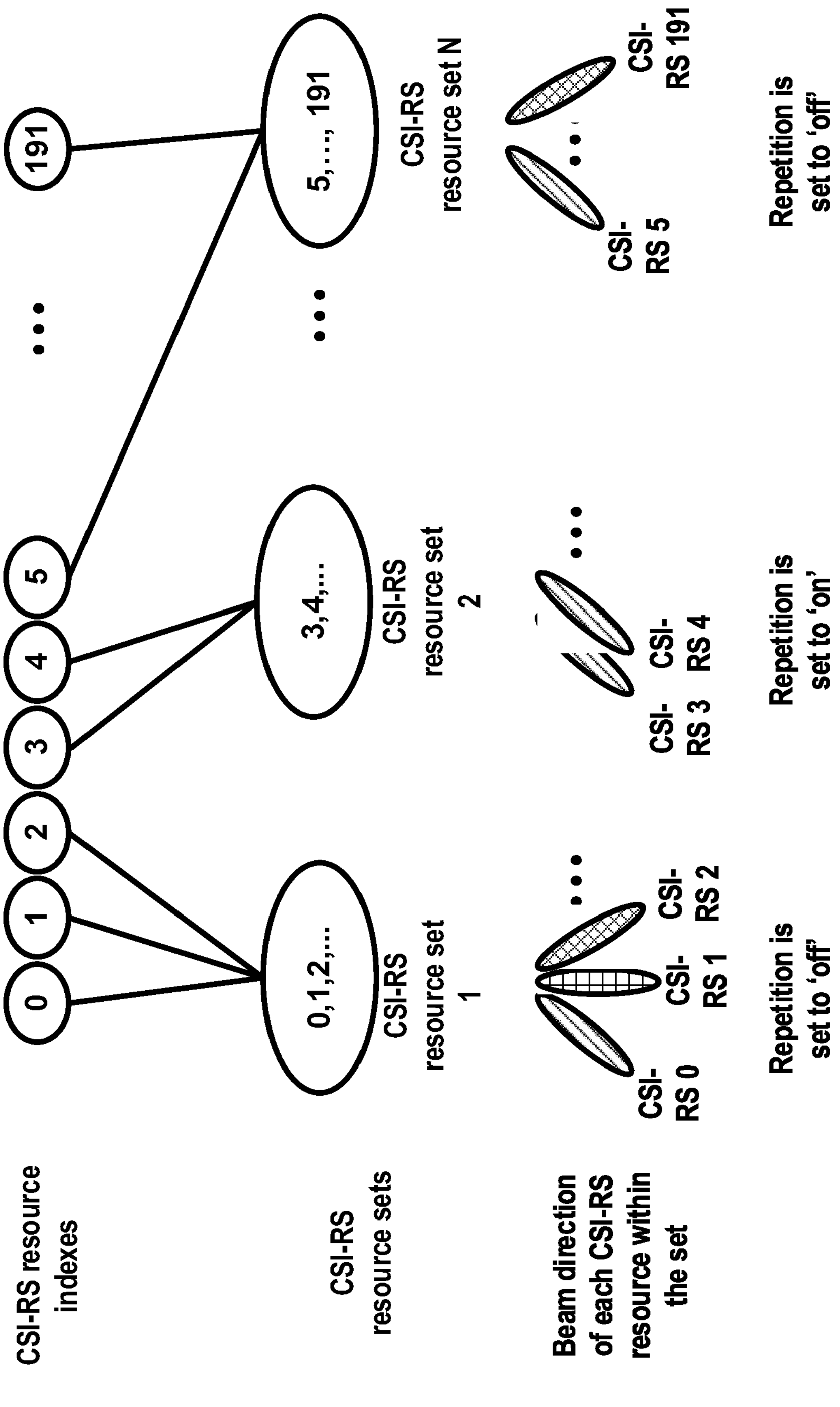

CSI-RS resource indexes
0
1
2
3
4
5
191
CSI-RS resource sets
0,1,2,...
CSI-RS resource set 1
3,4,...
CSI-RS resource set 2
5,..., 191
CSI-RS resource set N
Beam direction of each CSI-RS resource within the set
CSI-RS 0
CSI-RS 1
CSI-RS 2
CSI-RS 3
CSI-RS 4
CSI-RS 5
CSI-RS 191
Repetition is set to 'off'
Repetition is set to 'on'
Repetition is set to 'off'


FIG. 38

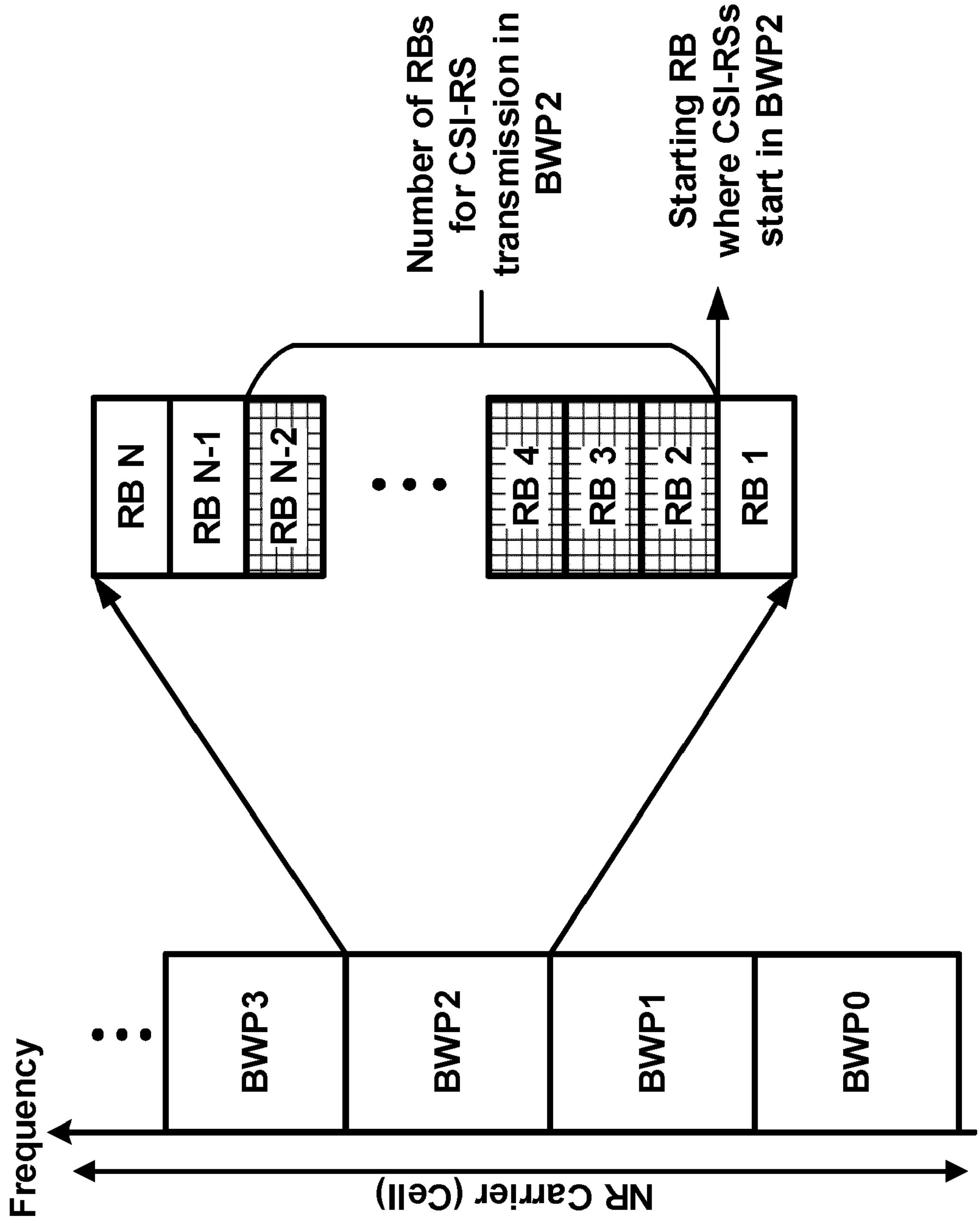
Frequency
NR Carrier (Cell)
BWP3
BWP2
BWP1
BWP0
RB N
RB N-1
RB N-2
RB 4
RB 3
RB 2
RB 1
Number of RBs for CSI-RS transmission in BWP2
Starting RB where CSI-RSs start in BWP2

FIG. 39

```
CSI-ReportConfig ::=                SEQUENCE {
  reportConfigId                     CSI-ReportConfigId,
  carrier                          ServCellIndex
  resourcesForChannelMeasurement        CSI-ResourceConfigId,
  csi-IM-ResourcesForInterference       CSI-ResourceConfigId
  nzp-CSI-RS-ResourcesForInterference    CSI-ResourceConfigId
  reportConfigType                    CHOICE {
    periodic                         SEQUENCE {
      reportSlotConfig                   CSI-ReportPeriodicityAndOffset,
      pucch-CSI-ResourceList  SEQUENCE OF PUCCH-CSI-Resource
    },
    ...
    aperiodic                         SEQUENCE {
      reportSlotOffsetList              SEQUENCE OF INTEGER(0..32)
    }
  },
  reportQuantity                     CHOICE {
    none                           NULL,
...
    cri-RSRP                         NULL,
    ssb-Index-RSRP                      NULL,
    cri-RI-LI-PMI-CQI                   NULL
  },
  ...
  timeRestrictionForChannelMeasurements   ENUMERATED {configured, notConfigured},
  codebookConfig                          CodebookConfig
  groupBasedBeamReporting                     CHOICE {
    enabled                          NULL,
    disabled                         SEQUENCE {
      nrofReportedRS                    ENUMERATED {n1, n2, n3, n4}
    }
  },
  ...,
 }

CSI-ReportPeriodicityAndOffset ::=  CHOICE {
  slots4                        INTEGER(0..3),
  ...
  slots320                       INTEGER(0..319)}
```

FIG. 40

```
CSI-MeasConfig ::=                SEQUENCE {
...
   nzp-CSI-RS-ResourceSetToAddModList  SEQUENCE OF NZP-CSI-RS-ResourceSet
   csi-IM-ResourceToAddModList         SEQUENCE OF CSI-IM-Resource
   csi-IM-ResourceSetToAddModList      SEQUENCE OF CSI-IM-ResourceSet
   csi-SSB-ResourceSetToAddModList     SEQUENCE OF CSI-SSB-ResourceSet
   csi-ResourceConfigToAddModList      SEQUENCE  OF CSI-ResourceConfig
   csi-ReportConfigToAddModList        SEQUENCE  OF CSI-ReportConfig
   reportTriggerSize                   INTEGER (0..6)
   aperiodicTriggerStateList           SetupRelease { CSI-AperiodicTriggerStateList }
   ...,
}

ServingCellConfig ::=             SEQUENCE {
   tdd-UL-DL-ConfigurationDedicated   TDD-UL-DL-ConfigDedicated
   initialDownlinkBWP                 BWP-DownlinkDedicated
   downlinkBWP-ToReleaseList  SEQUENCE (SIZE (1..maxNrofBWPs)) OF BWP-Id
   downlinkBWP-ToAddModList  SEQUENCE (SIZE (1..maxNrofBWPs)) OF BWP-Downlink
   firstActiveDownlinkBWP-Id          BWP-Id
   bwp-InactivityTimer                ENUMERATED {ms2, ms3, ms4, ... }
   defaultDownlinkBWP-Id              BWP-Id
   uplinkConfig                       UplinkConfig
   supplementaryUplink                UplinkConfig
   pdcch-ServingCellConfig            SetupRelease { PDCCH-ServingCellConfig }
   pdsch-ServingCellConfig            SetupRelease { PDSCH-ServingCellConfig }
   csi-MeasConfig                     SetupRelease { CSI-MeasConfig }
   sCellDeactivationTimer             ENUMERATED {ms20, ms40, ms80,...}
...
}
```

FIG. 41

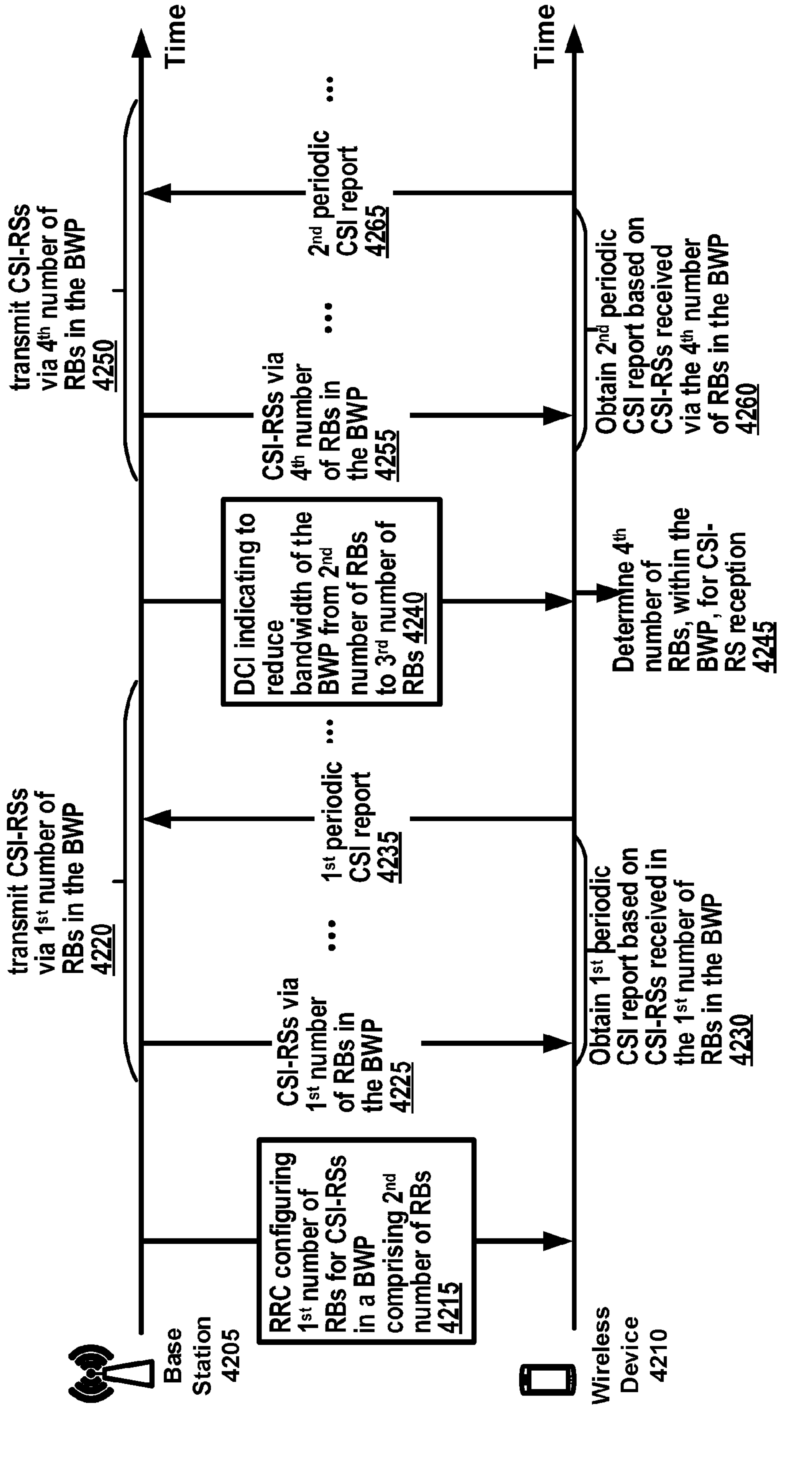
Base Station 4205
Wireless Device 4210
Time
Time
RRC configuring 1st number of RBs for CSI-RSs in a BWP comprising 2nd number of RBs 4215
transmit CSI-RSs via 1st number of RBs in the BWP 4220
CSI-RSs via 1st number of RBs in the BWP 4225
Obtain 1st periodic CSI report based on CSI-RSs received in the 1st number of RBs in the BWP 4230
1st periodic CSI report 4235
DCI indicating to reduce bandwidth of the BWP from 2nd number of RBs to 3rd number of RBs 4240
Determine 4th number of RBs, within the BWP, for CSI-RS reception 4245
transmit CSI-RSs via 4th number of RBs in the BWP 4250
CSI-RSs via 4th number of RBs in the BWP 4255
Obtain 2nd periodic CSI report based on CSI-RSs received via the 4th number of RBs in the BWP 4260
2nd periodic CSI report 4265

FIG. 42

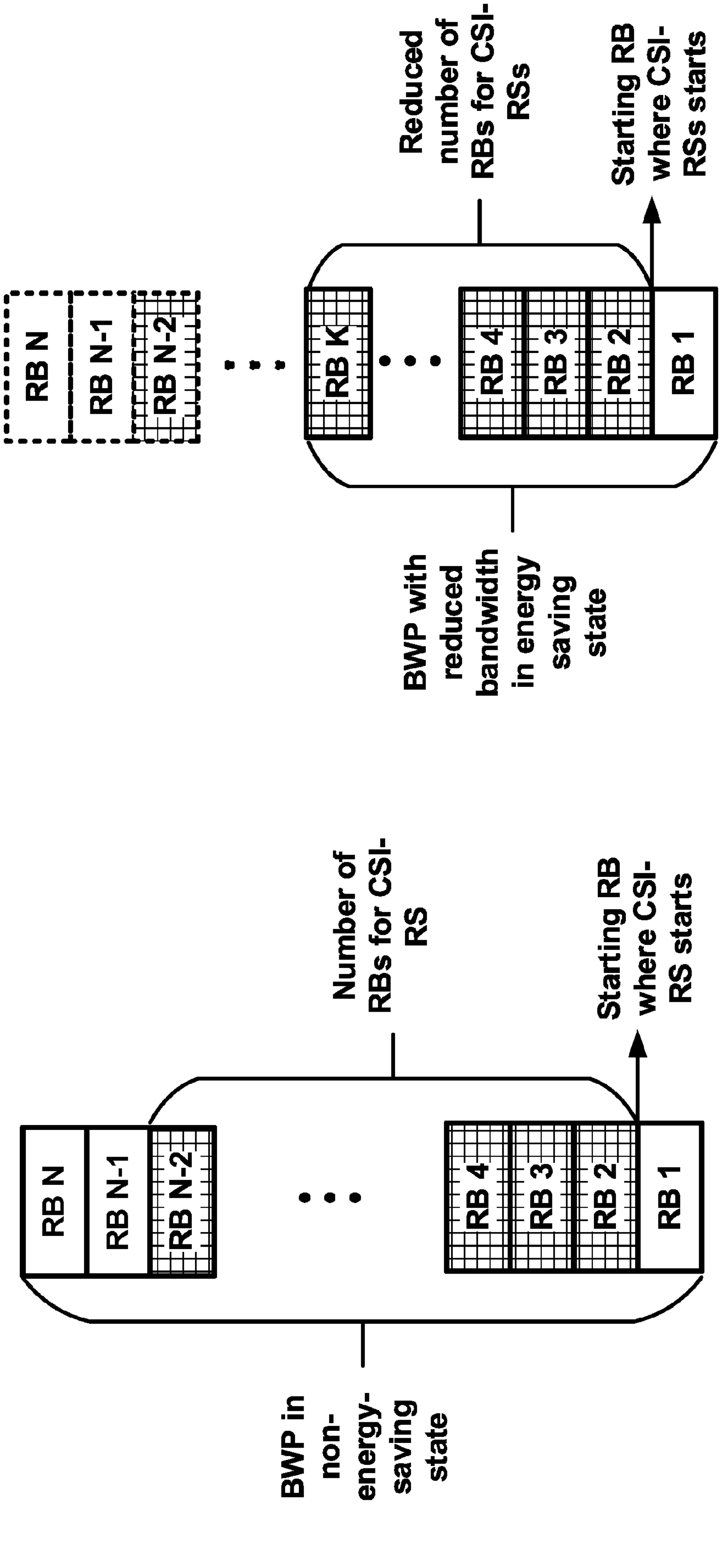

RB N
RB N-1
RB N-2
RB K
RB 4
RB 3
RB 2
RB 1
Reduced number of RBs for CSI-RSs
Starting RB where CSI-RSs starts
BWP with reduced bandwidth in energy saving state
RB N
RB N-1
RB N-2
RB 4
RB 3
RB 2
RB 1
Number of RBs for CSI-RS
Starting RB where CSI-RS starts
BWP in non-energy-saving state


FIG. 43

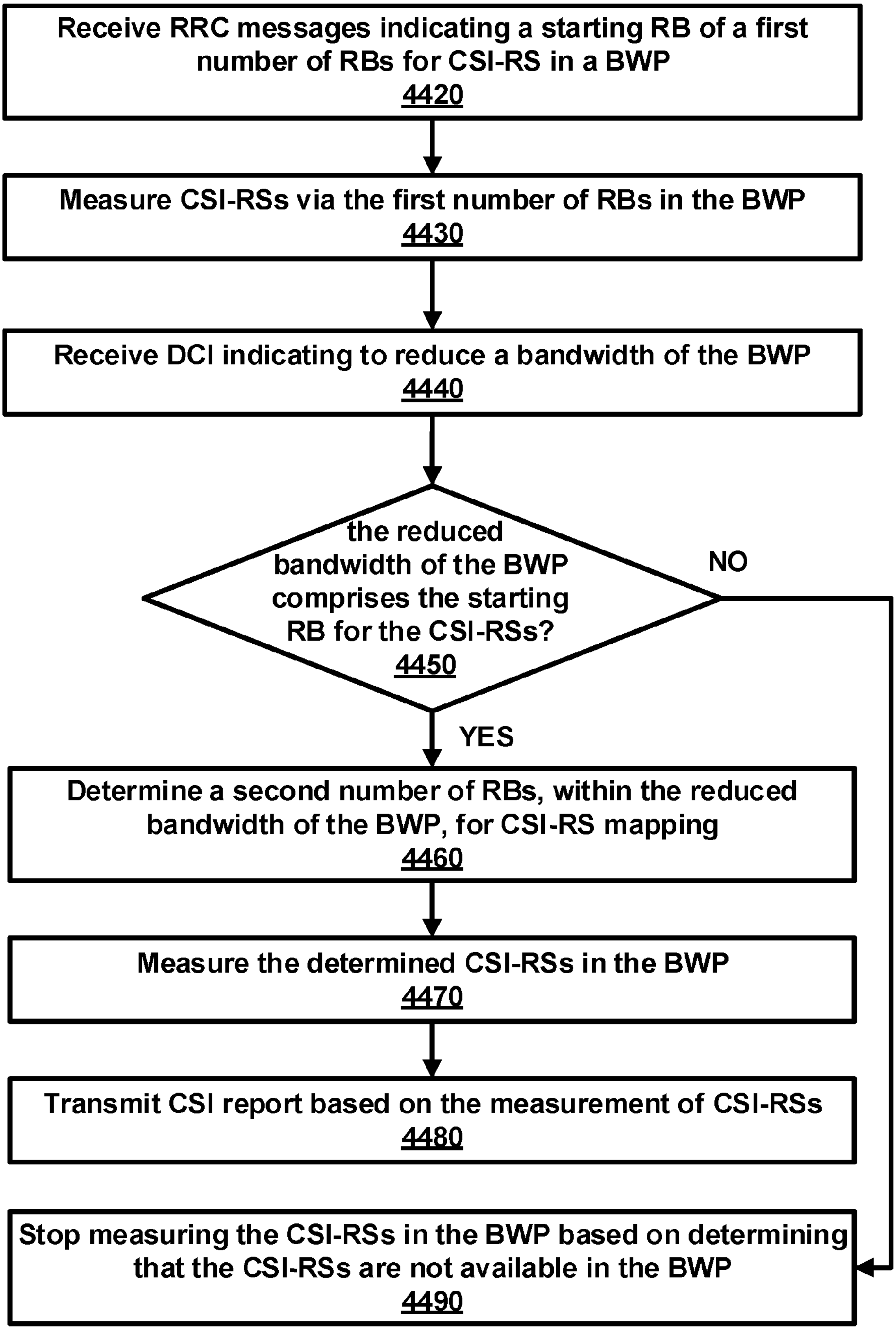
Receive RRC messages indicating a starting RB of a first number of RBs for CSI-RS in a BWP
4420
Measure CSI-RSs via the first number of RBs in the BWP
4430
Receive DCI indicating to reduce a bandwidth of the BWP
4440
the reduced bandwidth of the BWP comprises the starting RB for the CSI-RSs?
4450
NO
YES
Determine a second number of RBs, within the reduced bandwidth of the BWP, for CSI-RS mapping
4460
Measure the determined CSI-RSs in the BWP
4470
Transmit CSI report based on the measurement of CSI-RSs
4480
Stop measuring the CSI-RSs in the BWP based on determining that the CSI-RSs are not available in the BWP
4490

FIG. 44

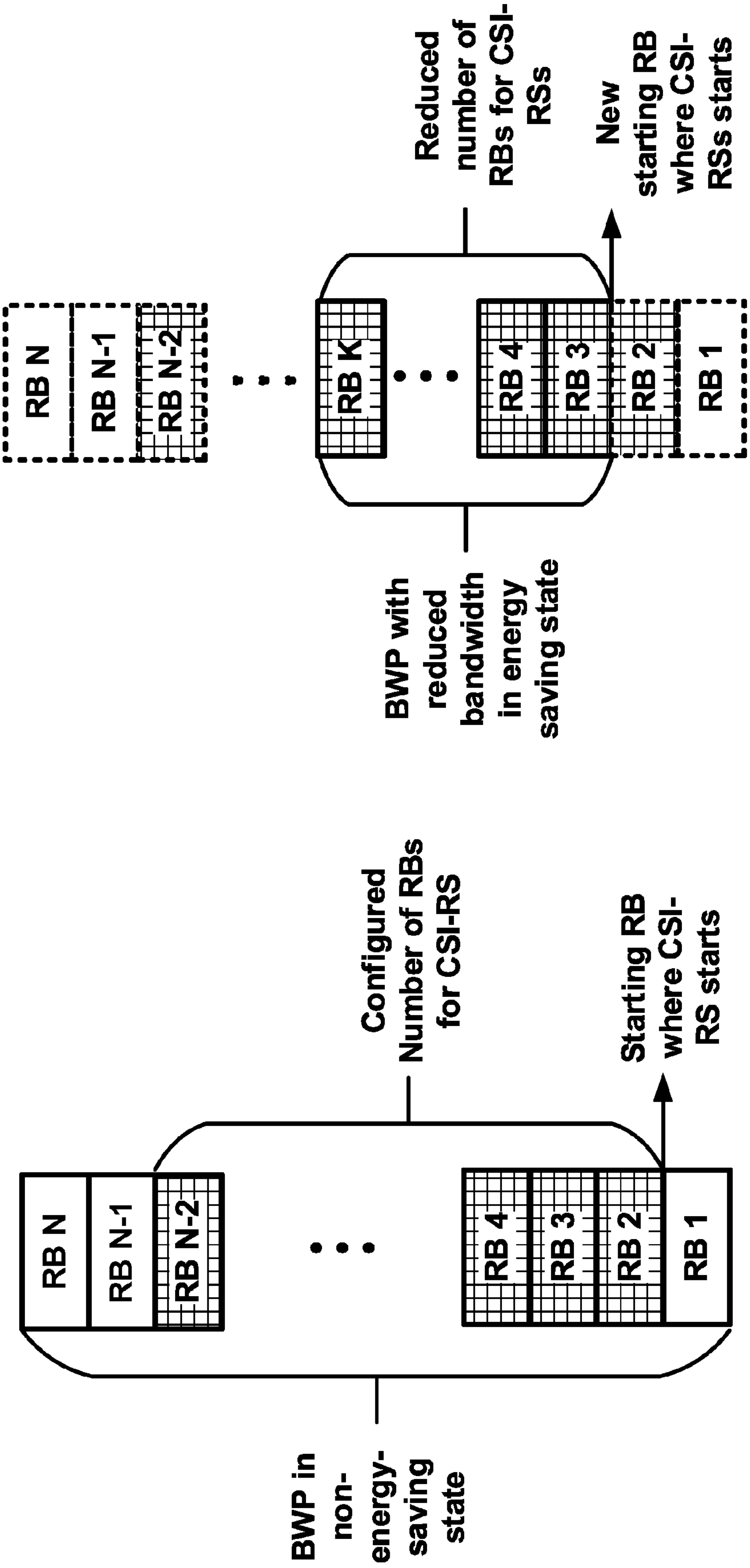
BWP in non-energy-saving state
Configured Number of RBs for CSI-RS
Starting RB where CSI-RS starts
RB N
RB N-1
RB N-2
RB 4
RB 3
RB 2
RB 1
BWP with reduced bandwidth in energy saving state
Reduced number of RBs for CSI-RSs
New starting RB where CSI-RSs starts
RB N
RB N-1
RB N-2
RB K
RB 4
RB 3
RB 2
RB 1

FIG. 45

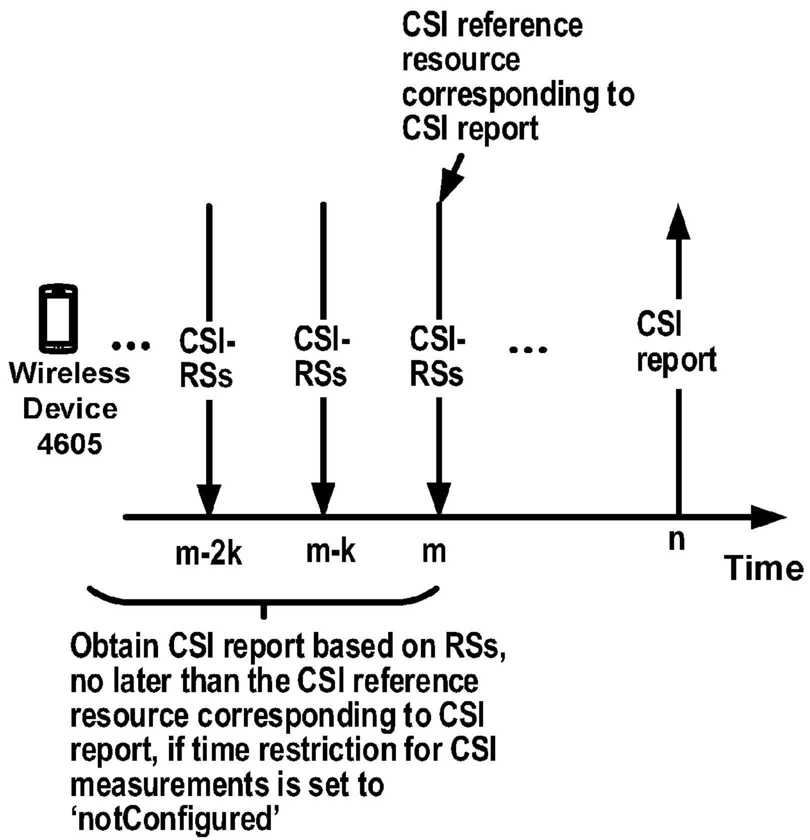


FIG. 46A

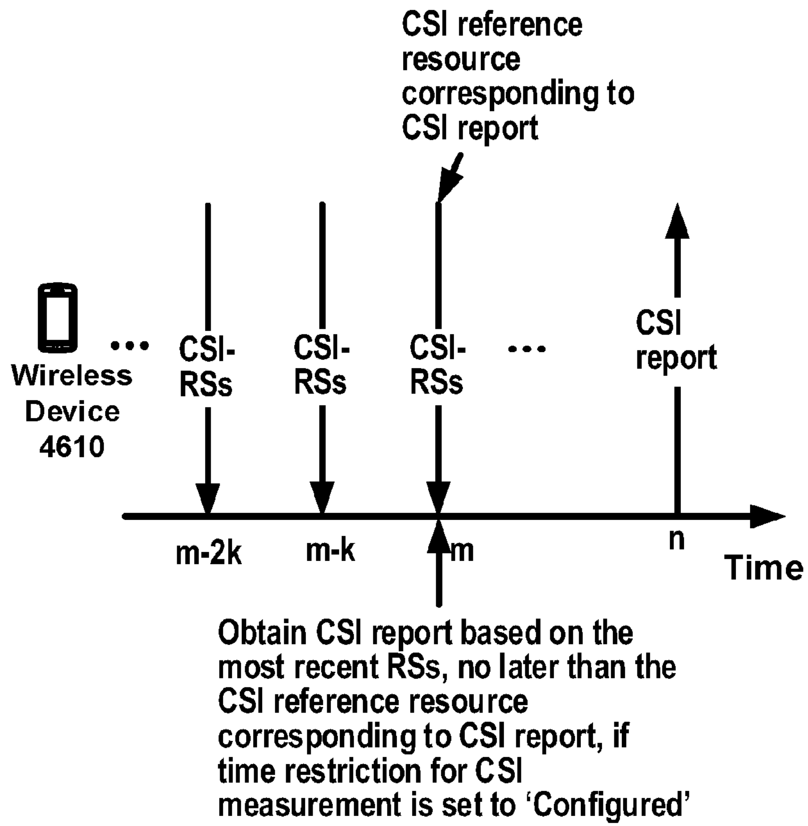


FIG. 46B

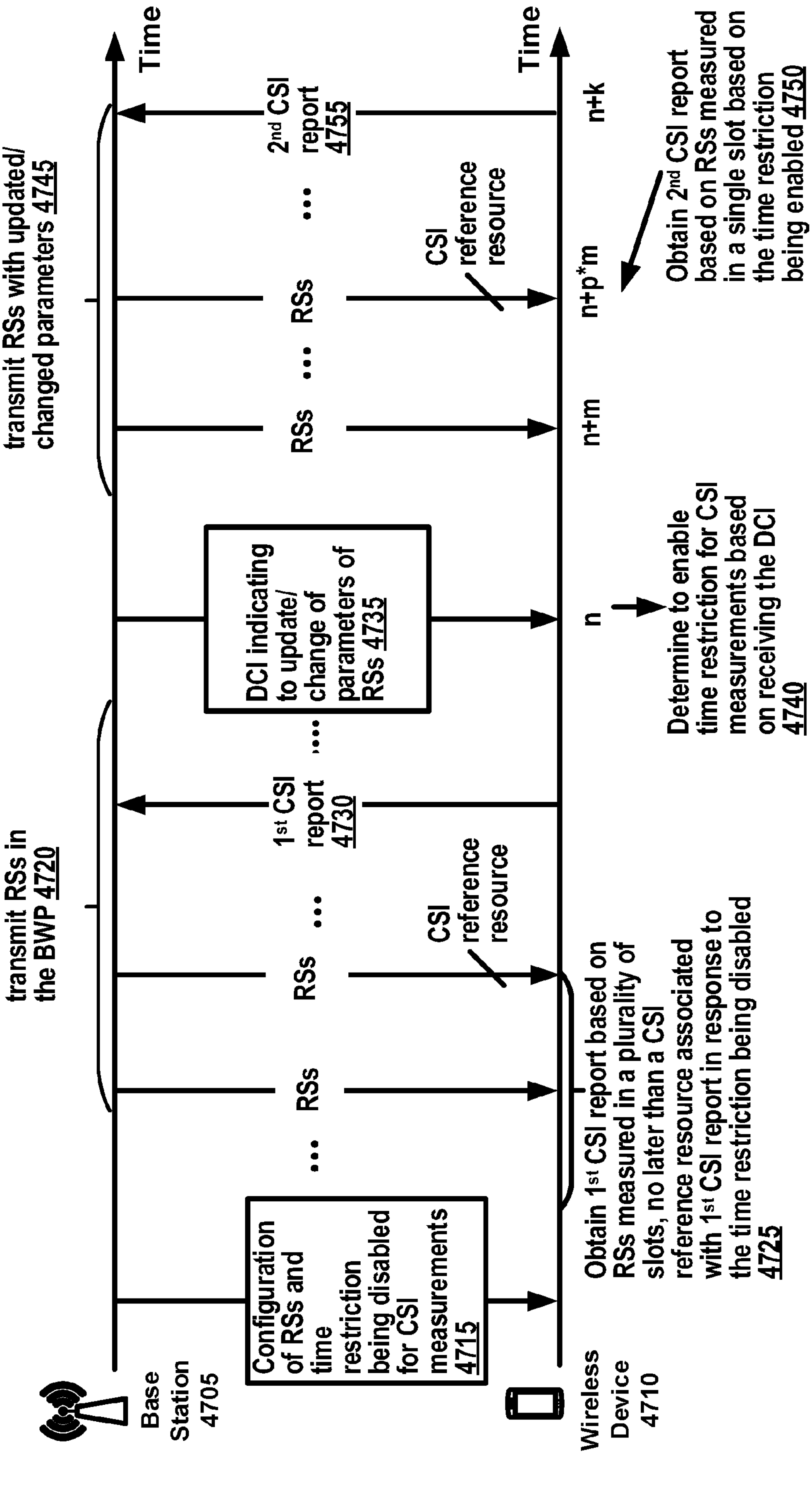
Base Station 4705
Wireless Device 4710
Time
Time
Configuration of RSs and time restriction being disabled for CSI measurements 4715
transmit RSs in the BWP 4720
RSs
RSs
CSI reference resource
1st CSI report 4730
Obtain 1st CSI report based on RSs measured in a plurality of slots, no later than a CSI reference resource associated with 1st CSI report in response to the time restriction being disabled 4725
DCI indicating to update/ change of parameters of RSs 4735
n
Determine to enable time restriction for CSI measurements based on receiving the DCI 4740
transmit RSs with updated/ changed parameters 4745
RSs
RSs
n+m
n+p*m
CSI reference resource
2nd CSI report 4755
n+k
Obtain 2nd CSI report based on RSs measured in a single slot based on the time restriction being enabled 4750

FIG. 47

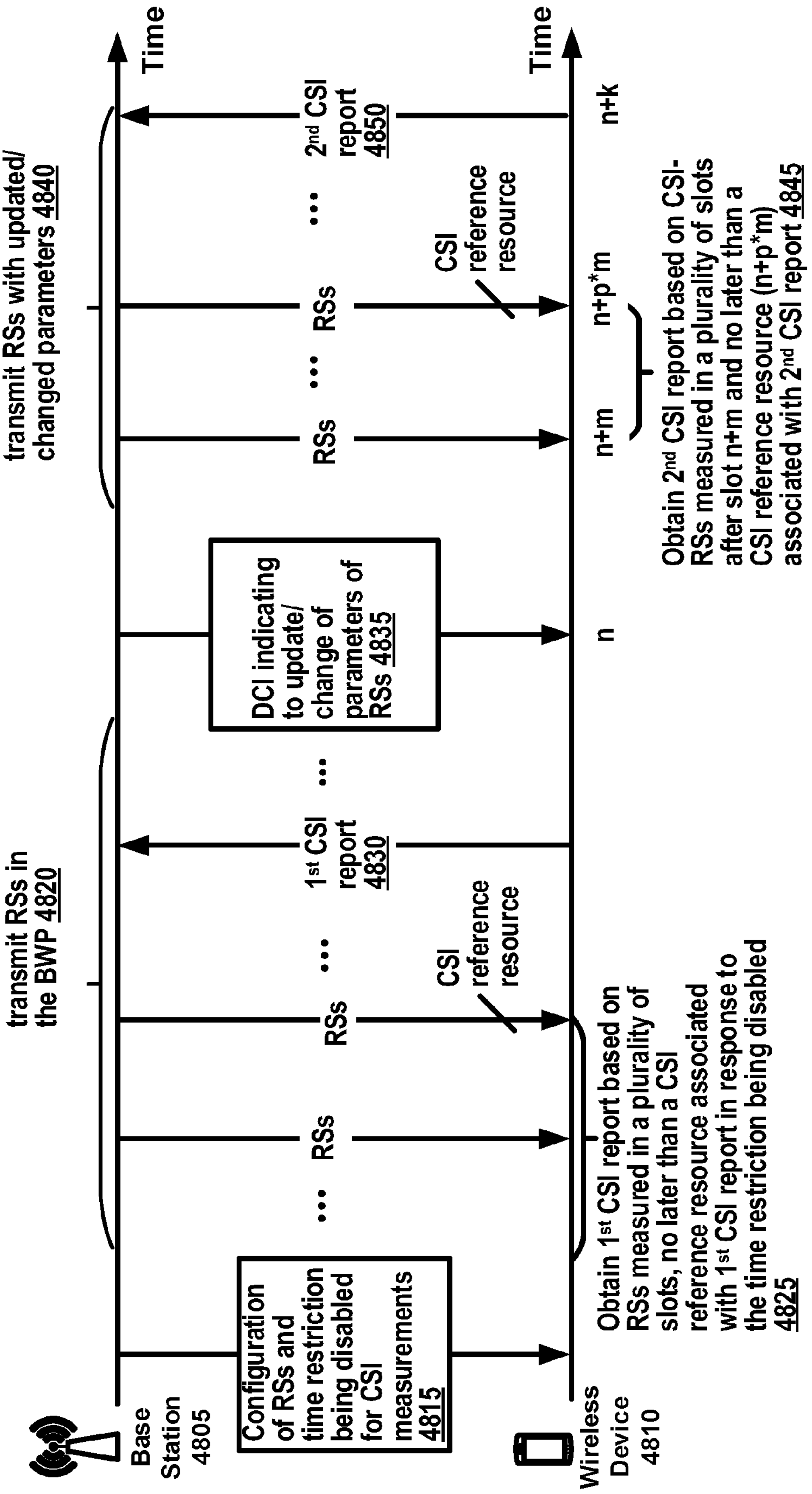

Base Station 4805
Wireless Device 4810
Configuration of RSs and time restriction being disabled for CSI measurements 4815
transmit RSs in the BWP 4820
RSs
RSs
CSI reference resource
Obtain 1st CSI report based on RSs measured in a plurality of slots, no later than a CSI reference resource associated with 1st CSI report in response to the time restriction being disabled 4825
1st CSI report 4830
DCI indicating to update/ change of parameters of RSs 4835
transmit RSs with updated/ changed parameters 4840
RSs
RSs
CSI reference resource
n
n+m
n+p*m
n+k
Obtain 2nd CSI report based on CSI-RSs measured in a plurality of slots after slot n+m and no later than a CSI reference resource (n+p*m) associated with 2nd CSI report 4845
2nd CSI report 4850
Time
Time


FIG. 48

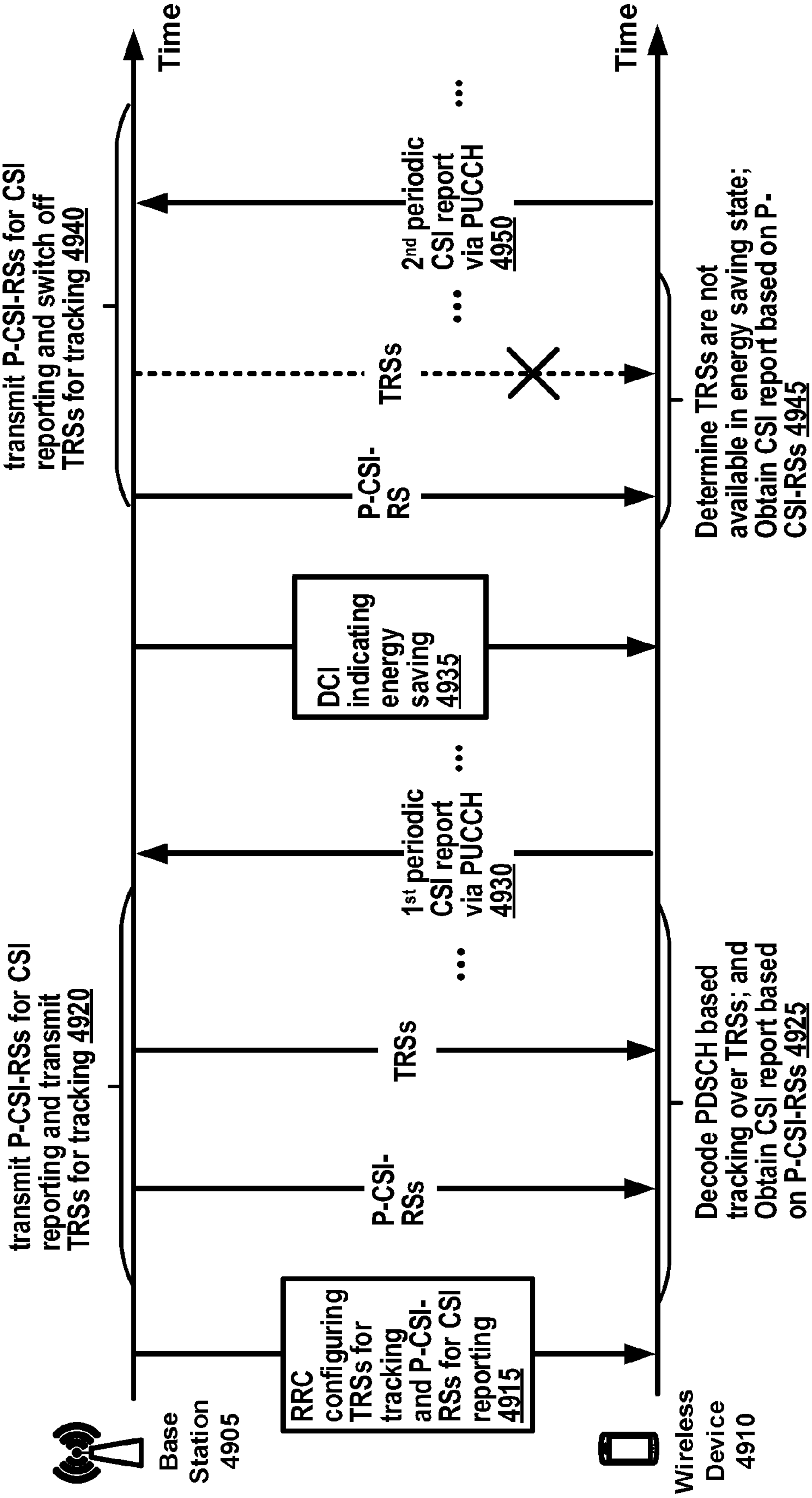
Base Station 4905
Wireless Device 4910
Time
Time
RRC configuring TRSs for tracking and P-CSI-RSs for CSI reporting 4915
transmit P-CSI-RSs for CSI reporting and transmit TRSs for tracking 4920
P-CSI-RSs
TRSs
Decode PDSCH based tracking over TRSs; and Obtain CSI report based on P-CSI-RSs 4925
1st periodic CSI report via PUCCH 4930
DCI indicating energy saving 4935
transmit P-CSI-RSs for CSI reporting and switch off TRSs for tracking 4940
P-CSI-RS
TRSs
Determine TRSs are not available in energy saving state; Obtain CSI report based on P-CSI-RSs 4945
2nd periodic CSI report via PUCCH 4950

FIG. 49

Europäisches Patentamt
European Patent Office
Office européen des brevets

# EUROPEAN SEARCH REPORT

Application Number
EP 23 17 0164

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/070184 A1 (ERICSSON TELEFON AB L M [SE]) 11 April 2019 (2019-04-11)<br>* page 16, lines 21-28; claims 1, 2, 5, 7; figure 18 *<br>----- | 1-15 | INV.<br>H04L5/00<br>H04W52/02 |
| A | EP 3 965 347 A1 (VIVO MOBILE COMMUNICATION CO LTD [CN]) 9 March 2022 (2022-03-09)<br>* paragraphs [0023] - [0026] *<br>----- | 1-15 | |
| A | US 2019/132109 A1 (ZHOU HUA [US] ET AL) 2 May 2019 (2019-05-02)<br>* paragraphs [0238] - [0239] *<br>----- | 1-15 | |
| | | | TECHNICAL FIELDS SEARCHED (IPC) |
| | | | H04L<br>H04W |

The present search report has been drawn up for all claims

1

| Place of search | Date of completion of the search | Examiner |
|---|---|---|
| The Hague | 17 August 2023 | Barrientos Lezcano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 17 0164

This annex lists the patent family members relating to the patent documents cited in the above-mentioned European search report. The members are as contained in the European Patent Office EDP file on
The European Patent Office is in no way liable for these particulars which are merely given for the purpose of information.

17-08-2023

| Patent document cited in search report | Publication date | Patent family member(s) | Publication date |
|---|---|---|---|
| WO 2019070184 A1 | 11-04-2019 | CN 111149318 A | 12-05-2020 |
| | | EP 3692676 A1 | 12-08-2020 |
| | | JP 6977151 B2 | 08-12-2021 |
| | | JP 2020536404 A | 10-12-2020 |
| | | US 2020204318 A1 | 25-06-2020 |
| | | WO 2019070184 A1 | 11-04-2019 |
| | | ZA 202000936 B | 25-08-2021 |
| EP 3965347 A1 | 09-03-2022 | CN 111342943 A | 26-06-2020 |
| | | EP 3965347 A1 | 09-03-2022 |
| | | JP 7252377 B2 | 04-04-2023 |
| | | JP 2022530904 A | 04-07-2022 |
| | | JP 2023068141 A | 16-05-2023 |
| | | KR 20210148359 A | 07-12-2021 |
| | | US 2022050163 A1 | 17-02-2022 |
| | | WO 2020221042 A1 | 05-11-2020 |
| US 2019132109 A1 | 02-05-2019 | US 2019132109 A1 | 02-05-2019 |
| | | US 2021126763 A1 | 29-04-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63334926